# EUROPEAN PATENT APPLICATION

(11) **EP 4 762 912 A1**
(43) Date of publication of application: **24.06.2026**
(21) Application number: 24855682.1
(22) Date of filing: 14.08.2024
(51) Int. Cl.: A01D 43/063, A01D 34/82, A01D 67/00, A01D 69/02

(54) **LAWN MOWER**

(30) Priority: 18.08.2023 CN 202322241792 U; 18.08.2023 CN 202322234837 U; 06.09.2023 CN 202322420041 U; 06.09.2023 CN 202322427907 U; 22.09.2023 CN 202311236413; 22.09.2023 CN 202322597466 U; 22.09.2023 CN 202311234266; 22.09.2023 CN 202322592334 U; 22.09.2023 CN 202322593497 U; 22.09.2023 CN 202322592375 U; 22.09.2023 CN 202322590224 U; 22.09.2023 CN 202322590227 U; 22.09.2023 CN 202311235834; 28.09.2023 CN 202311272165; 03.01.2024 CN 202420014385 U; 07.08.2024 CN 202421906807 U
(71) Applicant: Greenworks (Jiangsu) Co., Ltd, Changzhou, Jiangsu 213023 (CN)
(72) Inventor: SHI, Qinghua, hangzhou, Jiangsu 213023 (CN); WEI, Qunli, hangzhou, Jiangsu 213023 (CN); CHEN, Wei, hangzhou, Jiangsu 213023 (CN); MA, Ruoxu, hangzhou, Jiangsu 213023 (CN); FAN, Jun, hangzhou, Jiangsu 213023 (CN); XIE, Yi, hangzhou, Jiangsu 213023 (CN); WANG, Chaoqun, hangzhou, Jiangsu 213023 (CN); HUANG, Binjie, hangzhou, Jiangsu 213023 (CN); WU, Qing, hangzhou, Jiangsu 213023 (CN); PENG, Liang, hangzhou, Jiangsu 213023 (CN); SHI, Houyu, hangzhou, Jiangsu 213023 (CN); NI, Zhenguo, hangzhou, Jiangsu 213023 (CN); XU, Wenwei, hangzhou, Jiangsu 213023 (CN); XUE, Jiafu, hangzhou, Jiangsu 213023 (CN); LIU, Zhaochong, hangzhou, Jiangsu 213023 (CN); WANG, Yanqiang, hangzhou, Jiangsu 213023 (CN); WANG, Chengxu, hangzhou, Jiangsu 213023 (CN); LI, Xiazi, hangzhou, Jiangsu 213023 (CN); WANG, Tao, hangzhou, Jiangsu 213023 (CN); LI, Zhiyuan, hangzhou, Jiangsu 213023 (CN); CAO, Yuexun, hangzhou, Jiangsu 213023 (CN); KONG, Wei, hangzhou, Jiangsu 213023 (CN); WANG, Yu, hangzhou, Jiangsu 213023 (CN); HUO, Xiaohui, hangzhou, Jiangsu 213023 (CN); LI, Shuhua, hangzhou, Jiangsu 213023 (CN)
(74) Representative: Bergenstråhle & Partners AB
(86) International application number: PCT/CN2024/112100
(87) International publication number: WO 2025/039956

(57) **Abstract**

A lawn mower relates to a technical field of garden tools. The lawn mower includes a frame, a walking assembly, a cutting deck assembly and a dump body assembly. The walking assembly is mounted on the frame for driving the lawn mower. The cutting deck assembly is mounted on the frame for mowing. The dump body assembly is tiltably mounted on the frame. In this disclosure, the dump body assembly has a large storage space, which allows operators to easily carry necessary supplies and tools during work, resulting in a more user-friendly work experience and improved work efficiency. This dump body assembly may also be used to transport weeds or waste from a grassland, reducing cost of purchasing transport vehicles. At the same time, the dump body assembly has a tilting function, facilitating unloading and saving manpower and resources.

## Description

### TECHNICAL FIELD

The disclosure relates a technical field of garden tools, especially relates to a lawn mower.

### BACKGROUND

With the continuous development of power tool technology, mower have been widely used in garden trimming, lawn greening trimming, urban streets, green scenic spots, field trimming, and field weeding due to their advantages of simple operation, convenience and efficiency, especially in lawns, grasslands, football fields and other grassy areas in parks. With the improvement of mower performance in various aspects, such as longer battery life and larger working range, operators have higher requirements for the storage space and transportation and loading functions of mowers, so as to facilitate the loading of work tools, transportation and unloading of weeds or grassland waste. Most conventional mowers do not have storage devices, or the storage space is small and they do not have the function of easy unloading.

### SUMMARY

This disclosure provides a lawn mower, and the lawn mower has beneficial effects such as storage, transportation functions, and easy unloading.

One or more embodiments of the disclosure provide the lawn mower. The lawn mower includes a frame, a walking assembly, a cutting deck assembly and a dump body assembly. The walking assembly is mounted on the frame for driving the lawn mower. The cutting deck assembly is mounted on the frame for mowing. The dump body assembly is tiltably mounted on the frame.

In an embodiment of the disclosure, the dump body assembly includes a body and a tiltable assembly, the body is rotatably mounted on the frame, a first end of the tiltable assembly is rotatably coupled to the body, and a second end of the tiltable assembly is rotatably coupled to the frame to lift the body, such that an actuation of the tiltable assembly lifts the body relative to the frame.

In an embodiment of the disclosure, the dump body assembly includes a locking assembly, the locking assembly is structurally coupled to the frame and configured to restrain tilting of the dump body assembly.

In an embodiment of the disclosure, the locking assembly includes a locking ring arranged on the body and a locking component arranged on the frame, and the locking component is selectively engageable with the locking ring.

In an embodiment of the disclosure, the frame includes a mounting bracket for mounting the locking component, the locking component is rotatably connected to the mounting hole, and the locking component is connected to the frame at a direction being opposite from the locking ring through an elastic component.

In an embodiment of the disclosure, the tiltable assembly is configured with a preset start-up delay time of 3s to 6s.

In an embodiment of the disclosure, a maximum tiltable angle of the dump body assembly is in a range of 30° to 60°.

In an embodiment of the disclosure, the body includes an upper handle.

In an embodiment of the disclosure, the body includes a lower handle.

In an embodiment of the disclosure, a bottom wall of the body includes at least one of drainage holes, and at least one of hole plugs is matched with the at least one of the drainage holes is arranged on the drainage hole.

In an embodiment of the disclosure, the dump body assembly includes a body, and a rear wall of the body is rotatably hinged to a bottom wall of the body.

In an embodiment of the disclosure, the dump body assembly includes at least one of connecting assemblies, the connecting assembly is connected to the rear wall, and at least one of side walls is adjacent to the rear wall.

In an embodiment of the disclosure, a first end of the connecting assembly is detachably and rotatably coupled to a side surface of the rear wall, and a second end of the connecting assembly is detachably and rotatably coupled to the side wall.

In an embodiment of the disclosure, the connecting assembly is a rigid component, a flexible component, or a combination thereof.

In an embodiment of the disclosure, the dump body assembly includes a fixing assembly, the fixing assembly is mounted on the rear wall and/or the at least one side wall, and the rear wall and the side wall are locked through the fixing assembly to restrain unfolding of the rear wall.

In an embodiment of the disclosure, the fixing assembly includes a locking base and a locking body, and the locking body is mechanically lockable with the locking base to restrain unfolding of the rear wall.

In an embodiment of the disclosure, the locking base includes a base body, the base body is mounted on the side wall, a groove is arranged on a side of the base body toward the rear wall, and a limiting mechanism is arranged at an opening of the groove.

In an embodiment of the disclosure, the limiting mechanism is mounted on a wall of the opening.

In an embodiment of the disclosure, the locking body includes two deadbolts, a first one of the deadbolts being arranged at a first end of the rear wall and a second one of the deadbolts being arranged at a second end of the rear wall, two of the locking bases being mounted on two of the side walls, and the deadbolts being mechanically engageable with the locking bases.

In an embodiment of the disclosure, the dump body assembly further includes the tiltable assembly, the body is rotatably connected to the frame, the first end of the tiltable assembly is hinged with the body, and the second end of the tiltable assembly is hinged with the frame to lift the body, such that an actuation of the tiltable assembly lifts the body relative to the frame.

In an embodiment of the disclosure, the dump body assembly further includes locking assembly, when the rear wall and the side wall are connected to each other, the locking assembly locks the body onto the frame.

In an embodiment of the disclosure, the lawn mower includes a housing, a driving seat and a battery compartment. The housing is arranged on the frame. The driving seat is arranged on the frame. The battery compartment is arranged on the housing being disposed on two sides of the driving seat. Wherein, at least a portion of a projection of the battery compartment along a width direction of the lawn mower laterally overlapping a projection of the driving seat.

In an embodiment of the disclosure, the battery compartment includes a plurality of first compartments and a plurality of second compartments, the plurality of first compartments being symmetrically arranged on the housing disposed on the two sides of the driving seat, and the plurality of second compartments being symmetrically arranged on the housing disposed on the two sides of the driving seat.

In an embodiment of the disclosure, the lawn mower includes the dump body assembly, and at least a portion of the projection of the battery compartment along the width direction of the lawn mower laterally overlapping a projection of the dump body assembly.

In an embodiment of the disclosure, the driving seat includes a handrail, a high of the projection of the battery compartment along the width direction of the lawn mower being less than a high of a projection of the handrail along the width direction of the lawn mower.

In an embodiment of the disclosure, the battery compartment includes a cover and a main part, and the cover is detachably connected to the main part.

In an embodiment of the disclosure, the cover is rotatably connected to the main part through a second connecting component, and the second connecting component is detachably connected to the main part and/or the cover.

In an embodiment of the disclosure, the cover is snapped onto the main part, the main part includes a clamping groove, a connecting device is arranged on the main part, and the connecting device extends into the clamping groove to achieve a relative fixation between the cover and the main part.

In an embodiment of the disclosure, the connecting device includes a connecting base, a first connecting part and a first connecting rod. The connecting base is fixedly arranged on the cover. The first connecting part is rotatably arranged on the connecting base. The first connecting rod is rotatably arranged on the first connecting part. Wherein, the clamping groove is arranged away from the connecting base, and the first connecting rod is inserted into the clamping groove to restrain a separation of the cover from the main part.

In an embodiment of the disclosure, a storage compartment is arranged on the housing in front of the battery compartment, and a power output port is arranged inside the storage compartment.

In an embodiment of the disclosure, a charging port is arranged on a front side of the housing below the driving seat.

In an embodiment of the disclosure, the lawn mower includes the housing and the battery compartment. The housing is arranged on the frame. The battery compartment is arranged on the housing. The battery compartment is configured to house a battery pack. Wherein, the battery compartment includes the main part and the cover. The main part is arranged on the housing and an opening is arranged on the main part. The cover is rotatably connected to the main part through a second connecting component, wherein, the second connecting component is detachably connected to the main part and/or the cover.

In an embodiment of the disclosure, the main part includes a socket, and the second connecting component is inserted into the socket and mechanically engageable with the socket.

In an embodiment of the disclosure, the socket includes a first limiting part, and the second connecting component includes a second limiting part. The first limiting part and the second limiting part cooperate to each other to prevent the second connecting component from disengaging from the socket.

In an embodiment of the disclosure, the first limiting part includes a concavity arranged on an inner wall of the socket, and the second limiting part includes an elastic sheet that may be elastically deformed. The elastic sheet includes a clamping part, and the clamping part cooperates with the concavity to enable the second connecting component to be mechanically engageable with the socket.

In an embodiment of the disclosure, the elastic sheet includes a first inclined surface disposed away from the elastic sheet from bottom to top, and the clamping part is disposed above the first inclined surface.

In an embodiment of the disclosure, the clamping part includes a step surface, and the step surface is mechanically engageable with the concavity to prevent the second connecting component from disengaging from the socket.

In an embodiment of the disclosure, the clamping part includes a first cutting tab, the first inclined surface is parallel to the first cutting tab, and an angle between the first cutting tab and an original plane of the first cutting tab is an acute angle.

In an embodiment of the disclosure, the inner wall of the socket includes a first protruding part, and the second connecting component includes a concave groove, wherein the first protruding part matches the concave groove.

In an embodiment of the disclosure, the second connecting component is rotatably connected to the cover, and a first reset spring is arranged on the second connecting component. The first reset spring applies a force to the cover to rotate in a direction of closing the opening.

In an embodiment of the disclosure, a buckle plate is arranged on a side of the main part away from the second connecting component. A notch facing away from the main part is formed between the buckle plate and the main part. A buckle is rotatably connected to a side of the cover away from the second connecting component. The buckle is rotatably mechanically engageable with the notch to restrain a relative rotation of the main part and the cover.

In an embodiment of the disclosure, the buckle includes a second reset spring, and the second return spring prevents the buckle from disengaging from the notch.

In an embodiment of the disclosure, the housing includes a mounting hole, a second protruding part is arranged an outer periphery of the main part, and the second protruding part abuts against a top outer periphery of the mounting hole.

In an embodiment of the disclosure, a top of the mounting hole includes a countersunk hole, and the second protruding part abuts against a bottom wall of the countersunk hole.

In an embodiment of the disclosure, a reinforcing part is arranged on a top of the second protruding part.

The disclosure further provides the lawn mower. the lawn mower includes the frame, the housing, the walking assembly and the battery compartment. The housing is arranged on the frame. The walking assembly is arranged on the frame to drive a garden tool to move. The battery compartment is arranged on the housing. The battery compartment is configured to house a battery pack. Wherein, the battery compartment includes the main part and the cover. The main part is arranged on the housing and an opening is arranged on the main part. The cover is rotatably connected to the main part through a second connecting component, wherein, the second connecting component is detachably connected to the main part and/or the cover.

In an embodiment of the disclosure, the lawn mower further includes the housing, the walking assembly, the driving seat, an operating assembly, the battery compartment and the dump body assembly. The housing is arranged on the frame. The walking assembly includes front wheels and rear wheels. The driving seat is arranged on the frame and is located in a middle of the lawn mower along the width direction. The operating assembly controls the walking assembly to drive the lawn mower to move. The battery compartment is arranged on the housing on the two sides of the driving seat. The dump body assembly is arranged at a tail part of the lawn mower.

In an embodiment of the disclosure, a wheel base between the front wheel and the rear wheel is from 1200 mm to 1300 mm.

In an embodiment of the disclosure, a center of gravity of the lawn mower is located at 1/5 to 1/3 of the wheel base between the front wheel and the rear wheel, and a center of gravity of the lawn mower is closer to the rear wheel.

In an embodiment of the disclosure, the lawn mower further includes an anti-roll frame connected to the frame. A distance between a center of gravity of the anti-roll frame and the rear wheel along a length direction of the lawn mower is less than a distance between the center of gravity of the lawn mower and the rear wheel along the length direction of the lawn mower.

In an embodiment of the disclosure, the lawn mower further includes a parking assembly and a braking device. The parking assembly includes a parking bracket, a pedal assembly, and a detection device. The parking bracket is mounted on the frame, the pedal assembly is rotatably connected on the parking bracket, and rotates within a set angle range. A detection device is arranged on the parking bracket and/or the pedal assembly, and is used to generate a braking signal according a relative position of the pedal assembly and the parking bracket. The braking device receives the braking signal to brake the walking assembly.

In an embodiment of the disclosure, the detection device includes a first unit and a second unit. The first unit is arranged on one of the parking brackets and the pedal assembly, and the second unit is arranged on the other one of the parking brackets and the pedal assembly. During a rotation of the pedal assembly, the first unit and the second unit interact to generate the braking signal.

In an embodiment of the disclosure, the second unit includes a pressing plate, and the pressing plate is fixedly connected to the pedal assembly. The first unit includes a switch, and the switch is fixedly connected to the parking bracket. The pedal assembly rotates at least between a first position and a second position, and when the pedal assembly leaves the first position, the pressing plate is disengaged from the switch to generate the braking signal.

In an embodiment of the disclosure, the parking assembly further includes a connecting rod, the parking bracket includes a sliding groove, and the sliding groove includes a first clamping groove and a second clamping groove. The connecting rod is rotatably connected to the pedal assembly and includes a second rod body that slides into the sliding groove. When the pedal assembly moves from the first position to the second position, the second rod body slides from the first clamping groove into the second clamping groove.

In an embodiment of the disclosure, the parking assembly further includes a first elastic component. The pedal assembly includes a rotating shaft, a connecting arm, and a pedal arm. The rotating shaft is rotatably connected to the parking bracket, and the connecting arm and the pedal arm are both fixedly connected to the rotating shaft. The first elastic component connects the connecting arm with the parking bracket and provides a first tightening force to the connecting arm. A rotational torque generated by the first tightening force is opposite in direction to a rotational torque generated when the pedal arm is pressed down.

In an embodiment of the disclosure, there is a height difference between a bottom wall of the first clamping groove and a bottom wall of the second clamping groove. A depth of the bottom wall of the first clamping groove is less than a depth of the bottom wall of the second clamping groove. During a rotation of the pedal assembly, the second rod body slides against the bottom wall of the first clamping groove and the bottom wall of the second clamping groove in sequence.

In an embodiment of the disclosure, the parking assembly may further include a second elastic component, the second elastic component can provide a second tightening force to the connecting rod, and the second tightening force may cause an end surface of the second rod body to press against the bottom wall of the first clamping groove or the bottom wall of the second clamping groove.

In an embodiment of the disclosure, the sliding groove further includes a third clamping groove, and a depth of a bottom wall of the third clamping groove is greater than the depth of the bottom wall of the second clamping groove. When the pedal arm is released, the second rod body slides into the third clamping groove under an action of the first elastic component and the second elastic component, and a blocking part is arranged on the third clamping groove.

In an embodiment of the disclosure, the parking bracket further includes a fourth clamping groove, and a depth of a bottom wall of the fourth clamping groove is greater than the depth of the bottom wall of the third clamping groove. When the pedal arm is depressed, the second rod body located in the third clamping groove slides into the fourth clamping groove under an action of the second elastic component, and when the pedal arm is released again, the second rod body slides into the first clamping groove under the action of the first elastic component.

In an embodiment of the disclosure, the frame includes the driving seat, and the lawn mower further includes: a steering wheel assembly and a locking member. The steering wheel assembly includes a steering wheel and a steering wheel frame, the steering wheel is rotatably mounted on the steering wheel frame to control a walking direction of the lawn mower, and the steering wheel frame is rotatably mounted on the frame. The locking member is arranged on the frame and/or the steering wheel frame to lock the steering wheel frame relative to the frame.

In an embodiment of the disclosure, along a height direction of the lawn mower, the locking member is arranged between a rotation center of the steering wheel frame and the steering wheel.

In an embodiment of the disclosure, the frame includes a guiding groove, and the locking member includes a locking shaft. A first end of the locking shaft is connected to the steering wheel frame, and a second end of the locking shaft passes through the guiding groove and slides along the guiding groove.

In an embodiment of the disclosure, the locking member further includes a locking block, the locking block passes through the locking shaft and presses against or disengages from the frame along an axial direction of the locking shaft.

In an embodiment of the disclosure, the locking block includes a first locking body and a second locking body. Both the first locking body and the second locking body are arranged on the locking shaft. A first end of the first locking body is arranged close to the frame, and a second end of the first locking body is arranged close to the second locking body. The first locking body includes a compressing surface, and the second locking body includes a compressing block. When the second locking body is rotated, the compressing surface and the compressing block cooperate to press the first locking body against the frame.

In an embodiment of the disclosure, the compressing surface includes a first compressing surface and a second compressing surface. Along an axial direction of the locking shaft, there is a height difference between the first compressing surface and the second compressing surface, and the first compressing surface and the second compressing surface are connected by a slope transition.

In an embodiment of the disclosure, both the first locking body and the second locking body are coaxially arranged with the locking shaft. There is a plurality of compressing surfaces on the first locking body, and the plurality of the compressing surfaces is arranged in a circumferential array along the first locking body. The compressing blocks on the second locking body are arranged corresponding to the compressing surfaces on the first locking body.

In an embodiment of the disclosure, the locking member further includes a rotary handle, a connecting part and a connecting arm are arranged on two ends of the rotary handle. The connecting part is connected to the second locking body, and the connecting arm extends toward a driver's position.

In an embodiment of the disclosure, the steering wheel assembly further includes a position sensor, and the position sensor senses a rotating angle of the steering wheel to control a movement of the walking assembly. The position sensor is located on a side of the steering wheel facing the driver.

In an embodiment of the disclosure, the steering wheel assembly further includes a reversing assembly that controls a forward or backward movement of the walking assembly, and the reversing assembly is located on a side of the steering wheel.

In an embodiment of the disclosure, the braking device includes an electromagnetic brake disc, and the walking assembly includes walking wheels. The electromagnetic brake disc receives the braking signals and brakes the walking assembly.

The disclosure further provides a braking control method, and the braking control method includes operations as follows. A parking signal is obtained. If the parking signal is in an enabling state, a timing starts. It is determined whether a preset braking condition is met based on a current rotating speed of the driving motor and/or a duration of the timing. If the preset braking condition is met, a braking component is controlled to brake.

In an embodiment of the disclosure, based on the current rotating speed of the driving motor and the duration of the timing, it is determined whether the preset braking condition is met, if the duration of the timing is equal to or greater than a preset braking duration, it is determined that the preset braking condition is met.

In an embodiment of the disclosure, based on the current rotating speed of the driving motor and the duration of the timing, it is determined whether the preset braking condition is met, if the duration of the timing is less than a preset braking duration, and the current rotating speed of the driving motor is less than or equal to the preset rotating speed, it is determined that the preset braking condition is met.

In an embodiment of the disclosure, based on the current rotating speed of the driving motor and the duration of the timing, it is determined whether the preset braking condition is met, if the preset braking condition is not met, the driving motor is controlled to continue deceleration until the preset braking condition is met.

In an embodiment of the disclosure, based on the current rotating speed of the driving motor, it is determined whether the preset braking condition is met; if the current rotating speed of the driving motor is less than or equal to the preset rotating speed, then the braking component is controlled to brake.

In an embodiment of the disclosure, based on the duration of the timing, it is determined whether the preset braking condition is met, if the duration of the timing is equal to or greater than a preset braking duration, then the braking component is controlled to brake.

In an embodiment of the disclosure, obtaining the current rotating speed of the driving motor if the parking signal is in an enabling state further includes: if the current rotating speed of the driving motor is less than or equal to the preset rotating speed, then controlling the braking component to brake.

In an embodiment of the disclosure, after controlling the braking component to brake, the braking control method further includes: controlling the duration of the timing to reset to zero.

In an embodiment of the disclosure, the lawn mower includes the frame, the walking assembly and the cutting deck assembly. The walking assembly is mounted on the frame for driving the frame. The walking assembly includes at least one first driving motor for driving the walking assembly. The cutting deck assembly mounted on the frame for mowing. Wherein, the braking control method of the lawn mower includes: obtaining the parking signal; if the parking signal is in the enabling state, starting timing; determining whether a preset braking condition of the first driving motor is met based on a current rotating speed of the first driving motor and/or the duration of the timing; and if the preset braking condition is met, controlling the braking component to brake.

In an embodiment of the disclosure, the parking signal includes a first parking signal and a second parking signal. The enabling state includes: enabling either the first parking signal or the second parking signal, or enabling both the first parking signal and the second parking signal simultaneously.

In an embodiment of the disclosure, the lawn mower further includes a second driving motor, and the braking control method of the lawn mower further includes: after the timing starts, simultaneously determining whether the current rotating speeds of the first driving motor and/or the current rotating speed of the second driving motor meet the preset braking condition, if the preset braking condition is met, controlling the braking component to brake.

In an embodiment of the disclosure, if the duration of the timing is less than the preset braking duration, and the current rotating speed of the first driving motor is less than or equal to the preset rotating speed, then it is determined that the first driving motor meets the preset braking condition. If the duration of the timing is less than the preset braking duration, and the current rotating speed of the second driving motor is less than or equal to the preset rotating speed, then it is determined the second driving motor meets the preset braking condition.

In an embodiment of the lawn mower of the disclosure, if the duration of the timing is equal to or greater than the preset braking duration, then it is determined that the preset braking condition is met.

The disclosure further provides a calibration method of an operating rod, and the calibration method is applied to a vehicle. The vehicle includes the operating rod and a limiting clamping groove. The vehicle is in a parking state when the operating rod is clamped in a parking groove. The calibration method includes operations as follows. When the operating rod is in the parking groove, a corresponding calibration voltage is generated in response to a swinging of the operating rod in the parking groove. A current neutral voltage range is updated in real time based on the current neutral voltage range and the calibration voltage. A new neutral voltage range is set based on the current neutral voltage range when the operating rod leaves the parking groove.

In an embodiment of the disclosure, updating a current neutral voltage range in real time based on the current neutral voltage range and the calibration voltage includes operations as follows. A maximum voltage in the current neutral voltage range and the calibration voltage is obtained, and an upper limit of the current neutral voltage range is updated using the maximum voltage as an upper limit value. A minimum voltage in the current neutral voltage range and the calibration voltage is obtained, and a lower limit of the current neutral voltage range is updated using the minimum voltage as a lower limit value.

In an embodiment of the disclosure, updating the current neutral voltage range when the operating rod leaves the parking groove includes operations as follows. An update of the current neutral voltage range is stopped when the operating rod leaves the parking groove. A latest current neutral voltage range is set as the new neutral voltage range.

In an embodiment of the disclosure, generating the corresponding calibration voltage in response to the swinging of the operating rod in the parking groove includes operations as follows. In responds to the swinging of the operating rod within the parking groove, a swinging angle of the operating rod is obtained. Based on the swinging angle, the corresponding calibration voltage is generated.

In an embodiment of the disclosure, a maximum of the generated calibration voltage is greater than or equal to the upper limit of the preset neutral voltage range, and a minimum of the generated calibration voltage is less than or equal to the lower limit of the preset neutral voltage range.

The disclosure further provides the garden tool. The garden tool includes the frame, the operating rod, the driving motor and a driving control system. Wherein, the parking groove is arranged on the frame. The operating rod is mounted on the frame. The driving motor is arranged on the frame. The driving control system includes a second detection device and a driving controller. The second detection device collects the swinging angle of the operating rod relative to the frame and generates a corresponding driving voltage. The driving controller controls an output shaft of the driving motor to rotate forward, reverse, or stop based on the driving voltage. Furthermore, when the operating rod is in the parking groove, the second detection device responds to the swinging of the operating rod in the parking groove and generates the corresponding calibration voltage. The driving controller updates the current neutral voltage range in real time based on the current neutral voltage range and the calibration voltage. When the operating rod leaves the parking groove, the driving controller sets a new neutral voltage range based on the current neutral voltage range.

In an embodiment of the disclosure, a response switch is arranged in the parking groove. When the operating rod is in the parking groove, the response switch is pressed by the operating rod and sends a calibration signal to the driving controller.

In an embodiment of the disclosure, when the operating rod leaves the parking groove, the response switch is released and stops sending the calibration signal to the driving controller.

In an embodiment of the disclosure, the garden tool further includes a triggering switch, and the triggering switch is mounted on the frame. The triggering switch sends or stops sending the calibration signal to the driving controller in response to a pressing operation.

In an embodiment of the disclosure, after receiving the calibration signal, the driving controller starts a calibration process to set the new neutral voltage range. When the driving controller does not receive the calibration signal, the driving controller ends the calibration process and determines the new neutral voltage range.

In an embodiment of the disclosure, a signal transmission method between the response switch and the driving controller is IO command or communication command, and the communication command is configured for RS485, RS422, CAN or LIN communication.

In an embodiment of the disclosure, the second detection device is an angle sensor.

In an embodiment of the disclosure, the lawn mower includes a controller. The controller includes a second housing, a conductive post and a sealing component. The second housing includes a third through hole and a sealing groove. The sealing groove is arranged on an outer wall of the second housing, and is arranged around the third through hole. The conductive post penetrates the third through hole, and a circumferential groove is arranged around a side wall of the conductive post. The sealing component includes a first sealing part and a second sealing part, the first sealing part abuts against the circumferential groove and the second sealing part abuts against the sealing groove.

In an embodiment of the disclosure, the controller further includes an auxiliary bracket, and the auxiliary bracket is sleeved on an outer periphery of the conductive post passing through the third through hole.

In an embodiment of the disclosure, the auxiliary bracket includes a flange surface, and the flange surface is located above a wall of the sealing groove near the conductive post and extends towards above the sealing groove.

**I**n an embodiment of the disclosure, an outer periphery of a top surface of the flange surface is an arc surface.

In an embodiment of the disclosure, the first sealing part is spherical, a top of the auxiliary bracket includes an annular wall, and the top of annular wall is located between a high point and a low point of the circumferential groove.

In an embodiment of the disclosure, a reinforcing rib is arranged on an outer periphery of the annular wall.

In an embodiment of the disclosure, a lower part of the auxiliary bracket includes a plurality of second elastic sheets, and the plurality of the second elastic sheets is arranged in a circumferential array around an axis of the auxiliary bracket.

In an embodiment of the disclosure, a bottom of the second elastic sheet includes a blocking step, and a bottom side wall of the blocking step is an inclined surface.

In an embodiment of the disclosure, a first annular groove is arranged around a top of the third through hole, and a sealing ring is matchably arranged inside the first annular groove.

In an embodiment of the disclosure, a third connecting part is arranged between the first sealing part and the second sealing part, and an arc-shaped bending part is arranged on the third connecting part.

In an embodiment of the disclosure, an inserting groove is arranged on the second housing surrounding the sealing groove, and the sealing component includes a third sealing part that cooperates with the inserting groove. The third sealing part and the third connecting part cooperate with each other to seal the sealing groove.

In an embodiment of the disclosure, the lawn mower includes a driving member. The driving member includes a motor and a planetary reducer. The planetary reducer includes a reducer housing and a planetary gear assembly mounted inside the reducer housing. A power input end of the planetary gear assembly is connected to an output shaft of the motor, and a power output end of the planetary gear assembly is connected to the reducer housing. Each gear in the planetary gear assembly is a helical gear.

In an embodiment of the disclosure, the planetary gear assembly includes a first-stage planetary gear assembly and a second-stage planetary gear assembly, wherein a sun gear of the first-stage planetary gear assembly is connected to a planetary carrier of the second-stage planetary gear assembly, and the sun gear and the planetary gear on the planetary carrier are assembled such that axial forces of the sun gear and the planetary gear during operation are in opposite directions.

In an embodiment of the disclosure, the first-stage planetary gear assembly includes a first sun gear, a first planetary carrier, a first planetary gear, and a first ring gear. Wherein, the first sun gear is connected to the output shaft of the motor. The first planetary carrier is rotatably arranged relative to an outer housing of the motor. The first planetary gear is rotatably connected to the first planetary carrier. The first ring gear is fixedly connected to the reducer housing. The first planetary gears are meshed with the first sun gear and the first ring gear respectively.

In an embodiment of the disclosure, the second-stage planetary gear assembly includes a second sun gear, a second planetary carrier, a second planetary gear, and a second ring gear. Wherein, the second sun gear is fixedly connected to the first planetary carrier. The second planetary carrier is fixedly connected to the outer housing of the motor. The second planetary gear is rotatably connected to the second planetary carrier. The second ring gear is fixedly connected to the reducer housing. The second planetary gears are meshed with the second sun gear and the second ring gear respectively.

In an embodiment of the disclosure, the first planetary gear and the second sun gear have a same gear tooth rotating direction.

In an embodiment of the disclosure, the first sun gear and the second planetary gear have a same gear tooth rotating direction.

In an embodiment of the disclosure, a bearing is arranged between the second planetary carrier and the reducer housing.

In an embodiment of the disclosure, the planetary gear assembly includes a planetary gear and a planetary carrier, the planetary gear is rotatably connected to the planetary carrier, and an axial supporting unit is arranged between the planetary gear and the planetary carrier.

In an embodiment of the disclosure, the axial supporting unit includes a plurality of rolling balls arranged between an end surface of the planetary gear and the planetary carrier, and the plurality of rolling balls is arranged along a circumferential direction of the planetary gear.

In an embodiment of the disclosure, a second annular groove for accommodating the rolling balls is arranged on the end surface of the planetary gear.

In an embodiment of the disclosure, an annular gasket is arranged on a side of each of the rolling ball away from the planetary gear, and an end surface of the annular gasket forms a rolling fit with each of the rolling balls.

In an embodiment of the disclosure, the planetary carrier includes a pin shaft, and the planetary gear includes a shaft hole for the pin shaft to pass through. A radial supporting unit is provided between an inner wall of the shaft hole and the pin shaft.

In an embodiment of the disclosure, the radial supporting unit includes a plurality of rolling posts, and the plurality of the rolling posts are arranged along a circumferential direction of the pin shaft.

In an embodiment of the disclosure, the garden tool further includes an encoder for monitoring a working state of the motor, and the encoder and the motor are electrically connected to the controller.

In an embodiment of the disclosure, the motor includes a first connecting part for connecting a frame assembly of the garden tool, and the reducer housing includes a fourth connecting part for connecting the walking wheels of the garden tool.

In an embodiment of the disclosure, the lawn mower includes a motor reducer assembly. The motor reducer assembly includes a fixing shaft, an external rotor motor, the planetary reducer and an output casing. The external rotor motor includes an external rotor and an internal stator. Wherein, the internal stator is fixedly connected to the fixing shaft coaxially. The external rotor is rotatably connected to the fixing shaft coaxially. A power input end of the planetary reducer is fixedly connected to the external rotor. The output casing is rotatably connected to the fixing shaft coaxially, and the output casing is fixedly connected to a power output end of the planetary reducer.

In an embodiment of the disclosure, the external rotor motor and the planetary reducer are accommodated within an accommodating cavity formed by the output casing.

In an embodiment of the disclosure, the planetary reducer includes a third sun gear, a third planetary carrier, a third planetary gear and a third ring gear. Wherein. the third sun gear is configured as the power input end and is fixedly connected to the external rotor coaxially. The third planetary carrier is fixedly connected to the fixing shaft. The third planetary gear is rotatably connected to the third planetary carrier. The third ring gear is configured as the power output end and is fixedly connected to the output casing. The third planetary gear is meshed with the third sun gear and the third ring gear respectively.

In an embodiment of the disclosure, the internal stator includes a first center hole, and the first center hole forms an interference fit with the fixing shaft.

In an embodiment of the disclosure, the external rotor includes a rotor assembly and a rotor end cover, the rotor assembly and the rotor end cover are fixedly connected to each other, and the rotor end cover is rotatably connected to the fixing shaft through a bearing.

In an embodiment of the disclosure, the third sun gear includes a gear body and a supporting part, and the supporting part is fixedly connected to the external rotor.

In an embodiment of the disclosure, the output casing includes a front end cover, a cylindrical body, and a rear end cover. The front end cover and the rear end cover are fixedly connected to two ends of the cylindrical body respectively. The front end cover is rotatably connected to an end of the fixing shaft away from the external rotor motor through the bearing. The rear end cover is rotatably connected to the end of the fixing shaft away from the planetary reducer through the bearing.

In an embodiment of the disclosure, an inner wall of the output casing includes a rib plate, and the external rotor motor and the planetary reducer are located on two sides of the rib plate.

In an embodiment of the disclosure, the third planetary carrier includes a second center hole, and the second center hole forms an interference fit with the fixing shaft.

In an embodiment of the disclosure, an annular groove is arranged on the fixing shaft at a position flush with an end surface of the third planetary carrier. A circlip is arranged in the annular groove, and the circlip abuts against the end surface of the third planetary carrier.

In an embodiment of the disclosure, the third ring gear forms an interference-fit with the inner wall of the output casing.

In an embodiment of the disclosure, the lawn mower includes the driving assembly. The driving assembly includes a fixing shaft, an external rotor motor, the planetary reducer, an output casing and a rim. The external rotor motor includes an external rotor and an internal stator. Wherein, the internal stator is fixedly connected to the fixing shaft coaxially. The external rotor is rotatably connected to the fixing shaft coaxially. A power input end of the planetary reducer is fixedly connected to the external rotor. The output casing is rotatably connected to the fixing shaft coaxially, and the output casing is fixedly connected to the power output end of the planetary reducer. The rim is fixedly connected to the output casing.

In an embodiment of the disclosure, at least part of a structure of the output casing is accommodated in the rim.

In an embodiment of the disclosure, the lawn mower further includes a braking assembly. The braking assembly includes a brake disc and a caliper. The brake disc is coaxially and fixedly connected to an end of the output casing away from the rim, and the caliper is fixedly arranged relative to the fixing shaft.

In an embodiment of the disclosure, the lawn mower includes an accessory system. The accessory system includes a working assembly and an adjustment assembly. The adjustment assembly includes a third bracket, a fourth bracket, a first driving assembly and a second driving assembly. The fourth bracket is rotatably connected to the third bracket. The working assembly is rotatably connected to the fourth bracket. The first driving assembly is arranged between the third bracket and the fourth bracket. The second driving assembly is arranged between the fourth bracket and the working assembly. The first driving assembly and the second driving assembly drive the working assembly to rotate along different directions.

**In** an embodiment of the disclosure, the third bracket includes a bracket body and a cantilever. A first end of the cantilever is fixedly connected to the bracket body, and a second end of the cantilever is arranged obliquely upward toward one side of the fourth bracket.

In an embodiment of the disclosure, a first end of the first driving assembly is rotatably connected to the cantilever, and a second end of the first driving assembly is rotatably connected to the fourth bracket.

In an embodiment of the disclosure, the fourth bracket is arranged on one side of the bracket body and is rotatably connected to the bracket body.

In an embodiment of the disclosure, an end of the fourth bracket away from the bracket body is rotatably connected to the working assembly, and a height of the end of the fourth bracket away from the bracket body from a ground is less than a height of a side of the fourth bracket connected to the bracket body from the ground.

In an embodiment of the disclosure, the working assembly includes a working body and a second mounting bracket. The second mounting bracket is fixedly mounted on the working body, and the second mounting bracket is rotatably connected to the fourth bracket.

In an embodiment of the disclosure, a first end of the second driving assembly is rotatably connected to the fourth bracket, and a second end of the second driving assembly is rotatably connected to the second mounting bracket.

In an embodiment of the disclosure, the first driving assembly and the second driving assembly are electric actuators or electro-hydraulic actuators.

In an embodiment of the disclosure, a rotating angle of the working assembly about a rotation axis of the working assembly and the fourth bracket is set between -30° and 30°.

In an embodiment of the disclosure, the lawn mower includes a snow removal assembly. The snow removal assembly includes a snow shovel and the adjustment assembly. The adjustment assembly includes the third bracket, the fourth bracket, the first driving assembly and the second driving assembly. The fourth bracket is rotatably connected to the third bracket. The snow shovel is rotatably connected to the fourth bracket. The first driving assembly is arranged between the third bracket and the fourth bracket. The second driving assembly is arranged between the fourth bracket and the snow shovel. The first driving assembly and the second driving assembly drive the snow shovel to rotate along different directions.

In an embodiment of the disclosure, the lawn mower includes a lifting assembly, and the lifting assembly includes a locking member. The locking member includes a movable part and a limiting part. The limiting part is mounted on the frame. The cutting deck assembly is connected to the movable part. The movable part can be locked in a third position and a fourth position by the limiting part. Wherein, when the movable part is locked in the third position, the cutting deck assembly is locked in a first station, when the movable part is locked in the fourth position, the cutting deck assembly is locked in a second station, and a height of the second station is higher than a height of the first station.

In an embodiment of the disclosure, the movable part includes a connecting plate and a first pedal connected to the connecting plate, and the first pedal is located on a side of the connecting plate away from the frame.

In an embodiment of the disclosure, the connecting plate includes a first limiting structure arranged at one end near the limiting part. The first limiting structure is located on a side of the connecting plate facing the frame. When the first limiting structure is connected to the limiting part, the movable part is locked in the third position.

In an embodiment of the disclosure, the connecting plate further includes a second limiting structure, the second limiting structure is arranged at a vertical surface of the connecting plate facing the limiting part. When the second limiting structure is clamped with the limiting part, the movable part is locked at the fourth position.

In an embodiment of the disclosure, the locking member further includes a connecting shaft, and the movable part is mounted on the connecting shaft.

In an embodiment of the disclosure, the movable part further includes a rotating sleeve. The rotating sleeve penetrates the connecting plate and is fixedly connected to the connecting plate. The rotating sleeve is sleeved on the connecting shaft.

In an embodiment of the disclosure, the locking member further includes a third reset spring. The third reset spring is sleeved outside the rotating sleeve. A first end of the third reset spring is fixed, and a second end of the third reset spring is connected to the connecting plate.

In an embodiment of the disclosure, the limiting part includes a limiting shaft and a fixing bracket for mounting the limiting shaft. The fixing bracket is fixedly mounted on a side of the frame away from the cutting deck assembly.

In an embodiment of the disclosure, the fixing bracket includes two fixing plates arranged opposite each other, and two ends of the limiting shaft are respectively connected to the two fixing plates.

In an embodiment of the disclosure, the lifting assembly further includes a connecting member and an operating member. The connecting member connects the operating member with the cutting deck assembly. The operating member drives the cutting deck assembly to switch between the first station and the second station through the connecting member.

In an embodiment of the disclosure, the connecting member includes a crank and a pulling rod. The crank is hinged to the frame and includes a first end part and a second end part away from a hinge position. The first end part is rotatably connected to the pulling rod, and an end of the pulling rod away from the crank is rotatably connected to the cutting deck assembly. The second end part is connected to the connecting shaft.

In an embodiment of the disclosure, the operating member is fixedly connected to the crank and connected to the connecting shaft, and a second pedal is arranged at an end of the operating member away from the connecting shaft.

In an embodiment of the disclosure, the connecting shaft includes a shaft shoulder, the movable part is arranged on a first side of the shaft shoulder, and the connecting member and the operating member are arranged on a second side of the shaft shoulder.

In an embodiment of the disclosure, an end of the operating member away from the second pedal is connected to the first end part of the crank through a second connecting rod. The pulling rod passes through the second connecting rod radially and is rotatably connected to the second connecting rod.

In an embodiment of the disclosure, there are four connecting members, namely a first connecting member, a second connecting member, a third connecting member, and a fourth connecting member. Along a first direction, a seventh rotating shaft and an eighth rotating shaft, arranged in parallel, are rotatably connected on a side of the frame near the cutting deck assembly. The first connecting member and the second connecting member are arranged opposite to each other and are respectively fixedly connected to two ends of the seventh rotating shaft. The third connecting member and the fourth connecting member are arranged opposite to each other and are respectively fixedly connected to two ends of the eighth rotating shaft. Along a second direction, the first connecting member and the third connecting member are arranged in sequence, and the second connecting member and the fourth connecting member are arranged in sequence. A connection rod is arranged between the first connecting member and the third connecting member. A first end of the connection rod is connected to the connecting shaft, and a second end of the connection rod is connected to a second reinforcing rib of the third connecting member.

The lawn mower includes the dump body assembly, and the dump body assembly is tiltably mounted on the frame. The dump body assembly has a large storage space, which allows operators to easily carry necessary supplies and tools during work, resulting in a more user-friendly work experience and improved work efficiency. This dump body assembly may also be used to transport weeds or waste from a grassland, reducing cost of purchasing transport vehicles. At the same time, the dump body assembly has a tilting function, facilitating unloading and saving manpower and resources.

### BRIEF DESCRIPTION OF THE DRAWINGS

In order to explain technical solutions of embodiments of the disclosure more clearly, the following may briefly introduce drawings used in a description of the embodiments or the conventional art. Obviously, the drawings in the following description are only some embodiments of the disclosure. For those of ordinary skill in the art, other drawings may be obtained based on these drawings without creative work.
FIG. 1 is a first schematic entire structural view of a lawn mower according to at least one embodiment of the disclosure.
FIG. 2 is a first schematic entire structural view of a lawn mower according to another embodiment of the disclosure.
FIG. 3 is a schematic structural view of a dump body assembly in a stowed state of according to at least one embodiment of a lawn mower of the disclosure.
FIG. 4 is a bottom view of a dump body assembly in a stowed state of according to at least one embodiment of a lawn mower of the disclosure.
FIG. 5 is a schematic structural view of a dump body assembly tilting to a mechanical limit position according to at least one embodiment of a lawn mower of the disclosure.
FIG. 6 is a schematic structural view of a locking assembly according to at least one embodiment of a lawn mower of the disclosure.
FIG. 7 is a full cross-sectional view of a locking assembly along a center line of a stepped axis according to at least one embodiment of a lawn mower of the disclosure.
FIG. 8 is a partial enlarged view of area A in FIG. 7.
FIG. 9 is a top view of FIG. 4.
FIG. 10 is a partial enlarged view of area B in FIG. 9.
FIG. 11 is a second schematic entire structural view of a lawn mower according to at least one embodiment of the disclosure.
FIG. 12 is a second schematic entire structural view of a lawn mower according to another embodiment of the disclosure.
FIG. 13 is a schematic structural view of a dump body assembly according to at least one embodiment of a lawn mower of the disclosure.
FIG. 14 is a bottom view of a rear wall of a dump body assembly in an unfolded state according to at least one embodiment of a lawn mower of the disclosure.
FIG. 15 is a schematic view of a dump body assembly from another angle according to at least one embodiment of a lawn mower of the disclosure.
FIG. 16 is a schematic view of a connecting assembly according to at least one embodiment of a lawn mower of the disclosure.
FIG. 17 is a schematic view of a first fixing post or a second fixing post according to at least one embodiment of a lawn mower of the disclosure.
FIG**.** 18 is a schematic view of a first clamping ring according to at least one embodiment of a lawn mower of the disclosure.
FIG. 19 is a schematic view of a second clamping ring according to at least one embodiment of a lawn mower of the disclosure.
FIG. 20 is a schematic view of a locking base according to at least one embodiment of a lawn mower of the disclosure.
FIG. 21 is a partial cross-sectional view of a locking base according to at least one embodiment of a lawn mower of the disclosure.
FIG. 22 is a schematic view of a locking body according to at least one embodiment of a lawn mower of the disclosure.
FIG. 23 is a partial structural top view of a lawn mower according to at least one embodiment of the disclosure.
FIG. 24 is a partial schematic structural view of a lawn mower according to at least one embodiment of the disclosure.
FIG. 25 is a schematic structural view of a housing according to at least one embodiment of the disclosure.
FIG. 26 is a partial schematic structural view of a housing according to at least one embodiment of the disclosure.
FIG. 27 is an enlarged view of area C in FIG. 26 of the disclosure.
FIG. 28 is an enlarged view of area D in FIG. 26 of the disclosure.
FIG. 29 is a schematic structural view of a battery compartment according to at least one embodiment of the disclosure.
FIG. 30 is a schematic view of a battery compartment from another angle according to at least one embodiment of the disclosure.
FIG. 31 is a schematic structural view of a main part of a battery compartment according to at least one embodiment of the disclosure.
FIG. 32 is a schematic view of a cover according to at least one embodiment of the disclosure.
FIG. 33 is a schematic structural view of a cover according to at least one embodiment of the disclosure.
FIG. 34 is a schematic view of a cover from another angle according to at least one embodiment of the disclosure.
FIG. 35 is a schematic structural view of a second connecting component according to at least one embodiment of the disclosure.
FIG. 36 is a schematic view of a second connecting component from another angle according to at least one embodiment of the disclosure.
FIG. 37 is a schematic view of a buckle according to at least one embodiment of the disclosure.
FIG. 38 is a schematic view of a buckle from another angle according to at least one embodiment of the disclosure.
FIG. 39 is a schematic structural view of a cover according to another embodiment of the disclosure.
FIG. 40 is a schematic view of a cover from another angle according to another embodiment of the disclosure.
FIG. 41 is a schematic view of an elastic sheet according to at least one embodiment of the disclosure.
FIG. 42 is an enlarged view of area E in FIG. 31 of the disclosure.
FIG. 43 is a schematic view of a lawn mower according to at least one embodiment of the disclosure.
FIG. 44 is a side view of a lawn mower according to at least one embodiment of the disclosure.

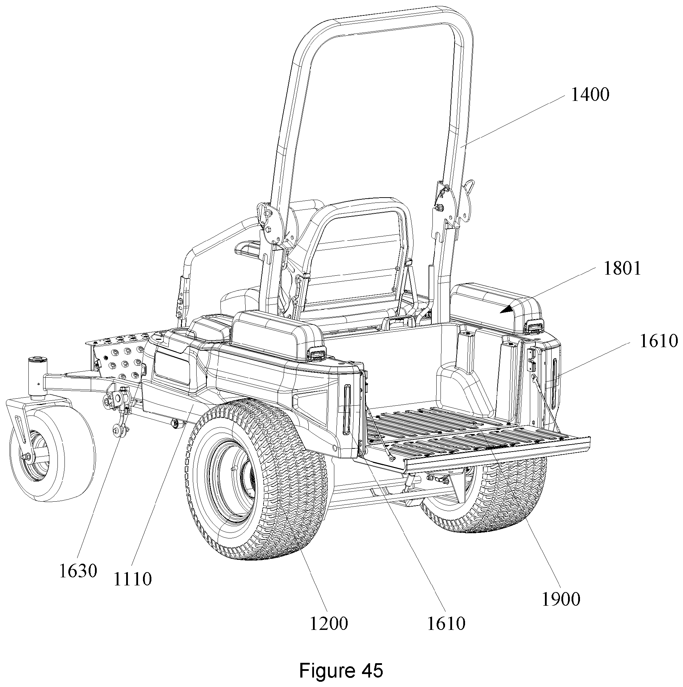

FIG. 45 is a perspective schematic view of a partial structure of a lawn mower according to at least one embodiment of the disclosure.
FIG. 46 is a perspective schematic entire structural view of a lawn mower according to at least one embodiment of the disclosure.
FIG. 47 is a partial schematic view of a lawn mower removing a cutting deck assembly according to at least one embodiment of a lawn mower of the disclosure.
FIG. 48 is a partial enlarged view of area G in FIG. 47 of the disclosure.
FIG. 49 is a partial enlarged view of area E in FIG. 46 of the disclosure.
FIG. 50 is a schematic structural view of a pedal assembly in a first position according to at least one embodiment of a lawn mower of the disclosure.
FIG. 51 is a schematic structural view of a leaf spring as a second elastic assembly according to at least one embodiment of a lawn mower of the disclosure.
FIG. 52 is an entire structural exploded view of a lawn mower according to at least one embodiment of the disclosure.
FIG**.** 53 is a schematic structural view of a sliding bar pressed in a sliding groove according to at least one embodiment of a lawn mower of the disclosure.
FIG. 54 is a detailed schematic structural view of a sliding groove on a mounting block according to at least one embodiment of a lawn mower of the disclosure.
FIG. 55 is a schematic structural view of a tension spring as a second elastic assembly according to at least one embodiment of a lawn mower of the disclosure.
FIG. 56 is a perspective axis side view of a steering wheel assembly according to at least one embodiment of a lawn mower of the disclosure.
FIG. 57 is a side view of a steering wheel assembly according to at least one embodiment of a lawn mower of the disclosure.
FIG. 58 is a partial enlarged view of a mounting position of a clamping assembly on the steering wheel frame according to at least one embodiment of a lawn mower of the disclosure.
FIG. 59 is a schematic mounting view of a locking shaft in an arc groove, with a steering wheel frame removed, according to at least one embodiment of a lawn mower of the disclosure.
FIG. 60 is a front view of a steering wheel assembly according to at least one embodiment of a lawn mower of the disclosure.
FIG. 61 is a partial enlarged view of mounting positions of a tensioning shaft and a locking block according to at least one embodiment of a lawn mower of the disclosure.
FIG. 62 is a schematic view of a mounting position of an arc-shaped block on a first locking body according to at least one embodiment of a lawn mower of the disclosure.
FIG. 63 is a schematic entire structural view of a first locking body according to at least one embodiment of a lawn mower of the disclosure.
FIG. 64 is a schematic structural view of a first locking body from another angle according to at least one embodiment of a lawn mower of the disclosure.
FIG. 65 is a schematic entire structural view of a second locking body according to at least one embodiment of a lawn mower of the disclosure.
FIG. 66 is a schematic entire structural view of a rotary handle according to at least one embodiment of a lawn mower of the disclosure.
FIG. 67 is a partial enlarged view of mounting positions of a mounting base and the steering wheel frame according to at least one embodiment of a lawn mower of the disclosure.
FIG. 68 is a schematic structural view of a mounting base removing part of the housing according to at least one embodiment of a lawn mower of the disclosure.
FIG. 69 is a schematic entire structural view of a steering wheel assembly with a protective cover according to at least one embodiment of a lawn mower of the disclosure.
FIG. 70 is a flowchart of a braking control method according to at least one embodiment of a braking control method of the disclosure.
FIG. 71 is a flowchart of S3 according to at least one embodiment of a braking control method of the disclosure.
FIG. 72 is a flowchart of S3 according to another embodiment of a braking control method of the disclosure.
FIG. 73 is a flowchart of S3 according to a third embodiment of a braking control method of the disclosure.
FIG. 74 is a flowchart of S3 with a preset braking condition according to at least one embodiment of a braking control method of the disclosure.
FIG. 75 is a flowchart of S3 with a preset braking condition according to another embodiment of a braking control method of the disclosure.
FIG. 76 is a schematic axial side view of a lawn mower according to at least one embodiment of the disclosure.
FIG**.** 77 is a partial enlarged view of area 2A in FIG. 70.
FIG. 78 is a schematic view of a mounting position of an electromagnetic brake on a second driving wheel according to at least one embodiment of a lawn mower of the disclosure.
FIG**.** 79 is a schematic view of a mounting position of an electromagnetic brake on a first driving wheel according to at least one embodiment of a lawn mower of the disclosure.
FIG. 80 is a schematic axial side view of a lawn mower according to another embodiment of the disclosure.
FIG. 81 is a schematic view of a mounting position of a first limiting switch according to at least one embodiment of a lawn mower of the disclosure.
FIG. 82 is a schematic view of a mounting position of a second limiting switch according to at least one embodiment of a lawn mower of the disclosure.
FIG. 83 is a schematic view of an operating direction of a control handle according to at least one embodiment of a lawn mower of the disclosure.
FIG. 84 is a logic flowchart of a braking control method according to at least one embodiment of the disclosure.
FIG. 85 is a schematic view of an application condition of a calibration method according to at least one embodiment of the disclosure.
FIG. 86 is a logic schematic view of a calibration method according to at least one embodiment of the disclosure.
FIG. 87 is a graph view of a driving voltage generated by a driving control system in response to a swing of an operating rod according to at least one embodiment of the disclosure.
FIG. 88 is a flowchart of a calibration method according to at least one embodiment of the disclosure.
FIG. 89 is a flowchart of S100 according to at least one embodiment of the disclosure.
FIG. 90 is a flowchart of S200 according to at least one embodiment of the disclosure.
FIG**.** 91 is a flowchart of S300 according to at least one embodiment of the disclosure.
FIG. 92 is a schematic structural view of a garden tool according to at least one embodiment of the disclosure.
FIG. 93 is a schematic structural view of a frame according to at least one embodiment of the disclosure.
FIG. 94 is a schematic mounting structural view of an operating rod on a frame according to at least one embodiment of the disclosure.
FIG**.** 95 is a schematic mounting structural view of a walking wheel on a driving motor according to an embodiment of the disclosure.
FIG. 96 is a schematic view of a controller according to at least one embodiment of the disclosure.
FIG. 97 is a top view of a controller according to an embodiment of the disclosure.
FIG. 98 is a cross-sectional view taken along line 3A-3A in FIG. 97 according to at least one embodiment of the disclosure.
FIG. 99 is an enlarged view of area 3B in FIG. 98 according to at least one embodiment of the disclosure.
FIG. 100 is a cross-sectional schematic view of a second housing according to at least one embodiment of the disclosure.
FIG. 101 is an enlarged view of area 3C in FIG. 100 according to at least one embodiment of the disclosure.
FIG. 102 is a partial schematic structural view of a conductive post according to at least one embodiment of the disclosure.
FIG. 103 is a schematic structural view of a sealing component according to an embodiment of the disclosure.
FIG. 104 is a schematic view of a sealing component from another angle according to at least one embodiment of the disclosure.
FIG. 105 is a cross-sectional schematic view of a sealing component according to at least one embodiment of the disclosure.
FIG. 106 is a schematic view of an auxiliary bracket according to at least one embodiment of the disclosure.
FIG. 107 is a schematic view of an auxiliary bracket from another angle according to at least one embodiment of the disclosure.
FIG. 108 is a cross-sectional schematic view of an auxiliary bracket according to at least one embodiment of the disclosure.
FIG. 109 is a partial cross-sectional view of a controller according to an embodiment of the disclosure.
FIG. 110 is an enlarged view of area 3D in FIG. 109 according to at least one embodiment of the disclosure.
FIG. 111 is a perspective view of a riding mower according to an embodiment of the disclosure.
FIG. 112 is an exploded view of a riding mower according to at least one embodiment of the disclosure.
FIG. 113 is a perspective view of a driving member according to an embodiment of the disclosure.
FIG. 114 is an exploded view of a driving member according to an embodiment of the disclosure.
FIG. 115 is an exploded view of a motor and an encoder according to at least one embodiment of the disclosure.
FIG. 116 is an exploded view of a planetary reducer according to at least one embodiment of the disclosure.
FIG. 117 is an assembly schematic structural view of a motor and a sun gear according to an embodiment of the disclosure.
FIG. 118 is a perspective view of a planetary gear assembly according to an embodiment of the disclosure.
FIG. 119 is a perspective cross-sectional schematic structural view of a reducer housing according to at least one embodiment of the disclosure.
FIG. 120 is a partial cross-sectional view of a second planetary carrier according to at least one embodiment of the disclosure.
FIG. 121 is an exploded view of a second planetary carrier and a second planetary gear according to at least one embodiment of the disclosure.
FIG. 122 is an exploded view of a second planetary gear with an axial supporting unit and a radial supporting unit according to at least one embodiment of the disclosure.
FIG. 123 is an exploded view of a first planetary carrier with a first planetary gear and a second sun gear according to at least one embodiment of the disclosure.
FIG. 124 is a kinematic schematic view of a planetary reducer according to at least one embodiment of the disclosure.
FIG. 125 is a force schematic view of a planetary reducer according to at least one embodiment of the disclosure.
FIG. 126 is a perspective view of a driving assembly of a garden tool according to an embodiment of the disclosure.
FIG. 127 is a perspective view of a driving assembly of a garden tool from another angle according to an embodiment of the disclosure.
FIG**.** 128 is a cross-sectional view of a driving assembly of a garden tool according to an embodiment of the disclosure.
FIG. 129 is an exploded view of a driving assembly of a garden tool according to an embodiment of the disclosure.
FIG. 130 is an exploded view of a motor reduction assembly according to at least one embodiment of the disclosure.
FIG. 131 is an exploded view of an external rotor motor and a planetary reducer according to at least one embodiment of the disclosure.
FIG. 132 is a schematic structural view of a power device system in an embodiment of the disclosure.
FIG. 133 is a schematic structural view of a power device system from another angle according to an embodiment of the disclosure.
FIG. 134 is a schematic structural top view of a power device system according to an embodiment of the disclosure.
FIG. 135 is an enlarged schematic structural view of area 6A in FIG. 134.
FIG. 136 is a schematic structural view of an adjustment assembly according to at least one embodiment of the disclosure.
FIG. 137 is a schematic structural exploded view of an adjustment assembly according to at least one embodiment of the disclosure.
FIG. 138 is a schematic side view of an adjustment assembly according to at least one embodiment of the disclosure.
FIG. 139 is a schematic top view of an adjustment assembly according to at least one embodiment of the disclosure.
FIG. 140 is a schematic structural view of a snow removal assembly according to at least one embodiment of the disclosure.
FIG. 141 is a schematic structural view of a fourth bracket according to at least one embodiment of the disclosure.
FIG. 142 is a schematic side view of a fourth bracket according to at least one embodiment of the disclosure.
FIG. 143 is a schematic top view of a fourth bracket according to at least one embodiment of the disclosure.
FIG. 144 is a schematic front view of a power device according to at least one embodiment of the disclosure.
FIG. 145 is a third schematic entire structural view of a lawn mower according to at least one embodiment of a lawn mower of the disclosure.
FIG. 146 is a schematic structural view of a cutting deck assembly, a frame and a lifting assembly according to at least one embodiment of a lawn mower of the disclosure.
FIG. 147 is a schematic structural view of a cutting deck assembly, a frame and a lifting assembly from another angle according to at least one embodiment of a lawn mower of the disclosure.
FIG. 148 is a schematic structural view of a lifting assembly according to at least one embodiment of a lawn mower of the disclosure.
FIG. 149 is a schematic structural view of a first connecting member, a locking member and an operating member according to at least one embodiment of a lawn mower of the disclosure.
FIG. 150 is a cross-sectional view taken along line 7A-7A in FIG. 149.
FIG. 151 is a schematic structural view of an operating member and a first connecting member according to at least one embodiment of a lawn mower of the disclosure.
FIG. 152 is a schematic structural view of a locking member according to at least one embodiment of a lawn mower of the disclosure.
FIG. 153 is a schematic structural view of an operating member according to at least one embodiment of a lawn mower of the disclosure.
FIG. 154 is a schematic structural view of a crank of a connecting plate according to at least one embodiment of a lawn mower of the disclosure.
FIG. 155 is a schematic structural view of a lifting assembly locked at a third position according to at least one embodiment of a lawn mower of the disclosure.
FIG. 156 is a schematic structural view of a lifting assembly locked at a fourth position according to at least one embodiment of a lawn mower of the disclosure.

### DETAILED DESCRIPTION

The following describes the implementation of the disclosure through specific embodiments, and those skilled in the art can easily understand other advantages and effects of the disclosure from the content disclosed in this specification. The disclosure may also be implemented or applied through other different specific embodiments. Various details in this specification may also be modified or changed based on different viewpoints and applications without departing from the disclosure. Following embodiments and the features in the embodiments can be combined with each other without conflict. The terms used in the examples of the disclosure are used to describe specific embodiments, instead of limiting the protection scope of the disclosure. The test methods which may not be indicate specific conditions in the following examples can be in accordance with conventional conditions, or conditions recommended by each manufacturer.

When an embodiment gives a range of values, it may be noted that, unless otherwise specified in the disclosure, two endpoints of each range of values and any one of the values between the two endpoints may be selected. Unless otherwise defined, all technical and scientific terms used in the disclosure and the prior art mastered by a person skilled in the art and a description of the disclosure may also be realized by using any method, equipment and material similar to or equivalent to the prior art described in the embodiments of the disclosure.

It may be noted that terms "upper", "lower", "left", "right", "middle" and "one" quoted in this specification are only for a convenience of description, and are not used to limit a scope of the disclosure. Changes or adjustments in their relative relationships shall also be regarded to be within the scope of the disclosure when there is no substantial change in the technical content.

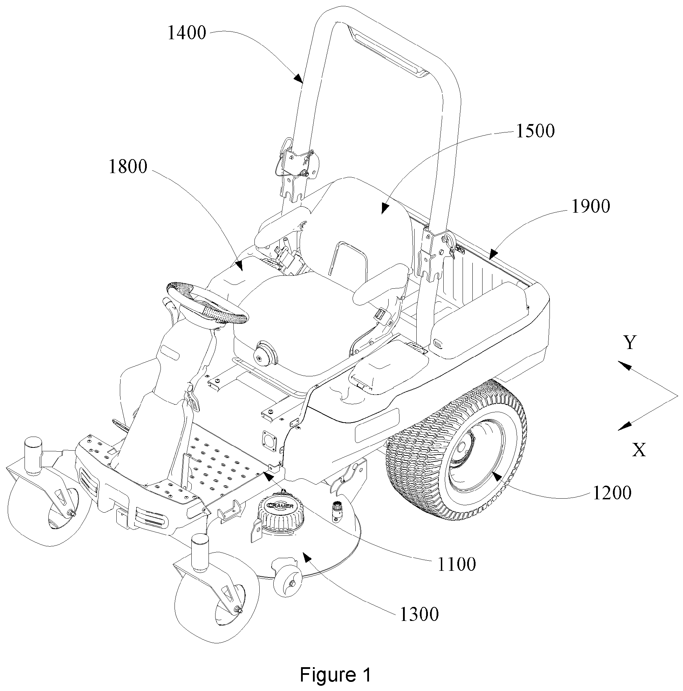

Please refer to FIG. 1 through FIG. 10. The disclosure provides a lawn mower. The lawn mower includes a dump body assembly 1900 which can be tiltably mounted on the frame 100. The dump body assembly 1900 has a large storage space, which allows operators to easily carry necessary supplies and tools during work, resulting in a more user-friendly work experience and improved work efficiency. This dump body assembly 1900 may also be used to transport weeds or waste from a grassland, reducing cost of purchasing transport vehicles. At the same time, the dump body assembly 1900 has a tilting function, facilitating unloading and saving manpower and resources.

Please refer to FIG. 1 through FIG. 2. the lawn mower includes the frame 1100, a walking assembly 1200, a cutting deck assembly 1300 and a dump body assembly 1900.

A structure of the frame 1100 is not limited and may refer to a conventional structure of the frame 1100 of the lawn mower. To improve driving experience of the lawn mower, a driving seat 1500 may be mounted on the frame 1100. To improve a problem that conventional mowers cannot achieve an anti-roll protection, an anti-roll frame 1400 is further mounted on the frame 1100 next to the driving seat 1500. In addition, considering a space occupied by the anti-roll frame 1400, the anti-roll frame 1400 may be set to be foldable, which may also solve a storage problem and save space. Of course, in other embodiments, the driving seat 1500 may be omitted and a driver may drive through standing up, or the anti-roll frame 1400 may be omitted and other methods can be used to protect the driver.

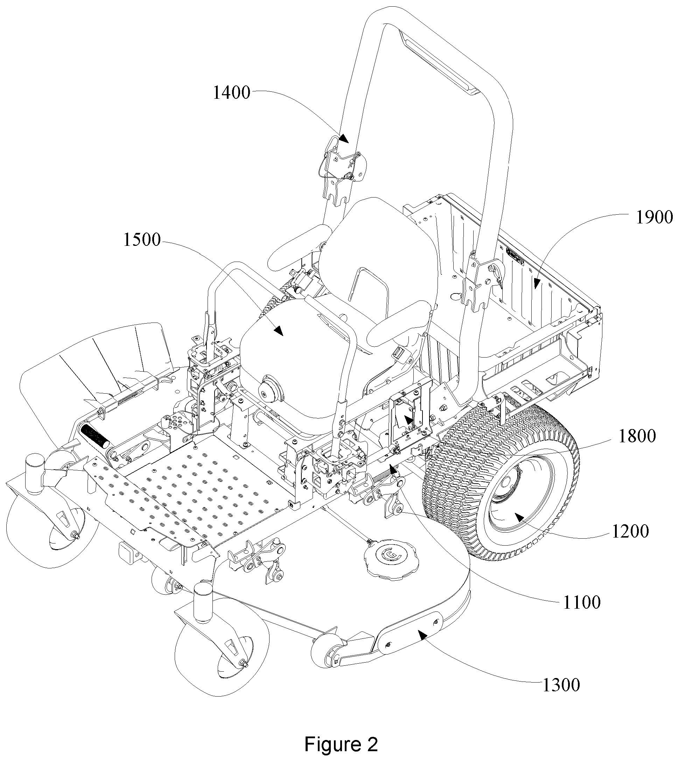

The walking assembly 1200 is mounted on the frame 1100 and is used to drive the frame 1100 to move. The walking assembly 1200 may include a driving part, a steering part, a power supply part, and other components. The power supply part provides energy to the driving part. The power supply part may be a battery or an engine, which is not limited here. In this embodiment, the power supply part uses a battery 1800. The driving part provides power for the walking wheels to rotate. The driving part may be driven by a motor or by a motor with a reducer, which is not limited here. The walking assembly 1200 correspondingly walks under a control of an operating assembly. There are various control methods for the operating assembly, including manual control, foot control, and hand-foot integrated control. For a better driving experience, in one embodiment of the disclosure, please refer to FIG. 1. The operating assembly adopts a control method of a steering wheel with foot pedals. In another embodiment of the disclosure, please refer to FIG. 2. The operating assembly adopts a control method of an operating rod.

The cutting deck assembly 1300 is mounted on a bottom of the frame 1100. A corresponding mowing operation is performed by the cutting deck assembly 1300 to obtain a lawn with an appropriate height. The cutting deck assembly 1300 may be available in various structures and specifications. Different working environments need different cutting deck assemblies 1300 and different specifications of cutting deck assemblies 1300, such as 48 inches, 52 inches and so on, which needs different assembly spaces. A wheelbase of the lawn mower may be adjusted through a bottom of the frame 1100, thereby obtaining different bottom assembly spaces and meeting adaptation needs of different cutting deck assemblies 1300.

The dump body assembly 1900 is tiltably mounted on the frame 1100 and arranged behind the driving seat 1500. The dump body assembly 1900 tilt outwards to a side away from the driving seat 1500. When the dump body assembly 1900 is fixedly connected to the frame 1100, it is used for carrying and transportation. When items in the dump body assembly 1900 need to be unloaded quickly, the dump body assembly 1900 is tilted away from the driving seat 1500, and the items are poured into a preset position. This enables operator's work experience to be more humane and improves work efficiency. A part and a relative connection relationship which may not be described in detail in the above-mentioned mowers may refer to the conventional corresponding mowers, and the details may not be repeated here.

Please refer to FIG. 1 through FIG. 3. In an embodiment of the lawn mower of the disclosure, the dump body assembly 1900 includes a body 1910 and a tiltable assembly 1920. A shape and a size of the body 1910 cannot be limited, but may be adapted to a reserved space on the frame 1100. In one embodiment of the disclosure, for ease of understanding, a straight direction of the lawn mower is defined as a first direction, which is an X-axis direction as shown in FIG. 1. A direction perpendicular to the first direction is defined as a second direction, which is a Y-axis direction as shown in FIG. 1.

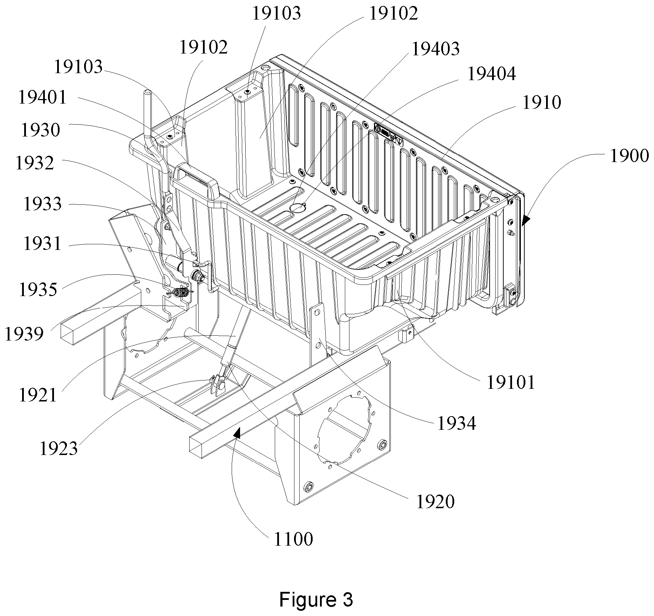

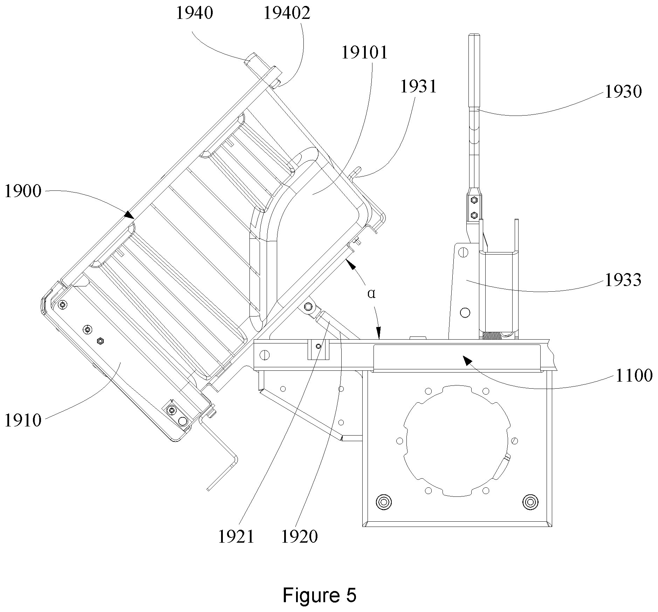

Please refer to FIG. 3 and FIG. 5. The body 1910 is configured as a rectangular box with an opening at a top of the body 1910. To maximize space utilization, a connection between the body 1910 and the frame 1100 is more compact. Two side walls of the body 1910 along the first direction are provided with concave parts 19101 for preventing interference with tires and protruding parts 19102 for enhancing a strength of the body 1910. The concave part 19101 improve a stress concentration problem at a vertex of the body 1910. A number of protruding parts 19102 on each side wall is not limited. In this embodiment, two protruding parts 19102 are arranged on each side wall. Each protruding part 19102 is located on an inner side of the side wall and adjacent to a corner edge. The protruding parts 19102 serve to enhance a strength of the side walls of the body 1910, and an upper surface of each protruding part 19102 includes a mounting groove 19103. The mounting groove 19103 is a reserved mounting position for mounting a lawn collection bracket. A reinforcing member 19104 is mounted on an underside of a bottom surface of each pair of the mounting grooves 19103 on a same side wall. Two ends of the reinforcing member 19104 are connected to bottom surfaces of the two mounting grooves 19103 respectively. The reinforcing members 19104 on the two side walls enhance the strength of the side walls of the body 1910 and ensure a load-bearing capacity for the lawn collection bracket. Of course, the mounting groove 19103 may also be used as a mounting position for other accessories and is not limited to a mounting of the lawn collection bracket.

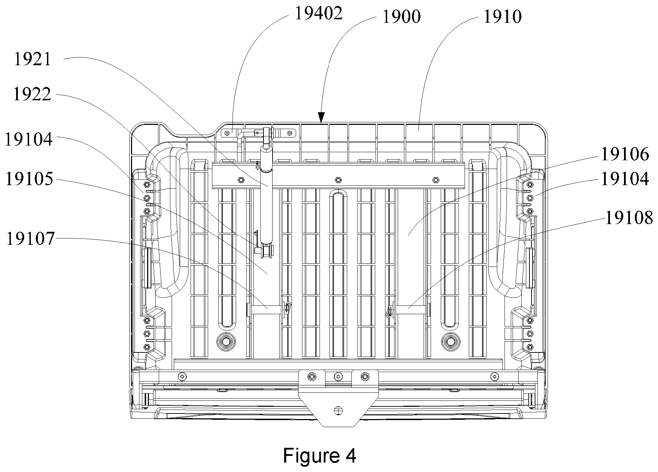

Please refer to FIG. 4 through FIG. 5. The body 1910 is rotatably connected to the frame 1100. A method of a rotatable connection is not limited. It may be achieved only through bolt assemblies or through bearing assemblies, etc. In an embodiment of the disclosure, a first bracket 19105 and a second bracket 19106 are arranged along the first direction beneath a bottom wall of the body 1910, on the side adjacent to the frame 1100. The first bracket 19105 and the second bracket 19106 are arranged side by side in parallel. A first rotating shaft 19107 is rotatably connected to the first bracket 19105, and a second rotating shaft 19108 is rotatably connected to the second bracket 19106. The frame 1100 includes a first rotating hole and a second rotating hole that are rotatably connected to the first rotating shaft 19107 and the second rotating shaft 19108, respectively. The body 1910 is lifted up by the tiltable assembly 1920 and tilts around the first rotating shaft 19107 and the second rotating shaft 19108. The tiltable assembly 1920 may be set with many forms, including linkage structure, hydraulic cylinder, pneumatic cylinder, elastic component and other components with a telescopic function, but the tiltable assembly 1920 is not limited to the forms mentioned above.

Please refer to FIG. 4 through FIG. 5. In an embodiment of the disclosure, the tiltable assembly 1920 uses a gas spring 1921. A third rotating shaft 1922 is arranged at a first end of the gas spring 1921. The gas spring 1921 is rotatably connected to the first bracket 19105 and/or the second bracket 19106 through the third rotating shaft 1922 and is hinged with the body 1910. In this embodiment, the third rotating shaft 1922 is hinged on the first bracket 19105 and is located on a side of the first rotating shaft 19107 close to the driving seat 1500. A fourth rotating shaft 1923 is arranged at a second end of the gas spring 1921, and the fourth rotating shaft 1932 is hingedly connected to the frame 1100. When a telescopic rod of the gas spring 1921 extends, the body 1910 is pushed to rotate until reaching a dead point of the gas spring 1921.

Please refer to FIG. 2 through FIG. 4. In an embodiment of the lawn mower of the disclosure, the dump body assembly 1900 further includes a locking assembly 1930. When the body 1910 contacts the frame 1100 and is not tilted, the locking assembly 1930 locks the body 1910 onto the frame 1100 for fixation. When the body 1910 is locked to the frame 1100 under an action of the locking assembly 1930, and further limited by the first rotating shaft 19107, the second rotating shaft 19108 and the third rotating shaft 1922, the body 1910 is stably fixed on the frame 1100. When the locking assembly 1930 separated the body 1910 from the frame 1100, the gas spring 1921 automatically extends the telescopic rod, the telescopic rod pushes the body 1910 to rotate around the first rotating shaft 19107 and the second rotating shaft 19108 toward a rear of the lawn mower.

Please refer to FIG. 3 and FIG. 5. The locking assembly 1930 is mounted on the frame 1100 and/or the body 1910. The locking assembly 1930 may be any suitable type of conventional locking structure, such as a spring pin locking member, a latch assembly, a ratchet assembly, a gear assembly, etc. The locking assembly 1930 may be entirely mounted on the frame 1100 or entirely mounted on the body 1910, or a part of the locking assembly 1930 may be mounted on the body 1910 and the other part is mounted on the frame 1100. It is sufficient that the body 1910 is adapted to be selectively locked on the frame 1100 or released from the frame 1100 to allow the body 1910 to rotate relative to the frame 1100 when released.

Please refer to FIG. 1 through FIG. 6. Considering a stability of the dump body assembly 1900 in a folded state and a convenience of an operation of the locking assembly, in one embodiment of the lawn mower of the disclosure, the locking assembly 1930 includes a locking ring 1931 arranged on the body 1910 and a locking component 1932 arranged on the frame 1100. Specifically, the locking ring 1931 is arranged on an outer side of a front wall of the body 1910. In order to facilitate the driver to operate, the locking ring 1931 is arranged on a left or right side of the driving seat 1500. In this embodiment, the locking ring 1931 is arranged on the front wall of the body 1910, located on the right side of the driving seat 1500. A shape and size of the locking ring 1931 are not limited. This arrangement is configured to adapt to a compact design of the lawn mower, make full use of space, and the locking ring 1931 is able to stably cooperate with the locking component 1932, so as to reduce space requirements on the lawn mower.

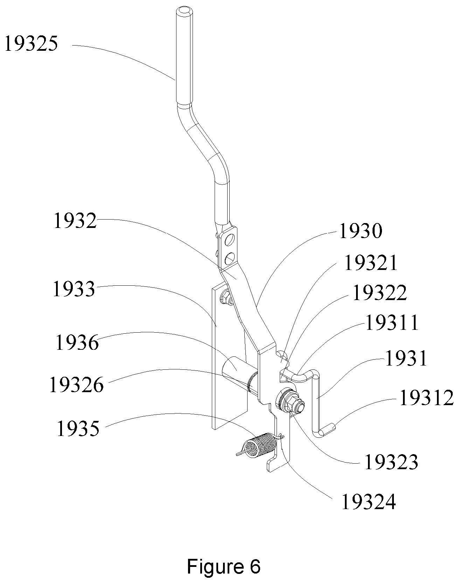

Please refer to FIG. 5 and FIG. 6. The locking ring 1931 is integrally bent from a steel tube. The locking ring 1931 includes a connecting part 19311 connected to the locking component 1932. Two ends of the connecting part 19311 are bent downward to form mounting parts 19312 connected to the body 1910. The locking component 1932 is arranged on the frame 1100 and is located at a position corresponding to the locking ring 1931. A structure, shape and size of the locking component 1932 are not limited, as long as the locking component 1932 may achieve a stable fixed connection and separation with the locking ring 1931. The locking component 1932 may be a pin, hook, toothed part or other structure. The connection and separation between the locking component 1932 and the locking ring 1931 may be achieved by a movement of the locking component 1932, or by a movement of the locking ring 1931, or neither are fixed, but a fixed connection may be achieved only in a locked state, such as a dead point position of the linkage structure.

Please refer to FIG. 6. In an embodiment of the disclosure, the locking component 1932 includes a protruding tooth 19321 that may be mechanically engageable with the locking ring 1931. The protruding tooth 19321 are inclined in a direction of engaging with the locking ring 1931. A lower part of the protruding tooth 19321 is concave to form a housing part 19322 for housing the locking ring 1931. A first through hole 19323 rotatably connected to the frame 1100 is arranged below the housing part 19322. A second through hole 19324 is arranged below the first through hole 19323. An upper end of the locking component 1932 is connected to a handle 19325 to facilitate to control the locking component 1932 to rotate.

Please refer to FIG. 1 through FIG. 8. In an embodiment of the lawn mower of the disclosure, in order to improve an assembly processability of the locking component 1932, a mounting bracket 1933 is arranged on the frame 1100 to facilitate the mounting of the locking component 1932. A shape of the mounting bracket 1933 is not limited. Two mounting brackets 1933 are arranged on the frame 1100, respectively located on two sides of the driving seat 1500. One of the mounting brackets 1933 is used to mount the locking component 1932, and the other one of the mounting brackets 1933 is a spare mounting bracket 1934. In this embodiment, the locking component 1932 is mounted on the mounting bracket 1933 located on the right side of the driving seat 1500 to achieve a corresponding locking with the locking ring 1931. In addition, the spare mounting bracket 1934 is designed such that when the locking ring 1931 is mounted on the left side, the locking component 1932 may be mounted and locked to the locking ring 1931 correspondingly. This arrangement provides great convenience for left-handed operators. The locking component 1932 is rotatably connected to the mounting bracket 1933. A rotatable connection method is not limited and may be achieved by bolt assembly or bearing assembly, etc.

Please refer to FIG. 6 through FIG. 8. In this embodiment, the mounting bracket 1933 is fixed on the frame 1100. A stepped shaft 1936 is fixed on the mounting bracket 1933. The stepped shaft 1936 includes a first shaft section 19361 with a larger diameter, a second shaft section 19362 with a smaller diameter, and a third shaft section 19363 with threads on an outer diameter of the third shaft section 19363, in sequence along a direction away from mounting bracket 1933. The second shaft section 19362 is rotatably connected to locking component 1932. The third shaft section 19363 includes a nut 19364 and a gasket 19365 to axially fix the locking component 1932, so as to achieve better assembly convenience and a reliable rotational engagement between the locking component 1932 and the second shaft section 19362.

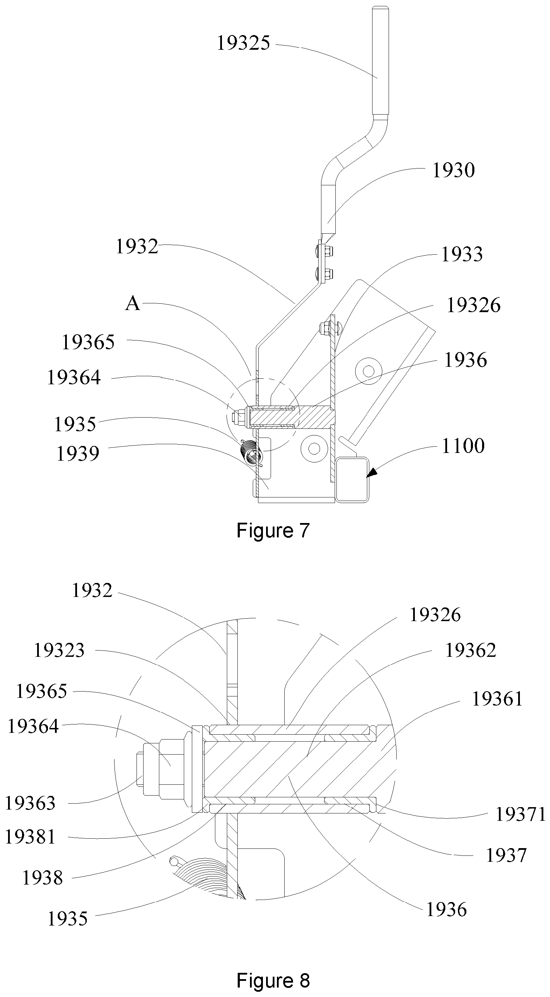

Please refer to FIG. 7 through FIG. 8. A rotating sleeve 19326 is fixedly connected in the first through hole 19323 of the locking component 1932. A fixing method between the locking component 1932 and the rotating sleeve 19326 is not limited, including welding and interference fit, but is not limited to these. In this embodiment, the locking component 1932 and the rotating sleeve 19326 are welded together. The rotating sleeve 19326 and the second shaft section 19362 are rotatably connected to each other through a first shaft ring 1937 and a second shaft ring 1938. A first protruding edge 19371 is arranged at one end of the first shaft ring 1937. An inner hole of the first shaft ring 1937 is interference-fitted with the second shaft section 19362. An outer end surface of the first protruding edge 19371 abuts against an end surface formed by a connection of the first shaft section 19361 and the second shaft section 19362. The rotating sleeve 19326 is clearance fitted with the first shaft ring 1937 to achieve a relative rotation. A first end surface of the rotating sleeve 19326 abuts against an end surface of the first protruding edge 19371 away from the first shaft section 19361. A second protruding edge 19381 is arranged at one end of the second shaft ring 1938. The second shaft ring 1938 is arranged opposite to the first shaft ring 1937. An inner hole of the second shaft ring 1938 is interference-fitted with the second shaft section 19362. An outer end surface of the second protruding edge 19381 is pressed by the nut 19364 and the gasket 19365 on the third shaft section 19363. The rotating sleeve 19326 is interference-fitted with the second shaft ring 1938 to achieve the relative rotation. A second end surface of the rotating sleeve 19326 abuts against one end surface of the second protruding edge 19381 away from the nut 19364.

Please refer to FIG. 3 and FIG. 6. The locking component 1932 is connected to the mounting bracket 1933 through an elastic component 1935 in a direction away from the locking ring 1931. The elastic component 1935 is, but is not limited to, a coil spring, a gas spring, and a rubber spring. In this embodiment, a tension spring is used. A first end of the tension spring is connected to the second through hole 19324 of the locking component 1932, and a second end of the tension spring is connected to the frame 1100. A hole on the frame 1100 for connecting the tension spring is located on a side of the locking component 1932 away from the body 1910, so that the tension spring may tighten the locking component 1932, the protruding tooth 19321 of the locking component 1932 are mechanically engageable with the locking ring 1931, and the locking ring 1931 are locked in the housing part 19322. When the operator moves to operate the handle 19325 forward, the locking component 1932 overcomes a tension force of the tension spring and rotates around the second shaft section 19362, the locking component 1932 is separated from the locking ring 1931. The dump body assembly 1900 is lifted up under an action of the gas spring 1921, and tilts backward, and after unloading, the dump body assembly 1900 returns to an original position. The locking component 1932 returns to a locked state with the locking ring 1931 under the tension force of the tension spring.

Please refer to FIG. 3 and FIG. 7. In order to prevent the locking component 1932 from becoming unstable under the tension force of the tension spring, a limiting component 1939 is further arranged on the frame 1100. The limiting component 1939 is located on the side of the locking component 1932 away from the body 1910. Under a premise of ensuring that the locking component 1932 is stably mechanically engageable with the locking ring 1931 under the tension force of the tension spring, a side of the locking component 1932 facing the tension spring abuts against the limiting component 1939 to limit a movement of the locking component 1932. In addition, a shape and size of the limiting component 1939 are not limited.

In an embodiment of the disclosure, the tiltable assembly 1920 may be preset with a start-up delay time, which means that the body 1910 may be lifted after a preset delay time. A preferred time range is from 3s to 6s, and it may be set to any time within this range, such as 3s, 4s, 5s, 6s, etc. The delay time is set to allow the operator to make a reaction time and ensure a safety of the body 1900 when it is lifted. In this embodiment, the delay time is set to 4s, which may both make a quick reaction and ensure the safety.

Please refer to FIG. 5. In an embodiment of the disclosure, a maximum tiltable angle of the dump body assembly 1900 ranges from 30° to 60°. The maximum tiltable angle α of the dump body assembly 1900 may be selected from any value in a range of 30° to 60°, such as 30°, 35°, 40°, 45°, 50°, 55°, and 60°. In one embodiment of the disclosure, α is selected as 45°. This angle may meet unloading requirements and facilitate the dump body assembly 1900 to return to the original position.

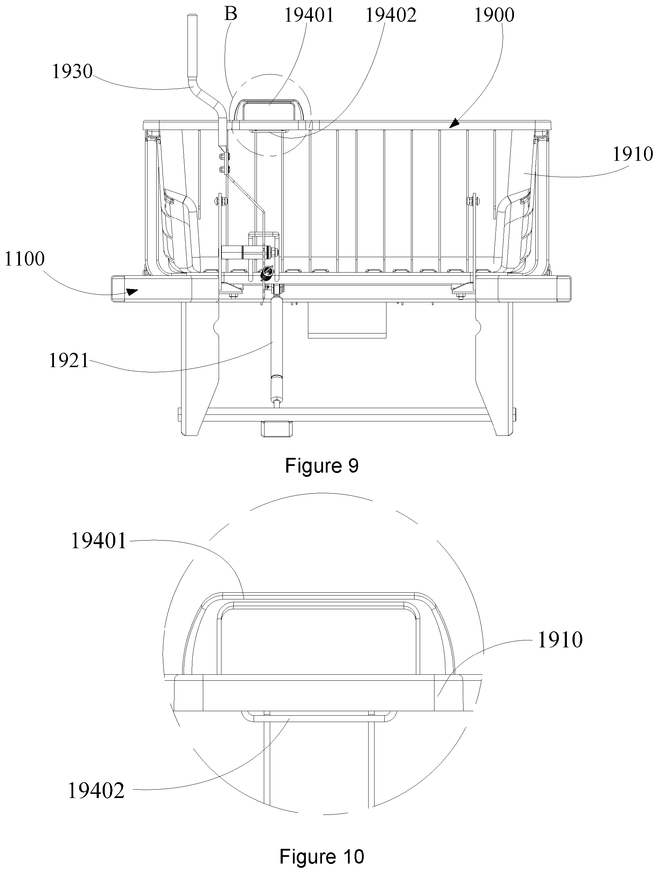

Please refer to FIG. 9 through FIG. 10. In an embodiment of the disclosure, the body 1910 includes an upper handle 19401. The upper handle 19401 may have any shape suitable for holding, such as L-shaped, frame-shaped, or arc-shaped. A position of the upper handle 19401 is not limited and may be arranged at any position suitable for the operator to exert force on the front wall and the two side walls of the body 1910. A connection method between the upper handle 19401 and the body 1910 is not limited and may be fixed, detachable, or rotatable.

In an embodiment, please refer to FIG. 9 through FIG. 10. The upper handle 19401 in this embodiment is frame-shaped with rounded corners at bends. The upper handle 19401 is detachably mounted on a wall edge of the front wall of the body 1910. A projection of the upper handle 19401 on the bottom wall of the body 1910 corresponds to a projection of the gas spring 1921 on the bottom wall of the body 1910 in the second direction. A function of the upper handle 19401 is that when the items in the dump body assembly 1900 are too heavy or the gas spring 1921 is stuck and cannot lift the dump body assembly 1900, the operator may lift the dump body assembly 1900 by using the upper handle 19401 to assist the gas spring 1921 to lift the dump body assembly 1900. Therefore, the upper handle 19401 is arranged in a position corresponding to a location of the gas spring 1921, which has a most labor-saving and most effective effect.

Please refer to FIG. 3 through FIG. 4 and FIG. 9 through FIG. 10. In an embodiment of the lawn mower of the disclosure, the body 1910 includes a lower handle 19402. A shape of the lower handle 19402 may be any shape suitable for holding, such as L-shaped, frame-shaped, or arc-shaped. A position of the lower handle 19402 is not limited and may be arranged at any position suitable for the operator to exert force on the front wall and the two side walls of the body 1910. A connection method between the lower handle 19402 and the body 1910 is not limited and may be fixed, detachable, or rotatable.

In an embodiment, please refer to FIG. 10. The lower handle 19402 in this embodiment is frame-shaped with rounded corners at bends. The lower handle 19402 is detachably mounted on the wall edge of the front wall of the body 1910, and is arranged opposite the upper handle 19401 relative to the wall edge of the front wall. A projection of the lower handle 19402 on the bottom wall of the body 1910 also corresponds to a projection of the gas spring 1921 on the bottom wall of the body 1910 along a width direction of the lawn mower. A function of the lower handle 19402 is to assist the dump body assembly 1900 to return to the original position after being tilted. The operator uses the lower handle 19402 to force the dump body assembly 1900 to rotate back and compress the gas spring 1921, so as to enable the dump body assembly 1900 to return to the original position. Therefore, the lower handle 19402 and the upper handle 19401 are arranged opposite to each other relative to the wall edge of the front wall, which has the most labor-saving and most effective effect.

Please refer to FIG. 3 through FIG. 4. In an embodiment of the disclosure, a bottom wall of the body 1910 includes at least one drainage hole 19403, and a hole plug 19404 is arranged on the at least one drainage hole 19403 to seal the at least one drainage hole 19403. A shape of the at least one drainage hole 19403 is not limited, and it may be a circular, square, or elliptical shape or other sealable shape. A position of the at least one drainage hole 19403 is not limited, and it may be arranged at any position on the bottom wall of the body 1910. A number of drainage holes 19403 may be one or more, and is not limited. A shape of the hole plug 19404 is also not limited, but it may correspond to the shape of the at least one drainage hole 19403 to achieve a sealing effect.

In an embodiment, please refer to FIG. 3 through FIG. 4. In an embodiment of the disclosure, the drainage holes 19403 are circular holes, there are two drainage holes 19403, and the two drainage holes 19403 are located on the bottom wall of the body 1910 and near an end opposite the driving seat 1500. The two drainage holes 19403 are arranged adjacent to the side walls along the width direction of the lawn mower. The positions of the two drainage holes 19403 may not affect a loading and unloading of the items, and when the dump body assembly 1900 is tilted, the two drainage holes 19403 are located at a lowest position of the dump body assembly 1910, which facilitates drainage. A matching surface of the hole plug 19404 with the drainage hole 19403 is cylindrical, and the matching surface of the hole plug 19404 is made of soft material to achieve a sealing with the drainage hole 19403. In addition, the plug hole 19404 is pluggably and mechanically engageable with the drainage hole 19403.

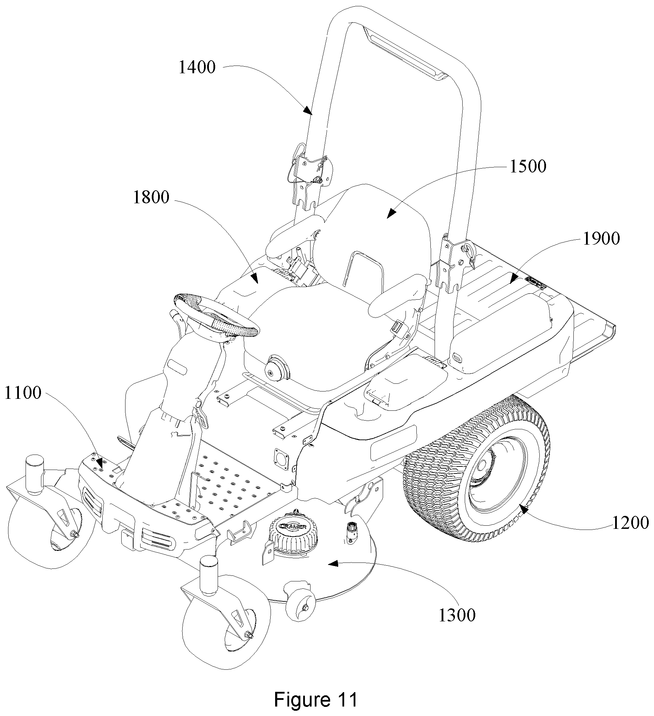

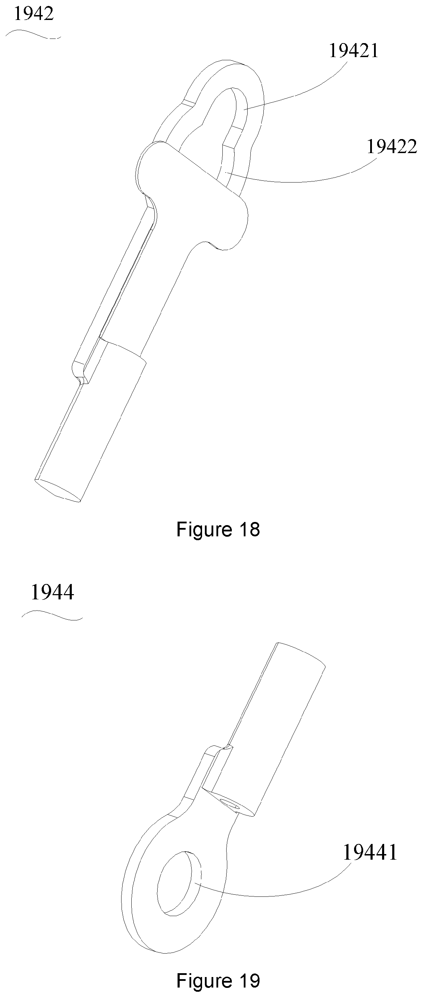

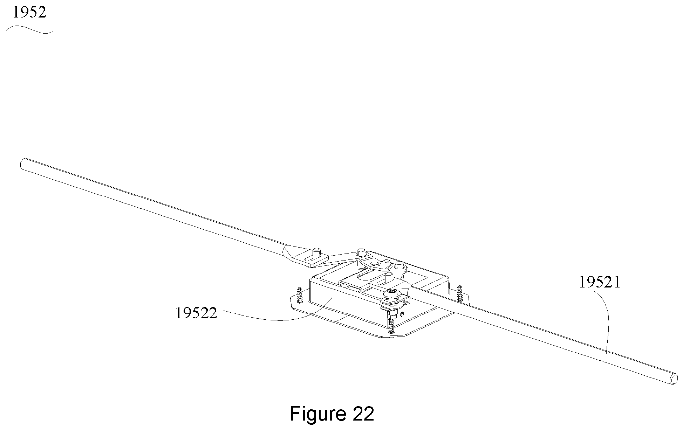

Please refer to FIG. 11 through FIG. 22. In an embodiment of the disclosure, the lawn mower includes the dump body assembly 1900 mounted on the frame 1100, and the dump body assembly 1900 includes the body 1910. A rear wall 19110 of the body 1910 is rotatably connected to the bottom wall 19112 of the body 1910. During a tilting process, the rear wall 19110 of the body 1910 tilts at a certain angle relative to the bottom wall 19112. After the rear wall 19110 is unfolded, not only a capacity of the dump body assembly 1900 may be increased, but also longer items may be loaded because the dump body assembly 1900 is not restrained by the rear wall 19110. When the rear wall 19110 is tilted to a position flush with the bottom wall 19112 of the body 1910, it is equivalent to increasing an area of the bottom wall 19112 of the body 1910, which increases a loading space and the capacity of the dump body assembly. Moreover, this solution does not change a main structure of the lawn mower and does not increase energy consumption of the lawn mower. At the same time, when the rear wall 19110 of the body 1910 is tilted to unfold, it is convenient to load and unload the items in the dump body assembly 1900.

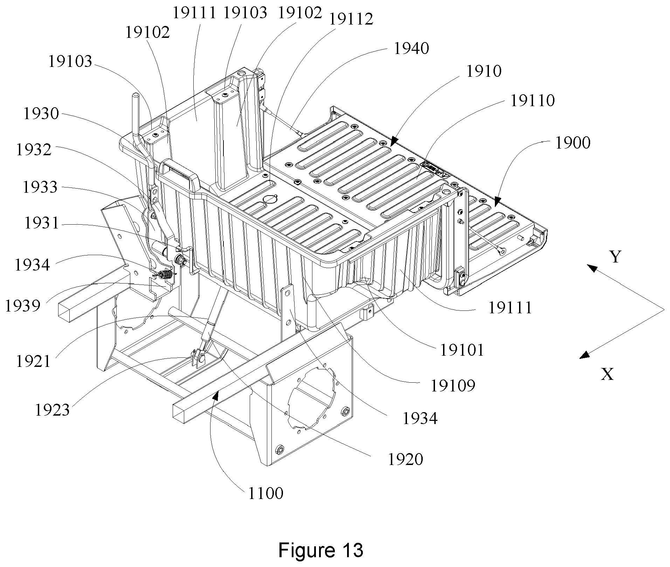

Please refer to FIG. 11 through FIG. 14. In an embodiment of the disclosure, the dump body assembly 1900 is mounted on the frame 1100 and arranged at a rear of the driving seat 1500. The dump body assembly 1900 may be fixedly connected to the frame 1100 or may be tiltably mounted on the frame 1100. The dump body assembly 1900 includes the body 1910, a shape and size of the body 1910 cannot be limited, but may be adapted to the reserved space on the frame 1100. In one embodiment of the disclosure, the body 1910 is set as the approximately rectangular box with the opening on the top, specifically including the front wall 19109, the rear wall 19110, the two side walls 19111 arranged in the first direction and connecting the front wall 19109 with the rear wall 19110, and a bottom wall 19112 connected to bottom ends of the front wall 19109, the rear wall 19110, and the two side walls 19111. In this embodiment, the first direction is the X-axis direction shown in FIG. 13, and the second direction is the Y-axis direction shown in FIG. 13.

To maximize space utilization and enable the connection between the body 1910 and the frame 1100 to be more compact, the two side walls 19111 of the body 1910 are provided with the concave parts 19101 for preventing interference with tires and the protruding parts 19102 for enhancing the strength of the body 1910. The concave part 19101 may enable a volume of the lawn mower to be more compact on one hand, and may improve the stress concentration problem at the vertex of the body 1910 on the other hand. The number of protruding parts 19102 on each side wall 19111 is not limited. In this embodiment, two protruding parts 19102 are arranged on each side wall 19111. Each protruding part 19102 is located on the inner side of the side wall 19111, which is near the edge. The protruding parts 19102 serve to enhance the strength of the side walls 19111 of the body 1910, and the upper surface of each protruding part 19102 includes the mounting groove 19103. The mounting groove 19103 is the reserved mounting position for mounting the lawn collection bracket. A reinforcing member 19104 is mounted on the underside of the bottom surface of each pair of the mounting grooves 19103 on the same side wall 19111. Two ends of the reinforcing member 19104 are connected to bottom surfaces of the two mounting grooves 19103 respectively. The reinforcing members 19104 on the two side walls 19111 enhance the strength of the side walls of the body 1910 and ensure the load-bearing capacity for the lawn collection bracket. Of course, the mounting groove 19103 may also be used as the mounting position for other accessories and is not limited to the mounting of the lawn collection bracket.

Please refer to FIG. 13 through FIG. 14. In an embodiment, a bottom end of the rear wall 19110 is rotatably connected to the bottom wall 19112, allowing the rear wall 19110 to tilt in a direction away from the front wall 19109. A method of a rotatable connection and a number of rotating pairs are not limited. The rotatable connection may be a direct hinge between a rotating shaft and a hole, or a bearing connection. During the tilting process, the rear wall 19110 of the body 1910 unfolds at the certain angle with the bottom wall 19112. After the rear wall 19110 unfolds, the capacity of the dump body assembly 1900 may be increased and, but also longer items may be loaded because the dump body assembly 1900 is not restrained by the rear wall 19110. When the rear wall 19110 is tilted to the position flush with the bottom wall 19112 of the body 1910, it is equivalent to increasing the area of the bottom wall 19112 of the body 1910, which increases the loading space and the capacity of the dump body assembly 1900. At the same time, when the rear wall 19110 of the body 1910 is tilted to unfold, it is convenient to load and unload the items in the dump body assembly 1900. A part and a relative connection relationship may not be described in detail in the above-mentioned mowers may refer to the conventional corresponding mowers, and the details may not be repeated here.

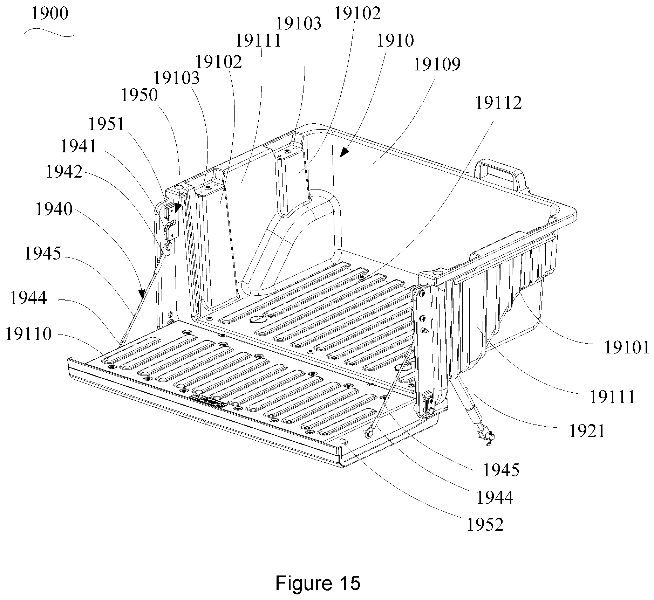

Please refer to FIG. 15 through FIG. 16. In an embodiment of the lawn mower of the disclosure, the dump body assembly 1900 further includes a connecting assembly 1940. A shape, material, length, and position of the connecting assembly 1940 are not limited. The connecting assembly 1940 is used to connect the rear wall 19110 of the body 1910 with the two adjacent side walls 19111 when the rear wall 19110 is tilted away from the two adjacent side walls 19111, thus positioning and fixing the rear wall 19110. Connection methods between the connecting assembly 1940 and the rear wall 19110, as well as between the connecting assembly 1940 and the side walls 19111, are not limited. It may be a rotatable connection or a fixed connection. A number of connecting assemblies 1940 is not limited. There may be one connecting assembly 1940, and the connecting assembly 1940 is only connected to the rear wall 19110 and one of the side walls 19111. In some embodiments, one connecting assembly 1940 is arranged between the rear wall 19110 and the two adjacent side walls 19111 respectively. This method enables a fixation between the rear wall 19110 and the side walls 19111 to be more firm and reliable, which ensures a load-bearing effect of the rear wall 19110 after it is unfolded.

Please refer to FIG. 15 through FIG. 16. In an embodiment of the disclosure, a first end of the connecting assembly 1940 is detachably and rotatably coupled to a side surface of the rear wall 19110, and a second end of the connecting assembly 1940 is detachably and rotatably coupled to the side wall 19111. Rotatable connection methods between the connecting assembly 1940 and the rear wall 19110 and between the connecting assembly 1940 and the side wall 19111 are not limited. The rotatable connection method may be a hinge of a rigid component, a sleeve of a flexible component, or a combination of the rigid and the flexible component. Through using the rotatable connection, when the rear wall 19110 is tilted backward, the connecting assembly 1940 may rotate randomly to match different positions of the rear wall 19110, so that the rear wall 19110 may rotate smoothly without being restrained by the connecting assembly 1940.

Please refer to FIG. 15 through FIG. 18. Considering assembly efficiency between the connecting assembly 1940 and the rear wall 19110 and between the connecting assembly 1940 and the side wall 19111, in one embodiment of the lawn mower of the disclosure, a first buckle structure and a second buckle structure are arranged at two ends of the connecting assembly 1940 respectively for easy disassembly, and the first buckle structure and the second buckle structure are connected to each other through a connecting component 1945. The first buckle structure includes a first fixing post 1941 and a first clamping ring 1942 rotatably connected to the first fixing post 1941, the first fixing post 1941 is fixedly arranged on the side wall 19111, and the first fixing post 1941 includes a first post segment 19411 with a smaller outer diameter and a second post segment 19412 with a larger outer diameter. Furthermore, the second post segment 19412 includes a first plane 19413 and a second plane 19414 arranged opposite to each other on the outer diameter of the second post segment 19412. The first clamping ring 1942 includes a first hole, and the first hole includes a first hole segment 19421 and a second hole segment 19422 communicated with each other. The first hole segment 19421 is arranged near an end part of the first clamping ring 1942, and the second post segment 19412 may pass through the first hole. The outer diameter of the second post segment 19412 is larger than an outer diameter of the first hole segment 19421, so that the first clamping ring 1942 is prevented by the second post segment 19412 from disengaging from the first fixing post 1941. When the connecting assembly 1940 is mounted, the second post segment 19412 passes through the second hole segment 19422 and then passes through the first hole. Under a weight of the rear wall 19110 of the body 1910, the first post segment 19411 slides into the first hole segment 19421. The first clamping ring 1942 is clamped by the second post segment 19412, and an assembly is completed. When disassembling, the rear wall 19110 of the body 1910 is rotated towards the front wall 19109 so that the second post segment 19412 is aligned with the second hole segment 19422. The first clamping ring 1942 is then pulled out from the first fixing post 1941, and a disassembly is completed. An operation is convenient and quick.

Please refer to FIG. 15 through FIG. 17 and FIG. 19. The second buckle structure includes a second fixing post 1943 and a second clamping ring 1944 rotatably connected to the second fixing post 1943. The second fixing post 1943 is fixed to a side surface of the rear wall 19110. The second fixing post 1943 includes a third post segment 19431 with a smaller outer diameter and a fourth post segment 19432 with a larger outer diameter. Further, the fourth post segment 19432 includes a third plane 19433 and a fourth plane 19434 oppositely arranged on the outer diameter of the fourth post segment 19432. The second clamping ring 1944 includes a second hole 19441. A shape of the second hole 19441 is not limited and may be circular, elliptical, or other various closed shapes. In this embodiment, the second hole 19441 is a circular hole. A diameter of the second hole 19441 is larger than a diameter of the third post segment 19431 and smaller than a diameter of the fourth post segment 19432. The second fixing post 1943 passes through the second hole 19441 and is mounted on the rear wall 19110. The second clamping ring 1944 is clamped by the fourth post segment 19432 to complete an assembly. In this embodiment, both ends of the rear wall 19110 can be provided with the connecting assemblies 1940. The other side may not be described in detail. A structure, mounting method and disassembly method may be consistent with those described above.

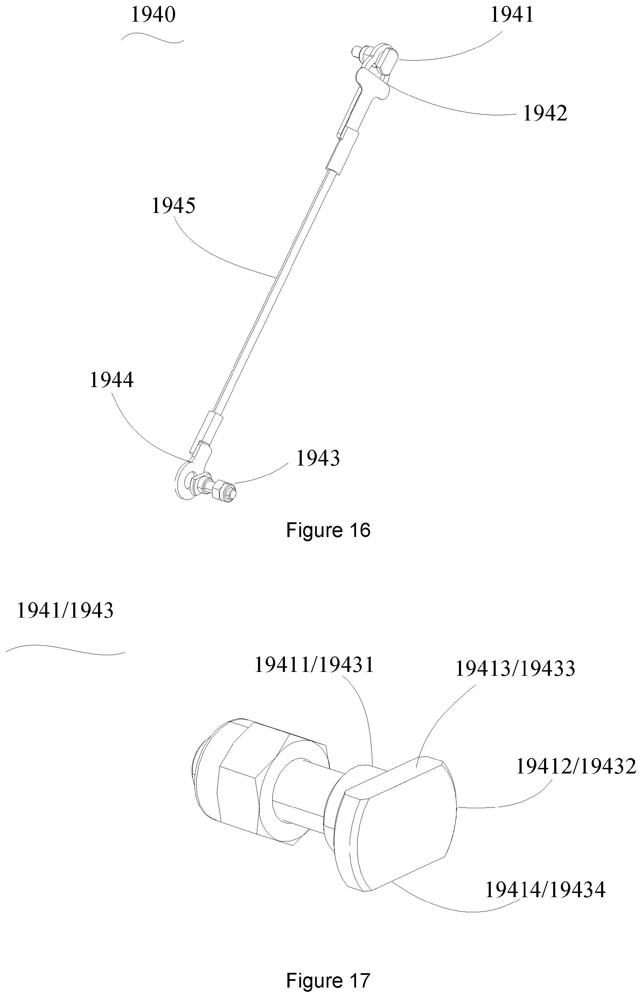

Please refer to FIG. 15 and FIG. 16. In an embodiment of the disclosure, the connecting assembly 1940 may be one of three types: rigid component, flexible component, or a combination of the rigid component and the flexible component. In one embodiment, the first buckle structure, the second buckle structure, and the connecting component 1945 in the connecting assembly 1940 are all rigid components. In this embodiment, the connecting assembly 1940 needs to be disassembled when the rear wall 19110 of the body 1910 returns to the original position. In another embodiment of the lawn mower of the disclosure, the first buckle structure and the second buckle structure in the connecting assembly 1940 are rigid components, and the connecting component 1945 is a flexible component. In this embodiment, the connecting assembly 1940 does not need to be disassembled when the rear wall 19110 of the body 1910 returns to the original position.

Please refer to FIG. 15. In an embodiment of lawn mower of the disclosure, the dump body assembly 1900 further includes a fixing assembly 1950. A structure of the fixing assembly 1950 is not limited. It may be a latch locking assembly or any assembly that can lock the rear wall 19110 with the two adjacent side walls 19111 when the rear wall 19110 is connected to the two adjacent side walls 19111. The fixing assembly 1950 may be mounted on the rear wall 19110, or on the side walls 19111, or it may further be partially mounted on the rear wall 19110 and partially mounted on the side walls 19111.

Please refer to FIG. 15. In an embodiment of the lawn mower of the disclosure, the fixing assembly 1950 includes a locking base 1951 and a locking body 1952. When the rear wall 19110 is in an initial position-i.e., connected to the side walls 19111-the locking body 1952 engages with the locking base 1951. When the rear wall 19110 blocks the dump body assembly 1900, the locking body 1952 is connected and locked with the locking base 1951. When the rear wall 19110 tilts away from the side wall 19111, the locking body 1952 is separated from the locking base 1951. The locking base 1951 may be a clamping component with a self-resetting function, a ring structure, a hook structure, or a structure with a limiting groove, but is not limited to these. The locking body 1952 may be any structure that can be separated from and lock the locking base 1951.

Please refer to FIG. 15, FIG. 20 and FIG. 21. In an embodiment of the disclosure, the locking base 1951 includes a base body 19511. The base body 19511 is mounted on the side wall 19111. Specifically, the base body 19511 is located on a side of the side wall 19111 near the rear wall 19110, a shape of the base body 19511 is, but is not limited to, a cuboid, a cylinder, or other irregular shapes. A groove 19512 is arranged on a side of the base body 19511 facing the rear wall 19110. A shape of the groove 19512 may be a circle, an ellipse, or a rectangle that opens towards the rear wall 19110. In this embodiment, please refer to FIG. 10 through FIG. 11. The groove 19512 is in an approximately U-shaped structure. A limiting mechanism 19513 is arranged at an opening of the groove 19512. The limiting mechanism 19513 may be arranged on either an upper side or a lower side of the groove 19512. The limiting mechanism 19513 and the groove 19512 form an inserting hole, so that the locking body 1952 may be clamped with the inserting hole. A shape of the limiting mechanism 19513 may be a cuboid, a polygonal prism, a cylinder, an ellipse, or other irregular shapes. In addition, the lower side of the limiting mechanism 19513 and the groove 19512 may be fixedly connected or retractable sliding connected. In this embodiment, the limiting mechanism 19513 is a triangular prism and is arranged on the lower side of the groove 19512. The limiting mechanism 19513 includes an inclined surface on a side facing the groove to facilitate an insertion of a deadbolt 19521.

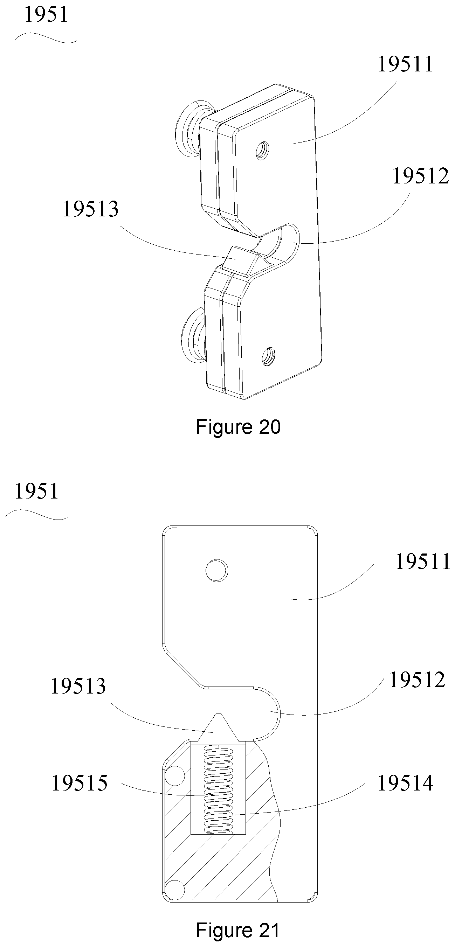

Please refer to FIG. 20 through FIG. 21. In an embodiment of the disclosure, the limiting mechanism 19513 is slidably mounted on a wall of the opening of the groove 19512. A cavity 19514 is arranged inside the wall to accommodate the limiting mechanism 19513 when the limiting mechanism 19513 is restracted. The cavity 19514 may be machined to fit the limiting mechanism 19513. Alternatively, the base body 19511 may be set with a hollow structure. An elastic component 19515 is connected below the limiting mechanism 19513. The elastic component 19515 is, but is not limited to, a helical spring, a gas spring, or a rubber spring. This arrangement enables the limiting mechanism 19513 to open under a pressure and be reset under an action of the elastic component 19515.

Please refer to FIG. 15, FIG. 20 and FIG. 22. In an embodiment of the disclosure, the locking body 1952 includes two deadbolts 19521, a first one of the deadbolts 1952 is arranged at a first end of the rear wall 1910, and a second one of the deadbolts 1952 is arranged at a second end of the rear wall 1910. Locking bases 1951 are respectively mounted on the two side walls 19111. Specifically, the two deadbolts 19521 may be cylindrical rod, square rod, or semi-cylindrical rod, etc. In one embodiment of the disclosure, the two deadbolts 19521 are fixedly connected to the rear wall 19110, and the limiting mechanism 19513 of the locking base 1951 is in a structure that an extension and a retraction of the limiting mechanism 19513 on a wall of the groove 19512 are controlled by a spring. When the rear wall 19110 is closed onto the side wall 19111, the two deadbolts 19521 apply pressure to the limiting mechanism 19513, which causes the limiting mechanism 19513 to retract into the cavity 19514 and the groove 19512 to open. After the two deadbolts 19521 are in position, the two deadbolts 19521 are separated from the limiting mechanism 19513, and the limiting mechanism 19513 pops out and is reset under an action of the spring, thereby limiting the two deadbolts 19521 and locking the rear wall 19110 with the side wall 19111. In an embodiment of the disclosure, the two deadbolts 19521 are slidably connected to the rear wall 19110. A control component 19522 is arranged on the rear wall 19110 to control an extension and retraction of the two deadbolts 19521. This control component 19522 may be obtained commercially or by referring to other conventional technologies. The limiting mechanism 19513 of the locking base 1951 is fixedly connected to the groove 19512. When the rear wall 19110 is closed to the side wall 19111, the two deadbolts 19521 are controlled to retract into the rear wall 19110 by the control component 19522. When the rear wall 19110 is closed in position, the two deadbolts 19521 are aligned with the corresponding grooves 19512 of the locking base 1951, and the two deadbolts 19521 are controlled to extend simultaneously and be mechanically engageable with the corresponding locking base 1951 by the control component 19522.

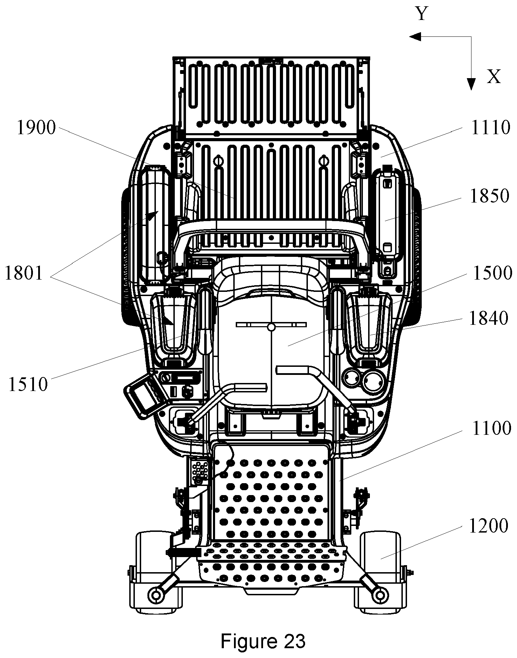

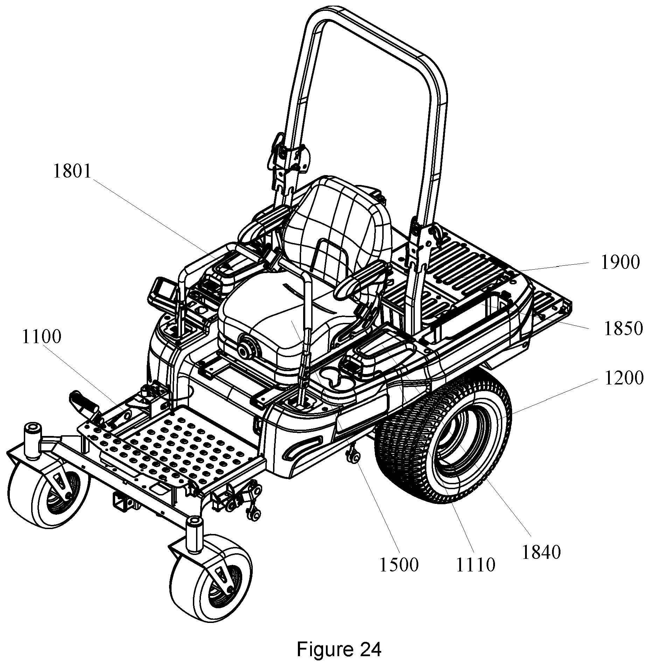

Please refer to FIG. 23 through FIG. 24. In an embodiment of the lawn mower of the disclosure, the lawn mower includes a housing 1110, the driving seat 1500 and the battery compartment 1801. The housing 1110 is arranged on the frame 1100. On one hand, different functional areas may be formed on the housing 1110, and on the other hand, the housing 1110 may also improve an appearance of the lawn mower. The driving seat 1500 is for the operator to sit on, enabling the operator to operate the lawn mower more conveniently and reducing operator's workload. The driving seat 1500 is arranged on the frame 1100, and the driving seat 1500 is arranged in a middle of the lawn mower, which may improve a stability of the lawn mower. The battery compartment 1801 is located on the housings 1110 on the two sides of the driving seat 1500. Wherein, at least a portion of a projection of the battery compartment 1801 along a width direction of the lawn mower laterally overlapping a projection of the driving seat 1500. Through arranging the battery compartment 1801 on the housing 1110, compared to arranging the battery pack below the driving seat 1500, an adjustment space of the driving seat 1500 is increased, which is conducive to meeting driving needs of different operators. At the same time, it facilitates a mounting and removal of the battery pack and improves work efficiency. The housing 1110 includes a large open space, which may be arranged with battery compartments 1801 of different specifications and adapted to different battery packs to meet different needs of mowers. At least a portion of a projection of the battery compartment 1801 along the width direction of the lawn mower laterally overlaps with a projection of the driving seat 1500 along the width direction of the lawn mower, which ensures that the battery packs are located on the two sides of the driving seat 1500, and a center of gravity of the lawn mower may be in a middle of the width direction of the lawn mower before and after the operator is driving, thus improving the stability of the lawn mower.

Please refer to FIG. 23. In an embodiment, the battery compartment 1801 includes a plurality of first compartments 1840 and a plurality of second compartments 1850. Through arranging the first compartments 1840 and the second compartments 1850, battery packs with different specifications may be accommodated, and can be selected according to actual needs to meet a variety of usage requirements. The plurality of first compartments 1840 is symmetrically arranged on the housing 1110 on the two sides of the driving seat 1500. A symmetrical arrangement of the first compartments 1840 on the two sides of the housing 1110 ensures an aesthetic appearance of the housing 1110 on one hand, and on the other hand, numbers of battery packs on two sides of the housing 1110 are the same, which ensures that the center of gravity of the lawn mower is in a middle of the lawn mower and improves a stability of mowing. For example, at least a portion of a projection of the first compartment 1840 along the width direction of the lawn mower laterally overlaps with the projection of the driving seat 1500 along the width direction of the lawn mower. In one embodiment, the first compartments 1840 are arranged on the two sides of the driving seat 1500 and are basically parallel to the driving seat 1500. The second compartments 1850 are symmetrically arranged on the housing 1110 on the two sides of the driving seat 1500. For example, the battery compartment 1801 further includes a third compartment, a fourth compartment, etc., with different specifications or different fixing methods with the housing 1110. The battery compartments 1801 on the two sides of the housing 1110 are mirror-symmetrically arranged on the two sides of the housing 1110. A mirror plane is parallel to a length direction of the lawn mower and perpendicular to the width direction of the lawn mower. And the mirror plane coincides with or substantially coincides with a center line of the lawn mower. In an embodiment, the length direction of the lawn mower is the X-axis direction in FIG. 23, and the width direction of the lawn mower is the Y-axis direction in FIG. 23.

Please refer to FIG. 23 through FIG. 24. In an embodiment, the lawn mower includes the dump body assembly 1900, and the dump body assembly 1900 is used to place items or a lawn collection boxes, etc., to improve an ease of use of the lawn mower. At least the portion of the projection of the battery compartment 1801 along the width direction of the lawn mower laterally overlaps with at least a portion of the projection of the dump body assembly 1900 along the width direction of the lawn mower. In other words, at least the portion of the battery compartment 1801 is arranged on two sides of the dump body assembly 1900. When the dump body assembly 1900 is arranged, in order to increase a capacity of the dump body assembly 1900, the dump body assembly 1900 may be arranged between traveling wheels to increase a depth of the dump body assembly 1900 without increasing a height of the lawn mower, thereby increasing the capacity of the dump body assembly 1900. The portion of the battery compartment 1801 is arranged on the two sides of the dump body assembly 1900. In some embodiments, the battery compartment 1801 is arranged above the traveling wheels, which does not occupy the capacity of the dump body assembly 1900 and is convenient to arrange. In an embodiment, the second compartment 1850 is arranged at the two sides of the dump body assembly 1900 and above the traveling wheel.

Please refer to FIG. 23 through FIG. 24. In an embodiment, a handrail 1510 is arranged on the driving seat 1500. A projected height of the battery compartment 1801 along the width direction of the lawn mower does not exceed a projected height of the handrail 1510 along the width direction of the lawn mower. The handrail 1510 is located on the two sides of the driving seat 1500. The handrail 1510 may be fixed to a base or backrest of the driving seat 1500. On one hand, the handrail 1510 may make it convenient for the operator to hold on, prevent arm fatigue from prolonged unsupported positioning, and reduce labor intensity of the operator. On the other hand, the handrail 1510 located on the two sides of the driving seat 1500 may provide a certain degree of protection for the operator and prevent the operator from falling off the lawn mower due to swaying from side to side. To ensure an effectiveness of the handrail 1510, the battery compartment 1801 is lower than the handrail 1510, especially the battery compartments 1801 located on the two sides of the driving seat 1500, such as the first compartment 1840, to avoid an interference between the battery compartment 1801 and the handrail 1510 when the operator is driving and operating the lawn mower, thus preventing the operation from being affected.

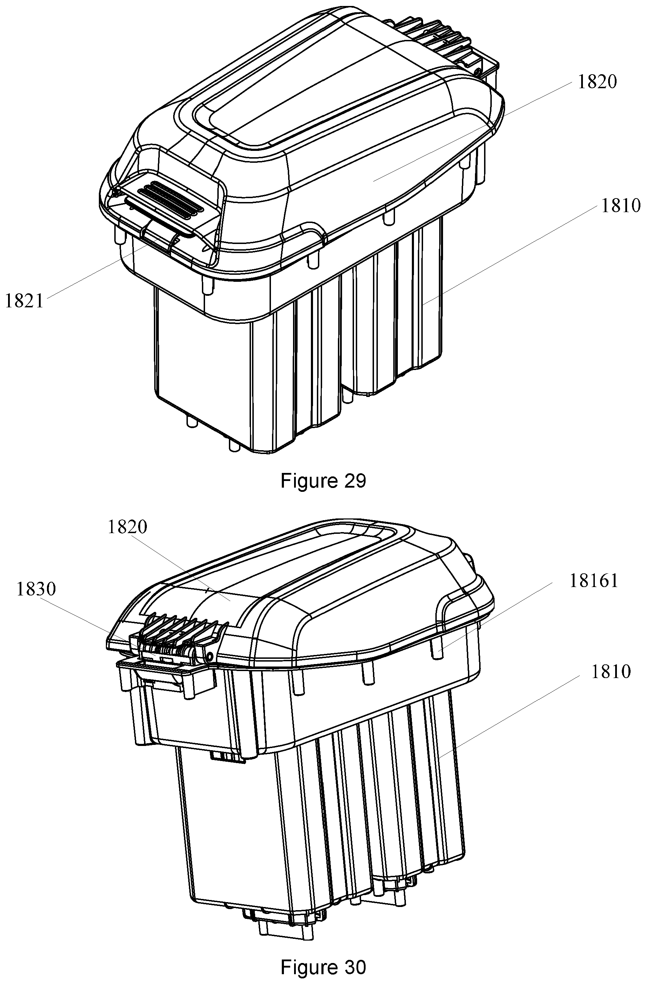

Please refer to FIG. 29 through FIG. 30. In an embodiment, the battery compartment 1801 includes a cover and a main part 1810. The main part 1810 is fixedly arranged on the housing 1110, and the cover 1820 is detachably connected to the main part 1810. During transportation, especially factory transportation, a transportation distance is relatively long and a route is complex and changeable. Therefore, the lawn mower needs to be protected during transportation. In particular, the housing 1110 is usually made of plastic and needs to be protected in particular to prevent damage during the transportation. The cover 1820 is separate from the main part 1810 arranged on the housing 1110. On one hand, the cover 1820 is protected separately. On the other hand, the main part 1810 is flush or nearly flush with an upper surface of the housing 1110, which facilitates a transportation protection of the housing 1110, such as covering it with protective film, protective foam and other protective measures. After reaching a destination, then the cover 1820 is connected to the main part 1810 to form the battery compartment 1801 for accommodating the battery pack.

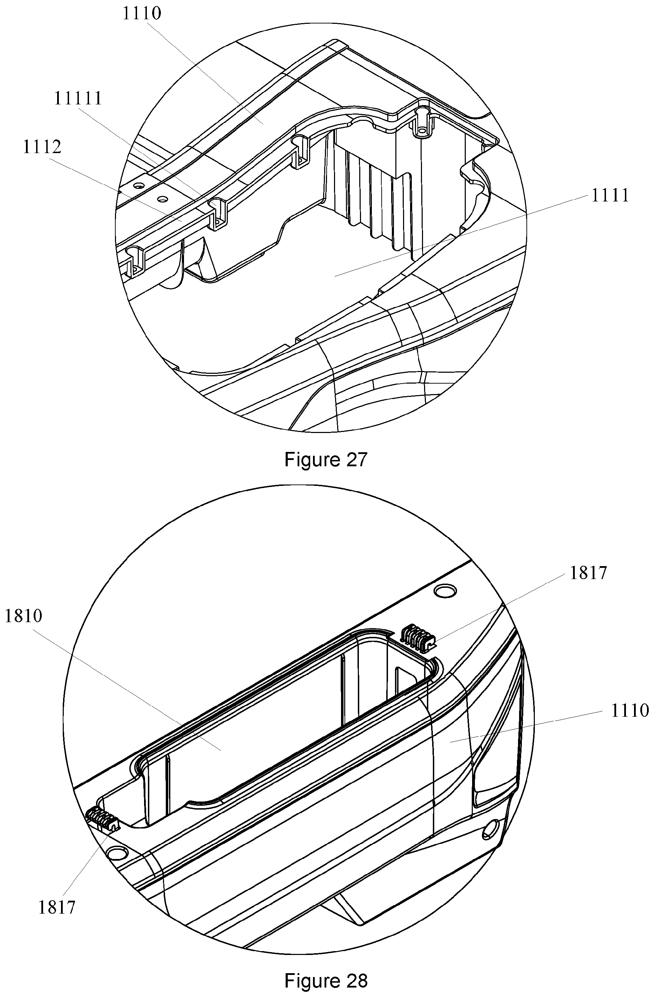

Please refer to FIG. 28, FIG. 39 through FIG. 40. In another embodiment, the cover 1820 covers onto the main part 1810. On the same mower, different solutions may be adopted for the covers 1820 and the main parts 1810 of different battery compartments 1801. For example, the cover 1820 of the first compartment 1840 is rotatably connected to the main part 1810, and the cover 1820 of the second compartment 1850 covers onto the main part 1810. Two connection methods of the covers 1820 and the main parts 1810 of the battery compartment 1801 may be selected according to actual needs. Conventional connection methods may also be selected according to actual conditions. The conventional connection methods of the covers 1820 and the main parts 1810 are not described in details here. In an embodiment, the main part 1810 is integrally formed on the housing 1110. The main part 1810 includes a clamping groove 1817, and the cover 1820 includes a connecting device 1838. The connecting device 1838 extends into the clamping groove 1817 to achieve a relative fixation between the cover 1820 and the main part 1810, thereby realizing a detachable connection between the cover 1820 and the main part 1810. In an embodiment, a honeycomb-shaped reinforcing part 1839 is arranged on an inner wall of a top of the cover 1820 to improve a strength of the cover 1820 and enhance a load-bearing capacity of the cover 1820.

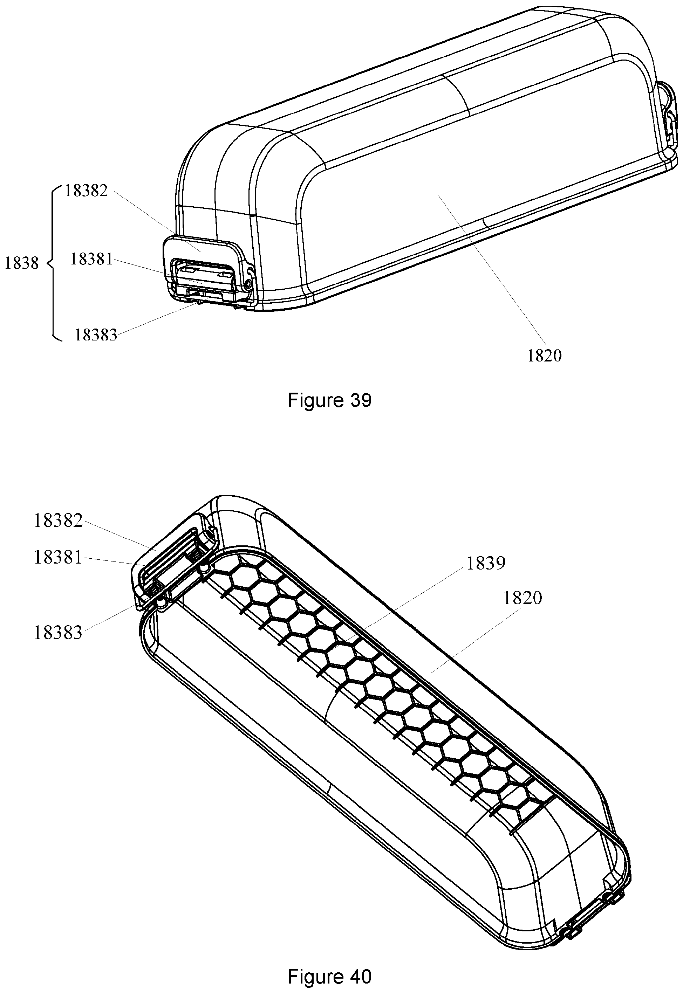

Please refer to FIG. 39 through FIG. 40. In an embodiment, the connecting device 1838 includes a connecting base 18381, a first connecting part 18382 and a first connecting rod 18383. Wherein, the connecting base 18381 is fixedly arranged on the cover 1820. The first connecting part 18382 is rotatably arranged on the connecting base 18381. The first connecting rod 18383 is rotatably arranged on the first connecting part 18382. In a locked state, a distance from a rotation axis of the first connecting rod 18383 to the clamping groove 1817 is greater than a distance from a rotation axis of the first connecting part 18382 to the clamping groove 1817. The clamping groove 1817 is arranged away from the connecting base 18381. When the first connecting rod 18383 is inserted into the clamping groove 1817, the cover 1820 is restrained from separating from the main part 1810. In use, the first connecting part 18382 is first rotated to a position that is basically perpendicular to an opening of the clamping groove 1817. At this time, the first connecting rod 18383 is in a lower position. The first connecting rod 18383 is rotated to the clamping groove 1817, and then the first connecting part 18382 is rotated to be parallel or basically parallel to the opening of the clamping groove 1817. During a rotation of the first connecting part 18382, the first connecting rod 18383 is lifted up, so that the first connecting rod 18383 is inserted into the clamping groove 1817. Under a force of the first connecting rod 18383 and the clamping groove 1817, the first connecting part 18382 needs a certain force to rotate in an opposite direction to a locking state. This force ensures that the first connecting part 18382 may not rotate due to bumps or other reasons during a use of the lawn mower, thus improving a connection stability between the cover 1820 and the main part 1810.

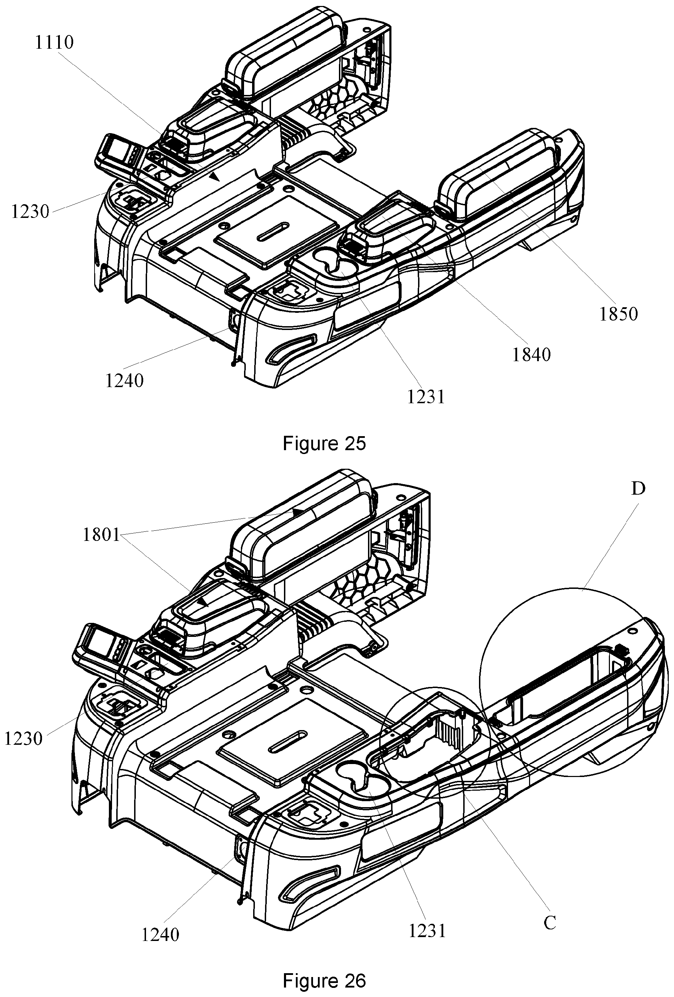

Please refer to FIG. 25 through FIG. 26. In an embodiment, a storage compartment 1230 is arranged on the housing 1110 in front of the battery compartment 1801. The storage compartment 1230 includes a power output port. The storage compartment 1230 is convenient for placing small items, such as remote controls, mobile phones, pads, etc. The power output port may be used to charge electronic products in the storage compartment 1230, such as the remote controls, the mobile phones, the tablets. The power output port may be a Type-C port, a Thunderbolt port, a Micro USB, or other conventional power output ports. In an embodiment, the power output port may charge electronic products and also control or read data from the controller of the lawn mower through communication protocols to meet usage requirements under different conditions. In an embodiment, the power output port is coupled to the controller of the lawn mower, and the controller is coupled to the battery pack inside the battery compartment 1801. Through a control and voltage adjustment by the controller, the battery pack supplies power to the power output port. In an embodiment, a bottle holder 1231, and the bottle holder 1231 is used to place water bottles and other containers that hold liquids, so as to facilitate the operator to drink or use them.

Please refer to FIG. 25 through FIG. 26. In an embodiment, a charging port 1240 is arranged on a front side of the housing 1110 below the driving seat 1500. The charging port 1240 is used to charge the battery pack or other energy storage devices on the lawn mower. The charging port 1240 is arranged below the driving seat 1500, which may reduce an occurrence of accidental collisions with a charging gun and improve a safety of charging.

Please refer to FIG. 23 through FIG. 24. In an embodiment of the disclosure, the lawn mower further includes the housing 1110 and the battery compartment 1801. Wherein the housing 1110 is arranged on the frame 1100. The housing 1110 covers part of the frame 1100, which facilitates mountings of some parts of the lawn mower on one hand and improves the appearance of the lawn mower on the other hand. The walking assembly 1200 is arranged on the frame 1100. The walking assembly 1200 drives the lawn mower to move according to operator's instructions. The walking assembly 1200 includes the driving motor and the walking wheels, etc. The driving motor drives the walking wheels to move. The battery compartment 1801 is arranged on the housing 1110. The battery compartment 1801 is configured to house the battery pack, and the battery pack supplies power for the lawn mower. Please refer to FIG. 6 through FIG. 8. The battery compartment 1801 includes the main part 1810 and the cover 1820. The main part 1810 is arranged on the housing 1110, and the main part 1810 includes an opening 1811 for taking out and putting in the battery pack. The cover 1820 is rotatably connected to the main part 1810 through a second connecting component 1830. A rotatable connection between the cover 1820 and the main part 1810 facilitates opening the opening 1811, thereby facilitating the taking out and putting in the battery pack, and sealing the opening 1811 after taking out and putting in the battery pack. The second connecting component 1830 is detachably coupled to the main part 1810 and/or the cover 1820. During the transportation, the cover 1820, which originally protruded from the housing 1110, is removed, so as to enable a surface of the housing 1110 to be neater and to facilitate transportation. In an embodiment, the second connecting component 1830 may be detachably coupled to the main part 1810, or may be detachably coupled to the cover 1820, or may be detachably coupled to both the main part 1810 and the cover 1820.

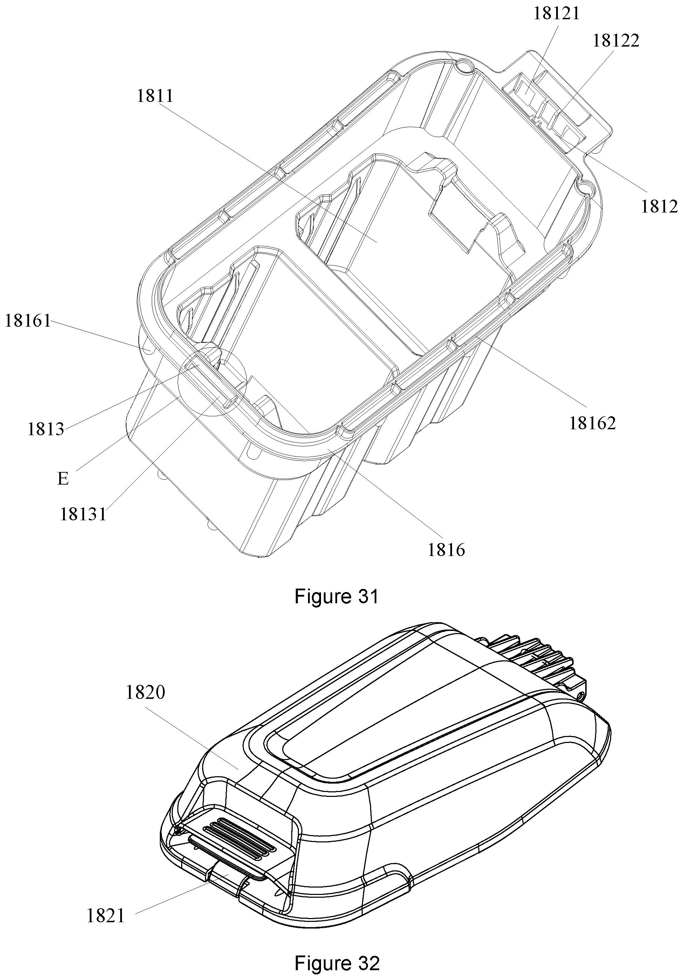

Please refer to FIG. 31. In an embodiment, the main part 1810 includes a socket 1812, and the second connecting component 1830 is inserted into the socket 1812 and mechanically engageable with the socket 1812. Before transportation, the second connecting component 1830 and the main part 1810 are in a separated state, and the second connecting component 1830 is coupled to the cover 1820. After the transportation is completed, the second connecting component 1830 is inserted into the socket 1812, and the second connecting component 1830 is clamped with the socket 1812, so that the cover 1820 is connected to the main part 1810, the cover 1820 and the main part 1810 are conveniently connected after the transportation is completed, the operation difficulty is reduced, a mounting time is saved, and the operator may independently and quickly complete a mounting process.

In an embodiment, a first limiting part is arranged in the socket 1812, a second limiting part is arranged on the second connecting component 1830, and the first limiting part cooperates with the second limiting part to limit the second connecting component 1830 from being separated from the socket 1812, so as to prevent the second connecting component 1830 from being separated from the socket 1812 due to bumps, vibrations and the like during a working process of the lawn mower, thereby causing the cover 1820 to fall off.

Please refer to FIG. 31, FIG. 35 through FIG. 36. In an embodiment, the first limiting part includes a concavity 18121, and the concavity 18121 is arranged on an inner wall of the socket 1821. The second limiting part includes an elastic sheet 1831 disposed on the second connecting component 1830 that may be elastically deformed. The elastic sheet includes a clamping part 1832, and the clamping part 1832 cooperates with the concavity to enable the second connecting component to be mechanically engageable with the socket. During an insertion of the second connecting component 1830 into the socket 1812, the clamping part 1832 on the elastic sheet 1831 is squeezed by an inner wall of the socket 1812, so that the elastic sheet 1831 is elastically deformed. When the clamping part 1832 on the elastic sheet 1831 reaches a position of the concavity 18121, which means that when the second connecting component 1830 is inserted into a specified depth, the clamping part 1832 is reset under an elastic action of the elastic sheet 1831. At least a portion of the clamping part 1832 extends into the concavity 18121, and the clamping part 1832 cooperates with the concavity 18121 to limit the second connecting component 1830, so that the second connecting component 1830 is clamped with the socket 1812, which ensures a stable connection between the second connecting component 1830 and the main part 1810. In an embodiment, a direction of the concavity 18121 is perpendicular or substantially perpendicular to an extending direction of the socket 1812, so that the clamping part 1832 better cooperates with the concavity 18121, which ensures the stable connection between the second connecting component 1830 and the main part 1810. In an embodiment, the concavities 18121 are arranged on two sides of the socket 1812, and the elastic sheets 1831 are arranged on the two sides of the second connecting component 1830 correspondingly, so as to better realize the stable connection between the second connecting component 1830 and the main part 1810.

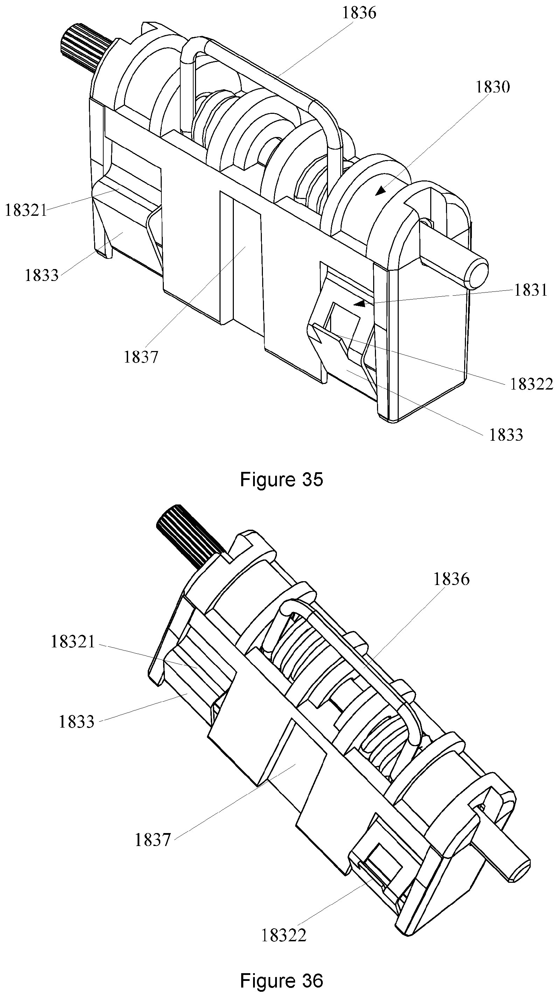

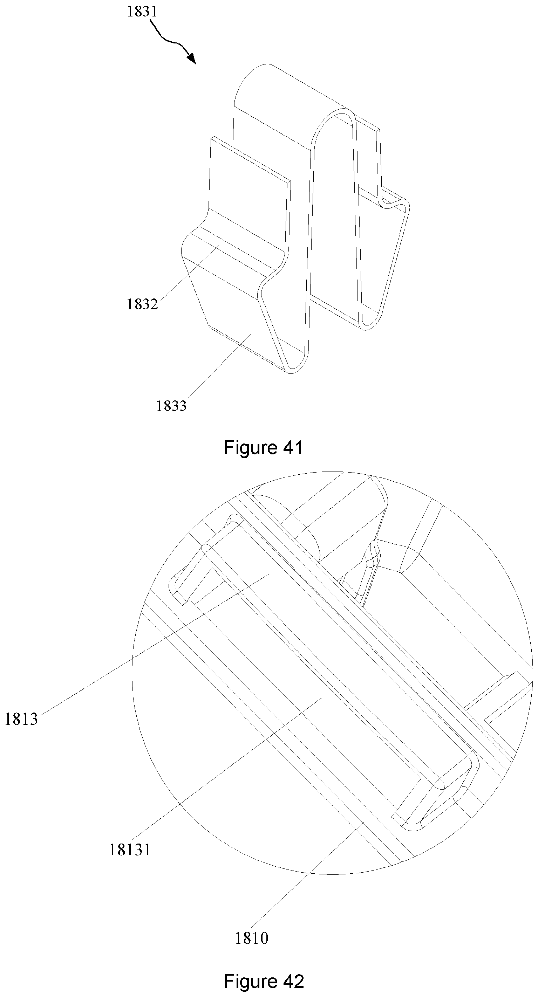

Please refer to FIG. 35 through FIG. 36 and FIG. 41. In an embodiment, the elastic sheet 1831 includes a first inclined surface 1833 inclined from bottom to top in a direction away from the elastic sheet 1831, the first inclined surface 1833 is arranged on a side of the elastic sheet 1831 close to the concavity 18121 when the second connecting component 1830 is inserted into the socket 1812, and the clamping part 1832 is arranged above the first inclined surface 1833. In an embodiment, a direction from bottom to top is a direction from a bottom of the battery compartment 1801 to a top of the battery compartment 1801. In an embodiment, the battery compartment 1801 is vertically or nearly vertically arranged, and the direction from bottom to top is consistent with a natural direction from bottom to top. In another embodiment, when the battery compartment 1801 is horizontally or nearly horizontally arranged, the direction from bottom to top is perpendicular or nearly perpendicular to the natural direction from bottom to top. Through arranging the first inclined surface 1833 on the elastic sheet 1831, it is convenient for the elastic sheet 1831 to gradually deform away from the concavity 18121 when the second connecting component 1830 is inserted into the socket 1812, which ensures that the elastic sheet 1831 may be deformed and restored when the second connecting component 1830 is inserted into the specified position, and at least part of the clamping part 1832 extends into the concavity 18121. At the same time, the first inclined surface 1833 may play a guiding role, which further facilitates an insertion of the second connecting component 1830 into the socket 1812.

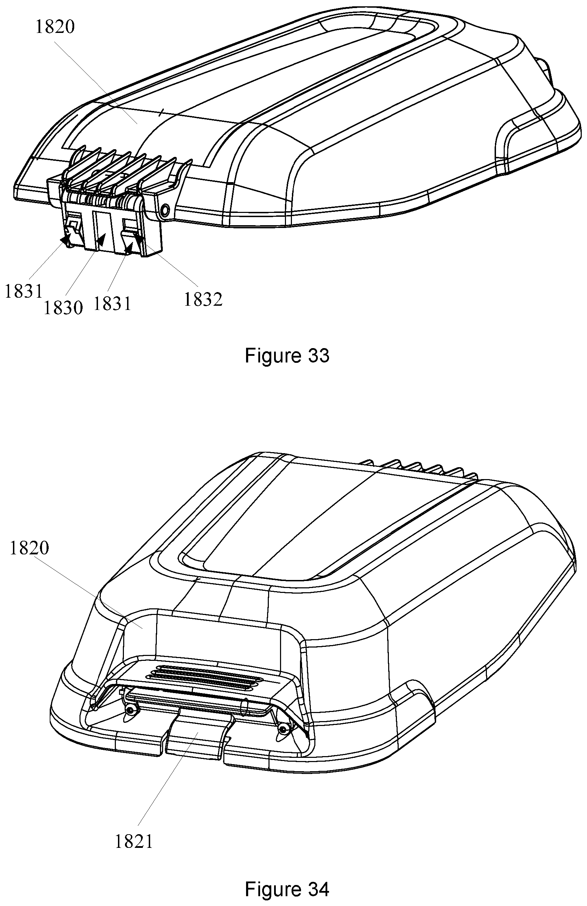

Please refer to FIG. 33 and FIG. 35 through FIG. 36. In an embodiment, the clamping part 1832 includes a step surface 18321, and in some embodiments, the step surface 18321 is perpendicular or substantially perpendicular to a direction in which the second connecting component 1830 is inserted into the socket 1812, so as to ensure that when the step surface 18321 cooperates with the concavity 18121, the second connecting component 1830 may be limited from being separated from the socket 1812. The step surface 18321 extends from a top of the first inclined surface 1833 in a direction away from the concavity 18121, when the first inclined surface 1833 is completely inserted below the top of the concavity 18121, a pressure on the elastic sheet 1831 from the side wall of the socket 1812 becomes smaller or disappears, and then the elastic sheet 1831 is reset. At least part of the step surface 18321 is inserted into the concavity 18121, and the step surface 18321 is perpendicular to the direction in which the second connecting component 1830 is inserted into the socket 1812. In other words, the step surface 18321 is parallel to a top wall of the concavity 18121. When the second connecting component 1830 is subjected to a force in a direction separating from the socket 1812, the step surface 18321 is subjected to an upward pulling force and a downward pressure applied by the top wall in the concavity 18121, and the pulling force is counteracted with the pressure, thereby limiting the separation of the second connecting component 1830 from the socket 1812. In an embodiment, a connection between the step surface 18321 and the first inclined surface 1833 is arc-shaped, so as to reduce a collision and scratching between the elastic sheet 1831 and the side wall of the socket 1812, and improve a duration life of the elastic sheet 1831.

Please refer to FIG. 33, FIG. 35 through FIG. 36. In another embodiment, the clamping part 1832 includes a first cutting tab 18322, the first cutting tab 18322 and the step surface 18321 are arranged on different elastic sheets 1831. The first inclined surface 1833 is parallel to the first cutting tab 18322, an angle between an original plane of the first cutting tab 18322 and an original plane of the first cutting tab 18322 is an acute angle, and the original plane of the first cutting tab 18322 is a plane of a plate to which the first cutting tab 18322 belongs before cutting. In an embodiment, the first cutting tab 18322 is parallel to the first inclined surface 1833, and an acute angle is formed between the first cutting tab 18322 and the plane where the first cutting tab 18322 is originally located. When the second connecting component 1830 is inserted to the specified depth, at least part of the first cutting tab 18322 extends into the concavity 18121, and a top of the first cutting tab 18322 abuts against the top wall of the concavity 18121. When the second connecting component 1830 is subjected to the force of separating from the socket 1812, the top wall of the concavity 18121 applies a downward pressure to the first cutting tab 18322, thereby limiting the second connecting component 1830 from being separated from the socket 1812.

In one embodiment, a cross section of the first cutting tab 18322 is rectangular, trapezoidal, parallelogram, etc., and a preferred cross section is rectangular. In an embodiment, the first cutting tab 18322 is formed through cutting a line on the elastic sheet 1831, then bending the elastic sheet 1831 at a connection between the first cutting tab 18322 and the elastic sheet 1831, and not bending the first cutting tab 18322 along with the original plane.

In an embodiment, when the second connecting component 1830 is subjected to the force in the direction separating from the socket 1812 exceeding a threshold, the clamping part 1832 drives the elastic sheet 1831 to elastically deform until the clamping part 1832 is separated from the concavity 18121, so that the second connecting component 1830 is separated from the socket 1812, and the cover 1820 is separated from the main part 1810, thereby meeting special requirements such as maintenance and transportation.

Please refer to FIG. 31. In an embodiment, the inner wall of the socket 1812 includes a first protruding part 18122, and the second connecting component 1830 includes a concave groove 1837, wherein the first protruding part 18122 matches the concave groove 1837. In an embodiment, the first protruding part 18122 is in a long-strip shape, a length direction of the long-strip shape is consistent with the direction in which the second connecting component 1830 is inserted into the socket 1812. When the second connecting component 1830 is inserted into the socket 1812, a cooperation between the first protruding part 18122 and the groove 1837 can play a role of positioning and guiding.

In an embodiment, a cross section of the first protruding part 18122 may be a circle or a polygon such as a square.

In an embodiment, the first protruding part 18122 may be one protrusion, or may be a combination of a plurality of vertical protrusions, and a number of the grooves 1837 may be the same as a number of the protrusions, or may be different from the number of the protrusions. For example, when there is one protrusion of the first protruding part 18122, there is one groove 1837, and when there are two protrusions of the first protruding part 18122, there may be one groove 1837, and at this time, two side walls of the groove 1837 abut against opposite side walls of the two protrusions respectively. There may also be two grooves 1837, and at this time, the grooves 1837 are in one-to-one correspondence with the protrusions.

Please refer to FIG. 33 and FIG. 35 through FIG. 36. In an embodiment, the second connecting component 1830 is rotatably connected to the cover 1820, the second connecting component 1830 includes a first reset spring 1836, and the first reset spring 1836 drives the cover 1820 to rotate towards a direction of closing the opening 1811. The first reset spring 1836 is arranged on a rotation shaft of the second connecting component 1830 and the cover 1820. Through arranging the first reset spring 1836, the cover 1820 may automatically close the opening 1811, so as to avoid a condition that the cover 1820 is forgotten to be closed after the battery pack is taken and placed, thereby effectively preventing rainwater, grass clippings and other debris from entering the battery compartment 1801. The first reset spring 1836 may be a conventional reset spring, as long as the first reset spring 1836 is mounted on the rotation shaft of the second connecting component 1830 and the cover 1820.

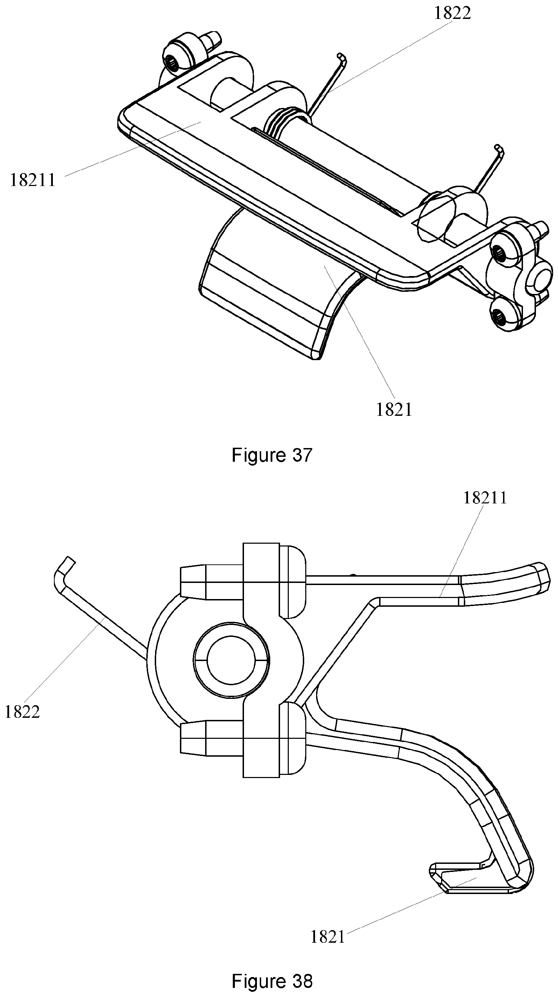

Please refer to FIG. 31, FIG. 34. FIG. 37 through FIG. 38 and FIG. 42. In an embodiment, a buckle plate 1813 is arranged on a side of the main part 1810 away from the second connecting component 1830. A notch 18131 facing away from the main part 1810 is formed between the buckle plate 1813 and the main part 1810. A buckle 1821 is rotatably connected to a side of the cover 1820 away from the second connecting component 1830. The buckle 1821 is rotatably mechanically engageable with the notch 18131 to restrain a relative rotation of the main part 1810 and the cover 1820. Through arranging the buckle 1821 and the buckle plate 1813, a relative rotation between the main part 1810 and the cover 1820 can be limited. When the battery compartment 1801 needs to be opened, the buckle 1821 needs to be rotated first. When the buckle 1821 is separated from the notch 18131, the cover 1820 is then rotated to open the battery compartment 1801. If the cover 1820 is directly rotated, the buckle plate 1813 applies a downward pressure to the buckle 1821, thereby limiting the rotation of the cover 1820, reducing a risk of false opening of the battery compartment 1801, and avoiding opening of the battery compartment 1801 when the lawn mower is bumpy. In an embodiment, connecting plates are further arranged on two sides of the buckle plate 1813, and the connecting plates connect the buckle plate 1813 with the main part 1810, so that a durability and a force bearing capability of the buckle plate 1813 may be improved. In an embodiment, in order to facilitate the operator to rotate the buckle 1821, the buckle 1821 includes a holding portion 18211, and through arranging the holding portion 18211, a contact area between the operator and the buckle 1821 is increased when the operator rotates the buckle 1821, thereby facilitating the operator to rotate the buckle 1821.

Please refer to FIG. 37 to FIG. 38. In an embodiment, the buckle 1821 includes a second reset spring 1822, the second reset spring 1822 limits the buckle 1821 from being separated from the notch 18131, and the second reset spring 1822 is arranged on a rotation shaft of the buckle 1821 rotating relative to the cover 1820. Through arranging the second reset spring 1822, in a case of vibration of the lawn mower and the like, a situation that the buckle 1821 is separated from the notch 18131 due to a relative rotation of the buckle 1821 to the cover 1820 may be avoided, which effectively ensures a stable connection between the cover 1820 and the main part 1810, and reduces a situation that the cover 1820 is accidentally opened.

Please refer to FIG. 27. In an embodiment, the housing 1110 includes a mounting hole 1111, the main part 1810 is inserted into the mounting hole 1111, a second protruding part 1816 is arranged an outer periphery of the main part 1810, and the second protruding part 1816 abuts against a top outer periphery of the mounting hole 1111. In an embodiment, the main part 1810 and the housing 1110 are not integrally formed. The main part 1810 is inserted into the mounting hole 1111, and the second protruding part 1816 abuts against an outer periphery of a top of the mounting hole 1111, so as to support the main part 1810 and prevent the main part 1810 from completely falling into the mounting hole 1111.

Please refer to FIG. 25 through FIG. 27. In an embodiment, a countersunk hole 1112 is arranged at the top of the mounting hole 1111, and the second protruding part 1816 abuts against a bottom wall of the countersunk hole 1112. Through arranging the countersunk hole 1112, an outer periphery of the countersunk hole 1112 matches an outer periphery of the second protruding part 1816, so that the main part 1810 may be positioned, which is convenient for mounting and reduces shaking of the battery compartment 1801.

Please refer to FIG. 27 and FIG. 30. In an embodiment, a positioning hole 1111 is arranged on a side wall of the mounting hole 11111, a positioning part 18161 is arranged at a bottom of the second protruding part 1816, and the positioning part 18161 matches the positioning hole 11111. A matching of the positioning part 18161 with the positioning hole 11111 ensures an accurate positioning of the main part 1810 and the mounting hole 1111. In an embodiment, a through hole is arranged on a bottom wall of the positioning hole 11111, a threaded hole is arranged on the positioning part 18161, and the positioning part 18161 is fastened to the positioning hole 11111 through a screw, a bolt, or the like, to fix the main part 1810 to the mounting hole 1111.

Please refer to FIG. 31. In an embodiment, a reinforcing part 18162 is arranged at a top of the second protruding part 1816, and the reinforcing part 18162 improves a bearing capacity of the second protruding part 1816, which ensures that the second protruding part 1816 can still stably support the battery compartment 1801 and prevent the battery compartment 1801 from falling off even when the lawn mower bumps. In an embodiment, the reinforcing part 18162 is arranged on a long side of the second protruding part 1816, the long side is stressed more than the short side, and the main part 1810 may be stably supported by the reinforcing part 18162 arranged on the long side. In an embodiment, the reinforcing part 18162 and the main part 1810 are integrally formed, which facilitates processing and ensures that the reinforcing part 18162 provides stable support for the main part 1810.

In an embodiment, the lawn mower further includes components such as a cutting deck assembly and a control system, while other components are similar to those of conventional lawn mowers, which may not be repeated in the disclosure.

The disclosure further provides the garden tool, and the garden tool includes the frame, the housing, the walking assembly and the battery compartment. Wherein the housing is arranged on the frame, the walking assembly is arranged on the frame to drive the garden tool to move. The battery compartment is arranged on the housing and configured to accommodate the battery pack. The battery compartment includes the main part, the cover and the second connecting component, the main part is arranged on the housing, and the main part includes the opening. The cover is rotatably connected to the main part through the second connecting component. The second connecting component is detachably coupled to the main part and/or the cover. During a transportation of the garden tool, the cover, which originally protruded from the housing, is removed, so as to enable the surface of the housing to be neater and to facilitate transportation. For example, the second connecting component may be detachably coupled to the main part, or may be detachably coupled to the cover, or may be detachably coupled to both the main part and the cover.

Please refer to FIG. 23, FIG. 43 and FIG. 44. In an embodiment of the lawn mower of the disclosure, the lawn mower includes the frame 1100, the housing 1200, the cutting deck assembly 1300, the operating assembly, the battery compartment 1801 and the dump body assembly 1900. The housing 1110 is assembled on the frame 1100, which may not only improve the appearance of the lawn mower, but also provide a mounting position for some components. The walking assembly 1200 is arranged on the frame, the walking assembly 1200 drives the lawn mower to move, and the walking assembly 1200 includes a front wheel 1210, a rear wheel 1220, a driving motor, and the like. In an embodiment, the rear wheel 1220 is a driving wheel, and the driving motor is directly connected to the rear wheel 1220 to drive the rear wheel 1220 to rotate. The front wheel 1210 is a driven wheel. In an embodiment, a wheel base between the front wheel 1210 and the rear wheel 1220 is from 1200 mm to 1300 mm, the wheel base is a distance between an axis of the front wheel 1210 and an axis of the rear wheel 1220, and the wheel base may be any value between 1200 mm and 1300 mm, for example, 1200 mm, 1250 mm, or 1300 mm. In an embodiment, a vehicle length is from 1460 mm to 2460 mm, and may be any value between 1460 mm and 2460 mm, such as 1460 mm, 1960 mm, and 2460 mm. A vehicle width is from 1420 mm to 2420 mm, and may be any value between 1420 mm and 2420 mm, such as 1420 mm, 1920 mm, and 2420 mm. A vehicle height is from 1390 mm to 2390 mm, and may be any value between 1390 mm and 2390 mm, such as 1390 mm, 1890 mm, and 2390 mm. The cutting deck assembly 1300 is arranged on the frame 1100, the cutting deck assembly 1300 mows the lawn and the like to obtain a lawn with an appropriate height, and the cutting deck assembly 1300 includes a cutting deck. In an embodiment, the lawn mower of the disclosure may include a cutting deck with different sizes, such as 42 inches, 54 inches, 60 inches and the like. The driving seat 1500 is arranged on the frame 1100, the driving seat 1500 is arranged in the middle of the lawn mower along the width direction, and the driving seat 1500 is used for the operator to ride, so as to facilitate the operator to manipulate and control the lawn mower. The operating assembly controls the walking assembly to drive the lawn mower to move, and the operating assembly is arranged on the two sides of the driving seat 1500 to facilitate the operator to operate the lawn mower. Compared with the original battery compartment 1801 arranged on the frame below the driving seat 1500, the battery compartment 1801 in the disclosure provides a larger adjustment space for the driving seat 1500 to meet driving needs of different operators. Meanwhile, the battery compartment 1801 of the disclosure is arranged on the housing. When the battery pack in the battery compartment 1801 needs to be replaced, the driving seat 1500 does not need to be lifted, an operation of replacing the battery pack is convenient and simple, and a replacement effect is improved. The dump body assembly 1900 is arranged at a tail part of the lawn mower, and a large storage space is obtained through arranging the dump body assembly 1900, which is convenient for operators to randomly carry supplies and utensils required in the working process. The dump body assembly 1900 may also be used for carrying waste on weeds or grasses, reducing cost of purchasing transportation vehicles.

In an embodiment, a center of gravity of the lawn mower is located at 1/5 to 1/3 of a distance between the front wheel 1210 and the rear wheel 1220, the center of gravity of the lawn mower is close to the rear wheel 1220. Taking the wheel base of the lawn mower as 1250 mm as an example, the center of gravity of the lawn mower is from 250 mm to 416.7 mm from the axis of the rear wheel 1220. In an embodiment, the center of gravity of the lawn mower may be any value between 250 mm and 416.7 mm from the axis of the rear wheel 1220, such as 250 mm, 300 mm, 395 mm, 416 mm, 416.7 mm, etc. In an embodiment, a weight of the lawn mower is from 230 kg to 400 kg, and the weight may be any value between 230 kg and 400 kg, such as 230 kg, 300 kg, 361 kg, 400 kg, etc. In an embodiment, the lawn mower may include the cutting deck with different specifications, and the cutting decks with different specifications correspond to different centers of gravity of the lawn mower. For example, a cutting deck of 42 inches is mounted, a bare weight of the lawn mower is from 230 kg to 343 kg, the weight may be any value between 230 kg and 343 kg, such as 230 kg, 263 kg, 293 kg, 343 kg, etc., and the center of gravity of the lawn mower is from 286 mm to 396 mm from the axis of the rear wheel 1220, and may be any value between 286 mm and 396 mm, such as 286 mm, 336 mm, 396 mm, etc. When a cutting deck of 54 inches is mounted, the bare weight of the lawn mower is from 300 kg to 360 kg, the weight may be any value between 300 kg and 360 kg, such as 300 kg, 330 kg, 360 kg, etc., the center of gravity of the lawn mower is from 322 mm to 422 mm from the axis of the rear wheel 1220, and a distance between the center of gravity of the lawn mower and the axis of the rear wheel 1220 may be any value between 322 mm and 422 mm, such as 322 mm, 372 mm, 422 mm, etc. When a cutting deck of 60 inches is mounted, the bare weight of the lawn mower is from 318 kg to 378 kg, the weight may be any value between 318 kg and 378 kg, such as 318 kg, 348 kg, 378 kg, etc., the center of gravity of the lawn mower is from 345 mm to 445 mm from the axis of the rear wheel 1220, and the distance between the center of gravity of the lawn mower and the axis of the rear wheel 1220 may be any value between 345 mm and 445 mm, such as 345 mm, 395 mm, 445 mm, etc.

In an embodiment, the lawn mower further includes an anti-roll frame 1400, the anti-roll frame 1400 may protect the operator on the driving seat 1500 when the lawn mower rolls unexpectedly, the anti-roll frame 1400 is coupled to the frame 1100, and a distance between a center of gravity of the anti-roll frame 1400 and the rear wheel 1220 along the length direction of the lawn mower is less than the distance between the center of gravity of the lawn mower and the rear wheel 1200 in the length direction of the lawn mower. In an embodiment, the length direction of the lawn mower is the Y-axis direction in FIG. 2. In an embodiment, after the anti-roll frame 1400 is mounted, the center of gravity of the lawn mower is different from the position of the center of gravity when the anti-roll frame 1400 is not mounted, for example, the cutting deck of 42 inches, the bare weight of the lawn mower is from 284 kg to 344 kg, the weight may be any value between 284 kg and 344 kg, such as 284 kg, 314 kg, 344 kg, etc., and the distance between the center of gravity of the lawn mower from the axis of the rear wheel 1200 is from 263 mm to 363 mm, and may be any value between 263 mm and 363 mm, such as 263 mm, 313 mm, 363 mm, etc. When a cutting deck of 54 inches is mounted, the bare weight of the lawn mower is from 322 kg to 382 kg, the weight may be any value between 322 kg and 382 kg, such as 322 kg, 352 kg, 382 kg, etc., the center of gravity of the lawn mower is from 300 mm to 400 mm from the axis of the rear wheel 1220, and the distance between the center of gravity of the lawn mower and the axis of the rear wheel 1220 may be any value between 300 mm and 400 mm, such as 300 mm, 350 mm, 400 mm, etc. When a cutting deck of 60 inches is mounted, the bare weight of the lawn mower is from 340 kg to 400 kg, the weight may be any value between 340 kg and 400 kg, such as 340 kg, 370 kg, 400 kg, etc., the center of gravity of the lawn mower is from 342 mm to 422 mm from the axis of the rear wheel 1220, and the distance between the center of gravity of the lawn mower and the axis of the rear wheel 1220 may be any value between 342 mm and 422 mm, such as 342 mm, 372 mm, 422 mm, etc.

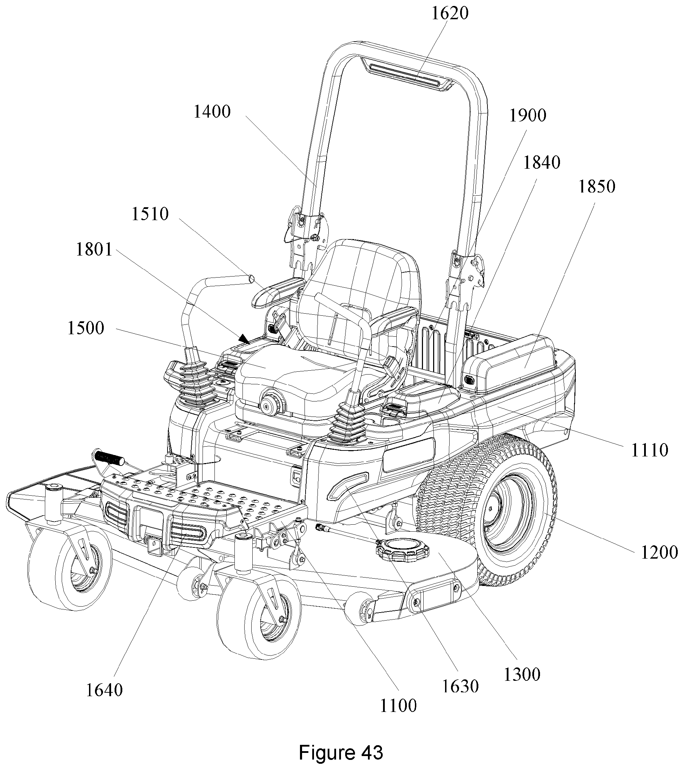

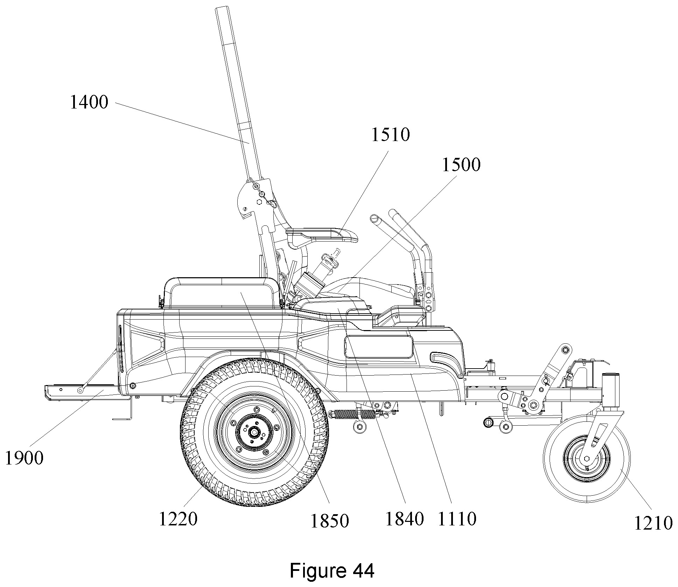

Please refer to FIG. 43 and FIG. 44. In an embodiment, the lawn mower further includes a light set, and the light set is mounted on the lawn mower. On one hand, the light set may provide lighting to meet needs of the operator to operate the lawn mower at night or when other lighting effects are insufficient. On the other hand, the light set may provide a warning effect to facilitate a remote operator or other pedestrians, machines, etc. to discover the lawn mower in time. In an embodiment, the light set may also have other functional effects, for example, the light set includes lights of different colors or a combination of lights to prompt the lawn mower to brake, alarm, insufficient power, complete charging, etc. In an embodiment, the light set includes at least one of a tail light 1610, a top light 1620, a side light 1630 and a front light 1640, and in some embodiments, the light set includes the tail light 1610, the top light 1620, the side light 1630 and the front light 1640.

In an embodiment, the front light 1640 is mounted on a front side of the lawn mower, such as a front side of the frame 1100, and the front lamp 1640 faces forward to obtain a good lighting effect. In an embodiment, along the length direction of the lawn mower, which means the Y-axis direction in FIG. 2, the front wheel 1210 protrudes more than the front light 1640 to protect the front light 1640 and prevent the front light 1640 from being damaged when encountering special situations such as collision with stones. In an embodiment, there are two groups of front lights 1640, which are symmetrically arranged on the front side of the lawn mower to obtain a sufficient lighting effect.

In an embodiment, the top light 1620 is arranged on the anti-roll frame 1400, and the top light 1620 is a strip-shaped light bar to obtain good lighting or display effect. In an embodiment, the top light 1620 is arranged on an inner side of a top rod of the anti-roll frame 1400, which means a side of the anti-roll frame 1400 facing the driver and passenger seat 1500, so that when the lawn mower rolls accidentally, the anti-roll frame 1400 may protect the top light 1620 and prevent the top light 1620 from being damaged. In an embodiment, the top light 1620 may face a front of the lawn mower or may face a rear of the lawn mower according to actual needs, and in some embodiments, the top light 640 faces the front of the lawn mower, which may provide a good lighting effect for the front of the lawn mower.

In an embodiment, the side lights 1630 are arranged on the housing 1110 and on the two sides of the driving seat 1500. In an embodiment, the side light 1630 may face left and right sides of the lawn mower, which means the Y-axis direction in FIG. 23. The side light 1630 may also face the front of the lawn mower, which means the X-axis direction in FIG. 23. The side light 1630 may also be a light strip, partially facing the front of the lawn mower, and partially facing the left and right sides of the lawn mower. In some embodiments, the side light 1630 is in the light strip, with part of the side light 1630 facing the front of the lawn mower and part of the side light 1630 facing the left and right sides of the lawn mower. This may provide a good lighting effect and also make it easy to find the lawn mower from the left and right sides.

In an embodiment, the tail light 1610 is arranged at a tail part of the housing 1110, and there are two tail lights 1610, which are respectively arranged on housings on the two sides of the dump body assembly 1900. A light of the tail light 1610 may be observed at a left rear, a right rear and a right rear of the lawn mower, which is convenient for finding the lawn mower in time under poor lighting conditions.

In an embodiment, each light in the light set includes a light cover and light beads arranged inside the light cover, and the light beads and the light cover cooperate to each other to emit a light of a specified color. In some embodiments, the front light 1640, the side light 1630, and the top light 1620 emit monochromatic light, such as white light and green light. The tail light 1610 may emit monochromatic light or polychromatic light, for example, the tail light 1610 partially emits white light and partially emits red light, which has both a lighting effect and a warning effect, and is convenient for finding the lawn mower in time. In an embodiment, the tail light 1610 may further include a plurality of light beads, and the plurality of light beads may flash, so that the remote operator and the like can better find the lawn mower.

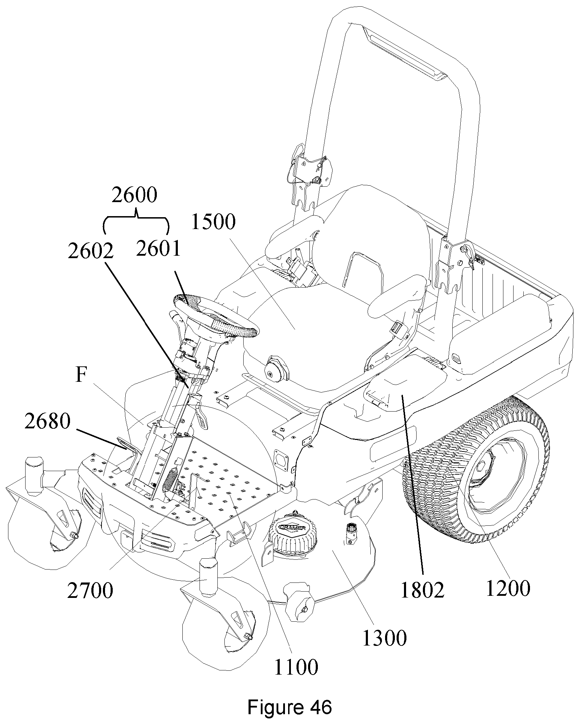

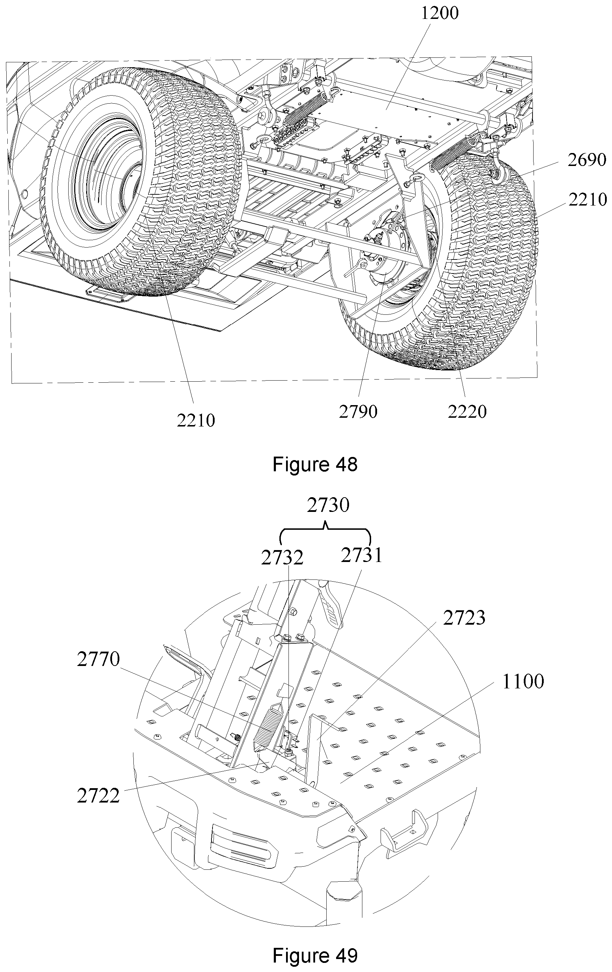

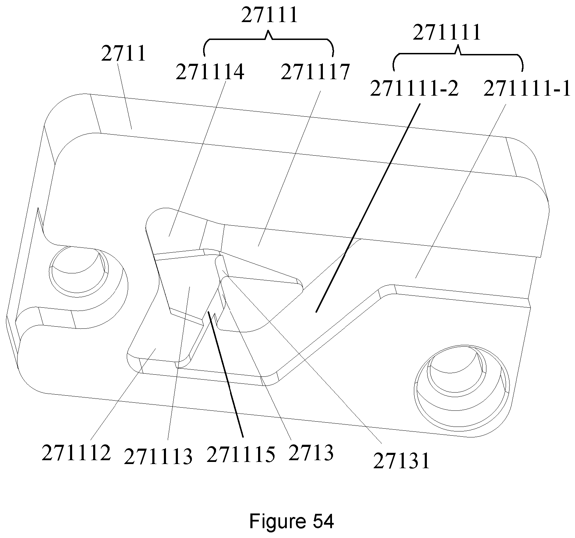

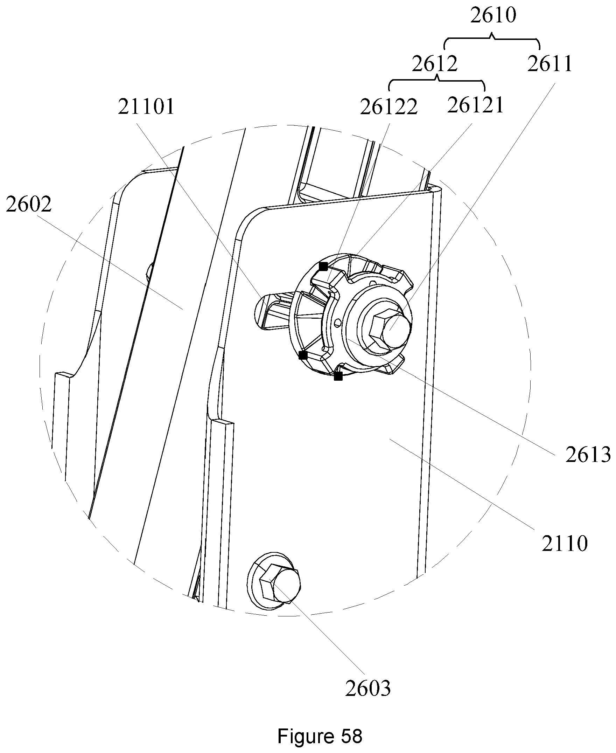

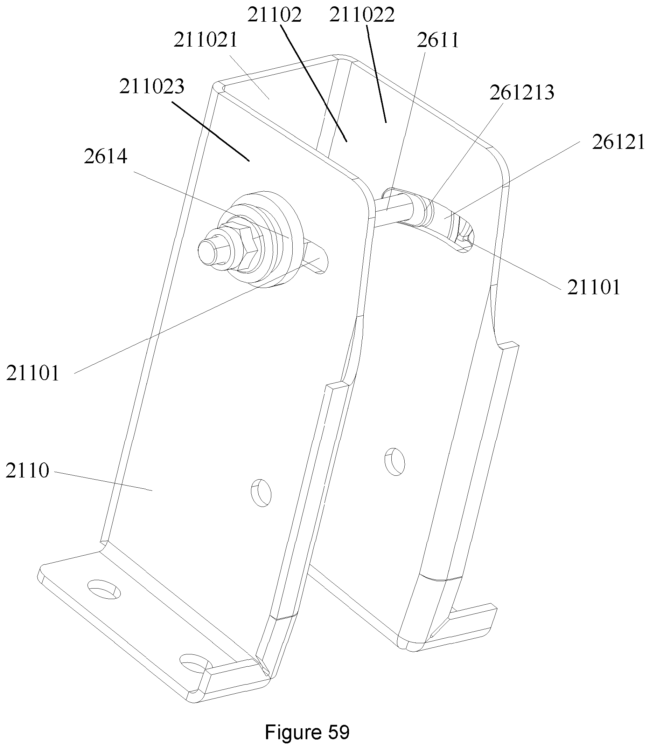

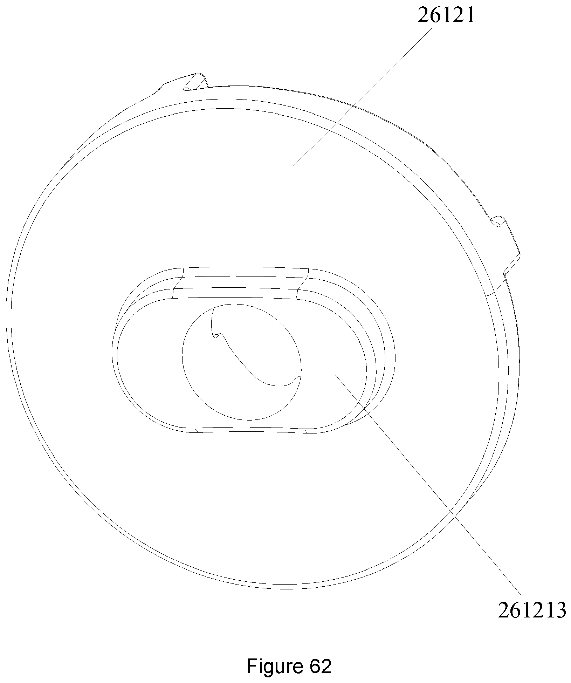

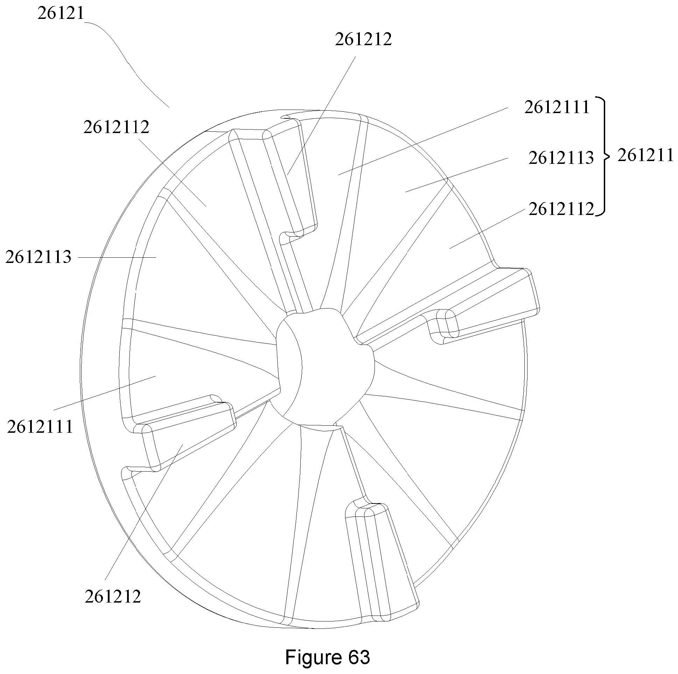

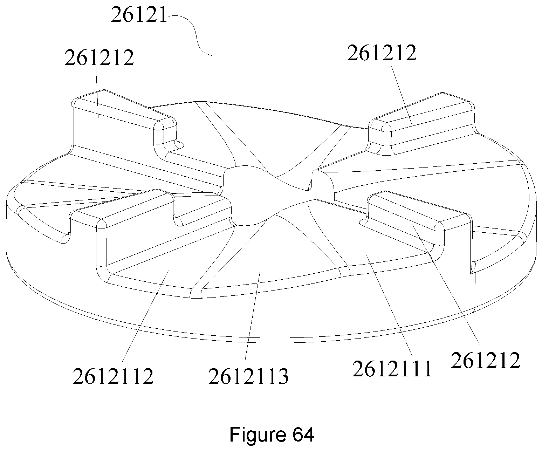

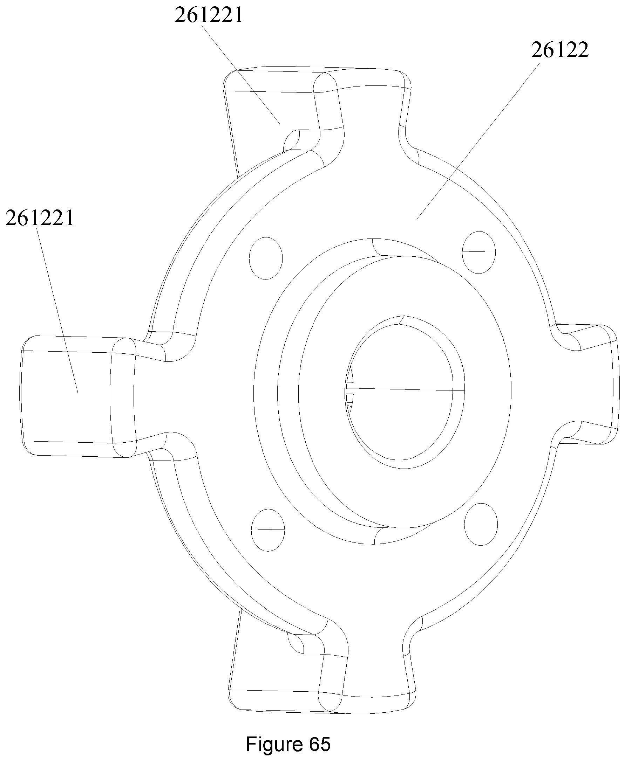

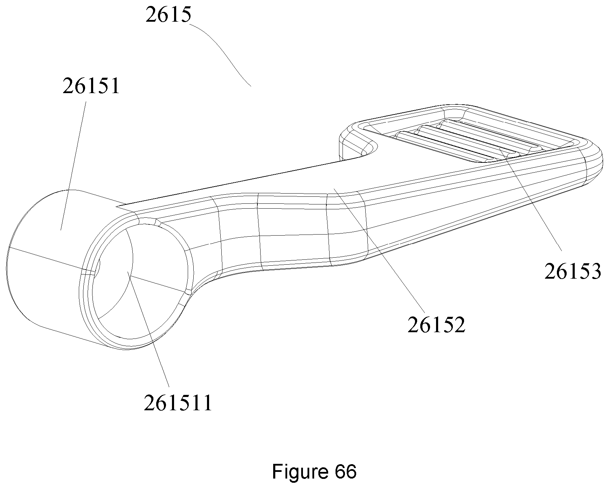

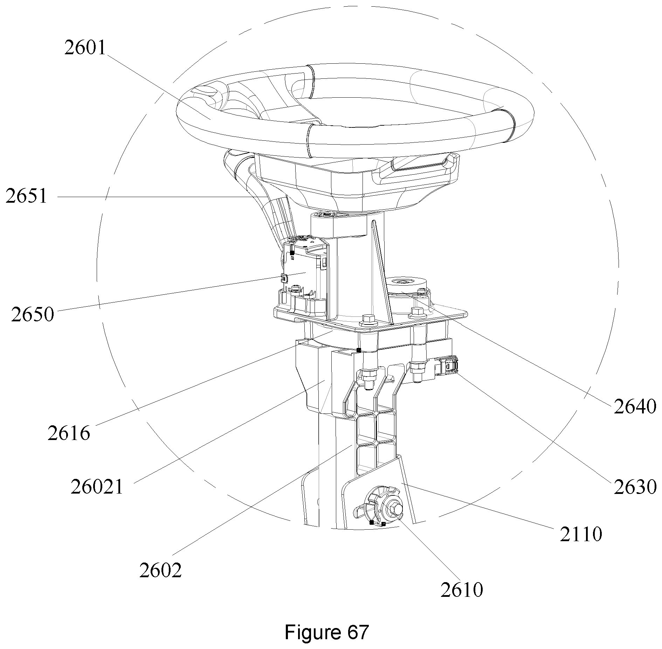

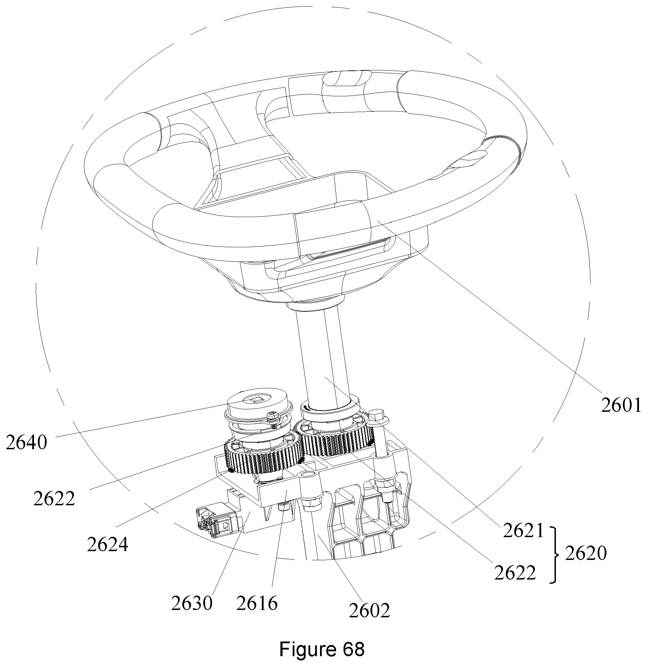

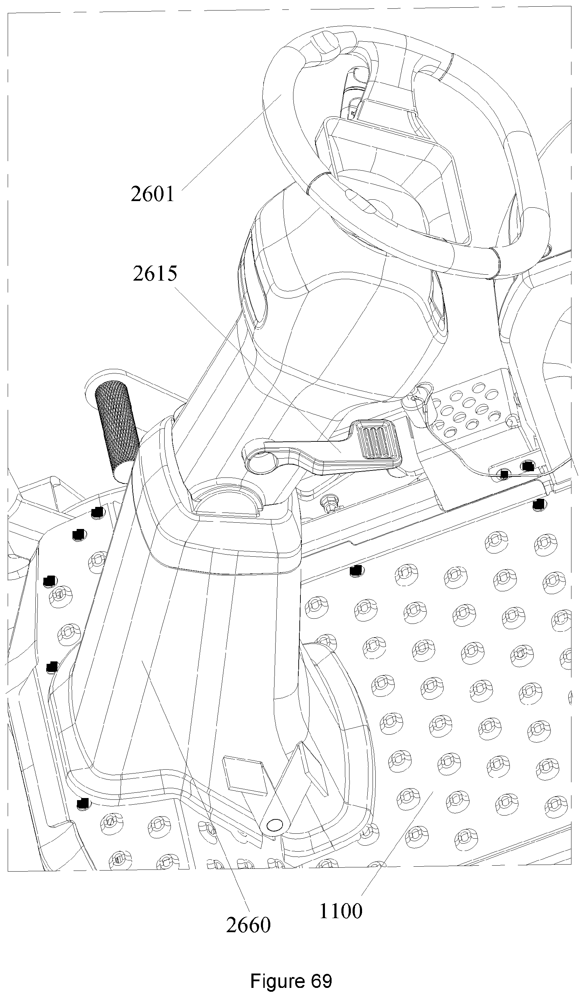

Please refer to FIG. 46 through FIG. 69. In an embodiment of the lawn mower of the disclosure, when the lawn mower is parked and braked, a brake and release of the walking wheel 2210 by the second device 2790 may be completed only by stepping on the pedal assembly 2720 of the parking assembly 2700 with a foot, and an entire parking process does not require an operator to operate by hand or bend over, so the entire parking process is more convenient and labor-saving.

Please refer to FIG. 46 through FIG. 52. the lawn mower includes the frame 1100, the walking assembly 1200, the cutting deck assembly 1300 a parking assembly 2700 and a second device 2790. The frame 1100 may include the driving seat 1500, or the frame 1100 may also not include the driving seat 1500. In an embodiment, in order to improve a comfort of the operator operating the lawn mower, the frame 1100 includes the driving seat 1500, and a specific structure of the frame 1100 is not limited. The walking assembly 1200 is mounted on the frame 1100 for driving the frame 1100. The walking assembly 1200 may include the driving part, the power supply part and other components, the power supply part may provide energy for the driving part, and the power supply part may be the battery, or may be an engine such as a diesel engine, a gasoline engine or an oil-electric mixer. The driving part provides power for a rotation of the walking wheels, and the driving part may be any transmission assembly that can meet the requirements, such as the motor, may be the motor with the reducer, a motor with a gear rack transmission assembly, or a motor with a screw-nut transmission assembly. The walking assembly 1200 controls the frame 1100 to walk correspondingly. The cutting deck assembly 1300 is mounted on the frame 1100 for mowing. A mounting position of the cutting deck assembly 1300 on the frame is not limited, for example, it may be mounted at a front end of the frame 1100, or may be mounted in a middle of the frame 1100, or may be mounted at a rear end of the frame 1100, as long as mounting requirements of mowing can be met.

Please refer to FIG. 46 through FIG. 52. The parking assembly 2700 is fixedly mounted on the frame 1100 located on the front side of the driving seat 1500, and a fixed mounting manner includes but is not limited to a bolt connection. The parking assembly 2700 includes: a parking bracket 2710, a pedal assembly 2720, and a detection device 2730. The pedal assembly 2720 is rotatably connected to the parking bracket 2710, and a rotatable connection manner is not limited, and may be implemented by means of a hinge, a bolt assembly, or the like, or may be implemented by means of a bearing assembly. The parking bracket 2710 is fixedly connected to the frame 1100 on the front side of the driving seat 1500 by means of but is not limited to the bolts. A specific structure of the parking bracket 2710 is also not limited. The pedal assembly 2720 rotates within a preset angle range, for example, may rotate within a range of 180 degrees, or may rotate within a range of 90 degrees, or the like, which is not limited in a specific angle. The detection device 2730 may be mounted on the parking bracket 2710, or may be mounted on the pedal assembly 2720, or may be partially mounted on the pedal assembly 2720, or may be partially mounted on the parking bracket 2710, which is not specifically limited. When the pedal assembly 2720 rotates relative to the parking bracket 2710, the detection device 2730 may generate a braking signal according to a change in a relative position between the pedal assembly 2720 and the parking bracket 2710. The braking signal may be either an energized signal or a de-energized signal, which is not limited here, as long as the second device 2790 can brake through the braking signal. There may be various options for the detection device 790, for example, the detection device 790 may be any detection device capable of detecting the change in the relative position between the pedal assembly 2720 and the parking bracket 2710, such as an infrared ranging sensor, a magnetic detection sensor, a pressure sensor, or a travel switch. This is not limited in this embodiment.

Please refer to FIG. 46 through FIG. 49, the second device 2790 is mounted on the walking assembly 1200, and the second device 2790 receives the braking signal generated by the parking mechanism 2700, to brake the walking assembly 1200. The walking assembly 1200 includes the walking wheel 2210, and the walking wheel 2210 rotates to drive the frame 1100. The second device 2790 may be an electromagnetic brake disc or a mechanical brake disc or any other braking structure capable of braking the walking wheel 2210. This is not limited in this embodiment.

In an embodiment of the lawn mower, the parking assembly 2700 includes the pedal assembly 2720. The pedal assembly 2720 is rotated within a set angle range relative to the parking bracket 2710, and the detection device 2730 detects the change of the relative position between the pedal assembly 2720 and the parking bracket 2710 to generate the braking signal. In a process of generating the braking signal, the operator only needs to step on the pedal assembly 2720 by the foot, so that the pedal assembly 2720 generates a relative movement relative to the parking bracket 2710, and the braking signal can be generated, then the second device 2790 brakes the walking wheel 2210 by using the generated braking signal. Therefore, an entire braking process of the lawn mower does not require the operator to operate by hand or bend over, and therefore, the entire parking process is more convenient and labor-saving. Meanwhile, the parking assembly 2700 has a simple structure, which causes a more reliable and stable operation.

Please refer to FIG. 46 through FIG. 52. In an embodiment of the lawn mower of the disclosure, the detection device 2730 of the parking assembly includes a first unit 2731 and a second unit 2732, the first unit 2731 is arranged on the parking bracket 2710, and the first unit 2731 may be a non-contact detection component capable of emitting a detection signal, such as a distance sensor and a pressure sensor, or may be a contact detection component such as a limiting switch and a travel switch. The first unit 2731 may be fixedly connected to the parking bracket 2710 by but not limited to the bolts. The second unit 2732 is correspondingly arranged on the pedal assembly 2720, the second unit 2732 may be a component capable of receiving the detection signal emitted by the first unit 2731, or may be a mechanical part capable of abutting against and pressing a contact switch, such as a pressing plate and a blocking plate, and the second unit 2732 may be fixedly connected to the parking bracket 2710 by but not limited to the bolts. During a rotation of the pedal assembly 2720 relative to the parking bracket 2710, the first unit 2731 and the second unit 2732 interact with each other to generate the braking signal. The first unit 2731 and the second unit 2732 may generate the braking signal when sensing occurs between the first unit 2731 and the second unit 2732, or may generate the braking signal when the first unit 2731 and the second unit 2732 do not sense each other, both of which may be used, which may not be limited in this embodiment. In another embodiment of the disclosure, the first unit 2731 may be arranged on the pedal assembly 2720, and the second unit 2732 may be arranged on the parking bracket 2710. Through arranging the first unit 2731 and the second unit 2732, when the pedal assembly 2720 rotates relative to the parking bracket 2710, a relative position change of the first unit 2731 relative to the second unit 2732 may be generated, thereby controlling a generation of the braking signal, which has a simple structure and fewer detection operations, and a generation control of the braking signal can be more stable and reliable.

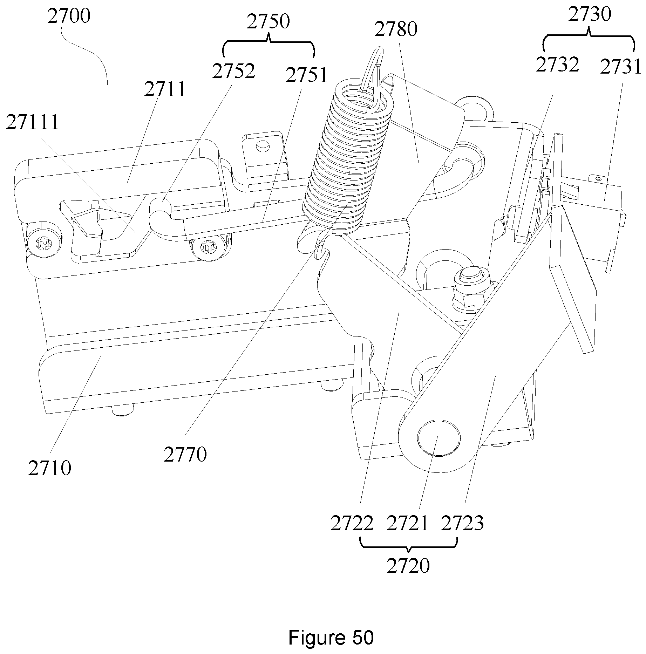

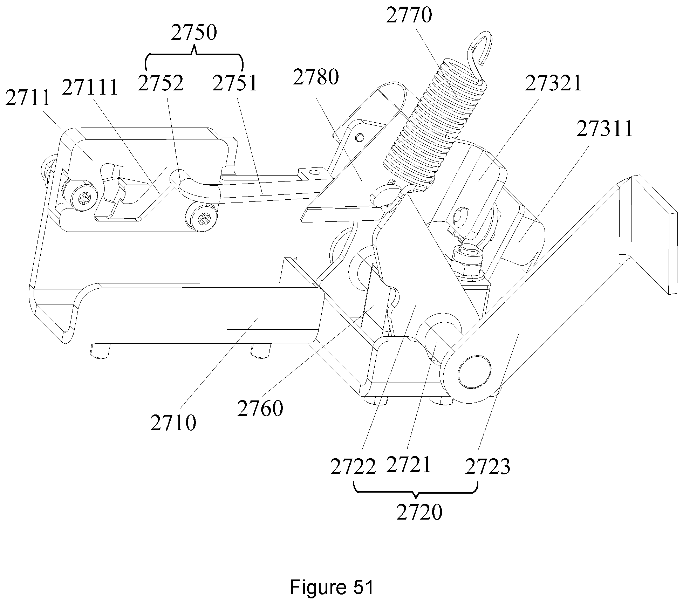

Please refer to FIG. 50 and FIG. 51. In an embodiment of the parking assembly of the disclosure, the second unit 2732 includes a pressing plate 27321, the pressing plate 27321 is fixedly connected to the pedal assembly 2720, and a specific structure of the pressing plate 27321 is not limited, which may be a bent part, a profile part such as angle steel, or the like. The pressing plate 27321 is fixedly connected to the pedal assembly 2720 by but not limited to the bolts. The first unit 2731 includes a switch 27311, and the switch 27311 may be a non-contact switch or a contact switch, which is not specifically limited. In this embodiment, the switch 27311 is a contact travel switch. The switch 27311 is fixedly mounted on the parking bracket 2710, and a fixed mounting manner includes but not limited to a bolt fixed connection. A mounting position of the switch 27311 on the parking bracket 2710 corresponds to a mounting position of the pressing plate 27321 on the pedal assembly 2720. When the pressing plate 27321 presses a contact point of the travel switch, a certain compression is generated for the travel switch. After the compression amount reaches a certain travel, the travel switch is in a triggered state. When the pressing plate 27321 is away from the contact point of the travel switch, the compression of the travel switch is restored to an initial state, and the travel switch is switched to a non-triggered state. The pedal assembly 2720 has at least a first position and a second position during the rotation of the pedal assembly 2720 relative to the parking bracket 2710. When the pedal assembly 2720 is in the first position, the pressing plate 27321 presses the contact point of the travel switch, so that the switch 27311 is in a triggered state, and no braking signal is generated at this time. The first position may be any position during the rotation of the pedal assembly 2720 relative to the parking bracket 2710. In order to ensure an accuracy of the pedal assembly 2720 reaching the first position each time, in this embodiment, a position of the pedal assembly 2720 when the pedal assembly 2720 is completely released is set to the first position (as shown by the position of the pedal assembly in FIG. 4). In this way, the accuracy of the pedal assembly 2720 each time returns to the first position may be improved, thereby ensuring an accuracy of pressing the pressing plate 27321 against the contact point of the travel switch. When the pedal assembly 2720 leaves the first position, the pressing plate 27321 moves away from the travel switch, so that the travel switch is switched to the non-triggered state, and the braking signal is generated.

Please refer to FIG. 50 through FIG. 54, in an embodiment of the parking assembly 2700 of the disclosure, a mounting block 2711 is fixedly mounted on the parking bracket 2710, and a fixed connection manner includes but is not limited to the bolt fixed connection. A sliding groove 27111 is arranged on the mounting block 2711, the sliding groove 27111 includes a first clamping groove 271111 and a second clamping groove 271112, the first clamping groove 271111 includes a horizontal section 271111-1 and an inclined section 271111-2 that are in communication with each other, the horizontal section 271111-1 is arranged close to the switch 27311, and the inclined section 271111-2 is arranged away from the switch 27311 and is inclined downward in a height direction of the parking bracket 2710. An end of the inclined section 271111-2 away from the switch 27311 is in communication with the second clamping groove 271112. In this embodiment, the mounting block 2711 facilitates a processing of the sliding groove 27111. In other embodiments, the sliding groove 27111 may also be directly arranged on the parking bracket 2710.

Please refer to FIG. 50 through FIG. 53, the parking assembly 2700 further includes a connecting rod 2750, the connecting rod 2750 is rotatably connected to the pedal assembly 2720, and the connecting rod 2750 may be directly rotatably connected to the pedal assembly 2720, or may be indirectly rotatably coupled through other parts. In this embodiment, the connecting rod 2750 is rotatably connected to the pressing plate 27321, so as to realize a rotatable connection with the pedal assembly 2720. A manner of the rotatable connection between the connecting rod 2750 and the pressing plate 27321 is not limited, and the connecting rod 2750 may directly pass through the pressing plate 27321, and the rotatable connection is realized through a shaft-hole clearance fit, or the rotatable connection may be realized through a hinge, a bolt assembly, etc. In this embodiment, the connecting rod 2750 includes a first rod body 2751 and a second rod body 2752. A first end of the first rod body 2751 is rotatably coupled to the pressing plate 27321 through the shaft-hole clearance fit, and a second end of the first rod body 2751 is fixedly coupled to the second rod body 2752. A fixed connection manner may be an integrally formed connection or a welding connection. In this embodiment, the second rod body 2752 and the first rod body 2751 are integrally formed. An end of the second rod body 2752 away from the first rod body 2751 is slidably inserted into the sliding groove 27111, and when the pedal assembly 2720 reaches the second position from the first position, the second rod body 2752 correspondingly slides from the first clamping groove 271111 into the second clamping groove 271112. Through arranging the first clamping groove 271111 and the second clamping groove 271112, when the pedal assembly 2720 rotates, the second rod body 2752 may move between the first clamping groove 271111 and the second clamping groove 271112, thereby driving the pressing plate 27321 to move away from or press the switch 27311, and realizing a conversion of the switch 27311 between the triggered state and the non-triggered state. This arrangement forms a linkage structure among the pedal assembly 2720, the pressing plate 27321, the connecting rod 2750 and the sliding groove 27111, and the linkage structure may convert the rotation of the pedal assembly 2720 into a movement of the second rod body 2752 in the clamping groove, thereby realizing a change of a relative position between the pressing plate 27321 and the switch 27311. This method is simple in structure, convenient to operate, and high in reliability.

Please refer to FIG. 50 and FIG. 51. In an embodiment of the parking assembly of the disclosure, the pedal assembly 2720 includes a rotating shaft 2721, a connecting arm 2722 and a pedal arm 2723. The rotating shaft 2721 is rotatably coupled to the parking bracket 2710. There may be a plurality of rotatable connection manners, for example, the rotating shaft 2721 may be rotatably coupled through a bearing, or the rotating shaft 2721 may be rotatably coupled through a shaft-hole clearance fit. In this embodiment, a first end of the rotating shaft 2721 is rotatably coupled to the parking bracket 2710 through the bearing, a second end of the rotating shaft 2721 is mounted on the parking bracket 2710 through a tube clamp 2760, and the tube clamp 2760 and the rotating shaft 2721 are rotatably coupled in the shaft-hole clearance fit. The pedal arm 2723 and the connecting arm 2722 are both fixedly connected to one end of the rotating shaft 2721 extending out of the tube clamp 2760, and the connecting arm 2722 is located between the pedal arm 2723 and the tube clamp 2760. The connecting arm 2722 and the pedal arm 2723 are arranged at intervals along an axial direction of the rotating shaft 2721, and are arranged at an angle in a circumferential direction of the rotating shaft 2721. The fixed connection methods may be welding connection, bolt fixed connection, etc. In this embodiment, both the connecting arm 2722 and the pedal arm 2723 are welded to the rotating shaft 2721. Since a welding connection strength is high, duration life of the pedal arm 2723 and the connecting arm 2722 may be improved.

Please refer to FIG. 50 and FIG. 51, the parking assembly 2700 further includes a first elastic component 2770, and the first elastic component 2770 may be a leaf spring, an air spring, a helical spring, or the like. In this embodiment, the first elastic component 2770 is a tension spring, and the tension spring is a standard component with a full specification and a low purchase cost. A first end of the first elastic component 2770 is coupled to the connecting arm 2722, and a second end of the first elastic component 2770 is coupled to the parking bracket 2710. A first preload is formed between the connecting arm 2722 and the parking bracket 2710, and a direction of a rotational torque generated by the first preload along an axis of the rotating shaft 2721 is opposite to a direction of a rotational torque generated when the pedal arm 2723 is stepped downward. Through arranging the first elastic component 2770, the pedal arm 2723 may be assisted to quickly return to the first position when the foot releases the pedal arm 2723, which can not only increase a speed at which the pressing plate 27321 abuts against and presses the detection device 2730, so as to quickly release a braking of the braking component to the walking assembly 1200, but also improve an accuracy of each return position of the pedal arm 2723.

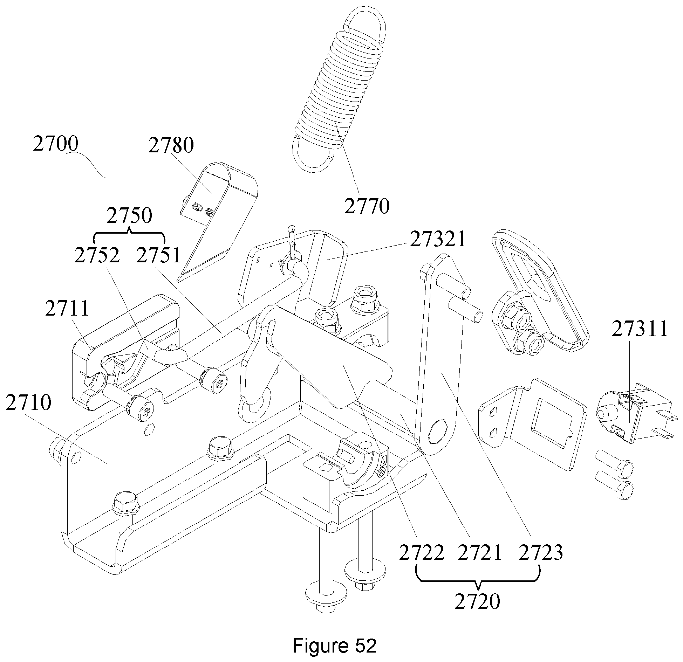

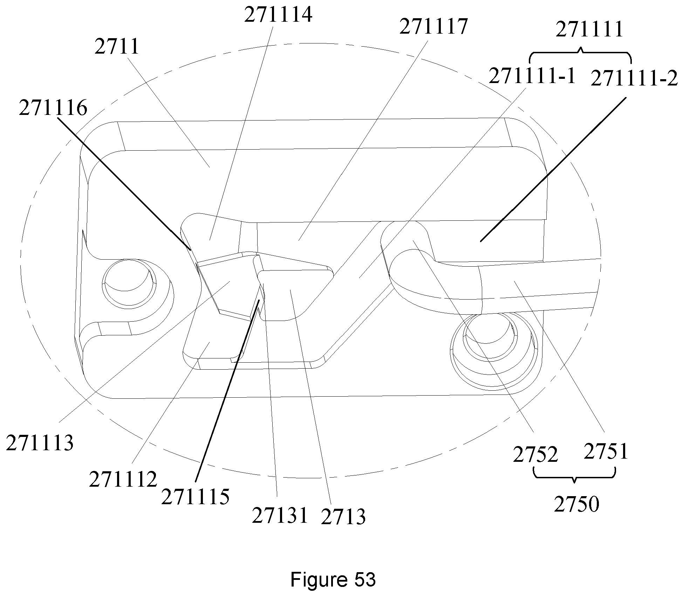

Please refer to FIG. 52 and FIG. 53, in an example of the parking assembly 2700 of the disclosure, the parking assembly 2700 further includes a second elastic component 2780, and the second elastic component 2780 may be the leaf spring, the air spring, the helical spring, or the like. In this embodiment, the second elastic component 2780 is the leaf spring, and the leaf spring is an approximately U-shaped structure. The second rod body 2752 is located between two side walls of the leaf spring, a first side wall of the leaf spring is fixedly coupled to the pressing plate 27321, a fixed connection manner includes but is not limited to the bolt fixed connection, and a second side wall of the leaf spring is pressed against the second rod body 2752, thereby generating a second preload on the second rod body 2752 facing the sliding groove 27111, so that an end surface of the second rod body 2752 is pressed against a bottom wall of the first clamping groove 271111 or a bottom wall of the second clamping groove 271112. Through arranging the second elastic component 2780, the second rod body 2752 may be subjected to a compressing force toward the sliding groove 27111, thereby reducing a probability of the second rod body 2752 sliding out during sliding from the first clamping groove 271111 to the second sliding groove 27111, and reducing a failure rate during use of the parking assembly 2700. At the same time, through using the leaf spring as the second elastic component 2780, the second rod body 2752 may obtain a large compressing force, and the compressing force is relatively stable, which reduces a probability that the second rod body 2752 is separated from the leaf spring during a movement of the pressing plate 27321.

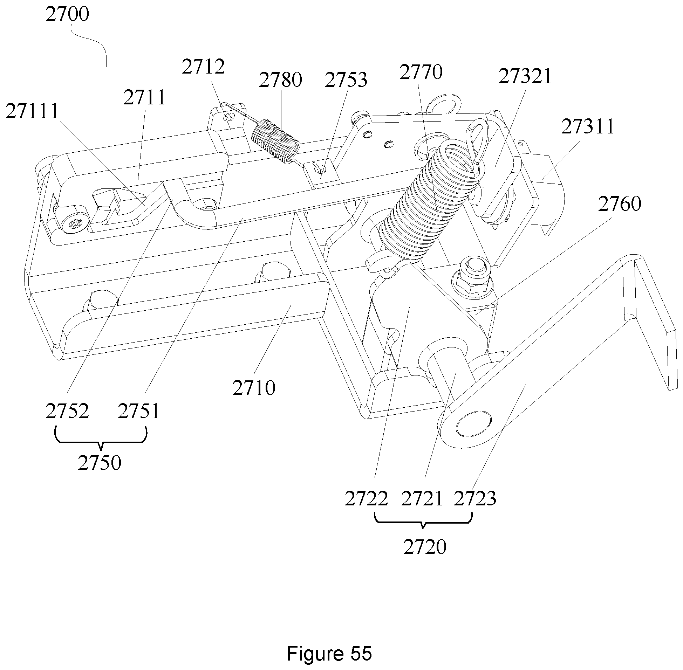

Please refer to FIG. 53 and FIG. 55, in an embodiment of the disclosure, the second elastic component 2780 is a tension spring, and two hooks are arranged at two ends of the tension spring respectively. A first bracket 2712 is welded on the parking bracket 2710, and a second bracket 2753 is welded on the connecting rod 2750. The two hooks of the tension spring are respectively hooked on the first bracket 2712 and the second bracket 2753. The tension spring generates a tensile force on the connecting rod 2750, which means the second preload, and the tensile force presses the connecting rod 2750 toward the sliding groove 27111, so that the end surface of the second rod body 2752 presses against the bottom wall of the first clamping groove 271111 or the second clamping groove 271112. Through arranging the tension spring, the second rod body 2752 may also be subjected to the compressing force toward the sliding groove 27111, thereby reducing the probability of the second rod body 2752 sliding out during sliding from the first clamping groove 271111 to the second sliding groove 27111, and reducing the failure rate during the use of the parking assembly 2700.

Please refer to FIG. 50 through FIG. 54. In an embodiment of the parking assembly 2700 of the disclosure, there is a height difference between the bottom wall of the first clamping groove 271111 and the bottom wall of the second clamping groove 271112, and a direction of the height difference is consistent with the direction of the second preload. A specific magnitude of the height difference is not limited, as long as the second rod body 2752 can bear the second preload. A depth of the bottom wall of the first clamping groove 271111 is less than a depth of the bottom wall of the second clamping groove 271112. During depression of the pedal arm 2723, the second rod body 2752 slides against the bottom wall of the first clamping groove 271111 and the bottom wall of the second clamping groove 271112 in sequence. Through forming the height difference between the bottom wall of the first clamping groove 271111 and the bottom wall of the second clamping groove 271112, when the second rod body 2752 slides from the first clamping groove 271111 to the second clamping groove 271112, under an action of the second preload, the second rod body 2752 may accurately slide into the second clamping groove 271112. At the same time, since the height difference is formed between the bottom wall of the first clamping groove 271111 and the bottom wall of the second clamping groove 271112, a magnitude of the second preload generated when the second rod body 2752 slides in the first clamping groove 271111 is obviously different from the magnitude of the second preload generated when the second rod body 2752 slides in the second clamping groove 271112, so that during stepping the pedal arm 2723, whether the pedal arm 2723 has been stepped in a position may be clearly sensed by sensing a change of the second preload when the foot moves, so as to prevent the pedal arm 2723 from over-stepped, thereby reducing a duration life of the pedal assembly 2720.

Please refer to FIG. 51 through FIG. 54, in an embodiment of the parking assembly 2700 of the disclosure, the sliding groove 27111 further includes a third clamping groove 271113. Along a height direction of the parking bracket 2710, the third clamping groove 271113 is located above the second clamping groove 271112, the third clamping groove 271113 is in communication with the second clamping groove 271112, an opening direction of the third clamping groove 271113 is consistent with an opening direction of the second clamping groove 271112, a depth of a bottom wall of the third clamping groove 271113 is greater than the depth of the bottom wall of the second clamping groove 271112, and a specific shape and area of the third clamping groove 271113 are not limited, as long as an area of the bottom wall of the third clamping groove 271113 can accommodate an area of the end face of the second rod body 2752. A first inclined surface 271115 is arranged at a side of the second clamping groove 271112 close to the first clamping groove 271111, the first inclined surface 271115 extends into the third clamping groove 271113 along the height direction, and an end of the first inclined surface 271115 close to the third clamping groove 271113 is inclined toward the pressing plate 27321. The third clamping groove 271113 includes a blocking part 2713 for blocking the second rod body 2752 from sliding out of the third clamping groove 271113. The blocking part 2713 may be arranged at any position of the third clamping groove 271113, as long as it can block the second rod body 2752 from sliding out of the third clamping groove 271113. For example, the blocking part 2713 may be arranged on a peripheral side walls of the third clamping groove 271113 or on a bottom wall of the third clamping groove 271113. A specific shape and structure of the blocking part 2713 are not limited, as long as it can prevent the second rod body 2752 from sliding out of the third clamping groove 271113.

Please refer to FIG. 52 through FIG. 54, in this embodiment, the blocking part 2713 is arranged at an end of the first inclined surface 271115 away from the second clamping groove. During a movement of the pedal assembly 2720 from the first position to the second position, when the pedal arm 2723 is released, under the action of the first elastic component 2770 and the second elastic component 2780, the second rod body 2752 moves along the first inclined surface 271115, then slides into the third clamping groove 271113 from the second clamping groove 271112 and may be limited by the blocking part 2713, so that the pedal assembly 2720 may be kept at the second position, and at this time, the pressing plate 27321 and the switch 27311 may be kept in a separated state, so that the parking assembly 2700 may generates the braking signal. In some embodiment, please refer to FIG. 7. In this embodiment, the blocking part 2713 may include an arc surface 27131, and the arc surface 27131 may correspond to an outer side wall of the second rod body 2752. An arrangement of the arc surface 27131 may better limit a movement of the second rod body 2752 in a third sliding groove 27111, and reduce the probability of the second rod body 2752 sliding out.

In this embodiment, when the pedal arm 2723 leaves from the first position and the second rod body 2752 slides in a first sliding groove 27111, the pressing plate 27321 and the switch 27311 are also in a separated state, the switch 27311 is in a non-triggered state, and the braking device 700 generates a braking signal. At this time, if the pedal arm 2723 is released, the pedal arm 2723 may directly returns to the first position under the action of the first elastic component 2770, so that the switch 27311 abuts against the pressing plate 27321 again, the switch 27311 enters the triggered state again, and the braking device 700 does not generate the braking signal. Therefore, in this process, a parking structure 700 may further function as a brake.

Please refer to FIG. 50 through FIG. 55, in an embodiment of the parking assembly 2700 of the disclosure, the parking bracket 2710 further includes a fourth clamping groove 71114, along the height direction of the parking bracket 2710, the fourth clamping groove 71114 is arranged above the third clamping groove 271113, and the fourth clamping groove 71114 is communicated with the third clamping groove 271113, an opening direction of the fourth clamping groove 71114 is consistent with the opening direction of the third clamping groove 271113, and a depth of a bottom wall of the fourth clamping groove 71114 is greater than the depth of the bottom wall of the third clamping groove 271113. A specific shape and area of the fourth clamping groove 71114 are not limited, as long as an area of the bottom wall of the fourth clamping groove 71114 can accommodate the area of the end face of the second rod body 2752. A second inclined surface 271116 is arranged on a side of the third clamping groove 271113 away from the pressing plate 27321, the second inclined surface 271116 extends upward into a fourth clamping groove 71114, and an end of the second inclined surface 271116 close to the fourth clamping groove 71114 is inclined toward a direction away from the pressing plate 27321. A third inclined surface 271117 is further arranged between the fourth clamping groove 71114 and the first clamping groove 271111, a first end of the third inclined surface 271117 is connected to the bottom wall of the fourth clamping groove 71114, and a second end of the third inclined surface 271117 is connected to a bottom wall of the horizontal section 271111-1 of the first clamping groove 271111.

When the pedal assembly 2720 stays at the second position, at this time, the pedal arm 2723 is stepped again, and the second rod body 75 located in the third clamping groove 271113 moves and is separated from the blocking part 2713, then slides along the second inclined surface 271116, and falls into the fourth clamping groove 71114 under the action of the second elastic component 2780. When the pedal arm 2723 is released again, the pedal arm 2723 returns to the first position under the action of the first elastic component 2770, thereby driving the second rod body 2752 to slide smoothly from the fourth clamping groove 71114 along the third inclined surface 71115 into the horizontal section of the first clamping groove 271111, which means that the second rod body 2752 returns to an initial position in the first clamping groove 271111. At this time, the pressing plate 27321 presses against the switch 27311 again, and the switch 27311 is switched to the triggered state, and at this time, no braking signal is generated. Through arranging the fourth clamping groove 71114, and the fourth clamping groove 71114 is in communication with the third clamping groove 271113 and the first clamping groove 271111 respectively, the parking assembly 2700 can return to a state of not generating the braking signal by stepping on the pedal arm 2723 again, which is simple and convenient to operate.

When the pedal arm 2723 is stepped on, the pedal arm 2723 leaves the first position, so that the pressing plate 27321 in the parking assembly 2700 is separated from the switch 27311, the switch 27311 is changed to the non-triggered state, at this time, the braking signal is generated, and after the electromagnetic brake disc receives the braking signal, the electromagnetic brake disc immediately lock up. The lawn mower in this embodiment includes the parking assembly 2700, so that a parking state of the lawn mower may be achieved through a stepping action of the foot, which facilitates a parking by the operator.

In another embodiment, after receiving the braking signal, the electromagnetic brake disc locks up after a delay of a period of time, and the driving motor may perform a deceleration action within the delay time. When the rotating speed of the driving motor reaches a preset rotating speed, the electromagnetic brake disc then locks up. This arrangement may reduce a wear of braking pads on the electromagnetic brake disc when the driving motor brakes at a high rotating speed, thereby improving a duration life of the electromagnetic brake disc.

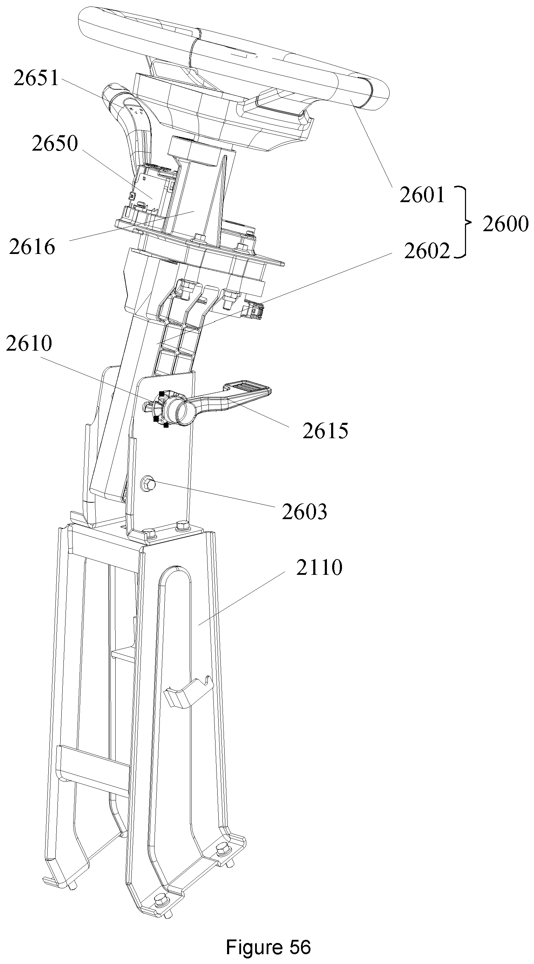

Please refer to FIG. 46 and FIG. 56. In an embodiment of the lawn mower of the disclosure, the frame 1100 further includes a chassis and a first supporting bracket 2110 mounted on the chassis of the driving seat 1500, the first supporting bracket 2110 extends along the height direction of the lawn mower, and the first supporting bracket 100 may be mounted on a front side or a side of the driving seat 1500, which is not limited here. In other embodiments, the frame 1100 may not include the driving seat 1500. Other structural forms of the frame 1100 are not limited, which may refer to a structure of the frame 1100 of the conventional lawn mower. The connection manner between the first supporting bracket 2110 and the chassis includes but is not limited to integral molding, welding and bolt connection, etc., and in this embodiment, the bolt connection is used to facilitate later maintenance and replacement.

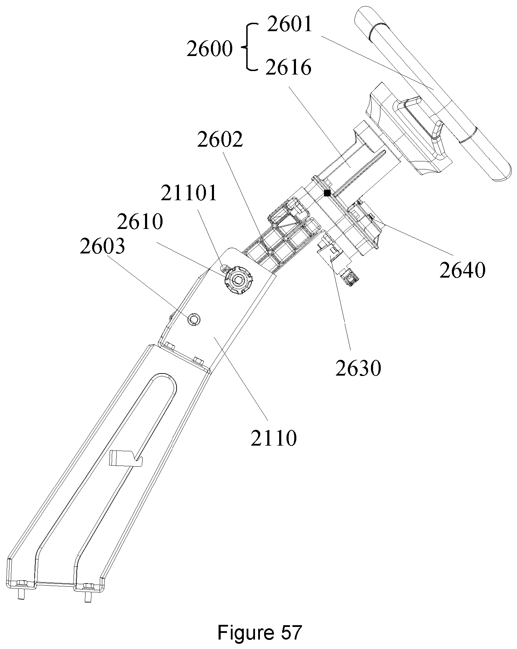

Please refer to FIG. 56 and FIG. 57. The steering wheel assembly 2600 includes a steering wheel 2601 and a steering wheel frame 2602, and an upper end of the steering wheel frame 2602 is rotatably connected to the steering wheel 2601, so that a walking direction of the lawn mower may be controlled by rotating the steering wheel 2601. A lower end of the steering wheel frame 2602 is rotatably connected to an upper end of the first supporting bracket 2110, and a manner of the rotatable connection is not limited, and can be implemented by using a hinge, a bolt assembly, or the like, or by using a bearing assembly. In this embodiment, the steering wheel frame 2602 is rotatably connected to the first supporting bracket 2110 by using a bolt assembly 2603. The manner of the rotatable connection between the steering wheel frame 2602 and the first supporting bracket 2110 may not be limited, for example, the steering wheel frame 2602 and the first supporting bracket 2110 may rotate 360 degrees, or may rotate within a specific angle range.

In this embodiment, the steering wheel frame 2602 and the first supporting bracket 2110 rotate within a first angle range and have a first limit position and a second limit position. When the steering wheel frame 2602 rotates to the first limit position, the steering wheel 2601 is closest to the driving seat 1500, and when the steering wheel frame 2602 rotates to the second limit position, the steering wheel 2601 is farthest from the driving seat 1500. The steering wheel frame 2602 drives the steering wheel 2601 to rotate between the first limit position and the second limit position.

The steering wheel 2601 on the lawn mower may swing between the first limit position and the second limit position, and a position between the steering wheel 2601 and the frame 1100 may be locked by a locking member 2610, so as to adjust a mounting position of the steering wheel 2601 on the frame 1100 to change an operating posture of the operator, thereby meeting requirements of the operators with different heights on a driving operation comfort of the steering wheel 2601.

The disclosure further provides the garden tool, which may be, for example, a riding cleaning machine, a riding snow blower, an all-terrain vehicle, or the lawn mower shown in FIG. 51. The garden tool applies the parking assembly 2700 described in the above embodiments, and the garden tool includes the frame 1100, the walking assembly 200, the working assembly and the parking assembly 2700. The walking assembly 1200 is mounted on the frame 1100 for driving the frame 1100. The walking assembly 1200 may include the driving part, the power supply part and other components, the power supply part may provide energy for the driving part, and the power supply part may be the battery, or may be an engine such as the diesel engine, the gasoline engine or the oil-electric mixer. The driving part provides power for the rotation of the walking wheels, and the driving part may be any transmission assembly that can meet the requirements, such as the motor, may be the motor with the reducer, the motor with the gear rack transmission assembly, or the motor with the screw-nut transmission assembly. The walking assembly 1200 controls the frame 1100 to walk correspondingly. A working assembly is mounted on the frame 1100 for corresponding garden work. Of course, the garden tool may also not include the working assembly. The parking assembly 2700 is fixedly mounted the frame 1100. Through arranging the pedal assembly 2720 and rotating the pedal assembly 2720 at least between the first position and the second position, the parking assembly 2700 may realize a change of the relative position between the pressing plate 27321 and the switch 27311, thereby generating the braking signal. A brake device 790 locks up after receiving the braking signal, thereby realizing a parking function of the garden tool. A part and a relative connection relationship which may not be described in detail in the above-mentioned garden tool may refer to the conventional corresponding garden tools, and the details may not be repeated here.

In this embodiment of the lawn mower, the steering wheel 2601 is rotatably mounted on the first supporting bracket 2110 in front of the driving seat 1500 through the steering wheel frame 2602. A rotation of the steering wheel 2602 may adjust the mounting position of the steering wheel 2601 on the frame 1100 to change the operating posture of the operator, thereby meeting the requirements of the operators with different heights on the driving operation comfort of the steering wheel 2601. At the same time, a rotation of the steering wheel frame 2602 is limited between the first limit position and the second limit position, so that the steering wheel frame 2602 may swing within the certain angle range, thereby reducing an ineffective rotation movement when the steering wheel frame 2602 is adjusted, and effectively improving adjustment efficiency of the steering wheel frame 2602.

The locking member 2610 may be arranged on the first supporting bracket 2110, or may be arranged on the steering wheel frame 2602, or may be partially arranged on the first supporting bracket 2110 and partially arranged on the steering wheel frame 2602. In some embodiment, please refer to FIG. 10. In the disclosure, the locking member 2610 is arranged on the first supporting bracket 2110, which facilitates a mounting, maintenance and replacement of the locking member 2610. A specific mounting position of the locking member 2610 on the steering wheel frame 2602 is not limited, as long as the steering wheel frame 2602 can be locked relative to the first supporting bracket 2110. The locking member 2610 may be any structure with a locking function, such as a bolt-nut tightening locking, a compressing block locking or a tightening sleeve locking, which is not specifically limited in the disclosure. Through arranging the locking member 2610 between the steering wheel frame 2602 and the first supporting bracket 2110, the steering wheel frame 2602 may be locked relative to the first supporting bracket 2110, thereby improving a stability of the mounting position of the steering wheel 2601 during a driving process of the lawn mower.

As long as the steering wheel frame 2602 can be locked relative to the first supporting bracket 2110, a specific position of the locking member 2610 on the steering wheel frame 2602 may not be limited. In some embodiments, please refer to FIG. 46 and FIG. 56. In an embodiment of the lawn mower of the disclosure, along the height direction of the lawn mower, the lower end of the steering wheel frame 2602 is rotatably coupled to the first supporting bracket 2110, and the locking member 2610 is arranged between the first supporting bracket 2110 and the steering wheel 2601. In this way, the locking member 2610 is closer to the position of the steering wheel 2601, which is convenient for the operator to lock the steering wheel frame 2602 after adjusting a swinging angle of the steering wheel frame 2602. At the same time, a rotating center of the steering wheel frame 2602 is further arranged close to the first supporting bracket 2110, which may increase a swinging arm length of the steering wheel frame 2602, thereby increasing an adjustable distance range between the steering wheel 2601 at the upper end of the steering wheel frame 2602 and the driving seat 1500 within a same swinging angle range.

Please refer to FIG. 56 through FIG. 59, in an embodiment of the lawn mower of the disclosure, the upper end of the first supporting bracket 2110 is of a groove 21102. The groove 21102 includes a bottom wall 211021, a first side wall 211022 and a second side wall 211023, and the first side wall 211022 and the second side wall 211023 are arranged in parallel on two sides of the bottom wall 211021 and are integrally formed and connected to the bottom wall 211021, thereby forming an approximately U-shaped structure. The steering wheel frame 2602 is partially clamped in the groove 21102, and an opening of the groove 21102 faces a direction away from the driving seat 1500. A guiding groove 21101 is arranged through the first side wall 211022 and the second side wall 211023, and the guiding groove 21101 is an arc-shaped structure. A center of the guiding groove 21101 is located on a same circumference centered on an axis of the bolt assembly 2603. A circular hole is arranged through the steering wheel frame 2602, and the circular hole corresponds to the guiding groove 21101.

Please refer to FIG. 56 through FIG. 59, the locking member 2610 includes a locking shaft 2611 and a locking block 2612 mounted on the locking shaft 2611. The steering wheel frame includes a through hole, and the through hole passes through the steering wheel frame 2602 along an axial direction of the locking shaft 2611. The locking shaft 2611 enters through the guiding groove 21101 on the first side wall 211022, passes through the through hole, and then exits through the guiding groove 21101 on the second side wall 211023. The locking block 2612 is arranged at an end of the locking shaft 2611 extending out of the guiding groove 21101, and may move and be locked along the axial direction of the locking shaft 2611. When the locking block 2612 is locked along the axial direction of the locking shaft 2611, the locking block 2612 presses against the side wall of the groove 21102, so that a side wall of the steering wheel frame 2602 presses against the two side walls of the groove 21102 to realize a fixation of the steering wheel frame 2602 relative to the first supporting bracket 2110. When the locking block 2612 is released along the axial direction of the locking shaft 2611, the locking block 2612 is separated from the side wall of the groove 21102, so that the side wall of the steering wheel frame 2602 is separated from the two side walls of the groove 21102 to realize a rotation of the steering wheel frame 2602 relative to the first supporting bracket 2110. Through clamping the steering wheel frame 2602 into the groove 21102, a stability of a side wall abutment and compression between the steering wheel frame 2602 and the first supporting bracket 2110 may be improved. At the same time, through arranging the guiding groove 21101, when the steering wheel frame 2602 is at the first limit position, the locking shaft 2611 is located at an end of the guiding groove 21101 close to the driving seat 1500. When the steering wheel frame 2602 is at the second limit position, the locking shaft 2611 is located at an end of the guiding groove 21101 away from the driving seat 1500, so that the steering wheel frame 2602 swings between the first limit position and the second limit position along the guiding groove 21101, thereby reducing a probability of a lateral deviation during the rotation of the steering wheel frame 2602, and improving a smoothness of the rotation of the steering wheel frame 2602.

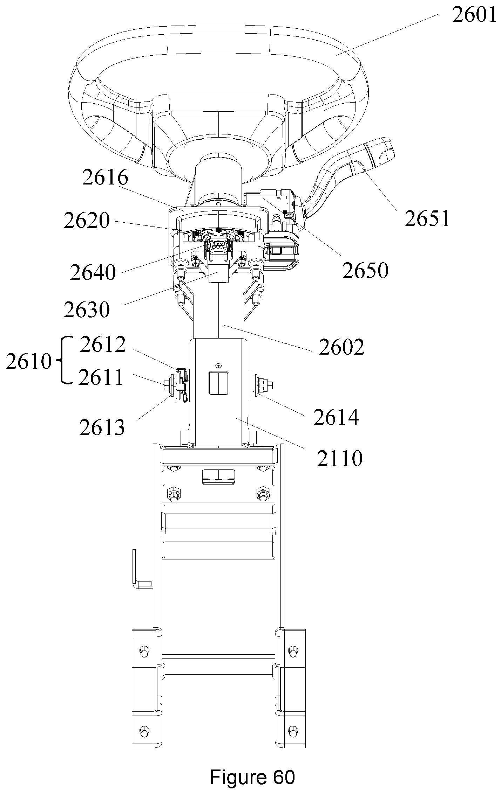

Please refer to FIG. 60 through FIG. 64, in an embodiment of the lawn mower of the disclosure, a first blocking part 2613 and a second blocking part 2614 for preventing the locking shaft 2611 from being separated from the guiding groove 21101 are arranged at two ends of the locking shaft 2611 respectively. The first blocking part 2613 is arranged on a side of the first side wall 211022 away from the second side wall 211023, the second blocking part 2614 is arranged on a side of the second side wall 211023 away from the first side wall 211022, and the locking block 2612 is arranged between the first blocking part 2613 and the first side wall 211022. The locking block 2612 includes a first locking body 26121 and a second locking body 26122, and both the first locking body 26121 and the second locking body 26122 pass through the locking shaft 2611. A first end of the first locking body 26121 is close to the first side wall 211022, and a second end of the first locking body 26121 is close to the second locking body 26122. An end of the second locking body 26122 away from the first locking body 26121 is close to the first blocking part 2613. A stop block 261213 matched with the guiding groove 21101 is arranged on one side of the first locking body 26121 close to the first side wall 211022, the stop block 261213 is in an arc-shaped block structure, and the stop block 261213 is slidably connected in the guiding groove 21101 on the first side wall 211022 to limit the guiding groove 21101 to limit a rotation of the first locking body 261121 relative to the guiding groove 21101. The first locking body 26121 includes a compressing surface 261211 on a side facing the second locking body 26122, and the second locking body 26122 includes a compressing block 261221 corresponding to the compressing surface 261211. Specific structures of the compressing surface 261211 and the compressing block 261221 are not limited, as long as an axial compressing locking between the compressing surface 261211 and the compressing block 261221 may be achieved. For example, the second locking body 26122 can be threaded on the locking shaft 2611, and the compressing block 261221 may compress the compressing surface 261211 by screwing the threads, so that the first locking body 26121 is fixed relative to the guiding groove 21101. Or the compressing surface 261211 and the compressing block 261221 are pressed and abutted in cooperation through rotating the second locking body 26122.

When the second locking body 26122 is rotated, the compressing surface 261211 compresses and abuts against the compressing block 261221 in cooperation. At this time, the second locking body 26122 compresses against the first blocking part 2613, and the first locking body 26121 compresses against the first side wall 211022, thereby compressing and abutting the first side wall 211022 and the second side wall 211023 between the first blocking part 2613 and the second blocking part 2614 against the two side surfaces of the steering wheel frame 2602 respectively, so as to realize a rotation locking between the first supporting bracket 2110 and the steering wheel frame 2602. When the second locking body 26122 is rotated in an opposite direction, the compressing surface 261211 is separated from the compressing block 261221, the first blocking part 2613 is axially separated from the second locking body 26122, and the first locking body 26121 is separated from the first side wall 211022, so that a rotation between the first supporting bracket 2110 and the steering wheel frame 2602 is adjustable. Through arranging the compressing surface 261211 and the compressing block 261221, on one hand, the second locking body 26122 is rotated to realize the rotation locking or a release between the steering wheel frame 2602 and the first supporting bracket 2110, and a locking manner is simple in structure and convenient to operate. On the other hand, the compressing surface 261211 and the compressing block 261221 are compressed and locked, compared with a common thread locking manner, a locking force is large, and a locking effect is more reliable.

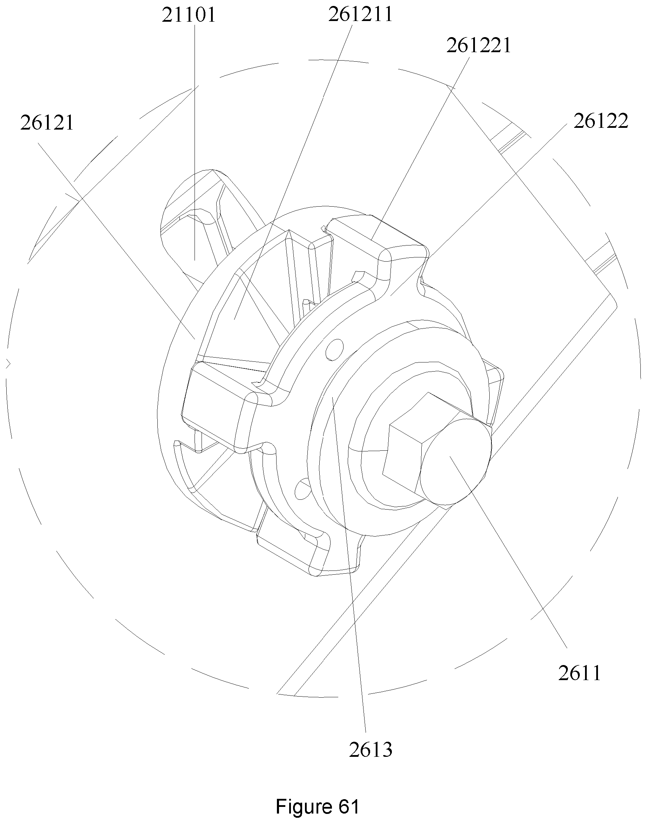

Please refer to FIG. 60. FIG. 61, FIG. 63 and FIG. 64. In an embodiment of the lawn mower of the disclosure, the compressing surface 261211 includes a first compressing surface 2612111 and a second compressing surface 2612112. Along an axial direction of the locking shaft 2611, there is a height difference between the first compressing surface 2612111 and the second compressing surface 2612112, a height of the first compressing surface 2612111 is higher than a height of the second compressing surface 2612112, and the first compressing surface 2612111 and the second compressing surface 2612112 are connected by a slope transition. A smooth transition connection may be an arc transition connection or an inclined transition connection. In this embodiment, the first compressing surface 2612111 and the second compressing surface 2612112 are connected via an inclined plane 2612113, the arc transition connection is used between the inclined plane 2612113 and the first compressing surface 2612111, and the arc transition connection is also used between the inclined plane 2612113 and the second compressing surface 2612112, so as to form the smoother transition connection between the first compressing surface 2612111 and the second compressing surface 2612112, which ensures that the compressing block 261221 moves smoothly on the compressing surface 261211. Specific shapes and areas of the first compressing surface 2612111 and the second compressing surface 2612112 are not limited, as long as the compressing block 261221 can stably stay on the first compressing surface 2612111 and the second compressing surface 2612112.

The second locking body 26122 is rotated to drive the compressing block 261221 to move smoothly from the second compressing surface 2612112 to the first compressing surface 2612111 along the inclined surface 2612113 and abut and compress against the first compressing surface 2612111. At this time, the second locking body 26122 moves toward the first blocking part 2613 along the axial direction to compress against the first blocking part 2613. At this time, the first blocking part 2613 is subjected to a larger axial force, and at the same time, the first blocking part 2613 reacts to the second locking body 26122 the axial force toward the first locking body 26121. Under an action of the axial force, the first locking body 26121 moves close to the first side wall 211022 and compresses against the first side wall 211022, and then the first side wall 211022 and the second side wall 211023 of the groove 21102 abut and press against the two side surfaces of the steering wheel frame 2602 to achieve a rotation locking of the steering wheel frame 2602 relative to the frame 1100. When the second locking body 26122 is rotated in the opposite direction to drive the compressing block 261221 to move smoothly from the first compressing surface 2612111 to the second compressing surface 2612112 along the inclined surface 2612113, the second locking body 26122 moves away from the first blocking part 2613 along the axial direction and is separated from the first blocking part 2613. At this time, the axial force applied to the first blocking part 2613 is reduced to zero, and the first blocking part 2613, so that the axial force of the first blocking part 2613 applied to the second locking body 26122 is also eliminates. Therefore, the first side wall 211022 and the second side wall 211023 of the groove 21102 respectively release compressure on the two sides of the steering wheel frame 2602, thereby realizing a rotation and release of the steering wheel frame 2602 relative to the frame 1100.

Through arranging the first compressing surface 2612111 and the second compressing surface 2612112 with the height difference, a change of an axial displacement in a compressing process of the compressing block 261221 and the compressing surface 261211 is realized, thereby realizing a locking and release of the steering wheel frame 2602 relative to the frame 1100 along the axial direction, which is simple in structure design, convenient to operate, and reliable in locking.

Please refer to FIG. 61, FIG. 63, FIG. 64 and FIG. 67. In an embodiment of the lawn mower of the disclosure, both the first locking body 26121 and the second locking body 26122 are coaxially arranged with the locking shaft 2611. There is a plurality of compressing surfaces 261211 on the first locking body 26121, and the plurality of the compressing surfaces 261211 is arranged in a circumferential array along the first locking body 26121. The In this embodiment, there are four compressing surfaces 2612111, and the four compressing surfaces 2612111 are arranged along a circumferential direction in a cyclical manner of a first compressing surface 2612111, a second compressing surface 2612112, and a first compressing surface 2612111. Compressing blocks 261221 on the second locking body 26122 are arranged corresponding to the compressing surfaces 261211 on the first locking body 26121. Through arranging a plurality of compressing surfaces 261211 and the compressing blocks 261221 in a circumferential direction, a more uniform, stable and reliable locking force may be obtained in the circumferential direction between the first locking body 26121 and the second locking body 26122, thereby improving a stability and reliability of the locking between the steering wheel frame 2602 and the first supporting bracket 2110, and reducing a probability of loosening of the steering wheel frame 2602 when being locked during the working process of the lawn mower.

In an embodiment, in order to control a locking force between the first locking body 26121 and the second locking body 26122, prevent the locking force from being too large, which may cause an abutting deformation of the steering wheel frame 2602 and the first supporting bracket 2110 to be too large, and affect a connection strength between the steering wheel frame 2602 and the first supporting bracket 2110, please refer to FIG. 16, FIG. 18 and FIG. 19, in an embodiment of the disclosure, a limiting block 261212 is further arranged on the first compressing surface 2612111, and the limiting block 261212 corresponds to the compressing block 261221. When an end face of the compressing block 261221 is compressed against the first compressing surface 2612111, if the compressing block 261221 is rotated further, a side wall of the compressing block 261221 abuts against the limiting block 261212, thereby restraining the compressing block 261221 from rotating further.

Please refer to FIG. 56, FIG. 58, FIG. 60, FIG. 61 and FIG. 66. In an embodiment of the lawn mower of the disclosure, the locking assembly 2610 further includes a rotary handle 2615. A second connecting part 26151 and a connecting arm 26152 are arranged at two ends of the rotary handle 2615 respectively, and the second connecting part 26151 and the connecting arm 26152 may be connected by welding or integrally formed, which is not specifically limited. The second connecting part 26151 is connected to the second locking body 26122 in any connection manner such as welding connection, bolt connection, integrally formed connection or nested connection. In this embodiment, the second connecting part 26151 is fixedly connected to the second locking body 26122 through the bolt, and an end close to the first blocking part 2613 is opened with a concave hole 261511 to prevent the second connecting part 26151 from interfering with the first blocking part 2613 during rotation. The connecting arm 26152 extends toward one side of the driving seat 1500, and a pressing block 26153 is arranged on the connecting arm 26152 for the operator to hold and press.

In an embodiment, through arranging the rotating handle 2615, when the steering wheel frame 2602 needs to be locked relative to the first supporting bracket 2110, at this time, the operator may lift the pressing block 26153 upward, the pressing block 26153 drives the connecting arm 26152 to rotate upward, and a rotation of the connecting arm 26152 drives the second connecting part 26151 to rotate along the axial direction of the locking shaft 2611, thereby driving the first locking body 26121 to rotate relative to the second locking body 26122, so that the first locking body 26121 and the second locking body 26122 are compressed and locked, thereby realizing the locking between the steering wheel frame 2602 and the first supporting bracket 2110. Conversely, when the pressing block 26153 is pressed downward, the connecting arm 26152 is driven to rotate downward, and the connecting arm 26152 drives the second connecting part 26151 to rotate reversely along the axial direction of the locking shaft 2611, so that the first locking body 26121 and the second locking body 26122 are released from each other, and the steering wheel frame 2602 and the first supporting bracket 2110 may be relatively released. A rotation locking between the first locking body 26121 and the second locking body 26122 is adjusted through arranging the rotary handle 2615, which is simple, labor-saving, stable and reliable.

In another embodiment, alternatively, positions of the first compressing surface 2612111 and the second compressing surface 2612112 in the circumferential direction may be interchanged. At this time, the operator may lift the pressing block 26153 downward, the pressing block 26153 drives the connecting arm 26152 to rotate downward, and a rotation of the connecting arm 26152 drives the second connecting part 26151 to rotate downward along the axial direction of the locking shaft 2611, thereby driving the first locking body 26121 to rotate downward relative to the second locking body 26122, so that the first locking body 26121 and the second locking body 26122 are compressed and locked, thereby realizing the locking between the steering wheel frame 2602 and the first supporting bracket 2110. Conversely, lifting the pressing block 26153 upwards causes the connecting arm 26152 to rotate upwards, thus releasing the locking between the steering wheel frame 2602 and the first supporting bracket 2110. In this way, when the steering wheel frame 2602 and the first supporting bracket 2110 are locked to each other, the connecting arm 26152 is inclined downward to the frame, thereby reducing a false action on the connecting arm 26152 during driving.

Please refer to FIG. 56, FIG. 57, FIG. 60, FIG. 67 and FIG. 68. In an embodiment of the lawn mower of the disclosure, a mounting base 2616 is fixedly mounted at an end of the steering wheel frame 2602 close to the steering wheel 2601 through the bolt, and the mounting base 2616 includes an accommodating cavity. The steering wheel assembly 2600 further includes a transmission assembly 2620, the transmission assembly 2620 includes a first transmission shaft 2621, a second transmission shaft 2622, a first gear 2623 and a second gear 2624. The first transmission shaft 2621 is rotatably coupled to the mounting base 2616 through the bearing, the steering wheel 2601 is fixedly mounted on a top end of the first transmission shaft 2621 through a key, and the first gear 2623 is fixedly mounted on the first transmission shaft 2621 through the key and is located at a lower end of the steering wheel 2601. The second transmission shaft 2622 is rotatably coupled to the mounting base 2616 through the bearing and is arranged in parallel with the first transmission shaft 2621. The second transmission shaft 2622 is located on a side of the steering wheel 2601 close to the driving seat 1500, and the second gear 2624 is mounted on the second transmission shaft 2622 through the key and is in meshing transmission connection with the first gear 2623. The first gear 2623 and the second gear 2624 are both arranged in the accommodating cavity, thereby improving a sealing performance of a meshing connection between the first gear 2623 and the second gear 2624, thereby improving a duration life of a gear meshing transmission.

Please refer to FIG. 46, FIG. 57, FIG. 67 and FIG. 68. A position sensor 2630 is further arranged at an end of the second transmission shaft 2622 close to the mounting base 2616, and the position sensor 2630 is located at a lower end of the mounting base 2616. The position sensor 2630 may be any sensor capable of detecting a rotation angle change of the steering wheel, such as a potentiometer, a contact sensor or a photoelectric position sensor. Due to a high measurement accuracy and a fast response speed of the potentiometer, in this embodiment, the position sensor 2630 is a potentiometer. A body of the potentiometer is fixedly connected to the mounting base 2616 through the bolt, and an input shaft of the potentiometer is clamped to an end of the second transmission shaft 2622. The second transmission shaft 2622 rotates to drive the input shaft of the potentiometer to rotate, so as to sense a rotation angle of the steering wheel 2601 relative to the mounting base 2616, and the potentiometer is electrically connected to left and right driving wheels of the walking assembly 1200 to control rotating speeds of the left and right driving wheels of the walking assembly 1200, thereby realizing a steering of the frame 1100 during walking. A damper 2640 is further arranged at an end of the second transmission shaft 2622 away from the potentiometer, so as to increase a resistance torque during the rotation of the steering wheel 2601, thereby increasing a rotation hand feeling of the steering wheel 2601, and improving a rotation comfort of the steering wheel 2601. At the same time, dampers 2640 with different moments may further selected according to different rotation strength of the steering wheel 2601.

Both the damper 2640 and the potentiometer are arranged at an outer side of the accommodating cavity of the mounting base 2616 to facilitate maintenance. The potentiometer is arranged on a side close to the driving seat 1500, which may reduce a probability of collision of the potentiometer during the working process of the lawn mower, and does not additionally occupy a space at an outer side of the steering wheel 2601. At the same time, at a position where the steering wheel frame 2602 is coupled to the mounting base 2616, a cable mounting hole 26021 is arranged on a side of the steering wheel frame 2602 away from the driving seat 1500, which is in communication with a wiring position of the potentiometer, thereby facilitating a wiring on a front side of the steering wheel frame 2602. Both the damper 2640 and the potentiometer in this embodiment of this disclosure may be obtained through general commercial means, and specific structures may not be described in detail.

Please refer to FIG. 46, FIG. 56 and FIG. 60. In an embodiment of the lawn mower of the disclosure, the steering wheel assembly 2600 further includes a reversing assembly 2650 that controls a forward or backward movement of the walking assembly 1200, the reversing assembly 2650 is fixedly mounted on the mounting base 2616 through a bolt, and the reversing assembly 2650 is located on a side of the steering wheel 2601. The reversing assembly 2650 includes a shift lever 2651, and the shift lever 2651 has two gears, one of the gears corresponds to a forward state of the walking assembly 1200, and the other one of the gears corresponds to a backward state of the walking assembly 1200. Through arranging the reversing assembly 2650 near the steering wheel 2601, the lawn mower may move forward or backward by operating the shift lever 2651 during walking, and the operation is simple and convenient. At the same time, since the reversing assembly 2650 is arranged on a side of the steering wheel 2601, a corresponding operation of both hands on both sides is further facilitated.

To improve a protection performance and aesthetics of the steering wheel assembly 2600, please refer to FIG. 1, FIG. 2, and FIG. 23. A protective cover 2660 may be arranged on an outer side of the steering wheel assembly 2600, and the protective cover 2660 may be fixedly connected to the frame 1100 through the bolt. A specific structure of the protective cover 2660 can match a shape of the steering wheel frame 2602. The steering wheel 2601 and the rotary handle 2615 may be both arranged at an outer side of the protective cover 2660 to facilitate to steer and lock.

The part and the relative connection relationship that are not described in detail in the above-mentioned mowers may refer to the conventional corresponding mowers, and the details may not be repeated here.

In the lawn mower of the disclosure, the steering wheel 2601 might be rotatably mounted on the frame 1100 on the front side of the driving seat 1500 through the steering wheel frame 2602, and the steering wheel frame 2602 can be rotated, so that a distance between the steering wheel 2601 and the driving seat 1500 may be adjusted, thereby meeting requirements of the operators with different heights on the driving operation comfort of the steering wheel 2601. At the same time, the steering wheel frame 2602 may be arranged between the first limit position and the second limit position, so that the steering wheel frame 2602 may swing within the certain angle range, which reduces an ineffective rotation movement when the steering wheel frame 2602 is adjusted, and effectively improving adjustment efficiency of the steering wheel frame 2602. In addition, the locking member 2610 may be arranged between the steering wheel frame 2602 and the frame 1100. A relative rotating angle between the steering wheel frame 2602 and the frame 1100 is controlled by the locking member 2610, so that a locking of the steering wheel frame 2602 is more reliable and stable.

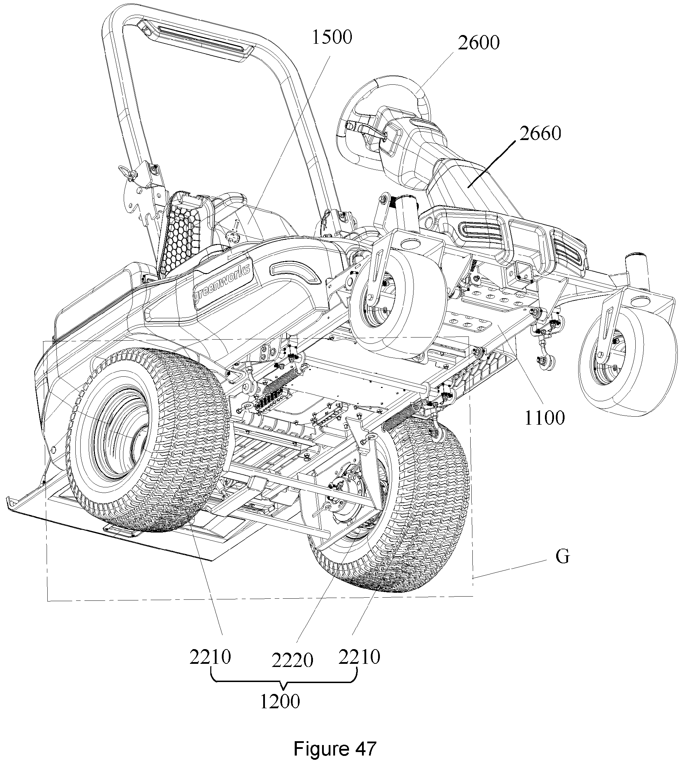

Please refer to FIG. 47, FIG. 48 and FIG. 51. In an embodiment of the lawn mower of the disclosure, the second device 2790 is the electromagnetic brake disc. The electromagnetic brake disc is electrically connected to the switch 27311. When the switch 27311 is in the non-triggered state, the parking assembly 2700 generates the braking signal, the electromagnetic brake disc is immediately powered off, then the driving motor 2220 corresponding to the walking wheel 2210 immediately is locked up, and the entire lawn mower immediately enters the parking state. When the switch 27311 is in the triggered state, the parking assembly 2700 does not generate the braking signal, the electromagnetic brake disc is powered on, the driving motor 2220 corresponding to the walking wheel 2210 is released from braking, and the entire lawn mower returns to a walking state.

In another embodiment of the lawn mower of the disclosure, after the parking assembly 2700 generates the braking signal, and the electromagnetic brake disc has been powered off for a delay time, the electromagnetic brake disc may be powered off to brake the walking wheel 2210. A duration of the delay time needs to be determined according to an actual operating speed of the walking wheel 2210, as long as a parking requirement of the lawn mower can be met. Within the delay time, the driving motor 2220 immediately performs a deceleration at a moment when the braking signal is generated, the rotating speed of the driving motor 2220 after the deceleration may be correspondingly reduced to reach a preset rotating speed, and then the electromagnetic brake disc locks the driving motor 2220. This arrangement may significantly reduce problems of rapid wear and aging of the braking pads on the electromagnetic brake disc during the braking process, thereby improving the duration life of the electromagnetic brake disc and reducing maintenance cost of the lawn mower.

Please refer to FIG. 46, FIG. 47, and FIG. 48. In an embodiment of the lawn mower of the disclosure, the lawn mower includes a battery pack 1802, the controller, a rotating speed sensor 2690, and an accelerator pedal 2680, the accelerator pedal 2680 is mounted on the frame 1100 on the front side of the driving seat 1500, and a mounting position of the battery pack 1802 is not limited, and may be mounted below the driving seat 1500, or may be mounted on the two sides of the driving seat 1500. In this embodiment, the battery pack 1802 is mounted on the two sides of the driving seat 1500, which may facilitate a replacement and maintenance of the battery pack. The rotating speed sensor 2690 may be fixedly mounted on the walking wheel 2210, or may be fixedly mounted on an output shaft of the driving motor 2220 corresponding to the walking wheel 2210, as long as the rotating speed of the driving motor 2220 can be detected. The accelerator pedal 2680 is rotatably mounted on the frame 1100 on the front side of the driving seat 1500. The accelerator pedal 2680, the driving motor 2220 of the walking wheel 2210, the battery pack 1802, the rotating speed sensor 2690, and the pedal assembly 2720 are all electrically connected to the controller. The controller is configured to control the rotating speed of the driving motor 2220 according to a signal of the accelerator pedal 2680, and can control the driving motor 2220 to switch between a first working state and a second working state according to signals of the rotating speed sensor 2690 and the pedal assembly 2720. Specifically, when the accelerator pedal 2680 is stepped and the rotating speed sensor 2690 senses that the walking wheel 2210 is in a normal traveling state, the battery pack 1802 supplies power to the driving motor 2220, the driving motor 2220 is in the first working state. At this time, the driving motor 2220 rotates to drive the walking wheel 2210 to travel. When the accelerator pedal 2680 is not stepped or the pedal assembly 2720 is in the braking state, and the rotating speed sensor 2690 senses that the lawn mower is in a sliding, braking or downhill state, the battery pack 1802 stops supplying power to the driving motor 2220, the driving motor 2220 is in the second working state, and the driving motor 2220 charges the battery pack 1802 to store electric energy. In this way, when the lawn mower is running normally, and the driving motor 2220 is in the first working state, the battery pack 1802 supplies electric energy for the motor, and the motor rotates to drive the walking wheel 2210 to rotate, so as to realize a normal walking of the frame 1100. When the lawn mower is in the sliding, downhill, and braking state, the battery pack 1802 stops supplying power to the driving motor 2220. At this time, the motor is in the second working state, the walking wheel 2210 is still in a rotating state due to inertia. In this state, the electric energy of the battery pack 1802 is not consumed, and kinetic energy generated by an inertial rotation of the walking wheel 2210 is converted into the electric energy to charge the battery pack 1802 without consuming additional electric energy, so as to realize a recovery of the kinetic energy, save energy, and improve an endurance mileage of the battery pack 1802.

In other embodiments, the driving motor 2220 may only have a motor working state. When the accelerator pedal 2680 is stepped and the rotating speed sensor 2690 senses that the walking wheel 2210 is in the normal traveling state, the battery pack 1802 supplies power to the driving motor 2220, the driving motor 2220 is in the motor working mode, and the driving motor 2220 rotates to drive the walking wheel 2210 to travel. When the accelerator pedal 2680 is not stepped or the pedal assembly 2720 is in the braking state, and the rotating speed sensor 2690 senses that the lawn mower is in the sliding, braking or downhill state, at this time, the battery pack 1802 continues to supply power to the driving motor 2220.

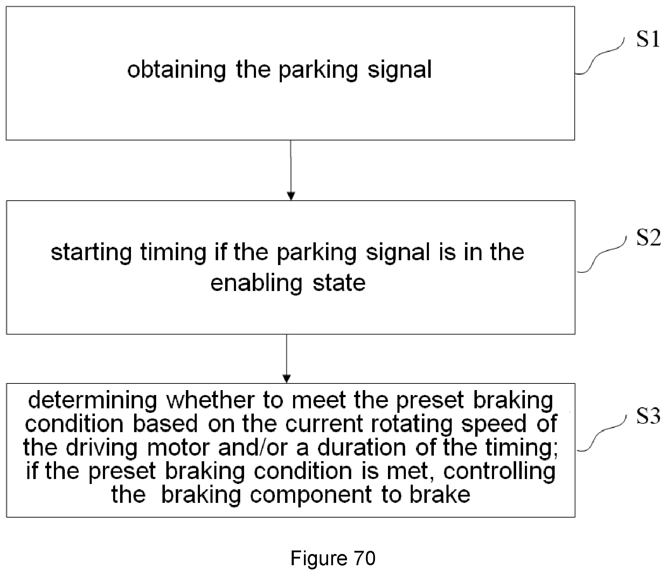

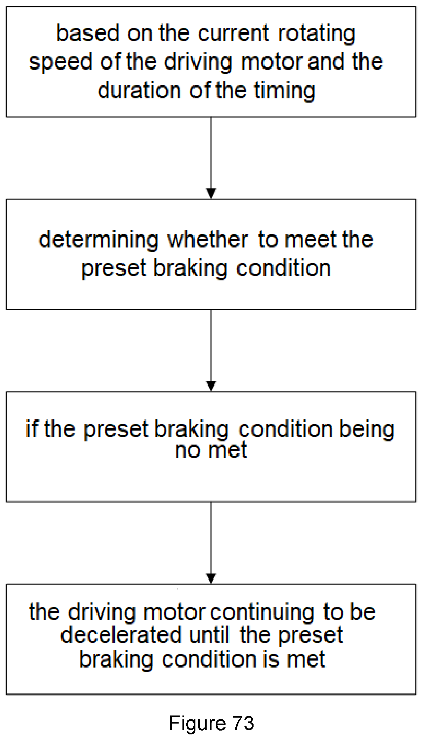

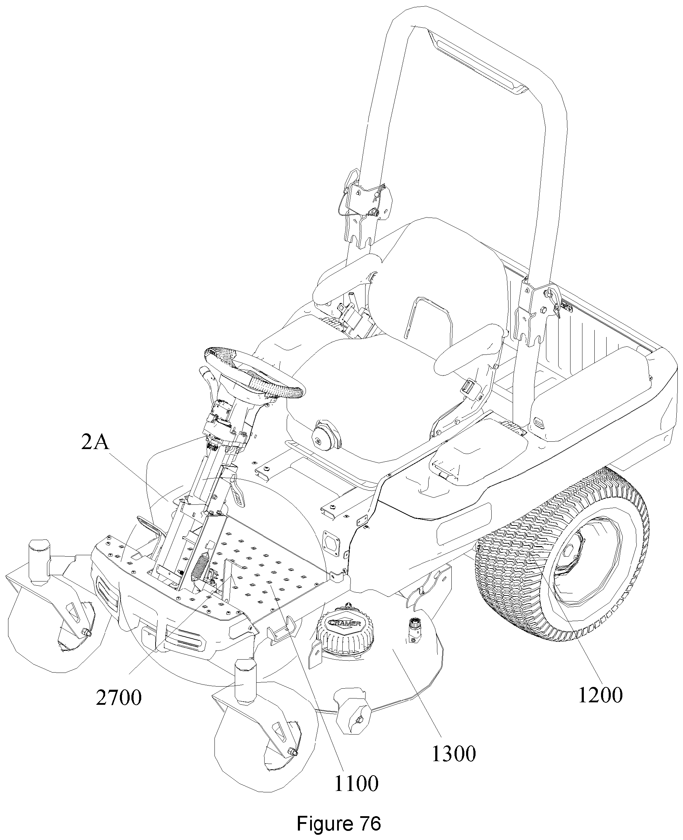

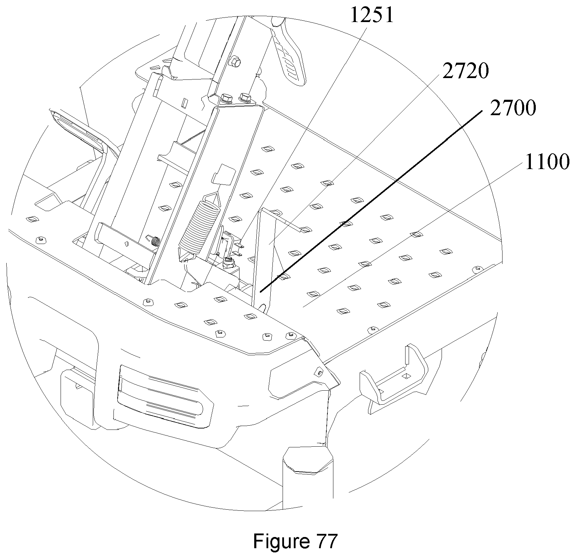

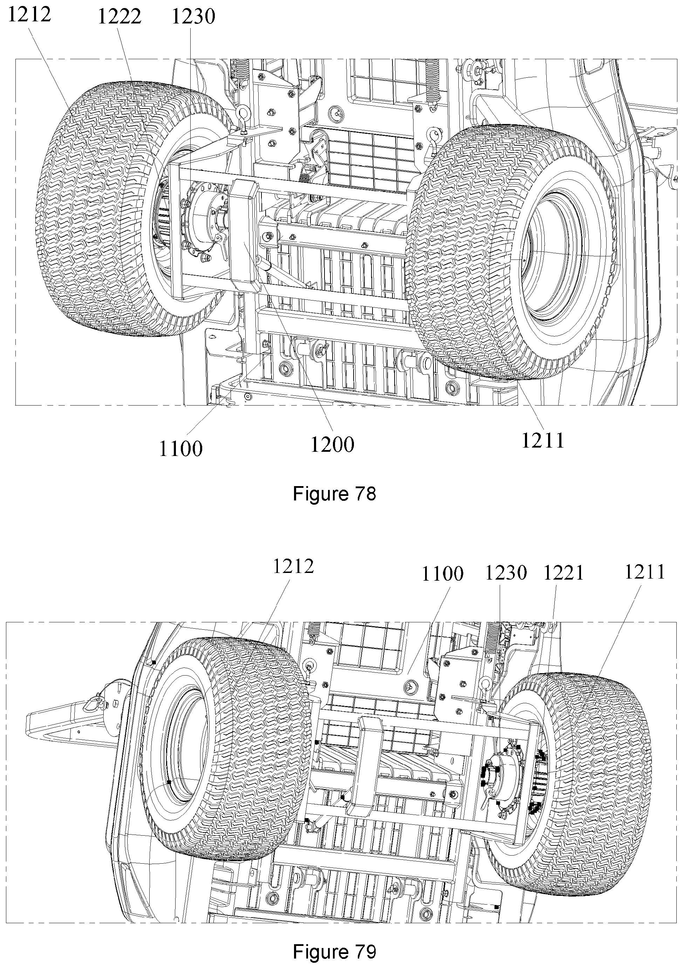

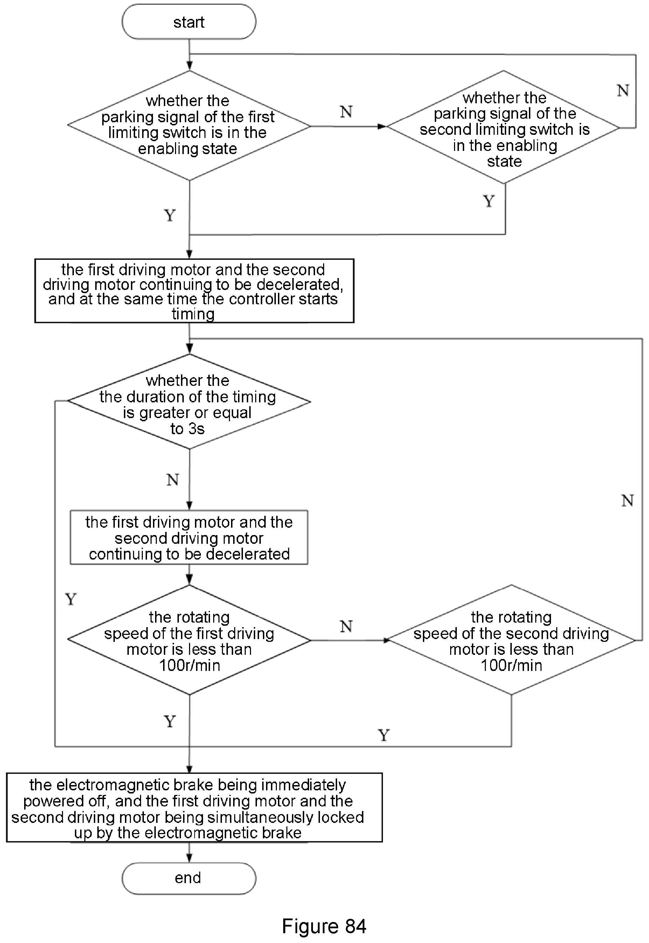

Please refer to FIG. 70 through FIG. 84. In an embodiment of a lawn mower of the disclosure, the lawn mower uses a braking control method, and after obtaining a parking signal, the braking control method may first determine whether a preset braking condition is met according to a current rotating speed of the driving motor and/or a duration of a timing. If a preset braking condition is met, then the braking component is controlled to brake, so that a deceleration time of the driving motor in the braking process may be prolonged, and the rotating speed of the driving motor may be further reduced, which may reduce the wear generated in the braking process of the braking component and friction heat generated on a friction surface, and improving a duration life of the braking component.

The braking control method in the disclosure is applied to a vehicle-mounted device, and the vehicle-mounted device may be arranged on a target vehicle. The target vehicle may be a lawn mower, a snow blower, or an all-terrain vehicle. The vehicle-mounted device includes but is not limited to the controller. Wherein, the controller may include a memory and a processor. In addition, the memory and the processor are directly or indirectly electrically coupled with each other, to implement data transmission or interaction. For example, the memory and the processor may be electrically connected to each other through one or more communication buses or signal lines.

In an embodiment of the disclosure, the controller executes the braking control method to control the braking component to brake, so as to realize the braking during a walking process of the vehicle. Please refer to FIG. 7. FIG. 70 is a flowchart of the braking control method according to at least one embodiment of the braking control method of the disclosure. The braking control method includes operations as follows.

In S1, a parking signal is obtained.

In this embodiment, the parking signal may be an electrical signal emitted by any sensor capable of detecting distance and pressure changes, such as a proximity sensor, an infrared distance measuring sensor, and a magnetic detection sensor, or may be an electrical signal generated by a contact switch such as a travel switch or a limiting switch. In this embodiment, the parking signal is the electrical signal generated by the limiting switch.

In S2, the timing is started if the parking signal is in an enabling state.

In an embodiment, the enabling state of the parking signal may be a conducting state of the limiting switch or a disconnecting state of the limiting switch, which may not be specifically limited. When the parking signal may be generated by a distance sensor such as the proximity sensor, the infrared distance measuring sensor, or the magnetic detection sensor, the distance sensor can be in the conducting state. When the distance sensor detects a set sensing object within a set sensing distance range, a signal state of the distance sensor changes at this time, which corresponds to the enabling state of the parking signal. When the controller detects that the parking signal is in the enabling state, the controller starts timing. There may be various options for timing, for example, a timer may be set separately, or through a timing program in the controller, and in this embodiment, the timing is executed through the timing program in the controller.

When the parking signal is in the enabling state, the driving motor may start to be decelerated, or may be decelerated for a period of time, as long as it can be ensured that the driving motor is in the deceleration state when the parking signal is in the enabling state. In this embodiment, when the parking signal is in the enabling state, the driving motor has been decelerated for the period of time.

In S3, it is determined whether a preset braking condition is met based on a current rotating speed of the driving motor and/or a duration of the timing. If the preset braking condition is met, a braking component is controlled to brake.

In an embodiment, the current rotating speed of the driving motor may meet the preset braking condition, or a timed duration may meet the preset braking condition, or the current rotating speed of the driving motor and the timed duration may meet the preset braking condition at the same time, which is not specifically limited. However, in this embodiment, when the current rotating speed of the driving motor and the timed duration both meet the preset braking condition, the controller controls the braking component to brake. The braking component may brake in a plurality of manners, for example, the braking component may directly lock up the driving motor, or the braking component may directly lock up the driving wheel, or may be another component coaxially connected to the driving motor performs lock up. As long as the braking components can achieve braking of the vehicle, that is acceptable. In this embodiment, when the braking component brakes, the driving motor is directly locked up. A preset rotating speed can refer to a safe rotating speed of the driving motor. In a safe rotating speed range, when the braking component brakes, the braking component can generate a minimum wear. A specific setting of the safe rotating speed may be related to a braking performance of the vehicle, and the safe rotating speeds of different vehicles may be the same or different. In this embodiment, a preset braking duration may be a longest braking waiting time, the preset braking duration can be related to operation performances of the vehicle and a safe braking distance of the vehicle, and the preset braking duration of each vehicle may be the same or different, which may not specifically be limited.

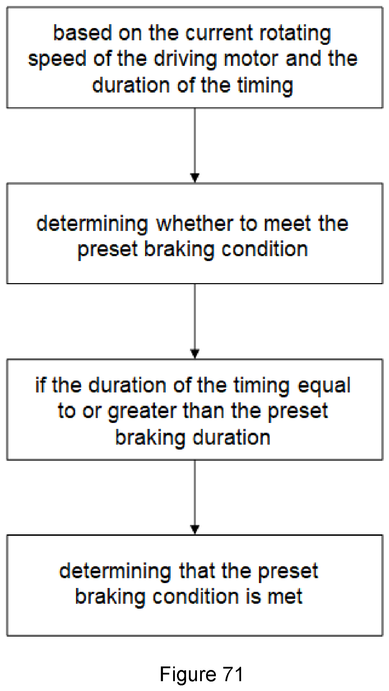

Please refer to FIG. 70 and FIG. 71. In an embodiment of the disclosure, in S3, based on the current rotating speed of the driving motor and the duration of the timing, it is determined whether the preset braking condition is met, if the duration of the timing is equal to or greater than a preset braking duration, it is determined that the preset braking condition is met.

In an embodiment, when the parking signal is in the enabling state, the controller starts timing, and compares a duration of the timing with the preset braking duration of the driving motor in real time. When the duration of the timing is equal to or greater than the preset braking duration, it is determined that an operation of the driving motor meets the preset braking condition, and the controller controls the braking component to immediately lock up the driving motor, so that the vehicle enters the braking state and stops operating. In this way, although the rotating speed of the driving motor may not meet the preset rotating speed condition when the driving motor lock up, which causes that the braking component is worn to a certain extent during the braking process, and the duration life of the braking component is reduced, a timeliness and safety of a braking control of the vehicle may be ensured. At the same time, it can also be ensured that the vehicle can also brake in time when a speed detection is abnormal, which ensures a safety of a vehicle control.

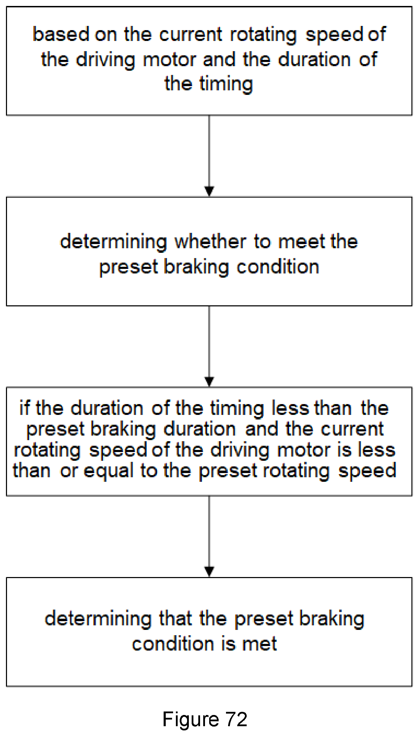

In addition, please refer to FIG. 70 and FIG. 72. In an embodiment of the disclosure, in S3, based on the current rotating speed of the driving motor and the duration of the timing, it is determined whether the preset braking condition is met, if the duration of the timing is less than the preset braking duration and the current rotating speed of the driving motor is less than or equal to the preset rotating speed, it is determined that the preset braking condition is met.

If the safe rotating speed of the driving motor is set to be too low, decelerating n the driving motor may take a long time, which affects the timeliness of the braking control, thus increasing a safety risk of a vehicle control. If the safe rotating speed of the driving motor is set to be too high, it cannot achieve an effect of well reducing the wear of the braking component. In this embodiment, the preset rotating speed may be any value in a range of 100min/r to 300, for example, 100min/r, 200min/r or 300min/r. In this embodiment, the preset rotating speed may be 100min/r. Setting the preset rotating speed of the driving motor to 100min/r can not only meet requirements of the timeliness of a vehicle braking, but also effectively reduce the wear generated by the braking component during braking, thereby prolonging the duration life of the braking component. When the controller detects that the current rotating speed of the driving motor is less than or equal to the preset rotating speed, it is determined that the preset braking condition is met. At this time, the controller controls the braking component to immediately lock up the driving motor, which realizes the timeliness of the vehicle braking. At the same time, it allows the braking components to lock up the driving motor only when the rotating speed of the driving motor is decelerated to a safe level, which effectively reduces the wear and tear on the braking components during braking, thereby extending the service life of the braking component.

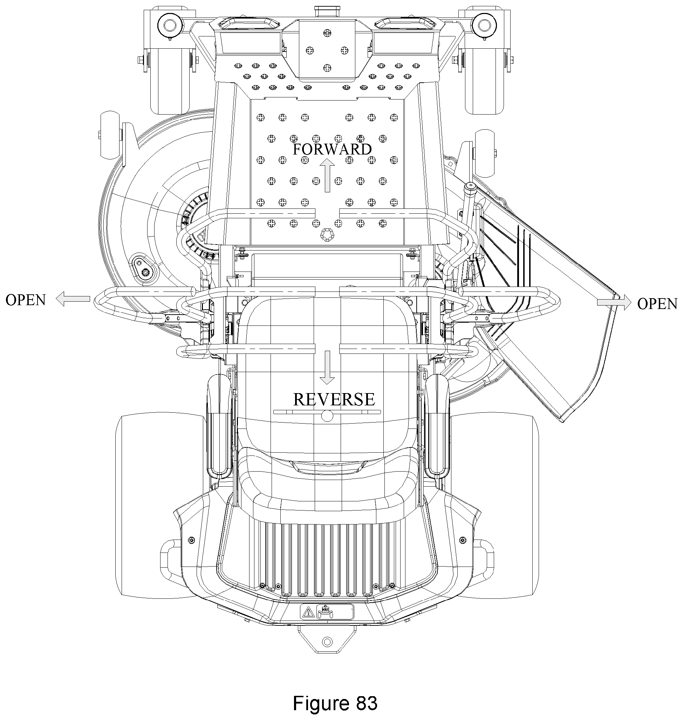

Please refer to FIG. 70 and FIG. 83, in an embodiment of the disclosure, in S3, it is determined whether the preset braking condition is met based on the current rotating speed of the driving motor and the duration of the timing, and if the preset braking condition is not met, the driving motor continues to be decelerated until the preset braking condition is met.

In an embodiment, if the preset braking condition is not met, it means that the duration of the timing is less than the preset braking duration and the current rotating speed of the driving motor is greater than the preset rotating speed. During a deceleration of the driving motor, the controller reads the current rotating speed of the driving motor in real time, and compares the current rotating speed with the preset rotating speed in real time. If the current rotating speed is greater than the preset rotating speed, the controller controls the driving motor to continue to be decelerated until the rotating speed of the driving motor is less than or equal to the preset rotating speed, the driving motor stops being decelerated, and the controller controls the braking component to lock up the driving motor. In this way, the current rotating speed of the driving motor may be determined in real time, and once the rotating speed of the driving motor is less than or equal to the preset rotating speed, the braking component may lock up the driving motor, thereby improving the timeliness and accuracy of braking control of the driving motor.

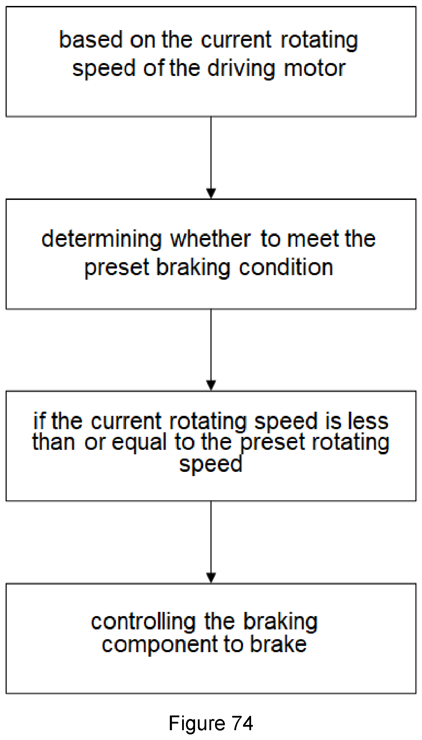

Please refer to FIG. 70 and FIG. 74, in another embodiment of the disclosure, in S3, it is determined whether the preset braking condition is met based on the current rotating speed of the driving motor, and if the preset braking condition is not met, the driving motor continues to be decelerated until the preset braking condition is met. In this embodiment, determining whether the preset braking condition is met refers to determining whether the current rotating speed of the driving motor meets the preset rotating speed. If the current rotating speed of the driving motor is greater than the preset rotating speed, it is determined that the preset braking condition is not met, and the driving motor continues to be decelerated.

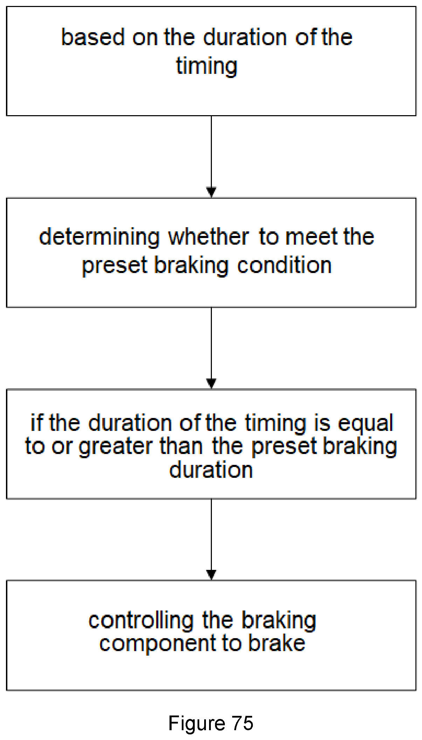

Please refer to FIG. 70 and FIG. 75. In an embodiment of the disclosure, in S3, the controller determines whether the preset braking condition is met based on the duration of the timing. If the duration of the timing is equal to or greater than the braking duration, the braking component is controlled to brake.

Please refer to FIG. 70. In another embodiment of the braking control method of the disclosure, in S2, if the parking signal is in the enabling state, obtaining the current rotating speed of the driving motor further includes: if the current rotating speed is less than or equal to the preset rotating speed, the braking component locks up the driving motor.

When the driving motor rotates at a low speed, and the parking signal is in the enabling state, the current rotating speed of the driving motor is already reduced to the preset rotating speed, allowing the braking component to immediately lock up the driving motor. Therefore, in this embodiment, after reading the current rotating speed of the driving motor, the controller determines whether the current rotating speed of the driving motor is less than or equal to the preset rotating speed. If the current rotating speed of the driving motor is less than or equal to the preset rotating speed, the controller controls the braking component to directly lock up the driving motor. This arrangement may improve the timeliness of braking when the vehicle operates at a low speed.

Please refer to FIG. 70. In an embodiment of the braking control method of the disclosure, in S3, after controlling the braking component to brake, the braking control method further includes: controlling the duration of the timing to reset to zero. In a complete braking process, the controller reads and stores the duration of the timing multiple times to calculate and compare the duration of the timing with the preset braking duration, since there are a large number of parking braking processes during vehicle operation, stored data of the duration of the timing is continuously increased, thereby occupying a large memory space. Therefore, in the parking process, each time after the braking component locks up the driving motor, which means that after one parking is completed, the controller directly clears internally stored duration of the timing, so that the memory space may be released periodically in time, so as to facilitate a running of a next parking program without affecting execution of the current parking control. If the parking signal is in the enabling state and the current rotating speed of the driving motor may be less than or equal to the preset rotating speed, after the controller may control the brake member to lock up the driving motor, the timing duration may be zero and the duration of the timing may not be cleared.

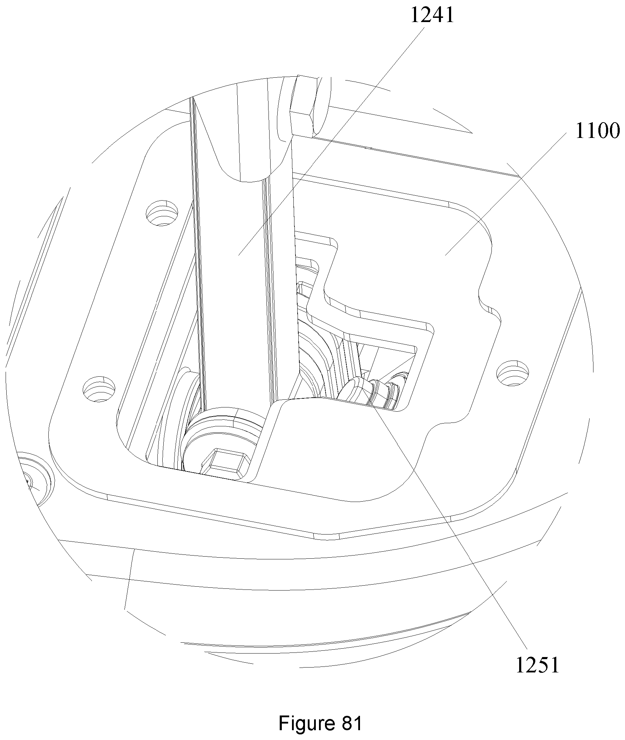

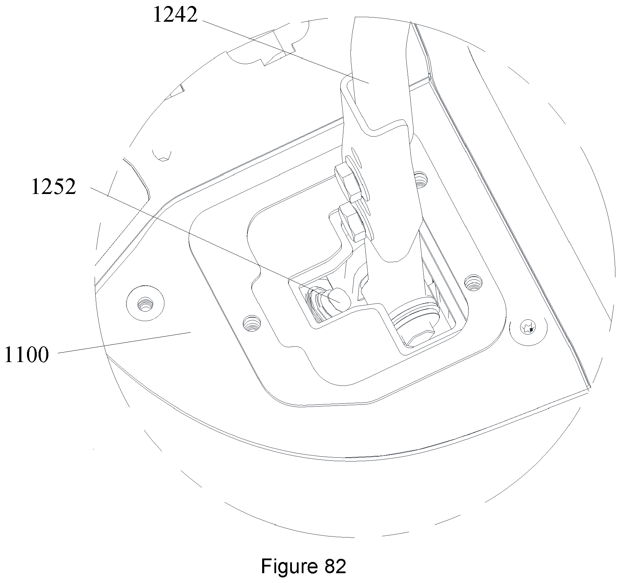

Please refer to FIG. 81 and FIG. 82, the braking control method in this embodiment is applied to the lawn mower. The lawn mower includes the frame 1100, the walking assembly 1200, the cutting deck assembly 1300 and a controller. The walking assembly 1200 is mounted on the frame 1100 for driving the frame 1100. The walking assembly 1200 may include the driving part, the power supply part and other components, the power supply part may provide energy for the driving part, and the power supply part may be the battery, or may be the engine such as the diesel engine, the gasoline engine or the oil-electric mixer. The driving part provides power for the rotation of the walking wheels, and the driving part may be any transmission assembly that can meet the requirements, such as the motor, may be the motor with the reducer, the motor with the gear rack transmission assembly, or the motor with the screw-nut transmission assembly. The walking assembly 1200 controls the frame 1100 to move accordingly. The cutting deck assembly 1300 is mounted on the frame 1100 for mowing. The mounting position of the cutting deck assembly 1300 on the frame 1100 is not limited, for example, it may be mounted at the front end of the frame 1100, or may be mounted in the middle of the frame 1100, or may be mounted at the rear end of the frame 1100, as long as the mounting requirements of mowing can be met. The mounting position of the controller on the lawn mower is not limited, and the cutting deck assembly 1300 and the walking assembly 1200 are both electrically connected to the controller. An electrical signal connection may be a wiring connection such as a cable or a radio signal connection, which is not limited here.

Please refer to FIG. 81 through FIG. 84, in an embodiment of the lawn mower of the disclosure, the walking assembly 1200 further includes the driving wheel. A number of the driving wheel is not limited, and may be two or four. The driving wheel may be the front wheel of the lawn mower or the rear wheel of the lawn mower. In this embodiment, the rear wheel of the lawn mower is the driving wheel. The walking assembly 1200 includes the driving motor, the driving motor is in transmission connection with the driving wheel, and the driving motor operates to drive the driving wheel to rotate, so as to realize a walking of the frame 1100. There may be one, two or more driving motors, the driving wheel may be in transmission connection with the same driving motor through a gear transmission assembly, and a plurality of the driving wheels rotates simultaneously when the driving motor works. There may also be a plurality of the driving motors, each driving wheel corresponds to one driving motor, and each driving motor correspondingly controls one driving wheel to rotate. In other embodiments, the walking assembly may include one first driving motor 1221, and the first driving motor 1221 controls the plurality of the driving wheels to rotate. The limiting switch is further arranged on the lawn mower, a specific mounting position of the limiting switch on the lawn mower is not limited, the limiting switch is electrically connected to the controller, and a state of the limiting switch reflects an operation state of the first driving motor 1221. The controller may control the operation state of the first driving motor 1221 by reading a state of the parking signal generated by the limiting switch.

When the lawn mower is braked, the accelerator pedal may be in the released state, and the driving motor enters a deceleration state, or the driving motor may be in a normal operation process, which is not specifically limited. However, in this embodiment, when the lawn mower is braked, the driving motor is already in the deceleration state. The controller obtains a signal of the limiting switch. If the parking signal generated by the limiting switch is in the enabling state, the controller determines whether the first driving motor 1221 meets the preset braking condition according to the current rotating speed of the first driving motor 1221 and the duration of the timing. If the preset braking condition is met, the controller may control the braking component to brake. In this embodiment, the braking of the braking component means that the braking component locks up the first driving motor 1221, which realizes the braking during the walking of the lawn mower. In other embodiments, the braking component may also lock up the driving wheel.

In another embodiment of the lawn mower of the disclosure, the lawn mower may include a first limiting switch 1251 and a second limiting switch 1252. When the controller obtains the parking signal generated by the limiting switch, the parking signal generated by the first limiting switch 1251 and the parking signal generated by the second limiting switch 1252 are obtained respectively. The enabling state of the limiting switch includes: enabling either the parking signals generated by the first limiting switch 1251 or the parking signal generated by the second limiting switch 1252. In other embodiments, the enabling state of the limiting switch may also be that the parking signal generated by the first limiting switch 1251 and the parking signal generated by the second limiting switch 1252 are simultaneously in the enabling state. Through arranging the first limiting switch 1251 and the second limiting switch 1252, when one of the limiting switches fails, the other limiting switch can also normally generate the parking signal, so that a probability of failure of the braking component to lock up the first driving motor 1221 may be reduced, thereby improving the safety of braking control during the walking of the lawn mower.

Please refer to FIG. 82 through FIG. 84, in an embodiment of the lawn mower of the disclosure, the walking assembly 1200 further includes a second driving motor 1222, and the second driving motor 1222 may control the same driving wheel to rotate at the same time as the first driving motor 1221, or may control different driving wheels to rotate from the first driving motor 1221. In this embodiment, the first driving motor 1221 and the second driving motor 1222 controls different driving wheels respectively. When the parking signal generated by the limiting switch is in the enabling state, the controller simultaneously obtains the current rotating speeds of the first driving motor 1221 and the second driving motor 1222, and the timing is started. If one of the first driving motor 1221 and the second driving motor 1222 meets the preset braking condition, the controller controls the braking component to simultaneously lock up the first driving motor 1221 and the second driving motor 1222. In another embodiment, if the current rotating speeds of the first driving motor 1221 and the second driving motor 1222 are both greater than the preset rotating speed, the controller may control both the first driving motor 1221 and the second driving motor 1222 to continue to be decelerated. The controller determines whether the first driving motor 1221 meets the preset braking condition based on the current rotating speed of the first driving motor 1221 and the duration of the timing. The controller determines whether the second driving motor 1222 meets the preset braking condition based on the current rotating speed of the second driving motor 1222 and the duration of the timing. If the first driving motor 1221 meets the preset braking condition, the controller controls the braking component to lock up the first driving motor 1221. If the second driving motor 1222 meets the preset braking condition, the controller controls the braking component to lock up the second driving motor 1222.

Please refer to FIG. 81 through FIG. 84. In an embodiment of the lawn mower of the disclosure, if the controller determines that the duration of the timing of the first driving motor 1221 is less than the preset braking duration, and the current rotating speed of the first driving motor 1221 is less than or equal to the preset rotating speed, then it is determined that the first driving motor meets the preset braking condition. If the controller determines that the duration of the timing of the second driving motor 1222 is less than the preset braking duration, and the current rotating speed of the second driving motor 1222 is less than or equal to the preset rotating speed, then it is determined the second driving motor 1222 meets the preset braking condition. With this arrangement, the controller may separately determine whether the first driving motor 1221 and the second driving motor 1222 meet the braking condition, so that the braking component may separately control the first driving motor 1221 and the second driving motor 1222 to be locked up.

Please refer to FIG. 83 through FIG. 84. In another embodiment of the lawn mower of the disclosure, the walking assembly 1200 includes a first driving wheel 1211 and a second driving wheel 1212. The first driving wheel 1211 and the second driving wheel 1212 are respectively located on two sides of the lawn mower and are coaxially arranged. The first driving wheel 1211 and the second driving wheel 1212 may be front wheels on two sides of the lawn mower, or rear wheels on the two sides of the lawn mower. The first driving motor 1221 corresponds to the first driving wheel 1211 and drives the first driving wheel 1211 to rotate, and the second driving motor 1222 corresponds to the second driving wheel 1212 and drives the second driving wheel 1212 to rotate. If one of the first driving motor 1221 and the second driving motor 1222 meets the preset braking condition, the controller controls both the first driving motor 1221 and the second driving motor 1222 to be locked up. This arrangement can improve a consistency of the first driving motor 1221 and the second driving motor 1222 in being locked up, and reduce a probability of lateral offset during the braking process of the lawn mower, thereby improving a safety of the lawn mower during braking.

Please refer to FIG. 83 through FIG. 84. In an embodiment of the lawn mower of the disclosure, if the controller determines that the duration of the timing is equal to or greater than the preset braking duration, then it is determined that the preset braking condition is met. The duration of the timing being equal to or greater than the preset braking duration may be that the duration of the timing corresponding to the first driving motor 1221 is equal to or greater than the preset braking duration, or the duration of the timing corresponding to the second driving motor 1222 is equal to or greater than the preset braking duration, or the duration of the timing corresponding to the first driving motor 1221 and the second driving motor 1222 are both equal to or greater than the preset braking duration. In this embodiment, the duration of the timing being equal to or greater than the preset braking duration means that the duration of the timing of one of the first driving motor 1221 and the second driving motor 1222 is equal to or greater than the preset braking duration. This arrangement may improve the timeliness of braking the lawn mower, thereby ensuring the safety of braking.

Please refer to FIG. 83 through FIG. 84, in an embodiment of the lawn mower of the disclosure, if the current rotating speed of the first driving motor 1221 is less than or equal to the preset rotating speed, the controller controls the braking component to lock up the first driving motor 1221. If the current rotating speed of the second driving motor 1222 is less than or equal to the preset rotating speed, the controller controls the braking component to lock up the second driving motor 1222. In other embodiments, if the rotating speed of one of the first driving motor 1221 and the second driving motor 1222 is less than or equal to the preset rotating speed, the controller controls both the first driving motor 1221 and the second driving motor 1222 to be locked up at the same time.

Please refer to FIG. 83 through FIG. 84, in an embodiment of the lawn mower of the disclosure, a first control device and a second control device are arranged on the two sides of the lawn mower respectively. The first control device controls the rotating speed of the first driving wheel 1211, and the second control device controls the rotating speed of the second driving wheel 1212. The first control device includes a first control handle 1241 and the first limiting switch 1251, the first control handle 1241 is rotatably mounted on the frame 1100, and the first limiting switch 1251 and the first driving motor 1221 are both connected to the controller through electrical signals. The first limiting switch 1251 is arranged on the frame 1100, the first control handle 1241 has a fifth position and a sixth position during rotating, when the first control handle 1241 is at the fifth position, a signal of the first limiting switch 1251 is turned on, and when the first control handle 1241 is at the sixth position, the signal of the first limiting switch 1251 is turned off. The second control device includes a second control handle 1242 and the second limiting switch 1252, the second control handle 1242 is rotatably mounted on the frame 1100, and the second limiting switch 1252 and the second driving motor 1222 are both connected to the controller through electrical signals. The second limiting switch 1252 is arranged on the frame 1100, the second control handle 1242 has a seventh position and an eighth position during rotating. When the second control handle 1242 is at the seventh position, the signal of the second limiting switch 1252 is turned on, at this time, the parking signal generated by the second limiting switch 1252 is in the enabling state. When the second control handle 1242 is at the eighth position, the signal of the second limiting switch 1252 is turned off, at this time, the parking signal generated by the second limiting switch 1252 is in a disabling state. The first driving motor 1221 and the second driving motor 1222 both include a braking component 1230, the braking component 1230 is connected to the first limiting switch 1251 or the second limiting switch 1252 through electrical signals, and the braking component 1230 may be an electromagnetic brake or a mechanical brake. In this embodiment, the braking component 1230 is an electromagnetic brake. When the first control handle 1241 is in the sixth position, the first control handle 1241 may be in a neutral position, and when the lawn mower is in a forward or backward state, the first control handle 1241 may be in a process of returning to the neutral position. The first driving motor 1221 can bein the deceleration state. When the second control handle 1242 is in the eighth position, the second control handle 1242 may be in the neutral position, and when the lawn mower is in the forward or backward state, the second control handle 1242 may be in the process of returning to the neutral position, the second driving motor 1222 can be in the deceleration state.

The electromagnetic brake is also called a power-off brake, which is closely attached to a connected mechanical device when not energized, and generates a torque through friction to prevent mechanical rotation or movement. The electromagnetic brake includes a magnetic yoke, an excitation coil, a spring, a braking disc, an armature, a spline sleeve, a mounting screw, etc., the electromagnetic brake is mounted on a flange disc of the device or a rear end of an electric motor, and a transmission shaft and the spline sleeve are coupled to the braking disc. When the excitation coil is connected to a rated DC voltage, an electromagnetic force attracts the armature to separate the armature from the braking disc. At this time, the transmission shaft carries the braking disc to operate or start normally. When a transmission system is separated or powered off, the electromagnetic brake is also powered off at the same time. At this time, the spring presses the armature to force a friction torque to be generated between the braking disc and the armature and between the braking disc and the flange disc, so that the transmission shaft stops quickly. Based on power and volume of the electromagnetic brake, and the driving motor of the lawn mower generally includes a reduction gearbox, so a braking torque provided by the electromagnetic brake is lower than a torque of an output end of the reduction gearbox. Therefore, it is necessary to install the electromagnetic brake at an output shaft end of the driving motor, a torque at this position is small, but the rotating speed is high. If the braking is performed at a high speed, it may inevitably reduce the duration life of the braking component. In other embodiments, the electromagnetic brake may also be directly mounted on the driving wheel.

When the electromagnetic brake is applied to the driving motor of the lawn mower, the lawn mower may be prevented from slipping or sliding downhill during power failure or malfunction, so that the electromagnetic brake may be used as a safety assurance device, and can also be used as a parking device. Because of a power-off braking feature, the electromagnetic brake may enable the vehicle to be more intelligent and convenient in a trend of lawn mower electrification.

Please refer to FIG. 81 through FIG. 83, in another embodiment of the lawn mower of the disclosure, the frame 1100 of the lawn mower includes the parking assembly 2700. The parking assembly 2700 includes the pedal assembly 2720 and the first limiting switch 1251, the pedal assembly 2720 is rotatably mounted on the frame 1100, and the first limiting switch 1251 is mounted on the frame 1100. The pedal assembly 2720 has the first position and the second position. When the pedal assembly 2720 is in the first position, the signal of the first limiting switch 1251 is turned on, and when the pedal assembly 2720 is in the second position, the signal of the first limiting switch 1251 is turned off. The driving motor 1221 includes the braking component 1230, the braking component 1230 is connected to the first limiting switch 1251 through electrical signals, and the braking component 1230 may be the electromagnetic brake or the mechanical brake. In this embodiment, when the braking component 1230 is the electromagnetic brake and the first limiting switch 1251 is turned off, the parking signal generated by the first limiting switch 1251 is in the enabling state. Before the first limiting switch 1251 is turned off, the accelerator pedal may be in the released state, and the driving motor may operate in the deceleration state.

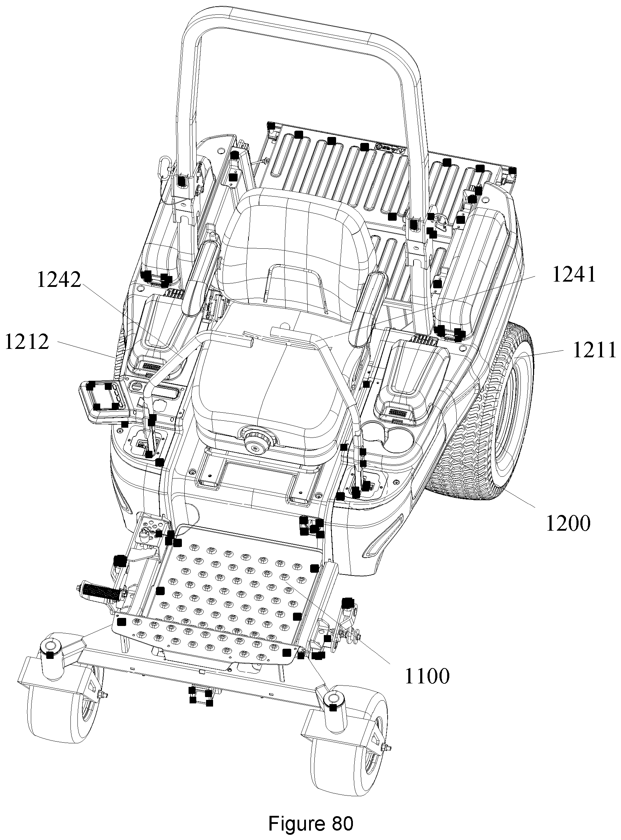

Taking the lawn mower shown in FIG. 80 as an example, the operator may adjust the rotating speed and a steering of the corresponding first driving wheel 1211 and second driving wheel 212 respectively by adjusting a front and rear opening degrees of the first control handle 1241 and the second control handle 1242 relative to the frame 1100. When the rotating speeds of the first driving wheel 1211 and the second driving wheel 212 are inconsistent, a steering effect is generated. Specific actions are as follows:
the control handle pushes towards a FORWARD, and the lawn mower walks forward;
the control handle pushes towards a REVERSE, and the lawn mower walks backward;
the control handle pushes towards a NEUTRAL, and the lawn mower stops; and
the control handle pushes from the NEUTRAL towards an OPEN, and the lawn mower is in the parking position.

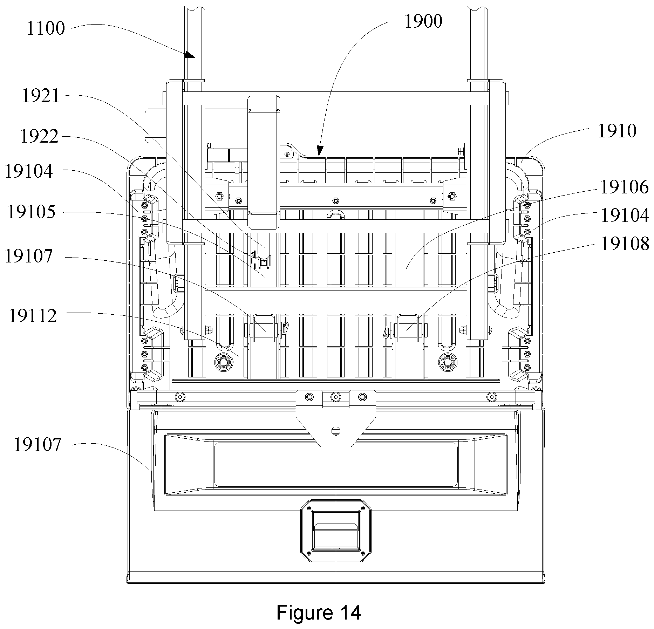

In an OPEN direction, which means left and right parking positions, the first limiting switch 1251 and the second limiting switch 1252 are mounted on the frame 1100. Please refer to FIG. 14. If the parking signal of the limiting switch is turned on, it indicates that the corresponding control handle is already in the parking position. At this time, the lawn mower may be controlled to stop running, the electromagnetic brake is powered off, and the vehicle is in the parking braking state.

Please refer to FIG. 80 through FIG. 84, a parking control method for the lawn mower is described by using the lawn mower in FIG. 80 as an example.

During the mowing and walking process, when the lawn mower needs to be parked, at this time, the control handle pushes from the NEUTRAL to the OPEN. The controller starts to detect whether the parking signal generated by the first limiting switch 1251 and the second limiting switch 1252 is in the enabling state. During a detection process, as long as it is detected that the parking signal generated by one of the first limiting switch 1251 and the second limiting switch 1252 is in the enabling state, the first driving motor and the second driving motor continue to be decelerated, and the controller starts timing and compares the duration of the timing with the preset braking duration. In this embodiment, in this embodiment, the preset braking duration may be set to 3 seconds. When the duration of the timing is less than the preset braking duration, the controller controls the first driving motor and the second driving motor to continue to be decelerated, the rotating speeds of the first driving motor and the second driving motor are continuously decelerated. When the controller detects that the rotating speed of one of the first driving motor 1221 and the second driving motor 1222 is lower than the preset rotating speed, in this embodiment, the preset rotating speed is 100r/min, the controller controls the electromagnetic brake to be immediately powered off, which means that the first driving motor 1221 and the second driving motor 1222 are simultaneously locked up by the electromagnetic brake. At the same time, when the controller starts timing, if the controller detects that the duration of the timing is equal to the preset braking duration set value of 3 seconds, the controller directly controls the electromagnetic brake to be immediately powered off regardless of whether the rotating speeds of the first driving motor 1221 and the second driving motor 1222 are decelerated to the preset rotating speed of 100r/min, which means that the first driving motor 1221 and the second driving motor 1222 are simultaneously locked up by the electromagnetic brake.

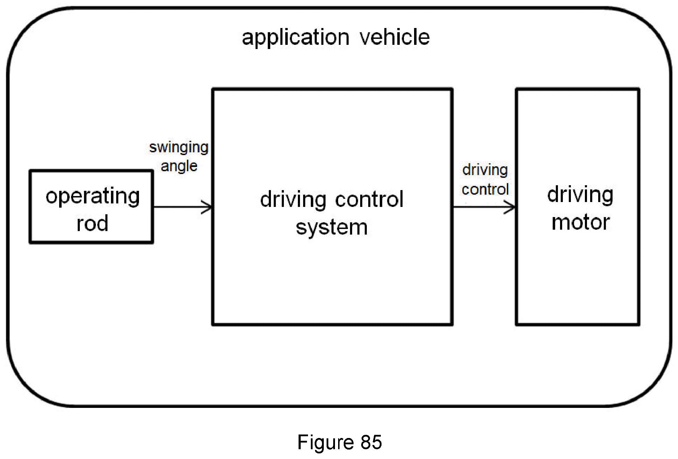

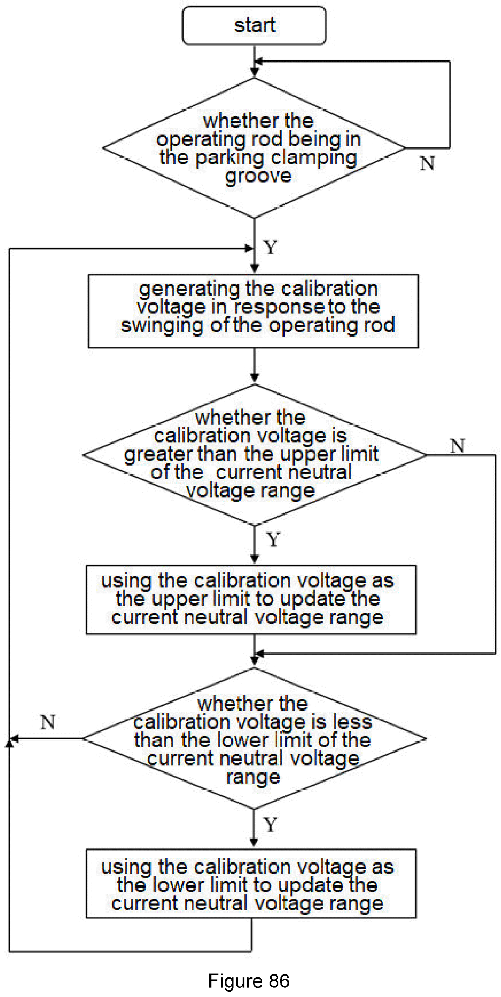

Please refer to FIG. 85 and FIG. 86. In an embodiment of the lawn mower of the disclosure, there is a calibration method for an operating rod the lawn mower. Through using a characteristic that the parking groove 2110 on the vehicle coincides with an electrical neutral position of the operating rod 2200, when the vehicle is in the parking state (which means when the operating rod 2200 is stuck in the parking groove 2110), the driving control system of the vehicle can reset a neutral voltage range driven by the operating rod 2200 in response to a swinging of the operating rod 2200 in the parking groove 2110. This solves a technical problem in the conventional art where a vehicle using the operating rod 2200 for a travel driving would trigger alarms and shut down in the event of a neutral deviation of the operating rod 2200, requiring potentiometer debugging of the operating rod 2200 before resuming operation, and leaving the user unable to perform autonomous calibration on the neutral voltage range of the operating rod 2200.

Please refer to FIG. 85, FIG. 86 and FIG. 83, in an embodiment of the disclosure, the calibration method of the operating rod is applied to a vehicle that uses the operating rod 2200 for driving, such as the lawn mower, the snow blower, the all-terrain vehicle and other garden tools. The application vehicle includes the frame 1100, the operating rod 2200, the driving motor 2220, and the driving control system. The vehicle is driven and controlled through the operating rod 2200, the operating rod 2200 is mounted and swings on the frame 1100. The driving control system generates a corresponding driving voltage according to a swinging angle of the operating rod 2200 in response to an operation performed by the operator on the operating rod 2200, and controls the driving motor 2220 to rotate forward, rotate reversely, or stop based on the driving voltage.

Specifically, based on control requirements of the application vehicle, a position of the operating rod 2200 relative to the frame 1100 is preset as a forward position, a neutral position and a backward position. The neutral position is the preset position of the operating rod 2200 on the frame 1100, and the forward position and the backward position are arranged on two sides of the neutral position along a swinging path of the operating rod 2200. When the operating rod 2200 is at the neutral position on the frame 1100, the operating rod does not drive the vehicle to move, and the driving control system generates a neutral voltage according to the neutral position where the operating rod is located, and controls the driving motor 2220 to stop rotating based on the neutral voltage. When the operating rod is pushed to the forward position, the driving control system generates a corresponding forward voltage according to a swinging opening degree of the operating rod in a direction of the forward position relative to the neutral position, and controls the driving motor 2220 to rotate forward based on the forward voltage. When the operating rod is pushed to the backward position, the driving control system generates a corresponding backward voltage according to the swing opening degree of the operating rod in a direction of the backward position relative to the neutral position, and controls the driving motor 2220 to rotate backward based on the backward voltage.

In the above structure, when the operator adjusts the operating rod 2200 to change a rotating direction and steering of the driving motor 2220, it is necessary to pass through the neutral position. In order to prevent the motor from oscillating in a forward and reverse direction, avoid generating a deviation value of the driving voltage in response to the swinging of the operating rod 2200, and ensure that the vehicle can be stopped when the operating rod 2200 is in the neutral position, the driving control system in some embodiments needs to expand a response range to a neutral position angle corresponding to the neutral position of the operating rod 2200, and set the neutral voltage range corresponding to the neutral position swinging range. The neutral voltage range can include an output error of the driving control system in response to the generation of the driving voltage, and can also avoid a forward and reverse rotating oscillation of the driving motor 2220 caused by the forward and reverse swinging of the operating rod 2200 by the driving control system.

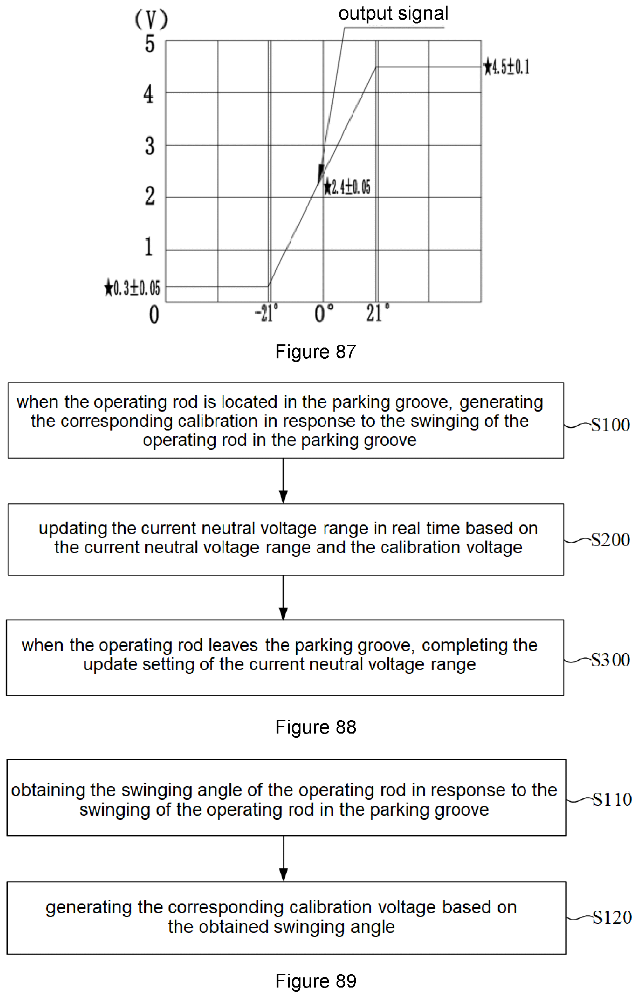

For example, please refer to FIG. 87. In an embodiment, a preset neutral position angle corresponding to the neutral position of the operating rod 2200 may be 0°. The swinging angle corresponding to the forward position may be from 0° to 21°, and the swinging angle corresponding to the backward position may be from -21° to 0°. When the operator attempts to drive the vehicle forward, the opening degree of the operating rod 2200 may need to be pushed to increase forward, the driving control system generates the forward voltage that gradually may increase from 2.4 V to 4.5 V in response to the swinging angle increasing from 0° to 21°, and the driving control system controls the output shaft of the driving motor 2220 to rotate forward based on the forward voltage, where a higher forward voltage indicates a higher output rotating speed of the driving motor 2220. When the operator attempts to drive the vehicle backward, the opening degree of the operating rod 2200 may require to be pushed to increase backward, the driving control system generates a backward voltage that may gradually decrease from 2.4 V to 0.3 V in response to the swinging angle decreasing from 0° to -21°, and the driving control system controls the output shaft of the driving motor 2220 to rotate backward based on the backward voltage, where a lower backward voltage indicates a higher output rotating speed of the driving motor 2220. In this embodiment, it may be seen from output characteristics of the driving control system that the output voltage exhibits positive and negative deviations at the upper limit (21°), the lower limit (-21°), and the neutral position (0°). This deviation is an inherent error that cannot be eliminated. Therefore, in order to enable the vehicle to be stopped when the operating rod 2200 is in the neutral position, the driving control system may set one neutral voltage range, and the neutral voltage range needs to contain a conversion output error from angle to voltage. For example, in this embodiment, a minimum value of the neutral voltage range may be set to 2.4V ± 0.05 V. Further, for a convenience of subsequent use and adjustment by the operator, the neutral voltage range may be set to 2.4V ± 0.15 V.

In an embodiment of the disclosure, in order to facilitate the operator to autonomously calibrate the neutral voltage range of the operating rod 2200 of the application vehicle, the vehicle includes the parking groove 2110 on the frame 1100, a position of the parking groove 2110 overlaps with the preset neutral position of the swinging of the operating rod 2200, a groove position of the parking groove 2110 is set as the parking position for the vehicle, and when the operating rod 2200 is clamped into the parking groove 2110, the vehicle enters the parking state, and the driving control system does not drive and response the swinging of the operating rod 2200, so that the vehicle remains in a stationary state. The calibration method of the disclosure is applied to the driving control system, the driving control system executes the calibration method when the vehicle is in the parking state. The driving control system generates a calibration voltage in response to the swinging of the operating rod 2200 in the parking groove 2110, updates the current neutral voltage range in real time based on the calibration voltage, and completes a calibration setting of the neutral voltage range of the operating rod 2200 when the operating rod 2200 leaves the parking groove 2110 (which means that when the vehicle is not in the parking state). The calibration method does not need to debug software and hardware on the driving control system, and only needs the operator to operate the operating rod 2200 to swing in the parking groove 2110 when the vehicle is in the parking state, so that the driving control system can reset a corresponding neutral voltage range of the operating rod 2200.

Please refer to FIG. 88. FIG. 88 is a flowchart of the calibration method for the operating rod according to an embodiment of the disclosure. The calibration method includes operations as follows.

In S100, when the operating rod 2200 is located in the parking groove 2110, the corresponding calibration voltage is generated in response to the swinging of the operating rod 2200 in the parking groove 2110.

In S200, the current neutral voltage range is updated in real time based on the current neutral voltage range and the calibration voltage.

In S300, when the operating rod 2200 leaves the parking groove 2110, an update setting of the current neutral voltage range is completed.

In S100, when the vehicle is in the parking state, the driving control system generates the corresponding calibration voltage in response to the swinging of the operating rod 2200 in the parking groove 2110. Wherein, the generated calibration voltage is used to update the neutral voltage range of the corresponding swinging operating rod 2200, and is not used for a driving control of the driving motor 2220.

Specifically, please refer to FIG. 89. In some embodiments, S100 includes the following operations.

In S110, when the operating rod 2200 is located in the parking groove 2110, the swinging angle of the operating rod 2200 is obtained in response to the swinging of the operating rod 2200 in the parking groove 2110.

In S120, a corresponding calibration voltage is generated based on the obtained swinging angle.

Then S200 is executed that the current neutral voltage range is updated in real time based on the current neutral voltage range and the calibration voltage.

In S200, when no calibration voltage is detected, the latest updated neutral voltage range is maintained as the current neutral voltage range. When it is detected that the calibration voltage is generated, the current neutral voltage range is updated based on the current neutral voltage range and the calibration voltage. The above operations may start from a time when the application vehicle enters the parking state and end after the application vehicle leaves the parking state, which effectively ensures that the neutral voltage range is updated in real time in response to the swinging of the operating rod 2200 in the parking state.

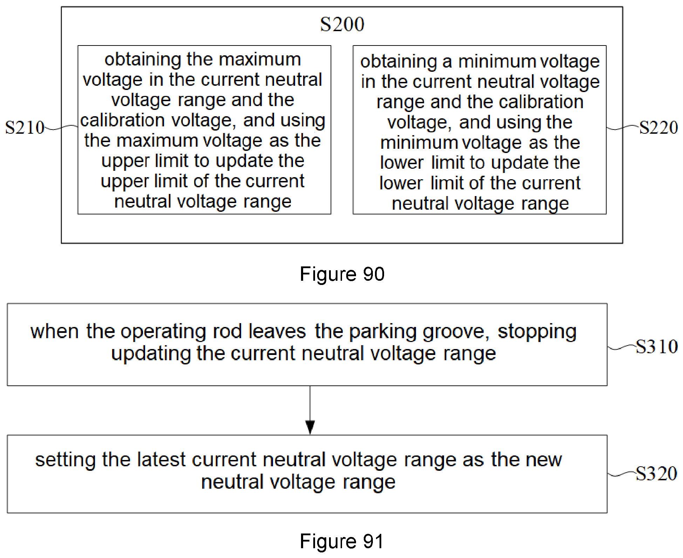

Specifically, please refer to FIG. 86 and FIG. 90. In some embodiments, S200 includes the following operations.

In S210, a maximum voltage in the current neutral voltage range and the calibration voltage is obtained, and the maximum voltage is used as an upper limit to update an upper limit of the current neutral voltage range.

This means that the calibration voltage is compared with the upper limit of the current neutral voltage range. If the calibration voltage is greater than the upper limit of the current neutral voltage range, the current neutral voltage range is updated with the calibration voltage as the upper limit. If the calibration voltage is less than or equal to the upper limit of the current neutral voltage range, the upper limit of the current neutral voltage range is maintained unchanged.

In S220, a minimum voltage in the current neutral voltage range and the calibration voltage is obtained, and the minimum voltage is used as a lower limit to update a lower limit of the current neutral voltage range.

This means that the calibration voltage is compared with the lower limit of the current neutral voltage range. If the calibration voltage is less than the lower limit of the current neutral voltage range, the current neutral voltage range is updated with the calibration voltage as the lower limit. If the calibration voltage is greater than or equal to the lower limit of the current neutral voltage range, the lower limit of the current neutral voltage range is maintained unchanged.

In the above embodiment, a sequence of S210 and S220 may not be limited. Wherein, S200 may be executed before S210, or S200 may be executed before S220, or S200 may be executed simultaneously with S210.

Then S300 is executed that when the operating rod 2200 leaves the parking groove 2110, the update setting of the current neutral voltage range is completed.

In S300, when the application vehicle is not in the parking state (which means that when the operating rod 2200 leaves the parking groove 2110), a calibration response to the operating rod 2200 is ended, and a latest updated current neutral voltage range in the calibration process is set as the new neutral voltage range of the operating rod 2200.

Specifically, please refer to FIG. 91. In some embodiments, S300 includes the following operations.

In S310, when the operating rod 2200 leaves the parking groove 2110, an update of the current neutral voltage range is stopped.

In S320, a latest current neutral voltage range is set as a new neutral voltage range.

In some embodiments, a swinging angle range of the parking groove 2110 for the operating rod 2200 to swing is greater than or equal to the preset neutral voltage range, and a generated calibration voltage range in response to the operating rod 2200 swinging in the parking groove 2110 in this calibration method may be also greater than or equal to a voltage range of the preset neutral voltage range. Wherein, a maximum of the generated calibration voltage may be greater than or equal to the upper limit of the preset neutral voltage range, and a minimum of the generated calibration voltage may be less than or equal to the lower limit of the preset neutral voltage range. Specifically, when the operating rod 2200 swings in a direction of the forward position to abut against a side wall edge of the parking groove 2110, the swinging angle of the operating rod 2200 relative to the frame 1100 may be greater than or equal to the upper limit of the preset neutral position angle, and the calibration voltage correspondingly generated by the driving control system in response to the swinging angle of the operating rod 2200 may be greater than or equal to the upper limit of the preset neutral voltage range of the vehicle. When the operating rod 2200 swings in a direction of the backward position to abut against the side wall edge of the parking groove 2110, the swinging angle of the operating rod 2200 relative to the frame 1100 may be less than or equal to the lower limit of the preset neutral position angle, and the calibration voltage generated by the driving control system in response to the swinging angle of the operating rod 2200 may be less than or equal to the lower limit of the preset neutral voltage range of the vehicle. For example, the preset neutral position angle range of the operating rod 2200 may be -21° to 21°, and the neutral voltage range corresponding to the operating rod 2200 may be 2.25 V to 2.55 V. Wherein, when the operating rod 2200 swings in the forward direction to abut against the side wall edge of the parking groove 2110, the swinging angle of the operating rod 2200 relative to the frame 1100 may be greater than or equal to 21° in value, and the calibration voltage generated by the driving control system may be greater than or equal to 2.55 V. When the operating rod 2200 swings in the backward direction to abut against the side wall edge of the parking groove 2110, the swinging angle of the operating rod 2200 relative to the frame 1100may be less than or equal to -21° in value, and the calibration voltage generated by the driving control system may be less than or equal to 2.35 V.

In addition, in the disclosure, a driving signal or the calibration signal generated by the driving control system in response to the operating rod 2200 may be a voltage signal in the above embodiment, or may be another type of digital signal, for example, an analog digital signal obtained after analog processing the generated voltage signal.

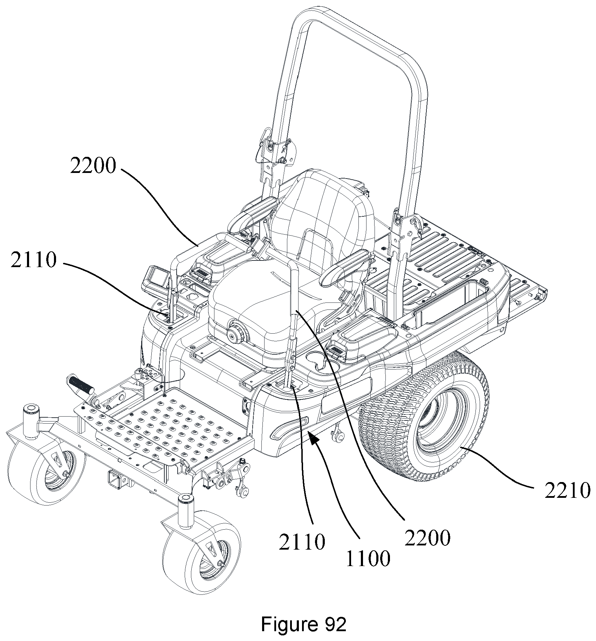

Please refer to FIG. 92 through FIG. 83. The disclosure further provides the garden tool, such as the lawn mower. The garden tool includes the frame 1100, the operating rod 2200, the driving motor 2220, the walking wheels 2210 and a driving control system. The operating rod 2200 is rotatably mounted on the frame 1100 and swings relative to the frame 1100. A swinging direction of the operating rod 2200 on the frame 1100 includes a first direction from a front of the vehicle to a rear of the vehicle. The driving control system and the driving motor 2220 are mounted on the frame 1100, and the walking wheel 2210 is connected to an output end of the driving motor 2220. The driving control system includes a second detection device 2300 and a driving controller. The second detection device 2300 is mounted on the operating rod 2200 and/or the frame 1100, the second detection device 2300 is located at a rotating center of the operating rod 2200 on the frame 1100, and the second detection device 2300 may swing together with the operating rod 2200 to collect the swinging angles of the operating rod 2200 and generate the corresponding driving voltage. The driving controller is electrically connected to the second detection device 2300 and the driving motor 2220 respectively, and the driving controller controls the output shaft of the driving motor 2220 to rotate forward, reverse or stop based on the received driving voltage, so as to realize a driving control of a movement of the garden tool in response to the swinging of the operating rod 2200.

Based on the control requirements of the application vehicle, the position of the operating rod 2200 relative to the frame 1100 is preset as the forward position, the neutral position and the backward position. The neutral position is the preset position of the operating rod 2200 on the frame 1100, and the forward position and the backward position are arranged on the two sides of the neutral position along the swinging path of the operating rod 2200.Based on the above structure, when the operator drives the garden tool to move, a position of the operating rod 2200 may be adjusted back and forth on the frame 1100 along the swinging direction. The second detection device 2300 collects the swinging angle of the operating rod 2200 relative to the frame 1100 to generate the corresponding driving voltage, and the driving controller controls the driving motor 2220 to rotate forward, rotate reversely or stop based on the drive voltage. When the operating rod 2200 is in the neutral position, the swinging angle of the operating rod 2200 relative to the frame 1100 is the neutral position angle, the second detection device 2300 generates the neutral voltage according to the currently collected swinging angle, and the driving controller controls the driving motor 2220 to stop rotating based on the neutral voltage. When the operating rod 2200 is pushed to the forward position, the swinging opening degree of the operating rod 2200 relative to the neutral position is increased in the direction of the forward position. The second detection device 2300 generate the forward voltage according to the currently collected swinging angle, and the driving controller controls the driving motor 2220 to rotate forward based on the forward voltage. When the operating rod 2200 is pushed to the backward position, the swinging opening degree of the operating rod 2200 relative to the neutral position is increased in the direction of the backward position. The second detection device 2300 generates the backward voltage according to the currently collected swinging angle, and the driving controller controls the driving motor 2220 to rotate backward based on the backward voltage.

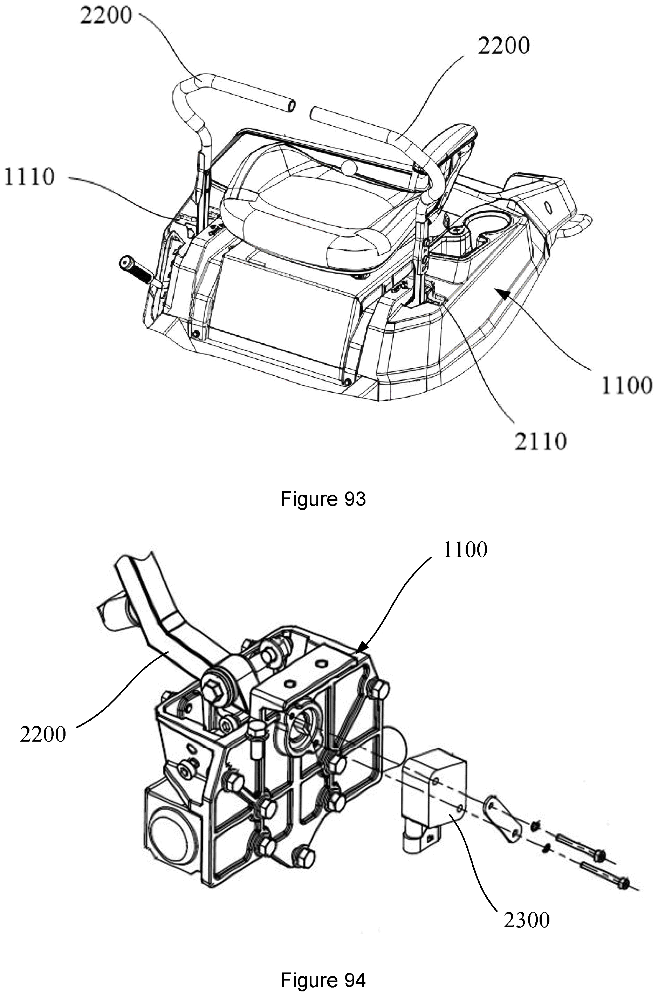

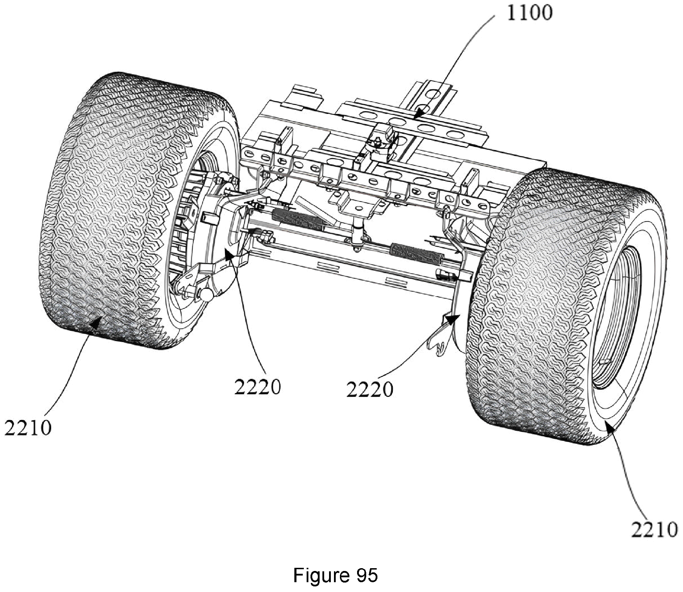

In addition, please refer to FIG. 92 and FIG. 93. The parking groove 2110 is further arranged on the frame 1100. The position of the parking groove 2110 overlaps with a preset electrical neutral position of the swinging of the operating rod 2200. An interior space of the parking groove 2110 is set as the parking position for the vehicle. When the operating rod 2200 is clamped into the parking groove 2110, the vehicle enters the parking state, and the driving control system does not drive and respond to the swinging of the operating rod 2200, so that the garden tool remains in the stationary state.

A type of the working assembly used in the above garden tool may not be limited, and the above working assembly may be a cutting assembly, a snow blowing assembly, a blower, a seeding assembly and other working components.

In the above structure, when the operator adjusts the operating rod 2200 to change a rotating direction and steering of the driving motor 2220, it is necessary to pass through the neutral position. In order to avoid the deviation value of the driving voltage generated by the driving control system in response to the swinging of the operating rod 2200, and prevent the driving motor 2220 from oscillating in the forward and reverse direction in response to a forward and backward movement of the operating rod 2200, the driving control system needs to expand the response range of the swinging angle corresponding to the neutral position of the operating rod 2200, and set the neutral voltage range corresponding to the neutral position swinging range. This ensures that the garden tool remains stationary when the operating rod 2200 is in the neutral position. The neutral voltage range can include the output error of the driving control system in response to the generation of the driving voltage, and can also avoid the forward and reverse rotating oscillation of the driving motor 2220 caused by the forward and reverse swinging of the operating rod 2200 by the driving control system.

In order to facilitate the operator to autonomously calibrate the neutral voltage range of the operating rod 2200 of the garden tool, the driving control system can further execute the calibration method of the operating rod to help the operator to autonomously set the neutral voltage range of the driving control system in response to the operating rod 2200. Specifically, when the operating rod 2200 is clamped in the parking groove 2110, the garden tool is in the parking state, and the second detection device 2300 generates the corresponding calibration voltage in real time in response to the swinging of the operating rod 2200 in the parking groove 2110. After receiving the calibration voltage, the driving controller does not drive and control the driving motor 2220 according to the calibration voltage, but updates the current neutral voltage range in real time based on the current neutral voltage range and the received calibration voltage. When the operating rod 2200 leaves the parking groove 2110, the garden tool leaves the parking state, and the driving controller stops updating the current neutral voltage range, and determines to set the latest current neutral voltage range as the new neutral voltage range.

Further, in some embodiments, the driving controller updates the current neutral voltage range in real time based on the current neutral voltage range and the calibration voltage includes the operations as follows.

The maximum voltage is obtained within the neutral voltage range and the calibration voltage, and this maximum voltage is used as the upper limit to update the current neutral voltage range. This means that the calibration voltage is compared with the upper limit of the current neutral voltage range. If the calibration voltage is greater than the upper limit of the current neutral voltage range, the current neutral voltage range is updated with the calibration voltage as the upper limit. If the calibration voltage is less than or equal to the upper limit of the current neutral voltage range, the upper limit of the current neutral voltage range is maintained unchanged.

The minimum voltage is obtained within the neutral voltage range and the calibration voltage, and this minimum voltage is used as the lower limit to update the current neutral voltage range. This means that the calibration voltage is compared with the lower limit of the current neutral voltage range. If the calibration voltage is less than the lower limit of the current neutral voltage range, the current neutral voltage range is updated with the calibration voltage as the lower limit. If the calibration voltage is greater than or equal to the upper limit of the current neutral voltage range, the lower limit of the current neutral voltage range is maintained unchanged.

In some embodiments, the parking groove 2110 includes a response switch. When the operating rod 2200 is clamped in the parking groove 2110, the response switch responds to a pressing on the operating rod 2200 and sends the calibration signal to the driving controller. Then the driving controller starts the calibration after receiving the calibration signal, and updates and sets a new neutral voltage range. When the operating rod 2200 leaves the parking groove 2110, the response switch responds to a releasing of the operating rod 2200 and stops sending the calibration signal to the driving controller, and the driving controller ends the calibration and determines the new neutral voltage range corresponding to the operating rod 2200 when not receiving the calibration signal.

In addition, in some embodiments, the garden tool further includes a triggering switch, the triggering switch may be arranged on a control panel on the frame 1100, the triggering switch may continuously send the calibration signal to the driving controller in response to the pressing, and stop sending the calibration signal to the driving controller in response to a next pressing.

In the above embodiment, the response switch and the triggering switch are in a same communication control network as the driving controller, a signal transmission mode of the response switch and the trigger switch with the driving controller is an IO command or a communication command, and the communication command is configured for RS485, RS422, CAN or LIN communication.

Please refer to FIG. 94. The second detection device 2300 may be any conventional rotation opening degree detection sensing device in the art. For example, in some embodiments, the second detection device 2300 is a position sensor, or optionally, the second detection device 2300 is an angle sensor.

The number of the operating rods 2200 arranged on the garden tool may not be limited, for example, please refer to FIG. 92 and FIG. 83. In some embodiments, the garden tool may include two driving motors 2220 and two operating rods 2200, the two driving motors 2220 can be respectively arranged on the two sides of the frame 1100, and the two operating rods 2200 can be respectively arranged on the two sides of the frame 1100. The output shafts of the two driving motors 2220 can be respectively connected to the walking wheels 2210. One parking groove 2110 can be respectively arranged at the preset neutral position corresponding to each operating rod 2200 on the two sides of the frame 1100. The driving control system may drive and control the walking wheels 2210 on the two sides of the frame 1100 in response to the swinging of the two operating rods 2200 on the frame 1100, so as to support the operator control the garden tool move forward, move backward, steering, and parking through the two operating rods 2200.

When the two operating rods 2200 are simultaneously pushed into the parking groove 2110 (the OPEN in FIG. 83), the driving control system can stop driving and controlling the driving motors 2220 on the two sides of the frame 1100, so that the garden tool can be in the parking state. When the two operating rods 2200 are pushed to the same opening degree of the forward position (the FORWARD in FIG. 83), the driving control system may response and control the output shafts of the driving motors 2220 on the two sides of the frame 1100 to perform a forward rotation output at the same rotating speed to drive the walking wheels on the two sides of the frame 1100 to rotate forward, so as to drive the garden tool to move forward. When the two operating rods 2200 are simultaneously in the neutral position (the NEUTRAL in FIG. 83), the driving control system may response and control the output shafts of the driving motors 2220 on the two sides of the frame 1100 to stop rotating, so as to drive the garden tool to move backward. When both operating rods 2200 are pushed to positions with a same opening degree of the backward position (the REVERSE in FIG. 83), the driving control system may respond and control the output shafts of the driving motors 2220 on the two sides of the frame 1100 to perform a backward rotation at the same rotating speed to drive the walking wheels 2210 on the two sides of the frame 1100 to rotate reversely, so as to drive the garden tool to move backward. When the two operating rods 2200 are pushed to different opening degrees of the forward position or the backward position, the driving control system may respond to the corresponding swinging angles of the two operating rods 2200 and control the output shafts of the two driving motors 2220 on the two sides to rotate forward or reversely at the corresponding rotating speeds, respectively, so as to drive the garden tool to steer, move forward or move backward to a side of the walking wheel 2210 at a slower rotating speed.

In the above embodiment, in the parking state, the driving control system separately responds to the plurality of operating rods 2200, to separately perform an independent calibration setting of the neutral voltage range on the plurality of operating rods 2200, and the calibration settings by the driving control system for the neutral voltage range of each operating rod 2200 do not interfere with each other. For example, in an embodiment, the garden tool includes two operating rods 2200. When the two operating rods 2200 are clamped into the parking grooves 2110 corresponding to the two sides of the frame 1100, the driving control system simultaneously receives the calibration signals corresponding to the two operating rods 2200, and then independently responds to the swinging of the two operating rods in the corresponding parking grooves 2110, so as to update and set the neutral voltage ranges corresponding to the two operating rods 2200 respectively. If one of the two operating rods 2200 leaves the parking groove 2110, the driving control system still responds and calibrates the neutral voltage range of the operating rod 2200 clamped in the parking groove 2110 based on the received calibration signals, and completes the update and setting of the neutral voltage range of the operating rod 2200 leaving the parking groove 2110. If both of the two operating rods 2200 leave the parking grooves 2110, the driving control system completes the updates and settings of the neutral voltage ranges of the two operating rods 2200.

In summary, the calibration method of the operating rod uses a mechanical and electrical connection between the operating rod and the driving controller for compensation setting, so that the operator may quickly complete the automatic calibration of an electrical neutral position range of the operating rod through pushing the operating rod to swing in the parking groove, which effectively improves production efficiency of a production line of the garden tool and reduces later maintenance cost of the garden tool. When there is a neutral position deviation of the operating rod of the garden tool due to mechanical wear, it does not need to be returned to a factory for repair, which may be solved by a local calibration.

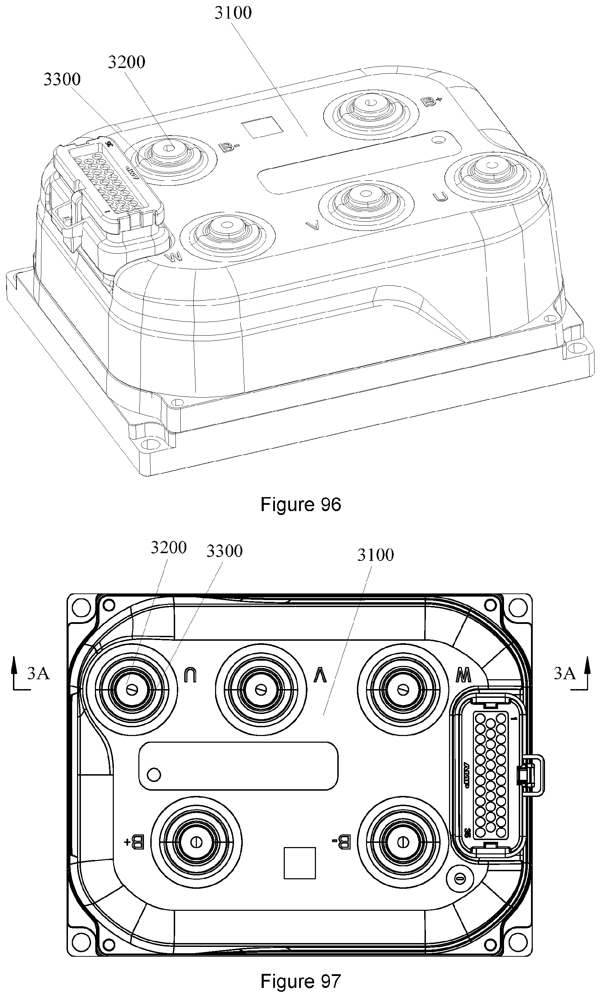

Please refer to FIG. 96 through FIG. 99, the lawn mower of the disclosure includes the controller, and the controller includes a second housing 3100, a conductive post 3200, and a sealing component 3300. The second housing 3100 is internally assembled with a control element 3500. The second housing 3100 includes a third through hole 3110 and a sealing groove 3120. The third through hole 3110 penetrates a top wall of the second housing 3100 for the conductive post 3200 to pass through, and an electrical connection between the control element 3500 inside the second housing 3100 and an external power supply is realized through the conductive post 3200. For example, a quantity of the third through hole 3110 is correspondingly set based on a quantity of conductive posts 3200. The sealing groove 3120 is arranged on an outer wall of the second housing 3100, and the sealing groove 3120 is arranged around the third through hole 3110. A circumferential groove 3200 is arranged around a side wall of the conductive post 3200. The sealing component 3300 includes a first sealing part 3310 and a second sealing part 3320, the first sealing part 3310 abuts against the circumferential groove 3210, and the second sealing part 3320 abuts against the sealing groove 3120. In an embodiment, a first sealing part 3310 is in interference fit with the circumferential groove 3210 to implement a sealing between the sealing component 3300 and the conductive post 3200, and the second sealing part 3320 is in interference fit with the sealing groove 3120 to implement a sealing between the sealing component 3300 and the second housing 3100. The sealing groove 3120 is arranged around the third through hole 3110, so that the sealing component 3300 covers a gap between the conductive post 3200 and the third through hole 3110, to implement a sealing between the conductive post 3200 and the second housing 3100, which prevents liquid from entering the second housing 3100 through the gap between the conductive post 3200 and the third through hole 3110, and improve a waterproof level of the controller.

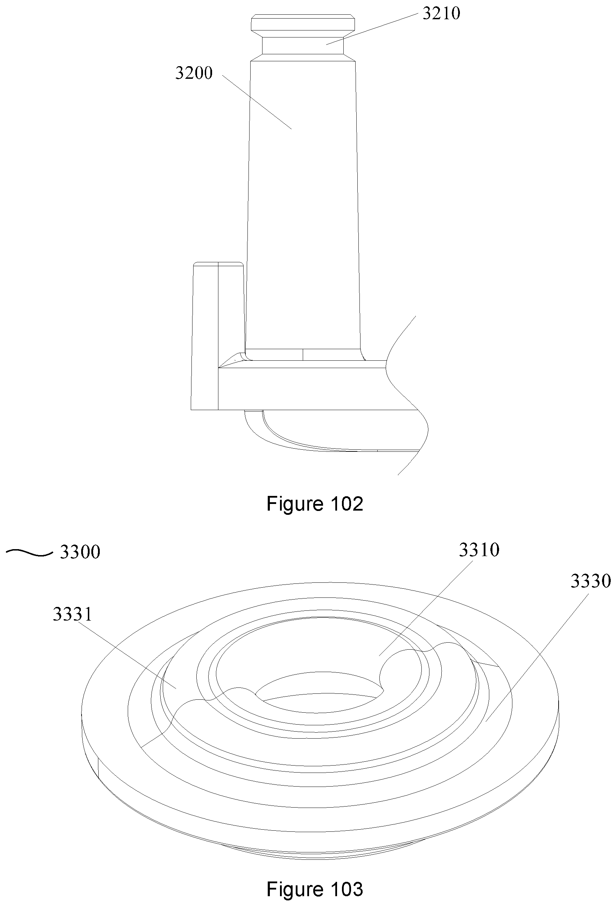

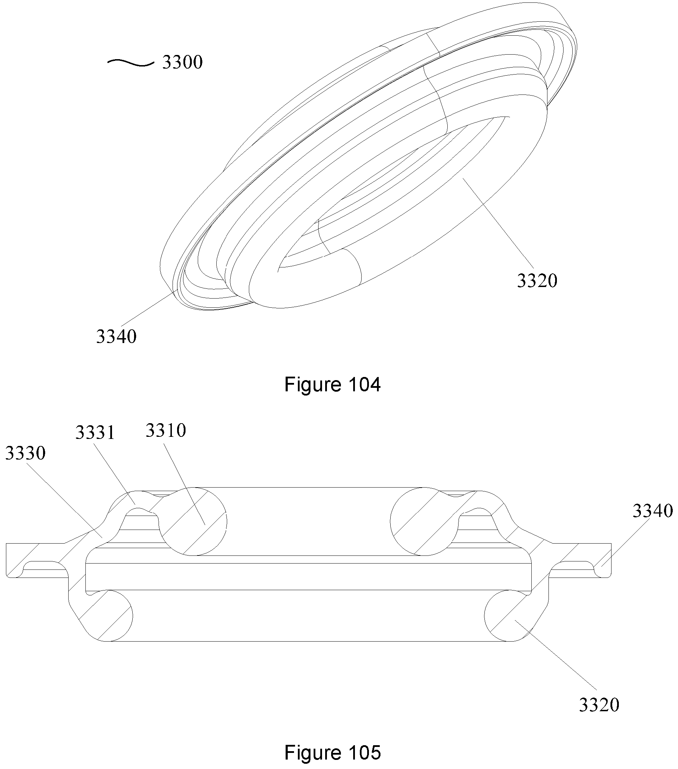

Please refer to FIG. 103 through FIG. 105. In an embodiment, the first sealing part 3310 is spherical. In other words, a cross section of the first sealing part 3310 is circular, which facilitates a cooperation of the first sealing part 3310 and the circumferential groove 3210. The second sealing part 3320 is spherical, which facilitates a cooperation between the second sealing part 3320 and the sealing groove 3120, and improves the sealing performance. In an embodiment, the sealing component 3300 is a rubber component, the rubber component has high elasticity. When the sealing component 3300 is in interference fit with the sealing groove 3120 and the circumferential groove 3210, a certain deformation may be generated to ensure that the first sealing part 3310 is in a close contact with the circumferential groove 3210, and the second sealing part 3320 is in a close contact with the sealing groove 3120, thereby ensuring a good sealing effect.

Please refer to FIG. 103 through FIG. 105. In an embodiment of the disclosure, a third connecting part 3330 is arranged between the first sealing part 3310 and the second sealing part 3320, and an arc-shaped bending part 3331 is arranged on the third connecting part 3330. Please refer to FIG. 10, in an embodiment, the first sealing part 3310, the second sealing part 3320 and the third connecting part 3330 are C-shaped. Through arranging an arc-shaped bending part 3331 on the third connecting part 3330, when mounting the sealing component 3300, the arc-shaped bending part 3331 may be unfolded and extended, thereby facilitating an assembly of the first sealing part 3310 and the circumferential groove 3210, and an assembly of the second sealing part 3320 and the sealing groove 3120. After the C-shaped sealing component 3300 is assembled, an assembly relationship between the circumferential groove 3210 and the sealing groove 3120 is more stable under an elastic action.

Please refer to FIG. 102, in an embodiment, the circumferential groove 3210 is arranged around the side wall of the conductive post 3200. Three planes of the circumferential groove 3210, namely an upper wall, a lower wall, and an inner wall, are formed on the conductive post 3200. The first sealing part 3310 is in interference fit with the circumferential groove 3210. In other words, the first sealing part 3310 abuts against the three walls of the circumferential groove 3210 respectively, and the first sealing part 3310 and the walls of the circumferential groove 3210 are in a line contact with each other. A sealing achieved by a three-line contact ensures a sealing performance between the first sealing part 3310 and the circumferential groove 3210, which prevents the liquid from entering into the second housing 3100 through the first sealing part 3310 and the circumferential groove 3210. In an embodiment, the upper wall and the lower wall of the circumferential groove 3210 are obliquely arranged, and the upper wall and the upper wall are inclined close to each other from the circumferential groove 3210 into an inside of the circumferential groove 3210. In other words, a height of the circumferential groove 3210 gradually decreases from an outside of the circumferential groove 3210 to the inside of the circumferential groove 3210, which improves a compatibility of the circumferential groove 3210 with the first sealing part 3310 and ensures that the first sealing part 3310 may extend into the circumferential groove 3210 to cooperate with the circumferential groove 3210 within a certain tolerance range.

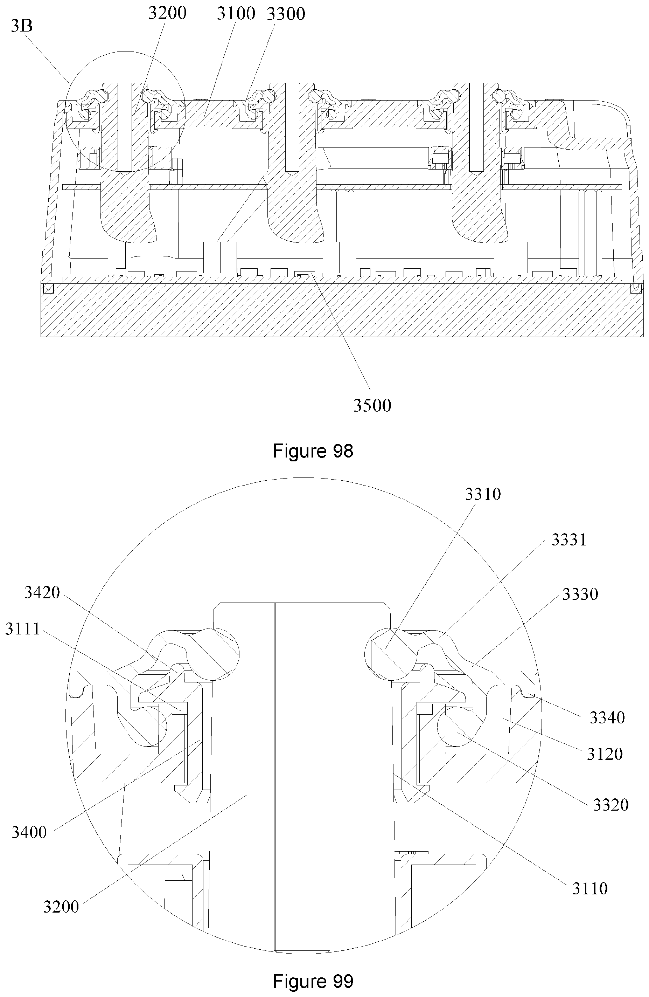

Please refer to FIG. 98 through FIG. 99. In an embodiment, a top of the circumferential groove 3210 is not lower than a top surface of the second housing 3100. The sealing between the second housing 3100 and the conductive post 3200 focuses on the gap between the conductive post 3200 and the third through hole 3110. The top of the circumferential groove 3210 being not lower than the top surface of the second housing 3100 ensures that a top surface of the first sealing part 3310 is not lower than the top surface of the second housing 3100, which prevents the liquid from accumulating near the conductive post 3200, reduces a risk of leakage, and improves the sealing effect.

Please refer to FIG. 96 through FIG. 99. In an embodiment, the controller further includes an auxiliary bracket 3400, and the auxiliary bracket 3400 is sleeved on an outer periphery of the conductive post 3200 passing through the third through hole 3110 to insulate the conductive post 3200 from the second housing 3100. An auxiliary bracket 3400 is sleeved on the conductive post 3200 to prevent the conductive post 3200 from being in direct contact with the second housing 3100, thereby insulating the conductive post 3200 from the second housing 3100. In an embodiment, the auxiliary bracket 3400 may be a plastic bracket, or may be a rubber bracket, a plastic bracket, which may have a better rigidity than the rubber bracket, and may assist in supporting the sealing component 3300.

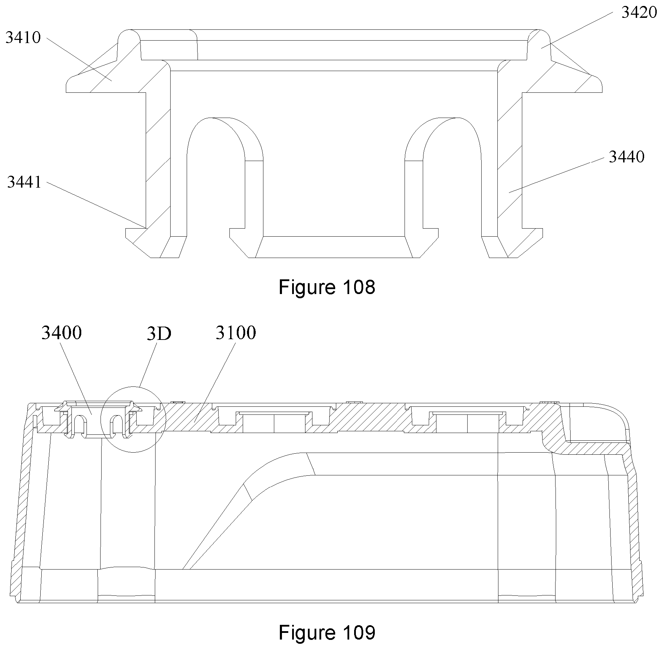

Please refer to FIG. 109 through FIG. 110. In an embodiment, the auxiliary bracket 3400 includes a flange surface 3410, and the flange surface 3410 is located above a wall of the sealing groove 3120 near the conductive post 3200 and extends towards above the sealing groove 3120. A flange surface 3410 extends from a side wall or a top wall of the auxiliary bracket 3400 to an outside of the auxiliary bracket 3400. After mounting, a main body part of the auxiliary bracket 3400 extends into the third through hole 3110, the flange surface 3410 is arranged above the wall of the sealing groove 3120, and the flange surface 3410 cooperates with a side wall of the sealing groove 3120 to position the auxiliary bracket 3400, thereby preventing the auxiliary bracket 3400 from extending into the third through hole 3110 too much or too little. The flange surface 3410 extends above the sealing groove 3120 and covers part of the sealing groove 3120, so that an internal width of the sealing groove 3120 is greater than a groove surface width of the sealing groove 3120. After the second sealing part 3320 is inserted into the sealing groove 3120, the sealing component 3300 tends to escape from the sealing groove 3120 under an action of elasticity. The flange surface 3410 may limit the second sealing part 3320 from escaping from the sealing groove 3120, thereby improving the sealing performance and a mounting stability between the second sealing part 3320 and the sealing groove 3120.

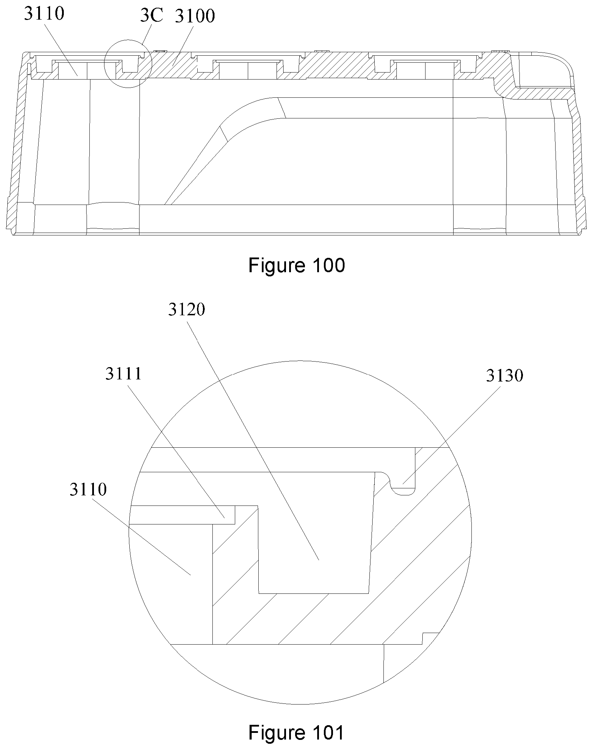

Please refer to FIG. 100 through FIG. 101. In an embodiment, a wall height of a side wall of the third through hole 3110 close to the conductive post 3200 is lower than a wall height of a side wall of the third through hole 3110 away from the conductive post 3200. The auxiliary bracket 3400 is in contact with the side wall close to the conductive post 3200. A height difference is formed between the side wall of the third through hole 3110 close to the conductive post 3200 and the side wall of the third through hole 3110 away from the conductive post 3200, in order to provide a mounting space for the auxiliary bracket 3400, and prevent an excessive height of the auxiliary bracket 3400 due to an abutment between the flange surface 3410 of the auxiliary bracket 3400 and the side wall of the third through hole 3110, which affects a height of the top surface of the second housing 3100.

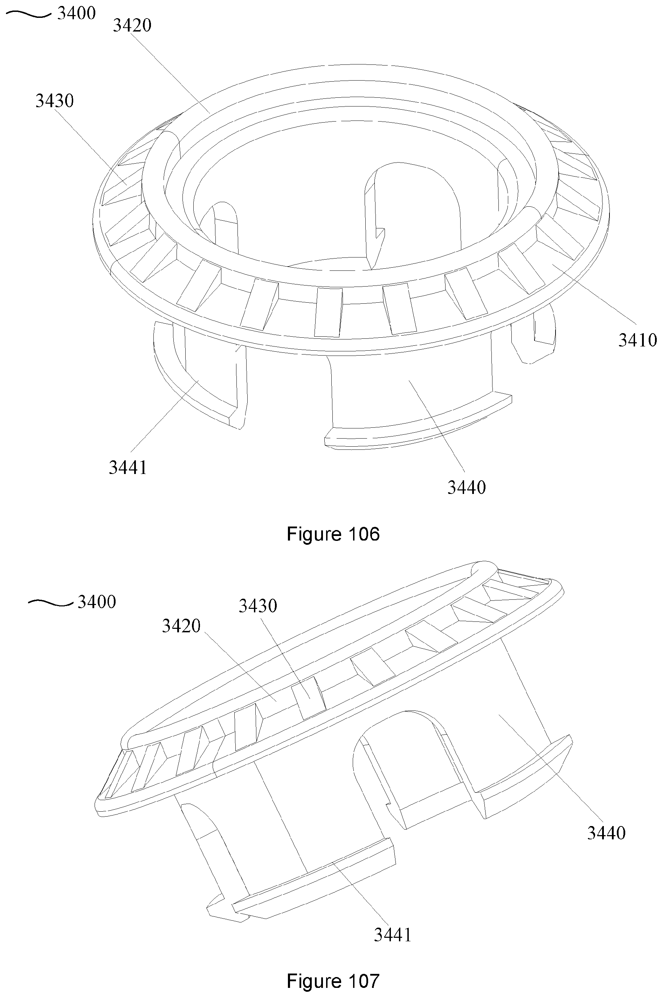

Please refer to FIG. 106 through FIG. 107. In an embodiment, an outer periphery of the top surface of the flange surface 410 is an arc surface, and a top surface of the flange surface 310 is a surface facing an outside of the second housing 3100. During an assembly, the auxiliary bracket 3400 is installed earlier than the sealing component 3300. When the second sealing part 3320 extends into the sealing groove 3120, a groove surface of the sealing groove 3120 needs to be partially covered by the flange surface 3410, and the outer periphery of the top surface of the flange surface 3410 is rounded to form the arc surface, which facilitates the second sealing part 3320 to slide into the sealing groove 3120, not only plays a guiding role, but also prevents an edge of the flange surface 3410 from damaging the second sealing part 3320. In other embodiments, the outer periphery of the top surface of the flange surface 3410 may also be chamfered to form an inclined surface, which facilitates the second sealing part 3320 to slide into the sealing groove 3120.

Please refer to FIG. 106, FIG. 109 through FIG. 110, an annular wall 3420 is arranged a top of the auxiliary bracket 3400, a top of the annular wall 3420 is located between a high point and a low point of the circumferential groove 3210. In some embodiments, the top of the annular wall 3420 is higher than a middle position of the circumferential groove 3210. In other words, the circumferential groove 3210 is bisected along the height direction, and a projection of the top of the annular wall 3420 along the direction perpendicular to an axis of the conductive post 3200 falls into an upper half of the circumferential groove 3210. The annular wall 3420 may limit a separation of the first sealing part 3310 from the circumferential groove 3210 to ensure a stability of the connection between the first sealing part 3310 and the circumferential groove 3210. In an embodiment, an area enclosed by the annular wall 3420 and the conductive post 3200 is in interference fit with the first sealing part 3310, to further improve the stability of the connection between the first sealing part 3310 and the circumferential groove 3210.

Please refer to FIG. 106 through FIG. 107. In an embodiment, a reinforcing rib 3430 is arranged on an outer periphery of the annular wall 3420. Through arranging the reinforcing rib 3430, the annular wall 3420 is supported, a deformation of the annular wall 3420 is reduced, and a limiting effect on the first sealing part 3310 is improved. In an embodiment, the reinforcing rib 3430 abuts against the top surface of the flange surface 3410, so as to support both the annular wall 3420 and the flange surface 3410 at the same time, which avoids deformation when the flange surface 3410 abuts against the wall of the sealing groove 3120, and improves an overall stability of the auxiliary bracket 3400.

Please refer to FIG. 106 through FIG. 107. In an embodiment, a lower part of the auxiliary bracket 3400 includes a plurality of second elastic sheets 3440, and the plurality of the second elastic sheets 3440 is arranged in a circumferential array around an axis of the auxiliary bracket 3400. The main body part of the auxiliary bracket 3400 is a hollow post, and the conductive post 3200 penetrates through a hollow part of the auxiliary bracket 3400. A second elastic sheet 3440 is arranged at a lower part of the auxiliary bracket 3400. When the auxiliary bracket 3400 is assembled with the conductive post 3200, the second elastic sheet 3440 has a certain elasticity, and it is easier for the conductive post 3200 to be inserted into the main body part of the auxiliary bracket 3400.

Please refer to FIG. 106 through FIG. 108. In an embodiment, the second elastic sheet 3440 and the main body part of the auxiliary bracket 3400 are integrally formed, and adjacent second elastic sheets 3440 are connected by an arc-shaped transition. The second elastic sheet 3440 is elastically deformed during the assembly, and an arc transition is formed between adjacent second elastic sheets 3440, thereby avoiding a stress concentration during a deformation of the second elastic sheet 3440, and reducing a risk of problems such as damage and cracks between the second elastic sheet 3440 and the main body part of the auxiliary bracket 3400.

Please refer to FIG. 106 through FIG. 108. In an embodiment, a bottom of the second elastic sheet 3440 includes a blocking step 3441, and a bottom side wall of the blocking step 3441 is an inclined surface. During assembly, the second elastic sheet 3440 is inserted into the third through hole 3110, and the bottom side wall of the blocking step 3441 is an inclined surface, which is more convenient for an insertion of the second elastic sheet 3440. After the second elastic sheet 3440 penetrates through the third through hole 3110 and is inserted into the second housing 3100, the second elastic sheet 3440 rebounds, so that the blocking step 3441 is in contact with a bottom wall of the third through hole 3110. In other words, the blocking step 3441 limits the second elastic sheet 3440 to be axially separated from the third through hole 3110 along the third through hole 3110, which means that the auxiliary bracket 3400 is prevented from being separated from the third through hole 3110. The auxiliary bracket 3400 is limited to move into the second housing 3100 through the abutment between the flange surface 3410 and a top of the side wall of the third through hole 3110. The auxiliary bracket 3400 is limited to move out of the second housing 3100 through an abutment between the blocking step 3441 and the bottom of the side wall of the third through hole 3110, thereby ensuring a stable connection between the auxiliary bracket 3400 and the second housing 3100.

Please refer to FIG. 100 through FIG. 101. In an embodiment, a first annular groove 3111 is arranged around a top of the third through hole 3110, and a sealing ring is matchably arranged inside the first annular groove 3111. The first annular groove 3111 is arranged at the top of the side wall of the third through hole 3110 and is communicated with the third through hole 3110. The first annular groove 3111 cooperates with the sealing ring to further close the gap between the conductive post 3200 and the third through hole 3110 to improve the sealing performance. Please refer to FIG. 4. In an embodiment, the flange surface 3410 of the auxiliary bracket 3400 covers the first annular groove 3111, which may not only improve the sealing performance, but also prevent the sealing ring from separating from the first annular groove 3111.

Please refer to FIG. 98 through FIG. 101. In an embodiment, an inserting groove 3130 is arranged on the second housing 3100 surrounding the sealing groove 3120, and the sealing component 3300 includes a third sealing part 3340 that cooperates with the inserting groove 3130. The third sealing part 3340 and the third connecting part 3330 cooperate with each other to seal the sealing groove 3120. In an embodiment, the third connecting part 3330 extends outward to be connected to the third sealing part 3340, so as to realize a sealing of the sealing groove 3120 by the sealing component 3300 and prevent the liquid from entering into the sealing groove 3120. In an embodiment, the inserting groove 3130 is in interference fit with the third sealing part 3340, to facilitate to mounting and use. The third connecting part 3330 extends outward to be connected to the third sealing part 3340, and a top surface of the sealing component 3300 achieves a smooth transition with an upper surface of the second housing 3100, thereby avoiding liquid accumulation, reducing a risk of liquid infiltration, and improving the sealing performance.

**In** an embodiment, during assembly, the conductive post 3200 passes through the third through hole 3110 and extends out of the second housing 3100. The auxiliary bracket 3400 is inserted into the third through hole 3110 from top to bottom. The conductive post 3200 extends into the hollow part of the main body part of the auxiliary bracket 3400. The second elastic sheet 3440 is pressed to slide along the side wall of the third through hole 3110 until the blocking step 3441 of the second elastic sheet 3440 extends into the second housing 3100, the second elastic sheet 3440 is reset under the action of elasticity. The blocking step 3441 cooperates with the bottom of the side wall of the third through hole 3110 to prevent the auxiliary bracket 3400 from being separated from the third through hole 3110 toward the outside of the second housing 3100, and the flange surface 3410 abuts against the top wall of the third through hole 3110 to prevent the auxiliary bracket 3400 from further moving into the second housing 3100. The sealing component 3300 is pressed down, so that the first sealing part 3310 enters the circumferential groove 3210 of the conductive post 3200. The first sealing part 3310 is in interference fit with the circumferential groove 3210, and the first sealing part 3310 is fixed relative to the circumferential groove 3210 under an action of an elasticity of the first sealing part 3310. The sealing component 3300 is further pressed down, so that the second sealing part 3320 slides into the sealing groove 3120 along the outer periphery of the flange surface 3410 of the auxiliary bracket 3400. When the second sealing part 3320 slides into the sealing groove 3120, the flange surface 3410 covers and seals part of the sealing groove 3120, the second sealing part 3320 is squeezed and deformed into the sealing groove 3120 and then partially restored. The second sealing part 3320 is in interference fit with the sealing groove 3120, and under an action of an elasticity of the second sealing part 3320, the second sealing part 3320 is relatively fixed with the sealing groove 3120, and at the same time the flange surface 3410 covers part of the sealing groove 3120, thereby further preventing the second sealing part 3320 from being separated from the sealing groove 3120.

In an embodiment of the lawn mower of the disclosure, the lawn mower includes the driving member, and the driving member is suitable for a garden tool, and is particularly suitable for driving the garden tool to walk. The garden tool is, for example, the lawn mower, the snow blower, the floor washing machine, the spreader, or a microtillers.

The garden tool requires high movement flexibility, so a transverse width of the garden tool may be generally narrow. The driving member composed of the motor and a planetary reducer arranged by the disclosure can be mounted in an axial space of the walking wheel, which may make full use of a transverse space of the garden tool and improving the movement flexibility of the garden tool.

A gear reducer in the conventional garden tool generally adopts a spur gear with a simpler structure due to limited space. However, a meshing characteristic of a spur gear transmission is instantaneous meshing and instantaneous disconnection. A planetary gear system adopts a plurality of sets of gears to mesh and transmit power at the same time. And a precision of each gear is inconsistent due to a device machining error, so a gearbox of the spur gear transmission does not operate smoothly, and there may exhibit vibration or noise under certain operating conditions. An unstable operation of the gearbox may cause fluctuations in a current and operation of the motor, an encoder may cause confusion in the collected signals due to an unstable rotation of the motor, and the controller may reduce a control accuracy of the motor due to a fluctuation of a current waveform of the motor.

In some embodiments, a planetary reducer may be combined with the motor, and a gear in the planetary reducer is set as a helical gear. The planetary reducer is more compact in structure than a traditional gear reducer, a helical gear meshing is more stably and smoothly, a bearing capacity is stronger, data collected by the encoder is more accurate, a motor current is more stable, and it is more beneficial for the controller to accurately control the operation of the driving motor. At the same time, in order to overcome a problem that a space of the planetary reducer is limited, the disclosure provides a new axial supporting unit to support the helical gear, thereby realizing a stable operation of the helical gear in narrow space.

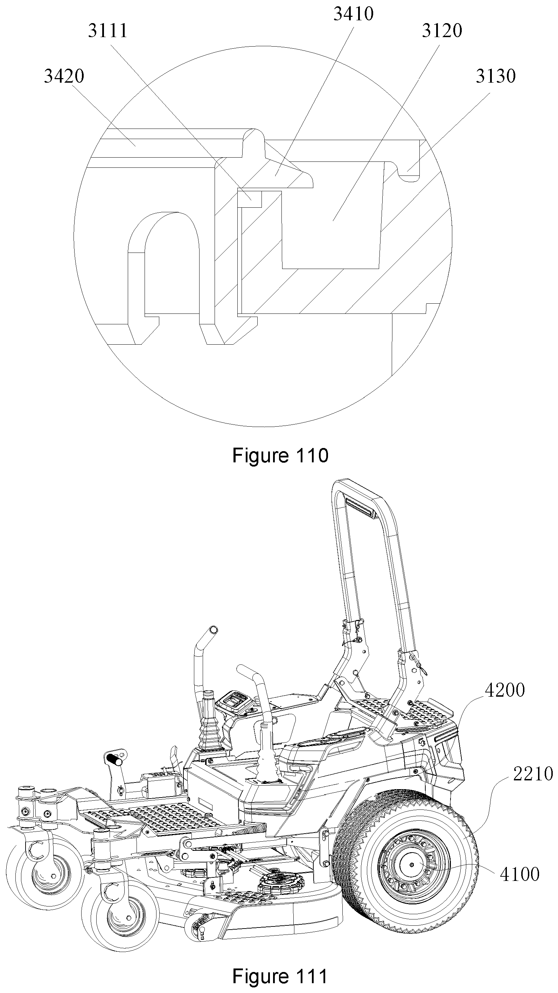

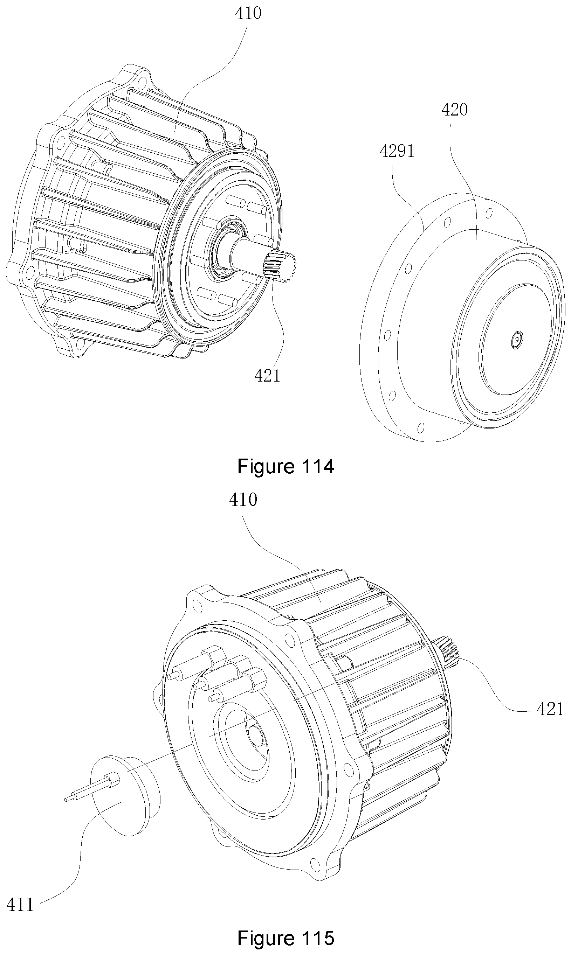

Please refer to FIG. 111 through FIG. 125, a technical solution of the disclosure is described in detail below in conjunction with specific embodiments.

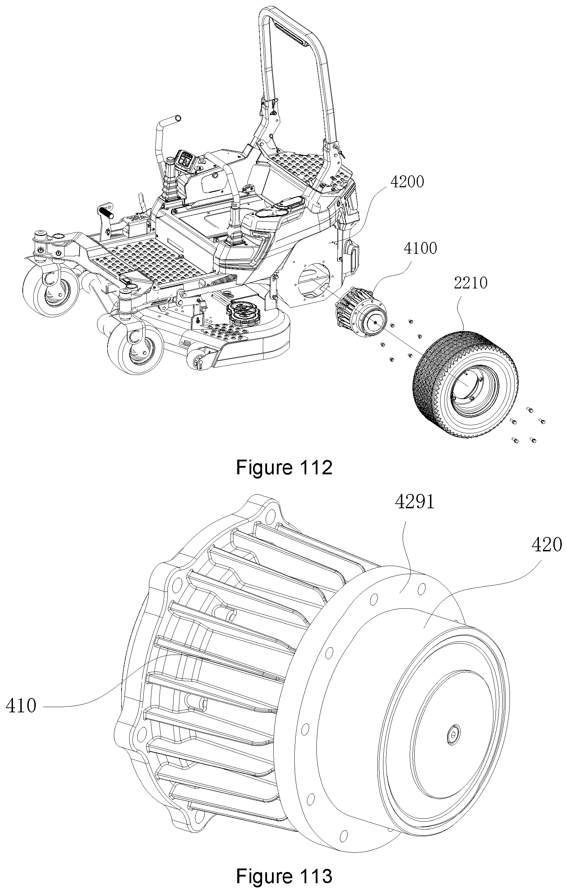

Please refer to FIG. 111 and FIG. 112. In an embodiment of the disclosure, a riding lawn mower is a garden tool for mowing a large area of a lawn, which is widely used in parks, stadiums, golf courses, farmlands and other places. The riding lawn mower mainly includes a frame assembly, a driving member 4100 and a cutting assembly. Wherein, the frame assembly may further include a chassis 4200 and the walking wheel 2210. The chassis 4200 is usually made of steel or cast iron for supporting various components of an upper part of the lawn mower. The frame assembly may include a seat and a comfortable operating rod, and the operator may sit on the seat and use the operating rod to control the lawn mower to move and mow. In addition, the frame assembly may further include a steering system, which may adjust a steering radius as required to adapt to a shape and size of the lawn. A cutting component may include a mowing blade, and the mowing blade may adjust a blade height according to a height of the lawn to ensure a best cutting effect in different conditions.

It is to improve the driving member 4100 of the garden tool, so following embodiments describe the driving member 4100 in detail, and specific structures and working principles of the frame assembly and the cutting assembly may not be repeated. In addition, the driving member 4100 of the disclosure may not be limited to being applied to the lawn mower, and the driving member 4100 of the disclosure may be theoretically applicable to any wheel driven garden tool.

Please refer to FIG. 113 through FIG. 115. The driving member 4100 includes a motor 410 and a planetary reducer 420. In a specific embodiment, the motor 410 may be, for example, a DC brushless motor. The motor 410 may be mounted on the frame assembly through a first connecting member. The garden tool may walk forward, walk backward, steer, turn in-situ and other actions through a forward and reverse rotation of the motor 410. These processes need to accurately control a torque and rotating speed of the motor 410. For this reason, an encoder 411 may be mounted on the motor 410, and the motor 410 and the encoder 411 may be connected to the controller. The encoder 411 is a device that monitors and feeds back an operation of the motor 410 in real time by converting operation information into an electrical signal. The encoder 411 may measure information such as a rotating position, rotating speed and rotating direction of the motor 410, and transmit the information to the controller, so that the controller may accurately control and adjust the operation of the motor 410. The encoder 411 may improve an operation performance and precision of the motor 410, which enhances a control reliability of the motor 410, and realizes efficient and stable control on the operation of the motor.

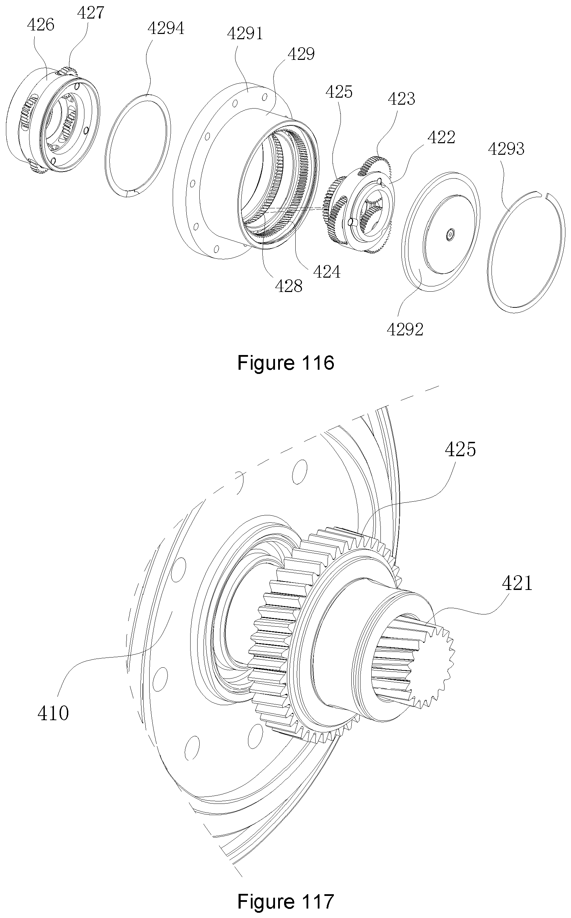

Please refer to FIG. 116, the planetary reducer 420 includes a reducer housing 429 and a planetary gear assembly mounted in the reducer housing 429. A power input end of the planetary gear assembly is connected to an output shaft of the motor 410, and a power output end of the planetary gear assembly is connected to the reducer housing 429. The reducer housing 429 includes a fourth connecting part 4291 for connecting the walking wheel 2210. Each gear in the planetary gear assembly is the helical gear. Compared with a traditional spur gear planetary reducer 420, the helical gear meshes more smoothly and smoothly, the bearing capacity is stronger, the data collected by the encoder 411 is more accurate, the current of the motor 410 is more stable, and it is more beneficial for the controller to accurately control the operation of the motor 410.

Please refer to FIG. 116 through FIG. 119, FIG. 124 and FIG. 125. In an embodiment, the planetary gear assembly includes a first-stage planetary gear assembly and a second-stage planetary gear assembly, wherein a sun gear of the first-stage planetary gear assembly is connected to a planetary carrier of the second-stage planetary gear assembly, and the sun gear and the planetary gear on the planetary carrier are assembled such that axial forces of the sun gear and the planetary gear during operation are in opposite directions.

The helical gears may generate axial loads in a transmission process. When a plurality of helical gears is provided on the same component, axial loads may be generated by the respective helical gears. In some configurations, if the axial loads generated by the helical gears are oriented in a same axial direction, the axial loads may be combined, which can increase an axial load applied to the component. In other configurations, if the axial loads generated by the helical gears are oriented in opposite axial directions, at least a portion of the axial loads may offset each other, which may reduce a net axial load applied to the component. Reducing the net axial load applied to the component may contribute to improved reliability of a connection between the component and one or more other components.

In the planetary gear assembly in this embodiment, at least one planetary carrier includes both the sun gear and the planetary gear. In the disclosure, the sun gear and the planetary gear on the planetary carrier are set to have axial loads facing opposite directions, so that the axial loads of the sun gear and the planetary gear offset each other, thereby improving a reliability of the planetary carrier structure. The axial load acting on a helical gear may be related to a tooth helix direction of the helical gear and a rotational direction of the helical gear. In some configurations, when the rotational directions of a sun gear and a planetary gear are opposite to each other, the tooth helix directions of the sun gear and the planetary gear may be the same. In other configurations, when the rotational directions of the sun gear and the planetary gear are the same, the tooth helix directions of the sun gear and the planetary gear may be opposite to each other.

Please refer to FIG. 116 through FIG. 119 and FIG. 124. In an embodiment, the first-stage planetary gear assembly includes a first sun gear 421, a first planetary carrier 422, a first planetary gear 423 and a first ring gear 424. Wherein, the first sun gear 421 is connected to the output shaft of the motor 410, the first planetary carrier 422 is rotatably arranged relative to a housing of the motor 410, the first planetary gear 423 is rotatably connected to the first planetary carrier 422, the first ring gear 424 is fixedly connected to the reducer housing 429, and the first planetary gear 423 is meshed with the first sun gear 421 and the first ring gear 424 respectively. The second-stage planetary gear assembly includes a second sun gear 425, a second planetary carrier 426, a second planetary gear 427 and a second ring gear 428. Wherein, the second sun gear 425 is fixedly connected to the first planetary carrier 422, the second planetary carrier 426 is fixedly connected to the housing of the motor 410, the second planetary gear 427 is rotatably connected to the second planetary carrier 426, the second ring gear 428 is fixedly connected to the reducer housing 429, and the second planetary gear 427 is meshed with the second sun gear 425 and the second ring gear 428 respectively.

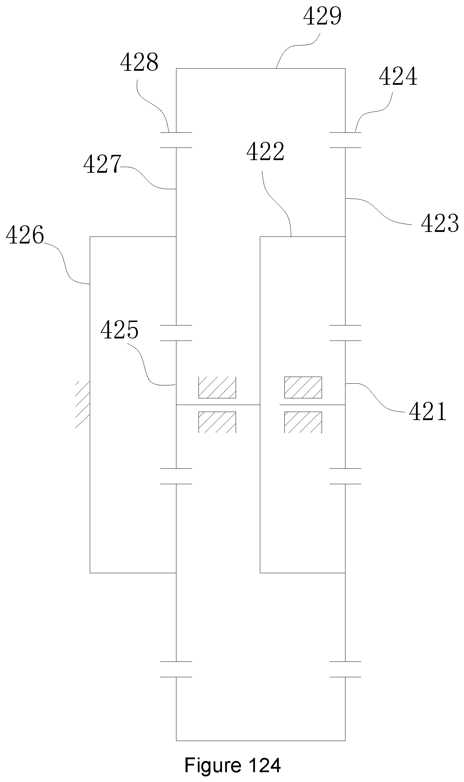

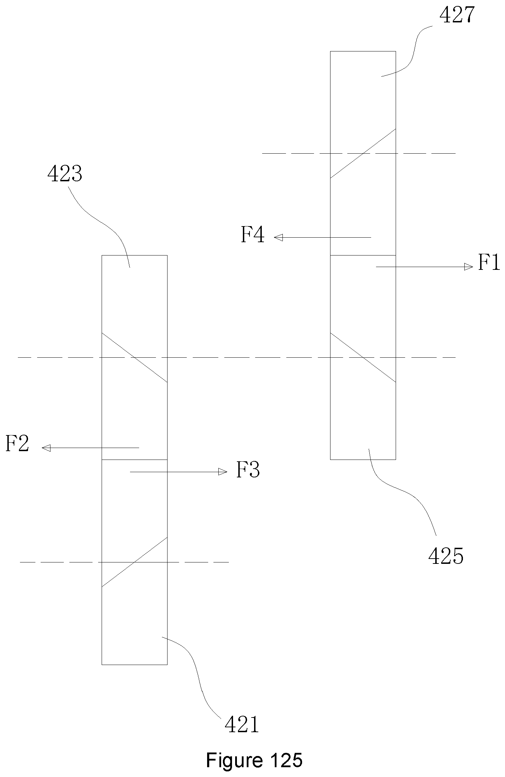

Based on the above embodiment, the first planetary gear 423 and the second sun gear 425 are equivalent to being mounted on a same component, which means that both of them are mounted on the first planetary carrier 422 at the same time. According to a transmission principle shown in FIG. 14, it may be seen that a rotating direction of the first planetary gear 423 may be opposite to a rotating direction of the second sun gear 425, so that gear tooth rotating directions of the first planetary gear 423 and the second sun gear 425 are the same. At this time, please refer to FIG. 125. The axial load received by the first planetary gear 423 is F2, the axial load received by the second sun gear 425 is F1, and the axial loads of the first planetary carrier 422 and the second sun gear 425 are offset, thereby improving a stability of the first planetary carrier 422. In addition, the first sun gear 421 and the second planetary gear 427 are equivalent to being mounted on a same component, which means that both of them are mounted on the motor 410. According to the transmission principle shown in FIG. 124, it may be seen that a rotating direction of the first sun gear 421 and a second planetary gear 427 may be opposite, so that gear tooth rotating directions of the first sun gear 421 and the second planetary gear 427 are the same. At this time, please refer to FIG. 125. The axial load received by the first sun gear 421 is F3, the axial load received by the second planetary gear 427 is F4, and the axial loads of the first sun gear 421 and the second planetary gear 427 are offset, thereby improving a stability of the motor 410.

In an embodiment, the first sun gear 421 is used as a power input end of the planetary reducer 420, and the second ring gear 428 is used as a power output end of the planetary reducer 420, to implement a two-stage deceleration. An operation mode of each gear in the planetary reducer 420 of the disclosure may be not unique. For example, in some other embodiments, one of the planetary carriers may be used as the power input end, one of the ring gears may be used as the power output end, or one of the sun gears may be used as the power input end, and one of the planetary carriers may be used as the power output end.

In addition, the planetary reducer 420 of the disclosure is not limited to the two-stage deceleration, but may increase or decrease a deceleration stage according to actual needs, for example, in some other embodiments, it may also be set as a first-stage deceleration or a third-stage deceleration.

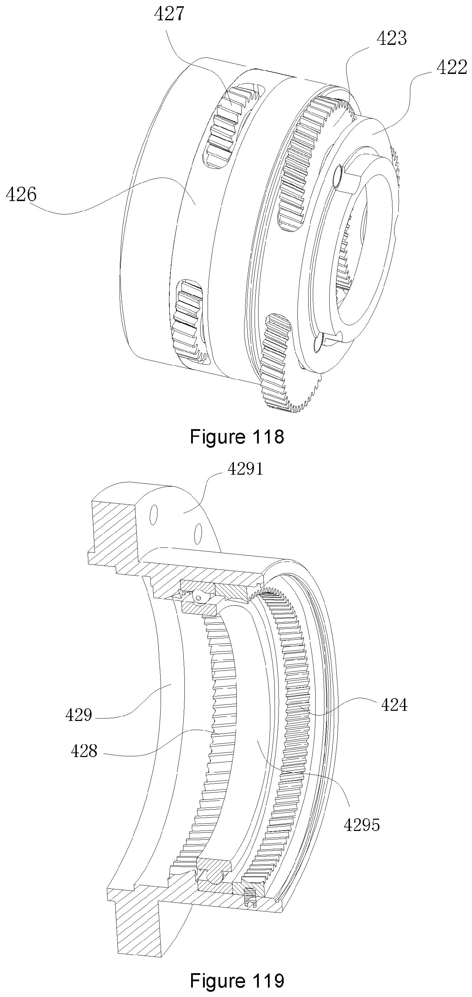

Please refer to FIG. 119. In an embodiment, a bearing 4295 is arranged between the second planetary carrier 426 and the reducer housing 429. The second planetary carrier 426 is fixedly connected to the motor 410, so that an arrangement of the bearing 4295 between the second planetary carrier 426 and the reducer housing 429 can improve a support of the reducer housing 429.

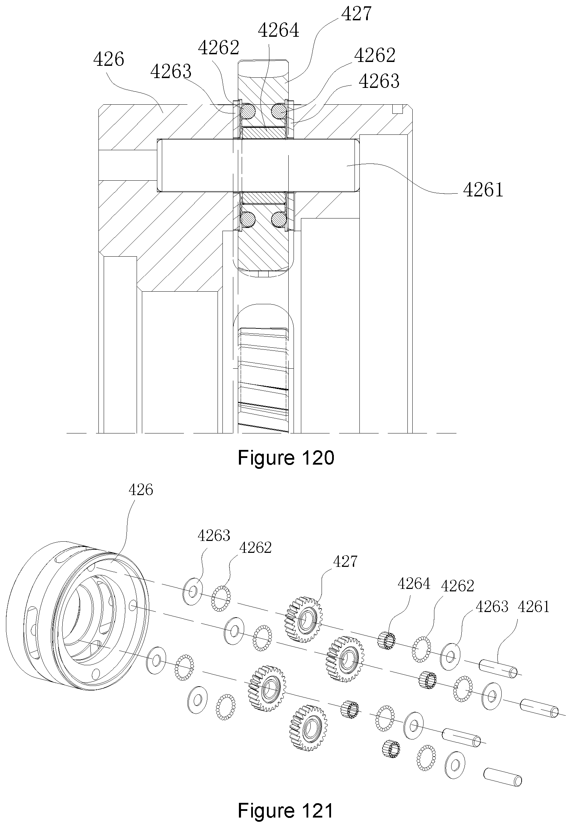

Please refer to FIG. 120 through FIG. 123, since there is the axial load in each gear of the helical gear of the planetary reducer, each gear needs to be axially supported, and since an internal space of the planetary reducer 420 is limited and it is inconvenient to provide a pulling bearing, the disclosure further provides a new axial supporting unit, which is especially suitable for being mounted between the planetary gear and the planetary carrier.

In an embodiment, the axial supporting unit may include a rolling ball arranged between an end surface of the planetary gear and the planetary carrier, and a plurality of rolling balls is arranged along a circumferential direction of the planetary gear. A rolling ball can maintain a smooth rotation fit between the planetary gear and the planetary carrier while providing an axial supporting force. Further, a second annular groove for accommodating the rolling ball may be arranged on an end surface of the planetary gear, and the rolling ball may be accommodated in the second annular groove, so as to further save an axial space of the planetary reducer 420. In an embodiment of the disclosure, an annular gasket is arranged on a side of each of the rolling ball away from the planetary gear, and an end surface of the annular gasket forms a rolling fit with each of the rolling balls. The annular gasket may be made of a wear-resistant material, and the annular gasket may protect the end face of the planetary carrier to prevent the end face of the planetary carrier from being worn.

In an embodiment, the planetary carrier includes a pin shaft, and the planetary gear includes a shaft hole for the pin shaft to pass through. A radial supporting unit is located between an inner wall of the shaft hole and the pin shaft. In an embodiment, the radial supporting unit includes a plurality of rolling posts, and the plurality of the rolling posts are arranged along a circumferential direction of the pin shaft. In some other embodiments, the rolling posts may also be replaced with ordinary bearings.

Please refer to FIG. 120 through FIG. 122. Taking the second planetary carrier 426 and the second planetary gear 427 as an example, the second planetary carrier 426 includes a second pin shaft 4261, the second planetary gear 427 is freely sleeved on the second pin shaft 4261, and a second rolling post 4264 is arranged between the second planetary gear 427 and the second pin shaft 4261. A second annular groove 4271 is arranged on an end face of the second planetary gear 427, a second rolling ball 4262 is arranged in the second annular groove 4271, a second annular gasket 4263 is arranged on an outer side of the second rolling ball 4262, and the second annular gasket 4263 is attached to the end face of the second planetary carrier 426.

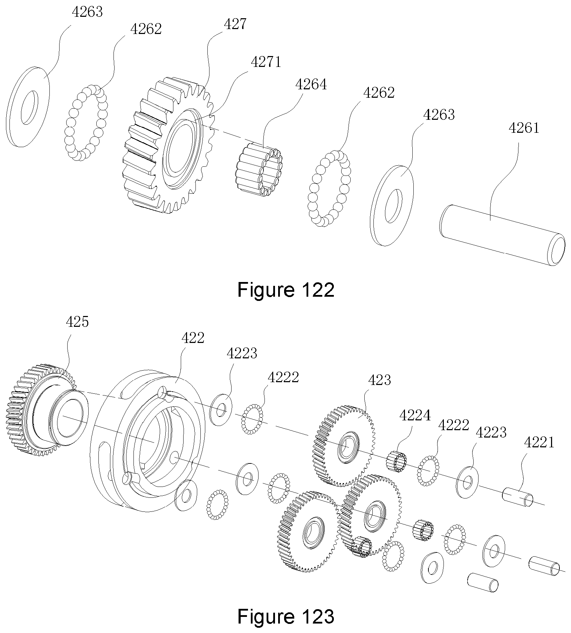

Similarly, please refer to FIG. 123. The first planetary carrier 422 includes a first pin shaft 4221, the first planetary gear 423 is freely sleeved on the first pin shaft 4221, a first rolling post 4224 is arranged between the first planetary gear 423 and the first pin shaft 4221, a first rolling ball 4222 is arranged on an end face of the first planetary gear 423, a first annular gasket 4223 is arranged on an outer side of the first rolling ball 4222, and the first annular gasket 4223 is attached to the end face of the first planetary carrier 422.

Please refer to FIG. 116. In order to facilitate an assembly of the planetary reducer 420, an opening may be arranged on a side of the reducer housing 429 away from the motor 410, and an end cover 4292 may be arranged at the opening. The end cover 4292 and the reducer housing 429 may be connected by, for example, a first circlip 4293. Of course, in some embodiments, the end cover 4292 may also be connected to the reducer housing 429 through bolts. Further, to implement an axial limiting between the reducer housing 429 and the second planetary carrier 426, a second circlip 4294 may be arranged between the second planetary carrier 426 and the reducer housing 429.

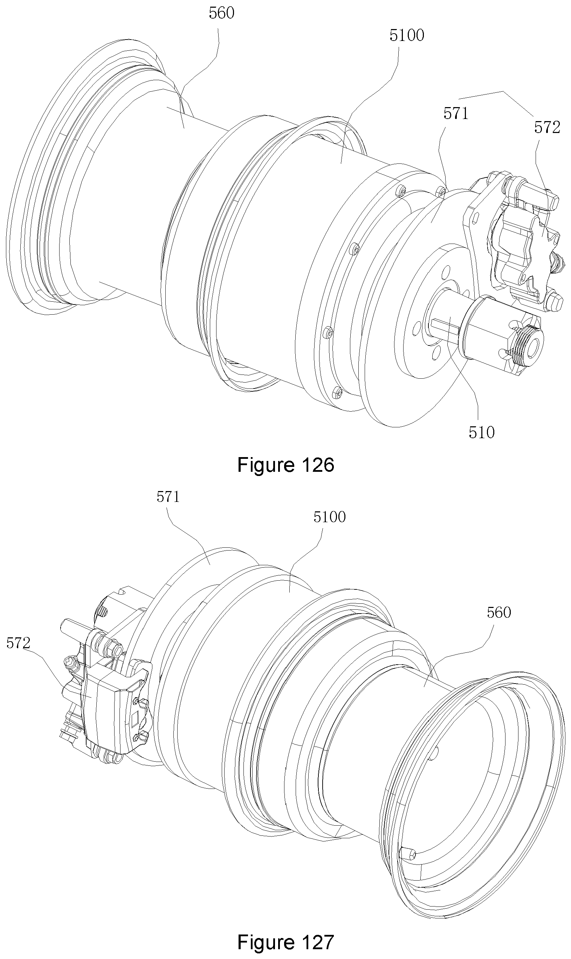

Please refer to FIG. 126 through FIG. 131. In an embodiment of the disclosure, the driving assembly includes a motor reducer assembly 5100 and a rim 560. Wherein, the motor reducer assembly 5100 includes a fixing shaft 510, an external rotor motor, the planetary reducer and an output casing 550. The external rotor motor includes an external rotor 512 and an internal stator 511. Wherein, the internal stator 511 is fixedly connected to the fixing shaft 510 coaxially. The external rotor 512 is rotatably connected to the fixing shaft 510 coaxially. For example, the planetary reducer may be coaxially arranged with the fixing shaft 510. A power input end of the planetary reducer is fixedly connected to the external rotor 512. The output casing 550 is rotatably connected to the fixing shaft 510 coaxially, and the output casing 550 is fixedly connected to a power output end of the planetary reducer. The rim 560 is fixedly connected to the output casing 550.

When the above driving assembly is mounted on the garden tool, it is only necessary to connected the fixing shaft 510 to the frame of the garden tool. Specifically, for example, a section of conical surface 514 and a section of threaded surface 515 may be arranged at an end part of the fixing shaft 510, then the fixing shaft 510 is mounted in a preset conical hole on the frame. The threaded surface 515 passes through the conical hole, and then a nut 516 is mounted on the threaded surface 515, so that the conical surface 514 can be automatically aligned with the conical hole when the nut 516 is tightened, thereby fixing the fixing shaft 510 in a preset state, and only one nut 516 is required in a whole mounting process, which greatly reduces a mounting difficulty.

In the disclosure, the external rotor motor is combined with the planetary reducer to achieve a low rotating speed and a high torque output, reduce a volume and weight of the driving assembly, and improve a flexibility and endurance of the garden tool. In addition, since the disclosure uses the external rotor motor for driving, a connection manner between the driving assembly and the garden tool becomes simpler, and assembly efficiency and an overall reliability of a vehicle body structure are improved.

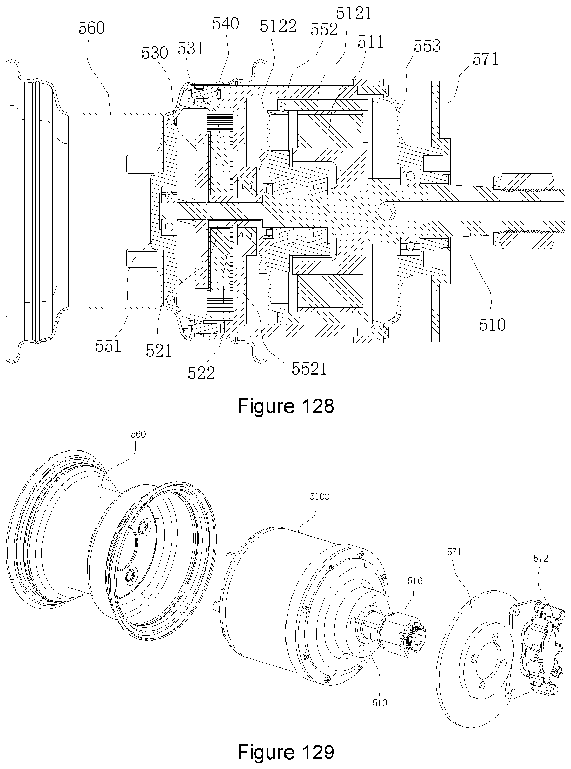

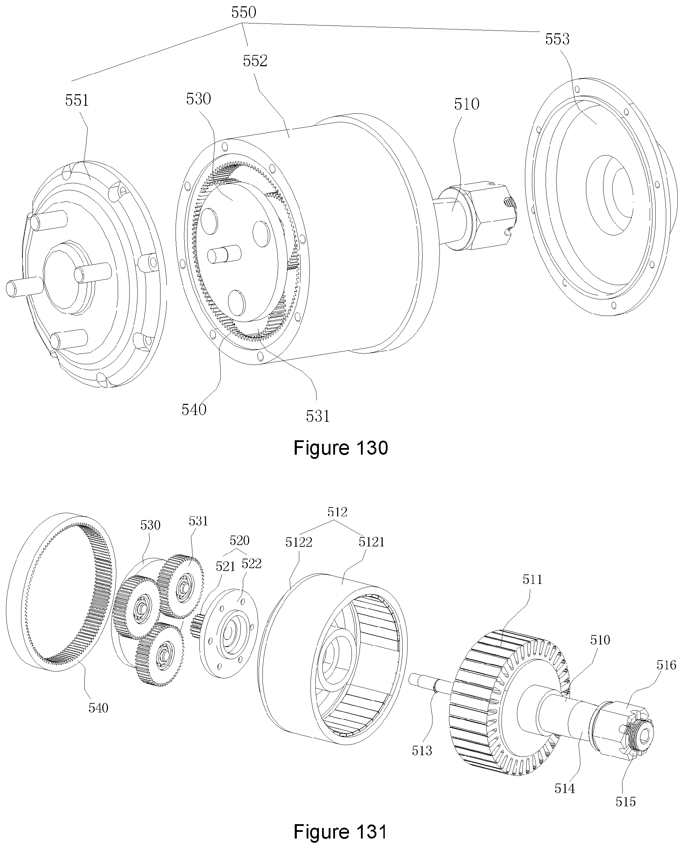

Please refer to FIG. 128 and FIG. 130, in an embodiment, the external rotor motor and the planetary reducer are accommodated in an accommodating cavity formed by an output casing 550, the output housing 550 is not only a power output component of the motor reducer assembly 5100, but also an appearance component and a protective component of the motor reducer, and the external rotor motor and the planetary reducer are accommodated in the output casing 550, so that on one hand, the external rotor motor and the planetary reducer can form a whole, which is convenient to manufacture and install, and on the other hand, debris can also be prevented from entering the external rotor motor and the planetary reducer, thereby improving a waterproof and dustproof performance of the motor reducer assembly 5100.

Please refer to FIG. 128 and FIG. 131. In an embodiment, the planetary reducer includes a third sun gear 520, a third planetary carrier 530, a third planetary gear 531 and a third ring gear 540. Wherein. the third sun gear 520 is configured as the power input end and is fixedly connected to the external rotor 512 coaxially. The third planetary carrier 530 is fixedly connected to the fixing shaft 510. The third planetary gear 531 is rotatably connected to the third planetary carrier 530. The third ring gear 540 is configured as the power output end and is fixedly connected to the output casing 550. The third planetary gear 531 is meshed with the third sun gear 520 and the third ring gear 540 respectively. when the external rotor 512 rotates, the third sun gear 520 can be driven to rotate, the third sun gear 520 can drive the third planetary gear 531 to rotate, and at this time, since the third planetary carrier 530 may be fixed, the third planetary gear 531 can drive the third ring gear 540 to rotate, which drives the output casing 550 to rotate, and realizes a deceleration transmission from the external rotor 512 to the output casing 550.

**On** one hand, a connection manner of the above planetary reducer enables a spatial layout of each component to be more compact, and on the other hand, it can be easier to obtain a larger reduction ratio. The connection manner of the planetary reducer may not be unique. For example, in some other alternative embodiments, the third ring gear 540 may also be fixedly connected to the fixing shaft 510, and the third planetary carrier 530 may also be fixedly connected to the output casing 550. Or the third ring gear 540 may be fixedly connected to the external rotor 512, the third planetary carrier 530 may be fixedly connected to the output casing 550, and the third sun gear 520 may be fixedly connected to the fixing shaft 510. The two alternative embodiments may also realize the deceleration transmission, but relatively, the connection manner in the embodiment in FIG. 128 may show more conducive to a mounting of each component, and saves more space.

Please refer to FIG. 128. In an embodiment, a first center hole may be arranged on the internal stator 511, and the first center hole may be in interference fit with the fixing shaft 510. The external rotor 512 may include a rotor assembly 5121 and a rotor end cover 5122, the rotor assembly 5121 can be fixedly connected to the rotor end cover 5122, and the rotor end cover 5122 can be rotatably connected to the fixing shaft 510 through the bearing. The third sun gear 520 may include a gear body 521 and a supporting part 522, and the supporting part 522 can be fixedly connected to the external rotor 512. The output casing 550 may include a front end cover 551, a cylindrical body 552, and a rear end cover 553, the front end cover 551 and the rear end cover 553 can be fixedly connected to two ends of the cylindrical body 552 respectively, the front end cover 551 can be rotatably connected to an end of the fixing shaft 510 away from the external rotor motor through the bearing, and the rear end cover 553 can be rotatably connected to an end of the fixing shaft 510 away from the planetary reducer through the bearing. A second center hole may be arranged on the third planetary carrier 530, and the second center hole may be in interference fit with the fixing shaft 510. An annular groove may be arranged on the fixing shaft 510 at a position flush with an end surface of the third planetary carrier 530, a circlip 513 may be arranged in the annular groove, and the circlip 513 can abut against the end surface of the third planetary carrier 530. The third ring gear 540 may be in interference fit with an inner wall of the output casing 550.

**The** above embodiment, some components can be divided into a plurality of parts to facilitate manufacturing and assembly. The way of dividing the components mentioned above may not be unique. In some other embodiments, in order to further simplify a processing and assembly process, the components may also be divided in other ways.

Please refer to FIG. 128. In a further embodiment, the inner wall of the output casing 550 may include a rib plate 5521, and the external rotor motor and the planetary reducer are respectively located on two sides of the rib plate 5521. A gap may be arranged between the rib plate 5521 and the fixing shaft 510, and the external rotor 512 and the power input end of the planetary reducer may be connected to each other through the gap. For example, the rib plate 5521 may be arranged on an inner side of the cylindrical body 552, and the rib plate 5521 may be rotatably connected to the supporting part 522 of the third sun gear 520 through the bearing. The rib plate 5521 can separate mounting spaces of the planetary reducer and the external rotor motor on one hand to prevent lubricating oil in the planetary reducer from entering the external rotor motor and causing the motor damage. On the other hand, the rib plate 5521 can also assist in supporting the output casing 550 to improve an overall structural strength of the driving assembly. In a preferred embodiment, in order to further isolate the mounting space between the external rotor motor and the planetary reducer, a corresponding mechanical sealing device may also be arranged between the supporting part 522 of the third sun gear 520 and the fixing shaft 510.

Please refer to FIG. 126 through FIG. 129, in order to further reduce an axial size of the driving assembly, at least part of a structure of the output casing 550 may be accommodated in the rim 560.

Please refer to FIG. 126, FIG. 127 and FIG. 129. In a further embodiment, the garden tool further may include a braking assembly 570, the braking assembly 570 includes a brake disc 571 and a caliper 572. The brake disc 571 can be coaxially and fixedly connected to an end of the output casing 550 away from the rim 560, and the caliper 572 can be fixedly arranged relative to the fixing shaft 510. Specifically, the brake disc 571 may be mounted on the rear end cover 553 by the bolts, and the caliper 572 may be mounted on the frame of the garden tool.

In summary, the driving assembly in the disclosure may combine the external rotor motor with the planetary reducer to achieve the low rotating speed and high torque output while reducing the volume and weight of the driving assembly. Since the volume of the garden tool can be reduced, the motor reducer assembly 5100 can completely arranged inside the wheel, which reduces a width of the garden tool, and improves the flexibility of the garden tool and the endurance of the garden tool. In addition, since the disclosure may use the external rotor motor for driving, the driving assembly is connected to the garden tool in a simplified manner, thereby facilitating assembly and enhancing the overall structural reliability of the vehicle body. The external rotor motor and the planetary reducer may be accommodated in the output casing 550. On one hand, the external rotor motor and the planetary reducer can be integrated to be convenient for manufacturing and mounting. Moreover, debris can be prevented from entering the external rotor motor and the planetary reducer to improve the waterproof and dustproof performance of the motor reducer assembly 5100. On one hand, the connection manner of the planetary reducer can enable the spatial layout of each component to be more compact It may also easier to obtain the larger reduction ratio. The rib plate 5521 can separate the mounting space of the planetary reducer and the external rotor motor to prevent the lubricating oil in the planetary reducer from entering the external rotor motor to damage the motor. In addition, the rib plate 5521 can also assist in supporting the output casing 550. The overall structural strength of the driving assembly can be improved. The disclosure may have the active braking assembly 570 to improve a braking response speed and an overall safety of the garden tool.

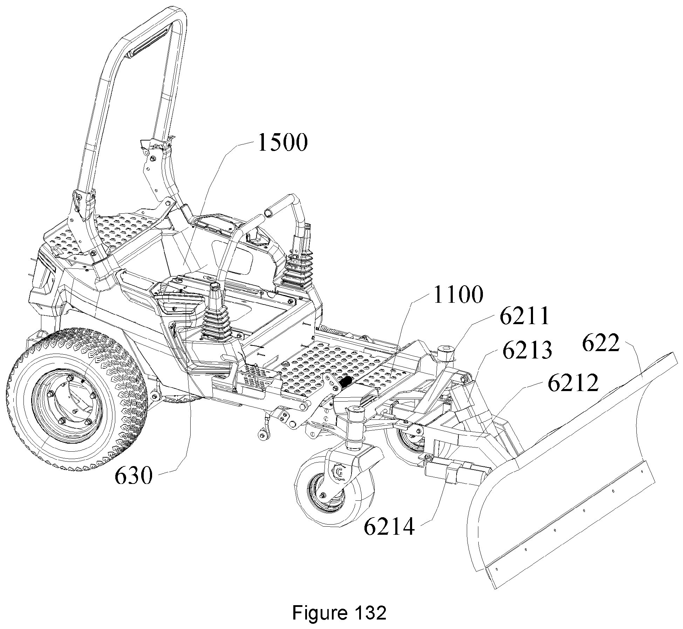

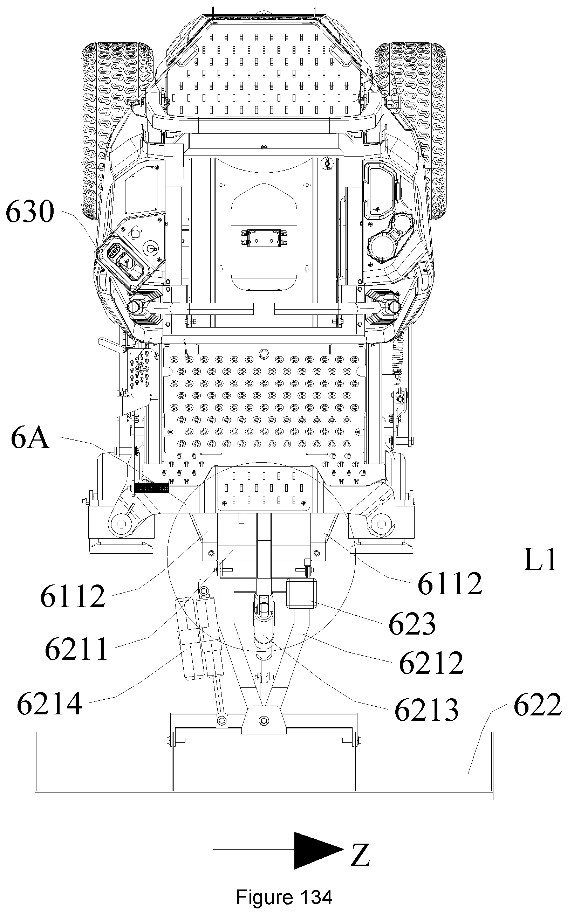

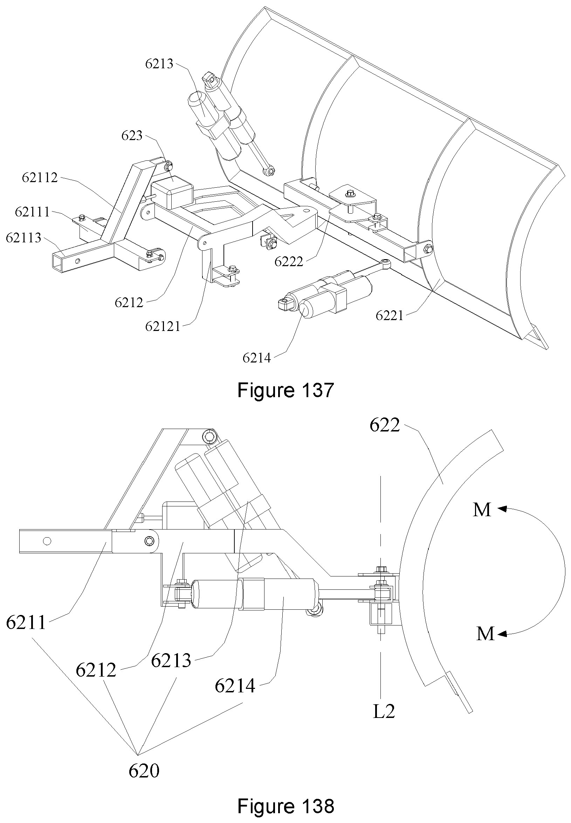

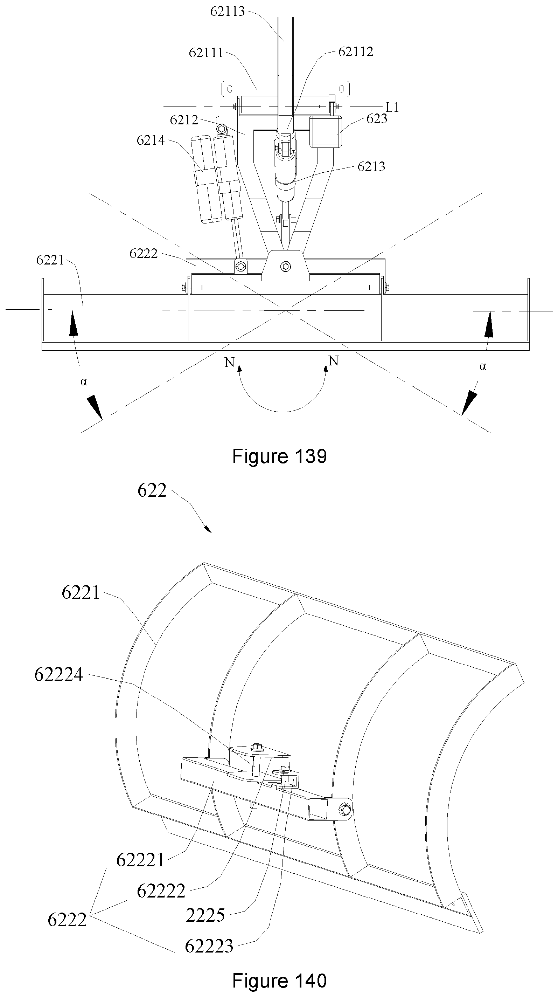

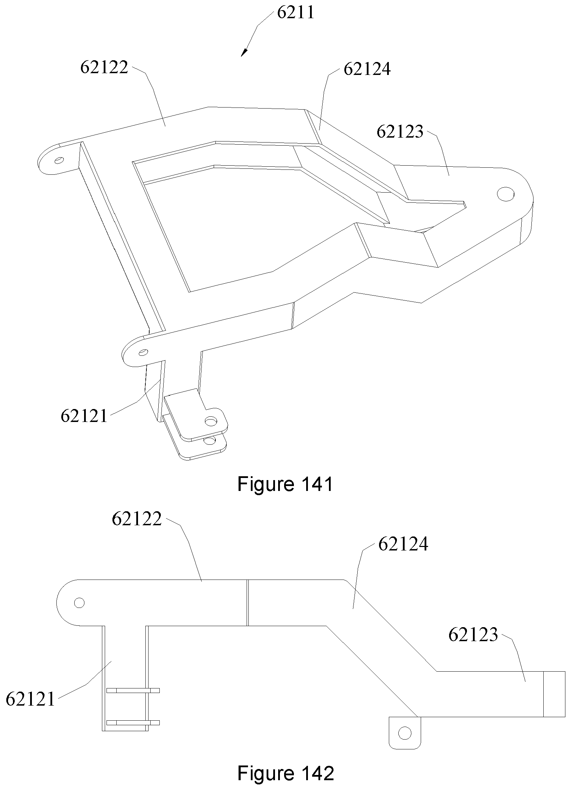

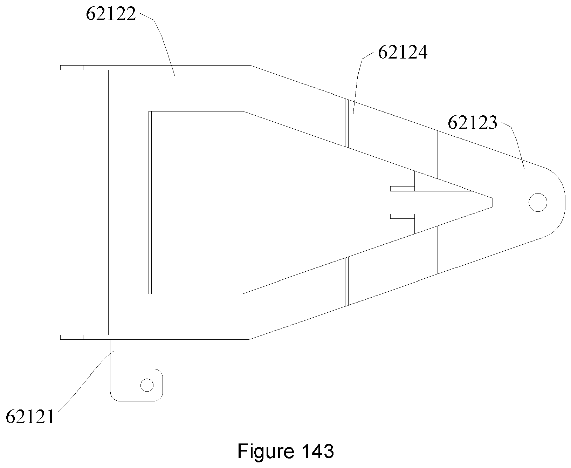

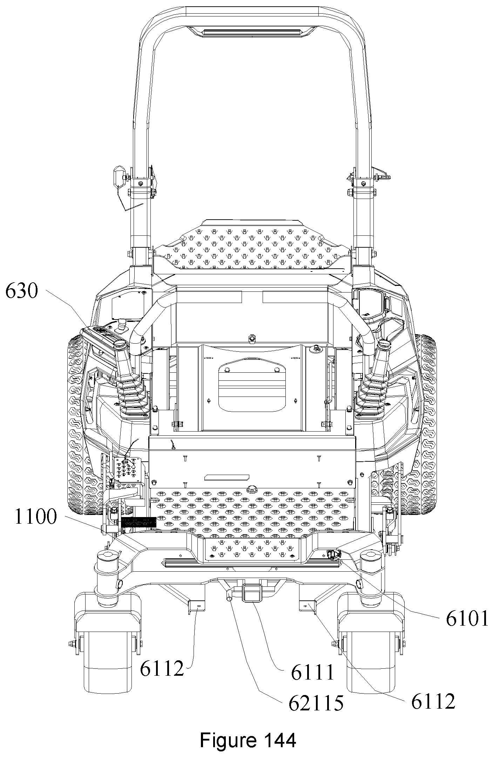

Please refer to FIG. 132 through FIG. 144. In an embodiment of the disclosure, the lawn mower may include an accessory system, and the accessory system may include an adjustment assembly 620 and a working assembly. The adjustment assembly 620 can be connected to a power device 610, and the working assembly can be connected to the adjustment assembly 620. Following embodiments are described by taking the working assembly being the snow shovel 622 as an example, and it can be understood that the working assembly may also be other working assemblies such as a bucket and a fork.

Please refer to FIG. 132 through FIG. 138. In this embodiment, the adjustment assembly 620 and the power device 610 can be detachably mounted together. Specifically, the power device 610 may include the frame 1100, an accessory connecting assembly may be arranged on the frame 1100. Specifically, the accessory connecting assembly may include a first connecting component 6111 and an auxiliary connecting component 6112. The first connecting component 6111 may be arranged on one side of the frame 1100 close to the adjustment assembly 620. The auxiliary connecting components 6112 may be arranged on two sides of the first connecting component 6111. The adjustment assembly 620 can be detachably connected to the first connecting component 6111 and the auxiliary connecting components 6112 disposed on the two sides of the first connecting component 6111 to facilitate a replacement or maintenance of the adjustment assembly 620 and the snow shovel 622.

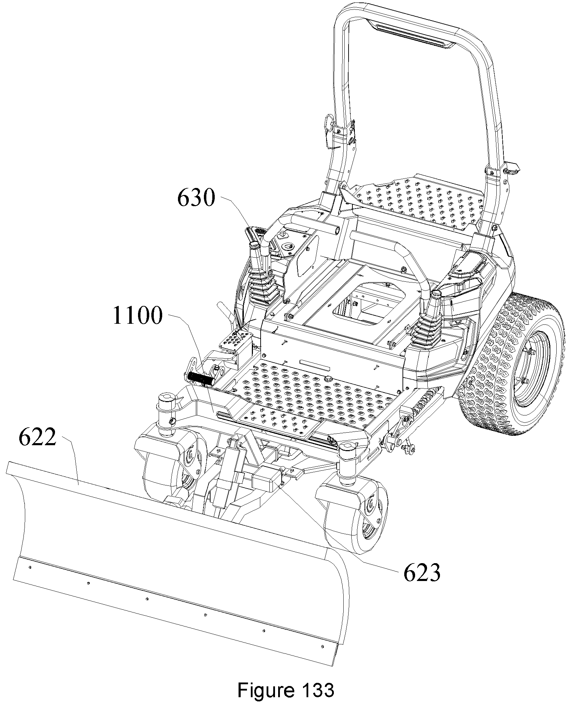

Please refer to FIG. 133, FIG. 134, FIG. 135, and FIG. 144. In this embodiment, the adjustment assembly 620 can be detachably connected to the first connecting component 6111 and the auxiliary connecting component 6112. The adjustment assembly 620 may include a third bracket 6211, and the third bracket 6211 can be detachably connected to the first connecting component 6111 and the auxiliary connecting component 6112. The third bracket 6211 may include a bracket body 62111, and a second connecting component 62113 may be arranged at a middle position of one side of the bracket body 62111. The second connecting component 62113 can be sleeved inside or outside the first connecting component 6111, and through holes may be correspondingly arranged on the second connecting component 62113 and the first connecting component 6111. The third bracket 6211 can be connected to the frame 1100 through passing a latch 62115 through the through holes on the second connecting component 62113 and the first connecting component 6111. In this embodiment, the first connecting component 6111 and the second connecting component 62113 may be configured as tubular structures, such as square connecting tubes. A cooperation of the second connecting component 62113 and the first connecting component 6111 can limit a circumferential rotation of the accessory system, which ensures a stability of the connection.

Please refer to FIG. 133, FIG. 134, FIG. 135, and FIG. 144. In this embodiment, second mounting holes 62114 may be arranged at two ends of the bracket body 62111, through holes corresponding to the second mounting holes 62114 may be opened on the auxiliary connecting component 6112. Each end of the bracket body 62111 can be secured by the bolts. The bolts can respectively pass through the through hole on the auxiliary connecting component 6112, and then pass through the second mounting hole 62114, so that the bracket body 62111 can be connected to the auxiliary connecting component 6112.This may improve a reliability of a connection between the accessory system and the frame 1100. The auxiliary connecting component 6112 may be , for example, a sheet-like plate structure, which can be fixedly connected to the bracket body 62111 through a through hole, which further improve a connection stability of the accessory system.

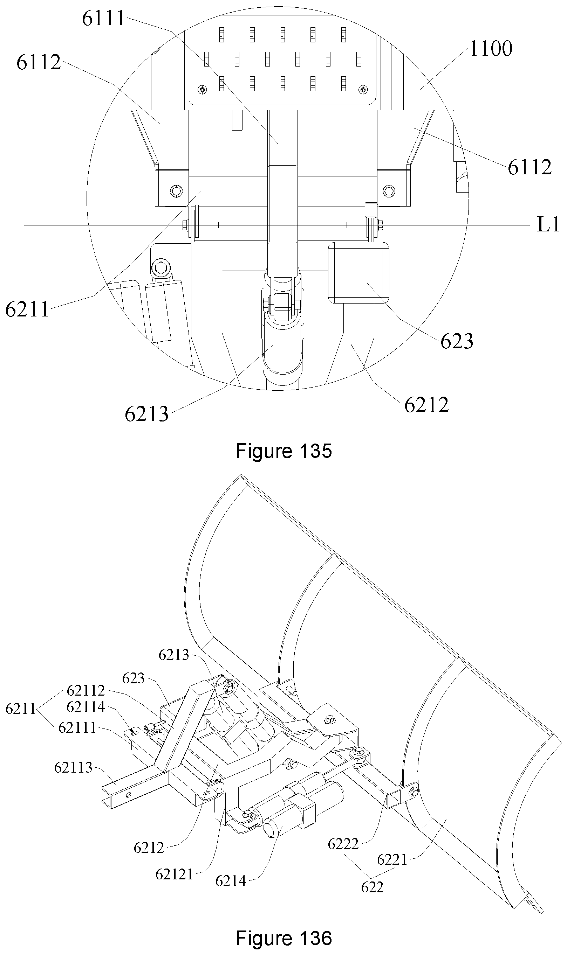

Please refer to FIG. 133, FIG. 136 through FIG. 133. In this embodiment, the adjustment assembly 620 may further includes a fourth bracket 6212, a first driving assembly 6213 and a second driving assembly 5214. The fourth bracket 6212 can be rotatably connected to the third bracket 6211. Specifically, the fourth bracket 6212 may be arranged on a side of the bracket body 62111 away from the power device 610 and can be rotatably connected to the bracket body 62111. The snow shovel 622 can be rotatably connected to the fourth bracket 6212. The first driving assembly 6213 may be arranged between the third bracket 6211 and the fourth bracket 6212. The second driving assembly 5214 may be arranged between the snow shovel 622 and the fourth bracket 6212. The first driving assembly 6213 and the second driving assembly 5214 can be configured to drive the snow shovel 622 to rotate in different directions. In an embodiment, the first driving assembly 6213 and the second driving assembly 5214 can be electrically connected to the power device 610.

Please refer to FIG. FIG. 133 and FIG. 136 through FIG. 143. In this embodiment, the third bracket 6211 may further include a cantilever 62112. A first end of the cantilever 62112 can be fixedly connected to the bracket body 62111, and a second end of the cantilever 62112 may be arranged obliquely upward toward one side of the fourth bracket 6212. A first end of the first driving assembly 6213 can be rotatably connected to the cantilever 62112, and a second end of the first driving assembly 6213 can be rotatably connected to the fourth bracket 6212 to drive the fourth bracket 6212 to rotate.

Please refer to FIG. 133 and FIG. 136 through FIG. 143. In this embodiment, the first driving assembly 6213 can be configured to drive the fourth bracket 6212 to rotate around a first rotation axis L1 between the third bracket 6211 and the fourth bracket 6212, so as to drive the snow shovel 622 to rotate in a first direction M around the first rotation axis L1, which drives the snow shovel 622 to be lifted or lowered. A first end of the second driving assembly 5214 can be rotatably connected to the fourth bracket 6212, and a second end of the second driving assembly 5214 can be rotatably connected to the snow shovel 622, so that the second driving assembly 5214 can drive the snow shovel 622 to rotate around a second rotation axis L2 of the snow shovel 622 and the fourth bracket 6212 in a second direction N to realize an angle adjustment. The snow shovel may have a simple structure to be convenient for the operation. The snow shovel can be lifted and rotated conveniently. The rotating angle α of the snow shovel 622 around the second rotation axis L2 may be adjustable between -30° and 30°. The rotating angle α may be a positive value when the snow shovel 622 rotates to the right and may be a negative value when the snow shovel 622 rotates to the left, which means that the rotating angle α may be an angle between a mechanical position of the snow shovel 622 rotating to left or right and an initial position of the snow shovel 622. Also, the initial position may refer to a position where the snow shovel 622 and the first rotation axis L2 may be parallel to each other.

Please refer to FIG. 133, FIG. 136 through FIG. 143. In this embodiment, there is a certain angle between orthographic projections of the first rotation axis L1 and the second rotation axis L2 in a fifth plane. It can be understood that the fifth plane is parallel to the first rotation axis L1 and the second rotation axis L2, so that the first driving assembly 6213 and the second driving assembly 5214 can drive the snow shovel 622 to rotate in different directions. In some embodiments, an extending direction of the first rotation axis L1 is parallel to a width direction Z of the power device 610, and the orthographic projection of the second rotation axis L2 and the orthographic projection of the first rotation axis L1 in the fifth plane are perpendicular to each other. The first driving assembly 6213 and the second driving assembly 5214 may be electric actuators or electro-hydraulic actuators. For example, the electric actuator may include a motor and a screw rod. The screw rod can be coupled to the fourth bracket 6212 or the snow shovel 622, and the motor can be configured to drive the screw rod so as to cause lifting, lowering, and left-right rotation of the snow shovel 622. In this configuration, the first driving assembly 6213 and the second driving assembly 5214 each use an electric actuator or an electro-hydraulic actuator as a power source for lifting and rotating. As a result, stepless speed regulation is achieved, which facilitates adjustment of both height and angle of the snow shovel. This arrangement can eliminate the requirement for a hydraulic pump and associated auxiliary components, simplifies the overall structure, and facilitate operation and maintenance.

Please refer to FIG. 133, FIG. 136 through FIG. 143. In an embodiment, the snow shovel 622 can be mounted on an end of the fourth bracket 6212 away from the bracket body 62111. Specifically, the snow shovel 622 may include a working body 6221 and a second mounting bracket 6222. The second mounting bracket 6222 can be fixedly mounted on the working body 6221, and the second mounting bracket 6222 can be rotatably connected to the fourth bracket 6121. In some embodiments, the second mounting bracket 6222 can be mounted at a middle position of the working body 6221, and the fourth bracket 6212 can be rotatably connected to a middle position of the second mounting bracket 6222.

Please refer to FIG. 133 and FIG. 136 to FIG. 143. In this embodiment, the second mounting bracket 6222 may include a second mounting bracket body 62221, a fourth connecting part 62222 and a fifth connecting part 62223. The second mounting bracket body 62221 can be fixedly mounted at the middle position of the working body 6221, and the fourth connecting part 62222 may be arranged at a middle position of the second mounting bracket body 62221. For example, the fourth connecting part 62222 may be arranged as a U-shaped structure with an opening facing the fourth bracket 6212, one of two sides of the U-shaped structure can be fixedly connected to the second mounting bracket body 62221, and the other side may be directly opposite to the second mounting bracket body 62221. One end of the fourth bracket 6212 connected to the snow shovel 622 may be located in a U-shaped groove of the U-shaped structure and can be rotatably connected to the U-shaped structure through a fifth rotating shaft 62224, and the rotating shaft 2224 may be substantially perpendicular to the second mounting bracket body 62221. The fifth connecting part 62223 can be fixedly mounted on the working body 6221 and located on one side of the fourth connecting part 62222, and the fifth connecting part 62223 may be also arranged as the U-shaped structure. For example, an arrangement of the U-shaped structure can be the same as an arrangement of the fourth connecting part 62222. One end of the second driving assembly 5214 connected to the snow shovel 622 may be located in the U-shaped groove of the U-shaped structure and can be rotatably connected to the U-shaped structure through a sixth rotating shaft 62225. In some embodiments, a second rotating shaft 2225 and the fifth rotating shaft 62224 may be arranged in parallel. In this embodiment, the second mounting bracket body 62221, the fourth connecting part 62222 and the fifth connecting part 62223 may be an integral structure.

Please refer to FIG. 133, FIG. 136 through FIG. 143. In this embodiment, the fourth bracket 6212 may include a first part 62122 and a second part 62123, and a height of the first part 62122 from a ground may be higher than a height of the first part 62122 from the ground. The first part 62122 and the second part 62123 can be integrally connected by an obliquely arranged transition part 62124. The first part 62122 can be rotatably connected to the bracket body 62111 of the third bracket 6211. The second part 62123 can be rotatably connected to the snow shovel 622. In this embodiment, the fourth bracket 6212 can be configured to be similar to a triangular structure. One side of the triangular structure can be rotatably connected to the bracket body 62111, and one corner of the triangular structure can be rotatably connected to the snow shovel 622. The corner may be a corner of the triangular structure opposite to a side of the fourth bracket 6212 rotatably connected to the bracket body 62111. A first end of the second driving assembly 213 can be connected to the cantilever 62112, a second end of the second driving assembly 5214 can be connected to a corner of the fourth bracket 6212 away from the third bracket 6211, and a first driving structure 213 may be located inside the triangular structure, so as to drive the fourth bracket 6212.

Please refer to FIG. 133, FIG. 136 through FIG. 143. In this embodiment, a height from an end of the fourth bracket 6212 away from the bracket body 62111 to the ground may be less than a height from a side of the fourth bracket 6212 connected to the bracket body 62111 to the ground, so as to ensure that the snow shovel 622 can be kept parallel to the ground under normal conditions. Furthermore, one side of the fourth bracket 6212 may extend downward to form a connecting component 62121. One end of the second driving assembly 5214 can be rotatably connected to the connecting component 62121for ensuring the second driving assembly 5214 driving the snow shovel 622 for the rotation. This arrangement can optimize the transmission of force when the second driving assembly drives the rotation of the snow shovel 622.

Please refer to FIG. 132 through FIG. 144. In this embodiment, the accessory system may further include an accessory controller 623, the accessory controller 623 may be mounted on the fourth bracket 6212 and certainly may also be mounted on the frame 1100. The accessory controller 623 can be electrically connected to the first driving assembly 6213 and the second driving assembly 5214 in the adjustment assembly 620. Specifically, the accessory controller 623 may include an outer housing and a control board mounted in the outer housing. For example, the control board can be a PCB control board connected to the first driving assembly 6213 and the second driving assembly 5214 to control the first driving assembly 6213 and the second driving assembly 5214.

Please refer to FIG. 132 through FIG. 144. In this embodiment, an ETO port 6101 is arranged on a side of the power device 610 close to the adjustment assembly 620, and the accessory system further obtains power through the ETO port 6101, to supply power to a driving structure in the accessory system.

Please refer to FIG. 132 through FIG. 144. In this embodiment, the power device system further includes an operation panel 630, and the operation panel 630 is in communication connection with the accessory controller 623. For example, the operation panel 630 is connected to the accessory controller 623 in a wired manner or a wireless manner such as Bluetooth. Specifically, the operation panel 630 is connected to the control board, the operation panel 630 includes buttons for controlling the snow shovel to be lifted, lowered and/or rotated left and right, etc., and the operation panel 630 directly controls the snow shovel 622, which means that the accessory system such as a snow shovel assembly 20 is only powered through the ETO port 6101, so that the snow shovel assembly 20 may be conveniently applied to different power device 610 without affecting a control logic of the power device 610.

Please refer to FIG. 132 through FIG. 144. In another embodiment, the operation panel 630 further includes a button for controlling the snow shovel 622 to be powered on and off. In this embodiment, a display screen is further arranged on the operation panel 630 to display information such as a current state or power of the snow shovel, for example, information such as a lifting angle and a left-right angle of the snow shovel 622.

Please refer to FIG. 132 through FIG. 144. In another embodiment, a whole machine main control board is also mounted in the power device 610, and the accessory controller 623 is connected to the whole machine main control board. Specifically, the accessory controller 623 is connected to the whole machine main control board through the ETO port 6101, which means that the snow shovel assembly 20 not only takes power through the ETO port 6101, but also is communicated with the whole machine main control board through the ETO port 6101. Wherein, the operation panel 630 is communicatively connected to the whole machine main control board. For example, the operation panel 630 is connected to the whole machine main control board in the wired manner or the wireless manner such as Bluetooth, and the operation panel 630 is communicatively connected to the accessory controller 623 through the whole machine main control board to control the snow shovel assembly 20. The operation panel 630 may be a separate component mounted on the power device 610 by an external hanging or other means, which means that the operation panel 630 may be moved as required.

In some other embodiments, the power device 610 includes an operation system, and the snow shovel assembly 20 may be controlled through the operation system. Or the snow shovel assembly 20 may be controlled by the operation panel 630, which may switch between the two modes in which the snow shovel assembly 20 is controlled by the operation system and the snow shovel assembly 20 is controlled by the operation panel 630. For example, a control mode may be switched by a structure such as a switching button arranged on the operation panel 630 or the power device 610.

Please refer to FIG. 132 through FIG. 144. In this embodiment, when the operation panel 630 is connected to the whole machine main control board by a wire, the operation panel 630 is powered via a whole power supply system of the snow shovel. When the operation panel 630 is connected to the whole machine main control board by the Bluetooth, the operation panel 630 is powered via an own power supply of the operation panel 630. In this embodiment, the operation panel 630 is mounted on the power device 610 and located on one side of the driving seat 1500 on the power device 610, so that the operator may conveniently operate the operation panel, thereby realizing functions of lifting and rotating the snow shovel without getting off the vehicle. The power device 610 may be the lawn mower, a UTV or other riding vehicles.

The disclosure further provides the snow shovel assembly, the snow shovel assembly includes the snow shovel 622 and the adjustment assembly 620, and a structure of the adjustment assembly 620 is the same as or similar to a structure of the adjustment assembly in the above embodiment, and is the same as or similar to a mounting mode and adjustment mode of the snow shovel 622, which may not be repeated here to avoid repetition.

The disclosure further provides a snow shovel system. The snow shovel assembly includes the snow shovel 622, the adjustment assembly 620, the accessory controller 623 and the operation panel 630. The operation panel 630 is directly communicatively connected to the accessory controller 623, the accessory controller 623 is electrically connected to the first driving assembly 6213 and the second driving assembly 5214 in the adjustment assembly 620, and the operation panel 630 controls the first driving assembly 6213 and the second driving assembly 5214 through the accessory controller 623 to control the adjustment assembly 620, so as to control the lifting, lowering and left-right rotation of the snow shovel 622. The adjustment assembly 620, the accessory controller 623, and the operation panel 630 are the same as or similar to the structures described in the above embodiments, and details are not described herein again to avoid repetition.

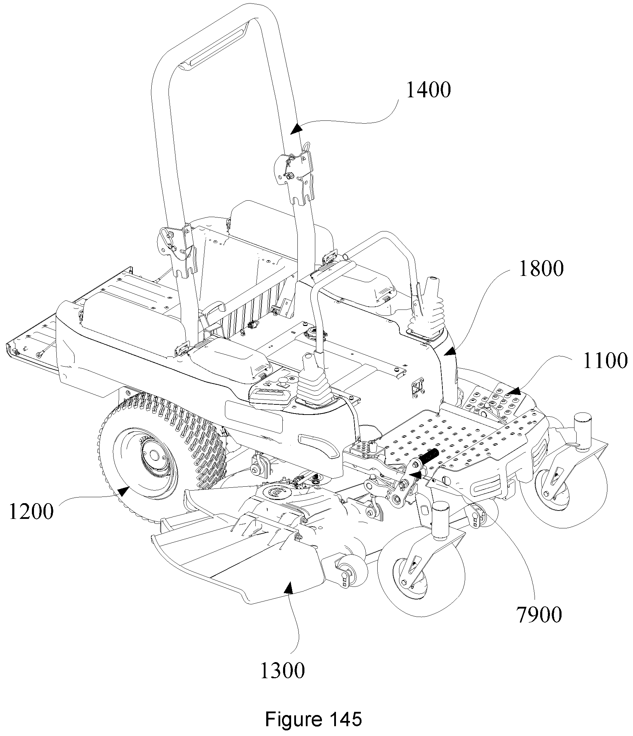

Please refer to FIG. 145 through FIG. 156. In an embodiment of the lawn mower of the disclosure, the lawn mower includes a lifting assembly 7900 movably mounted on the frame 1100, and the lifting assembly 7900 includes a third position and a fourth position for locking the lifting assembly 7900. When the lifting assembly 7900 is locked at the fourth position, the cutting deck assembly 1300 may be locked at the higher second station, which is convenient to avoid obstacles and reduce an impact on the cutting deck assembly 1300. At the same time, the lifting assembly 7900 can improve a fixing stability of the cutting deck assembly 1300 and solve a problem that the cutting deck assembly 1300 is damaged due to jumping and vibration.

In an embodiment of the lawn mower of the disclosure, a structure of the frame 1100 is not limited and may refer to the conventional structure of the frame 1100 of the lawn mower. To improve riding experience of the lawn mower, the driving seat may be mounted on the frame 1100. To improve the problem that conventional mowers cannot achieve an anti-roll protection, the anti-roll frame 1400 is further mounted on the frame 1100 next to the driving seat 500. In addition, considering the space occupied by the anti-roll frame 1400, the anti-roll frame 1400 may be set to be foldable, which may also solve the storage problem and save space. Of course, in other embodiments, the driving seat may be omitted and the driver may drive through standing up, or the anti-roll frame 1400 may be omitted and other methods can be used to protect the driver.

In an embodiment of the lawn mower of the disclosure, the walking assembly 1200 is mounted on the frame 1100 and is used to drive the frame 1100 to move. The walking assembly 1200 may include the driving part, the steering part, the power supply part, and other components. The power supply part provides energy to the driving part. The power supply part may be the battery 1800 or the engine, which is not limited here. In this embodiment, the power supply part uses the battery 1800. The driving part provides power for the walking wheels to rotate. The driving part may be driven by the motor or by the motor with the reducer, which is not limited here. The walking assembly 1200 correspondingly walks under the control of an operating assembly. There are various control methods for the operating assembly, including manual control, foot control, and hand-foot integrated control. In an embodiment of the disclosure, please refer to FIG. 145. The operating assembly adopts a control method of the operating rod with the foot pedals.

The cutting deck assembly 1300 is mounted on the frame 1100 for mowing to obtain the lawn with the appropriate height. The cutting deck assembly 1300 may be available in various structures and specifications. Different working environments need different cutting deck assemblies 1300 and different specifications of the cutting deck assemblies 1300, such as 48 inches, 52 inches and so on, which needs different assembly spaces. In an embodiment, the wheelbase of the lawn mower may be adjusted through the bottom of the frame 1100, thereby obtaining different bottom assembly spaces and meeting the adaptation needs of different the cutting deck assemblies 1300.

The lifting assembly 7900 includes a locking member 7990, the locking member 7990 includes a movable part 7991 and a limiting part 7992. The limiting part 7992 is mounted on the frame 1100, a structure and shape of the limiting part 7992 are not limited, and may be a shaft, a plate, a rod or other irregularly shaped structures, as long as six degrees of freedom of the movable part 7991 can be limited. A structure and shape of the movable part 7991 are not limited, and may be a shaft, a plate, a rod or other irregularly shaped structures, as long as the movable part 7991 can cooperate with the limiting part 7992 to be locked with the limiting part 7992 at a preset position. Both the cutting deck assembly 1300 and the movable part 7991 are moved by a rotation of the connecting member, and the movable part 7991 can be locked in the third position and the fourth position by the limiting part 7992.

The cutting deck assembly 1300 can move along with a movement of the lifting assembly 7900, and when the movable part 7991 is locked in the third position, the cutting deck assembly 1300 is locked in the first station, and when the movable part 7991 is locked in the fourth position, the cutting deck assembly 1300 is locked in the second station. A height of the second station is higher than a height of the first station, and the heights of the first station and the second station are different. In the working process, the cutting deck assembly 1300 may adapt to mowing lawns of different heights. For example, when the lawn is high, the cutting deck assembly 1300 may be locked in the second station for working, which may replace a way of replacing the cutting deck assembly 1300 in the conventional art to adapt to different working conditions and improve working efficiency. In addition, in a transportation or transition process, when encountering uneven road, the cutting deck assembly 1300 may be locked in the higher second station, which is convenient to avoid obstacles and reduce the impact on the cutting deck assembly 1300. At the same time, the lifting assembly 7900 can improve the fixing stability of the cutting deck assembly 1300 and solve the problem of damage to the cutting deck assembly 1300 due to jumping and vibration.

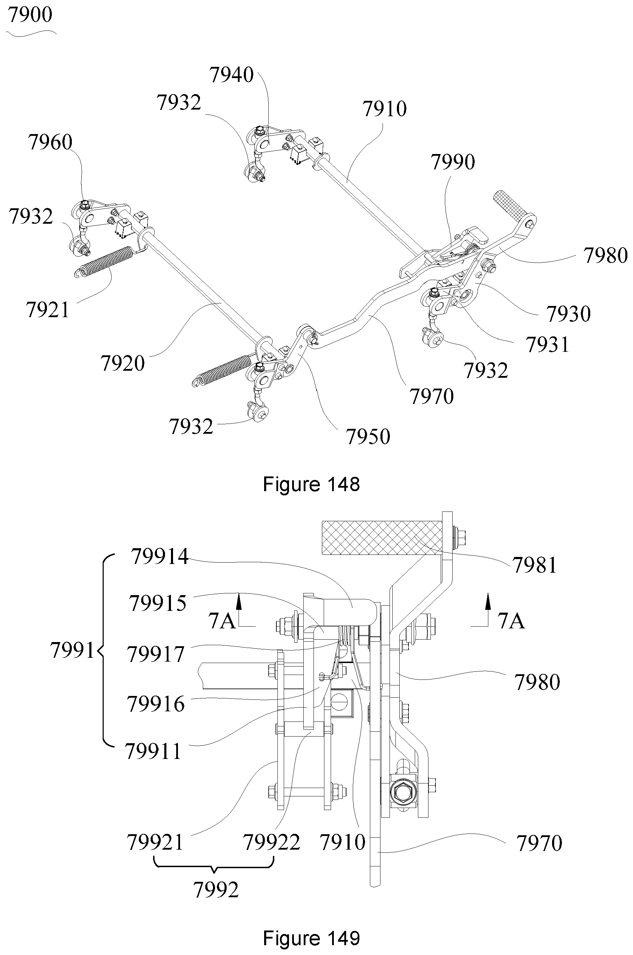

Please refer to FIG. 149, FIG. 150 and FIG. 152. In an embodiment of the lawn mower of the disclosure, the movable part 7991 includes a connecting plate 79911 and a first pedal 79914 connected to the connecting plate 79911, the first pedal 79914 is located on a side of the connecting plate 79911 away from the frame 1100, and the first pedal 79914 is designed to facilitate a foot control of the movable part 7991.

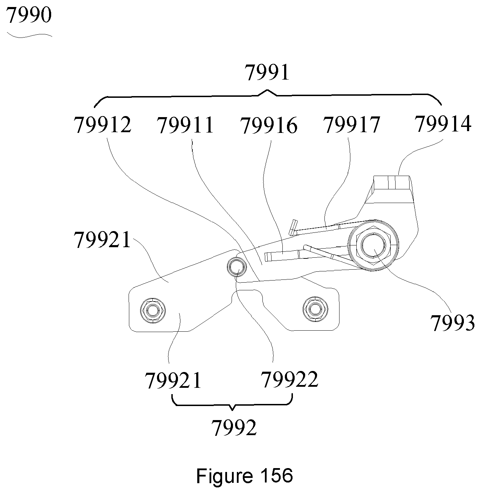

Please refer to FIG. 1555 and FIG. 156. In an embodiment of the lawn mower of the disclosure, the connecting plate 79911 includes a first limiting structure 79912 and a second limiting structure 79913 arranged at an end close to the limiting part 7992. A shape of the first limiting structure 79912 is not limited, and may be a straight surface, a curved surface, a groove or a combination of a plurality of surfaces mentioned above. In this embodiment, the first limiting structure 79912 is a straight surface, the first limiting structure 79912 is located on a side of the connecting plate 79911 facing the frame 1100. When the first limiting structure 79912 is connected to the limiting part 7992, the movable part 7991 is locked at the third position. A shape of the second limiting structure 79913 is not limited, and may be the straight surface, the curved surface, the groove or the combination of a plurality of surfaces mentioned above. In this embodiment, the second limiting structure 79913 is the curved surface, the second limiting structure 79913 is arranged on a vertical surface of the connecting plate 79911 facing the limiting part 7992. When the second limiting structure 79913 is clamped to the limiting part 7992, the movable part 7991 is locked at the fourth position. This arrangement can realize the lifting and lowering of the lifting assembly 7900. Simultaneously, this lifting and lowering action drives the movable part 7991 to move and achieve locking. Compared with a manner in the conventional art in which the pedal is stepped by feet while the limiting device is adjusted by hand, this arrangement reduces work difficulty and saves manpower.

Please refer to FIG. 149 through FIG. 150. In an embodiment of the lawn mower of the disclosure, the locking member 7990 further includes a connecting shaft 7993, and the movable part 7991 is connected to the connecting shaft 7993, so that a plurality of parts may be connected through one connecting shaft 79933. Further, the plurality of parts is locked through arranging fasteners at two ends of the connecting shaft 7993, which reduces an assembly difficulty and improves a compactness and flexibility of the structure.

Please refer to FIG. 149, FIG. 150 and FIG. 152. In an example of the lawn mower of the disclosure, a rotating sleeve 79915 penetrates through the connecting plate 79911 and is fixedly connected to the connecting plate 79911. The rotating sleeve 79915 is sleeved on the connecting shaft 7993. A length of the rotating sleeve 79915 is not limited, and a distance between the connecting plate 79911 and other adjacent structures or parts may be adjusted and limited by setting different lengths for the rotating sleeve 79915, so as to achieve an effect that other parts may not interfere with the frame 1100. Furthermore, to enhance a stable connection between the connecting plate 79911 and the rotating sleeve 79915, a second reinforcing rib 79916 is further arranged between the connecting plate 79911 and the rotating sleeve 79915.

Please refer to FIG. 149 through FIG. 150 and FIG. 155 through FIG. 156. In an embodiment of the lawn mower of the disclosure, the locking member 7990 further includes a third reset spring 79917. The third reset spring 79917 is sleeved on an outer side of the rotating sleeve 79915. A first end of the third reset spring 79917 is fixed, and a fixed position of the third reset spring 79917 is not limited. In this embodiment, the first end of the third reset spring 79917 is fixed on the connecting member. A second end of the third reset spring 79917 is connected to the connecting plate 79911. Specifically, the second end of the third reset spring 79917 is fixed on the second reinforcing rib 79916. The third reset spring 79917 is a torsion spring, served as an elastic element. A locking and directional release of the locking member 7990 is realized through the torsion spring's elastic deformation and energy storage.

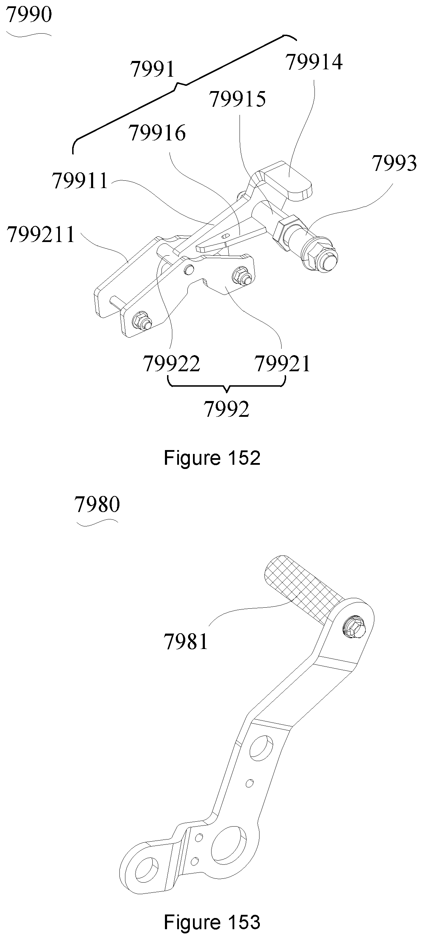

Please refer to FIG. 149 and FIG. 152. In an embodiment of the lawn mower of the disclosure, the limiting part 7992 includes a limiting shaft 79922 and a fixing bracket 79921 for mounting the limiting shaft 79922. The fixing bracket 79921 is fixedly mounted on a side of the frame 1100 away from the cutting deck assembly 1300. There are various forms of the fixing bracket 79921, as long as the limiting shaft 79922 can be mounted stably.

Please refer to FIG. 149 and FIG. 155 through FIG. 156. In an embodiment of the lawn mower of the disclosure, the fixing bracket 79921 includes two fixing plates 799211 arranged opposite each other, and two ends of the limiting shaft 79922 are respectively connected to the two fixing plates 799211. In this embodiment, both the first limiting structure 79912 and the second limiting structure 79913 of the connecting plate 79911 are limited by the limiting part 7992. Further, there is a gap between the limiting shaft 79922 and the frame 1100, and a distance between the limiting shaft 79922 and the frame 1100 is equal to a distance between the second limiting structure 79913 and the first limiting structure 79912, so that the second limiting structure 79913 may exactly cooperate with the limiting shaft 79922 to achieve a locking while limiting a rotation of the connecting plate 79911 by the frame 1100.

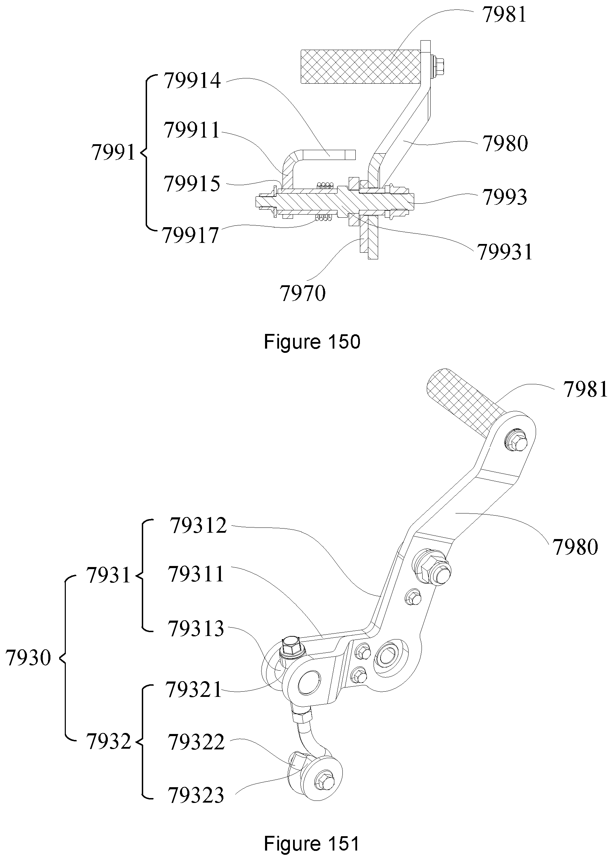

Please refer to FIG. 148 and FIG. 151, in an embodiment of the lawn mower of the disclosure, the lifting assembly 7900 further includes the connecting member and an operating member 7980. The connecting member connects the operating member 7980 to the cutting deck assembly 1300. The operating member 7980 drives the cutting deck assembly 1300 to switch between the first station and the second station through the connecting member. Specifically, the connecting member is rotatably mounted on the frame 1100 and connects the cutting deck assembly 1300 to the movable part 7991. The connecting member has various forms, for example, it may be a cam structure, a straight plate or a curved plate, etc., and all arrangements or structures that may realize a position change by rotation. The operating member 7980 is used to operate the rotation of the connecting member to change the position of the connecting member, and a structure and material of the operating member 7980 are not limited, and may be the rod, the plate or a combination of various types, so as to facilitate the operation.

Please refer to FIG. 148 and FIG. 151. In an embodiment of the lawn mower of the disclosure, the connecting member includes a crank 7931 and a pulling rod 7932. The crank 7931 is hinged to the frame 1100 in various ways, which are not limited. For example, the crank 7931 may be hinged to the frame 1100 through a rotating shaft, and the rotating shaft is rotatably connected to the frame 1100 and the crank 7931 respectively, or may be rotatably connected to the frame 1100 and fixedly connected to the crank 7931, or may be fixedly connected to the frame 1100 and rotatably connected to the crank 7931. The crank 7931 includes a first end part 79311 and a second end part 79312, both positioned away from a hinge position of the crank 7931. The hinge position is located at the middle of the crank 7931. The crank 7931 may be the straight plate, the curved plate or other irregularly shaped plates, which is not limited.

Further, the first end part 79311 is rotatably connected to the pulling rod 7932, and an end of the pulling rod 7932 away from the crank 7931 is rotatably connected to the cutting deck assembly 1300. Arrangements of the above two rotational connections may realize that the pulling rod 7932 may be kept in a vertical state regardless of a rotation of the first end part 79311 to any position, so as to reduce a torsion of the cutting deck assembly 1300 to the pulling rod 7932. The second end part 79312 is connected to the connecting shaft 7993 to realize a connection between the crank 7931 and the movable part 7991. Specifically, please refer to FIG. 150. The number of the connecting members may not be limited, and may be one, two, three, four or more, which can be adaptively designed according to a size and weight of the cutting deck assembly 1300.

Please refer to FIG. 148 through FIG. 151 and FIG. 155. In an embodiment of the lawn mower of the disclosure, the operating member 7980 is fixedly connected to the crank 7931 and connected to the connecting shaft 7993, and a second pedal 7981 is arranged at an end of the operating member 7980 away from the connecting shaft 7993, which allows for the foot control of the connecting member, thereby improving work efficiency and reducing labor intensity.

Please refer to FIG. 150. In an embodiment of the lawn mower of the disclosure, the connecting shaft 7993 includes a shaft shoulder 79931. The movable part 7991 is arranged on a first side of the shaft shoulder 79931, and the connecting member and the operating member 7980 are arranged on a second side of the shaft shoulder 79931. In this embodiment, the rotating sleeve 79915 abuts against a first side of the shaft shoulder 79931, the shaft shoulder 79931 may limit the rotating sleeve 79915 and the crank 7931, and at the same time, it is convenient to fix. Either the cranks 7931 or the operating member 7980 located on a second side of the shaft shoulder 79931 may be arranged closer to the shaft shoulder 79931, which is not limited here.

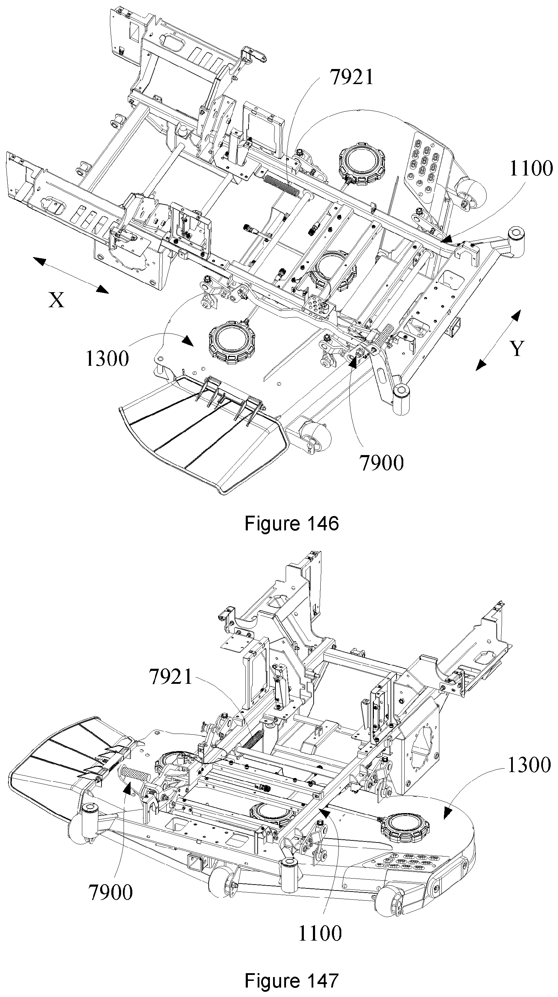

Please refer to FIG. 146. In an embodiment of the lawn mower of the disclosure, considering a balance and stability of a force applied to the cutting deck assembly 1300, there are four connecting members, namely a first connecting member 7930, a second connecting member 7940, a third connecting member 7950 and a fourth connecting member 7960. Along the first direction, a seventh rotating shaft 7910 and an eighth rotating shaft 7920 arranged in parallel are rotatably connected to a side of the frame 1100 close to the cutting deck assembly 1300. The first connecting member 7930 and the second connecting member 7940 are arranged opposite to each other and fixedly connected to two ends of the seventh rotating shaft 7910 respectively, so that the second connecting member 7940 can be lifted and lowered synchronously with the first connecting member 7930, and only one of the first connecting member 7930 and the second connecting member 7940 needs to be operated. The third connecting member 7950 and the fourth connecting member 7960 are arranged opposite to each other, and are fixedly connected to two ends of the eighth rotating shaft 7920 respectively, so that the fourth connecting member 7960 can be lifted and lowered synchronously with a rotation of the third connecting member 7950. Only one of the third connecting member 7950 and the fourth connecting member 7960 needs to be operated. Along a second direction, the first connecting member 7930 and the third connecting member 7950 are sequentially arranged, and the second connecting member 7940 and the fourth connecting member 7960 are sequentially arranged. The second direction may be parallel to a straight direction of the lawn mower as shown by X in FIG. 146, and the first direction can be perpendicular to the second direction as shown by Y in FIG. 146.

Please refer to FIG. 148. A connection rod 7970 is connected between the first connecting member 7930 and the third connecting member 7950. A first end of the connection rod 7970 is connected to the connecting shaft 7993, and a second end of the connection rod 7970 is connected to the third connecting member 7950. The connection rod 7970 synchronizes a rotation of the first connecting member 7930 and the third connecting member 7950. Only one operating member 7980 may be arranged to control one of the first connecting member 7930 and the third connecting member 7950, so that a synchronous lifting of the first connecting member 7930, the second connecting member 7940, the third connecting member 7950 and the fourth connecting member 7960 may be achieved.

Please refer to FIG. 149 through FIG. 151. In an embodiment of the disclosure, an end of the operating member 7980 away from the second pedal 7981 is connected to the first end part of the crank 7931 through a second connecting rod 79313. Two ends of the second connecting rod 79313 are rotatably connected to the operating member 7980 and the crank 7931 respectively.

Please refer to FIG. 151. In an embodiment of the lawn mower of the disclosure, the pulling rod 7932 penetrates along a radial direction of the second connecting rod 79313 and is rotatably connected to the second connecting rod 79313. A stopping part 79321 is arranged at an end of the pulling rod 7932 away from the cutting deck assembly 1300. The pulling rod 7932 is rotatably connected to the second connecting rod 79313 about an axis in a height direction of the lawn mower. A lifting eye 79322 is arranged at an end of the pulling rod 7932 away from the second connecting rod 79313, and a lifting lug 79323 is arranged on the cutting deck assembly 1300. The lifting lug 79323 is rotatably connected to the lifting eye 79322. A rotational connection between the lifting lug 79323 and the lifting eye 79322 is a rotation around the first direction. In order to improve a stability of the connection between the lifting lug 79323 and the lifting eye 79322, a nut and a gasket are arranged at an outer end of the lifting lug 79323 to limit a relative movement between the lifting eye 79322 and the lifting lug 79323. The pulling rod 7932 has two rotational degrees of freedom in different directions, which enhances a flexibility of the pulling rod 7932, simplifies a mechanical system structure, and further improves a stability of the cutting deck assembly 1300. Further, please refer to FIG. 146 through FIG. 147. An elastic connecting component 7921 is arranged between the eighth rotating shaft 7920 and the frame 1100. The elastic connecting component 7921 not only allows the lifting of the cutting deck assembly 1300, but also improves the stability of the cutting deck assembly 1300. A form of the elastic connecting component 7921 is not limited, and may be rubber, plastic, or a spring, etc., which is a component that can generate a deformation to store energy when subjected to an external force, and can also release energy after the external force is withdrawn. Two springs are used in this embodiment.

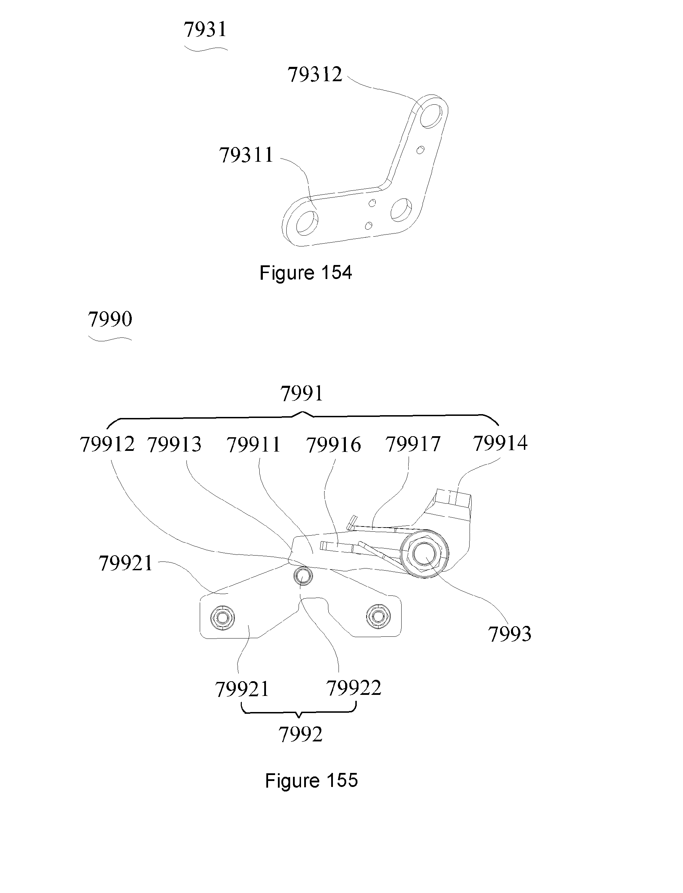

In an embodiment of the lawn mower of the disclosure, when the cutting deck assembly 1300 is at the first station, please refer to FIG. 155. The lifting assembly 7900 is locked at the third position. Specifically, the first limiting structure 79912 of the connecting plate 79911 is pressed tightly on a side of the limiting shaft 79922 away from the frame 1100 under a self-weight of the cutting deck assembly 1300, and the connecting plate 79911 is limited by a torsion of the torsion spring to rotate in a direction away from the frame 1100.

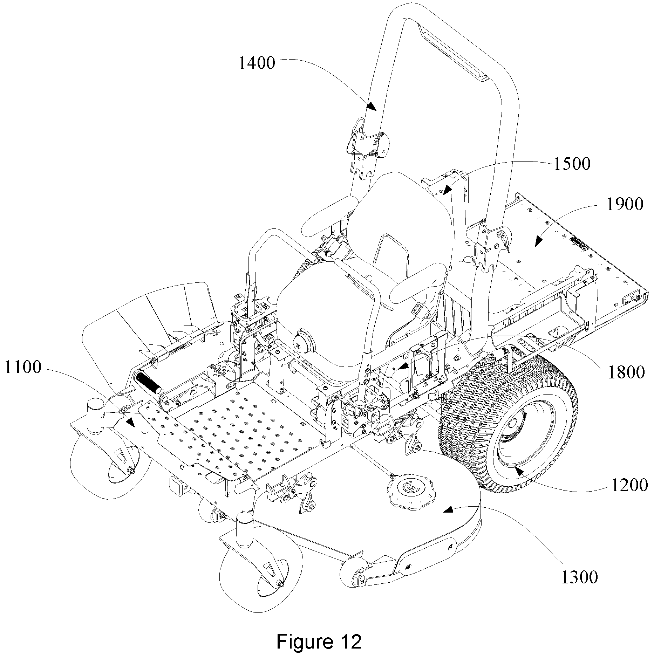

Please refer to FIG. 148 through FIG. 154. When the cutting deck assembly 1300 is switched from the first station to the second station, the second pedal 7981 is stepped on by the foot. The operating member 7980 and the connecting plate 79911 rotate around the seventh rotating shaft 7910. The connecting shaft 7993, the rotating sleeve 79915 sleeved on the connecting shaft 7993, the connection rod 7970, the connecting plate 79911 and the operating member 7980 all rotate around the seventh rotating shaft 7910 with the connecting shaft 7993. This rotation around the seventh rotating shaft can be decomposed into a forward movement and a downward movement. The first end part 79311 drives the entire cutting deck assembly 1300 to be lifted through the pulling rod 7932. Meanwhile, the first connecting member 7930 drives the second connecting member 7940 through the seventh rotating shaft 7910, and drives the third connecting member 7950 through the connecting rod 7970. The third connecting member 7950 drives the fourth connecting member 7960 through the eighth rotating shaft 7920. The first connecting member 7930, the second connecting member 7940, the third connecting member 7950 and the fourth connecting member 7960 together drive the entire cutting deck assembly 1300 to be lifted. At the same time, the first limiting structure 79912 is in contact with the limiting shaft 79922 and slides forward along with the connecting shaft 7993 until the first limiting structure 79912 is separated from the limiting shaft 79922. Elastic potential energy stored in the third reset spring 79917 is released, so that an end of the connecting plate 79911 away from the connecting shaft 7993 rotates along a direction of the connecting shaft 7993 facing the frame 1100, and until the first limiting structure 79912 contacts the frame 1100, a rotation is stopped. At this time, the second pedal 7981 is released, the connecting plate 79911 of the cutting deck assembly 1300 moves in a direction of the limiting shaft 79922 under an own weight of the cutting deck assembly, and until the second limiting structure 79913 is clamped to the limiting shaft 79922, a movement is stopped. At this time, the lifting of the cutting deck assembly 1300 is completed and locked at the second station. Please refer to FIG. 12.

Further, please refer to FIG. 148 to 154, when the cutting deck assembly 1300 is switched from the second station to the first station, the second pedal 7981 is slightly pressed by the foot. The operating member 7980 and the connecting plate 79911 rotate around the seventh rotating shaft 7910. Similarly, the connecting shaft 7993 drives the connecting plate 79911 to move forward along the frame 1100. When the second limiting structure 79913 is separated from the limiting shaft 79922, the first pedal 79914 is stepped by a heel, and an end of the connecting plate 79911 close to the limiting shaft 79922 overcomes a pulling force of the third reset spring 79917 to move upward until the first limiting structure 79912 moves to an upper side of the limiting shaft 79922. Then the second pedal 7981 and the first pedal 79914 are released, and under a self-weight of the cutting deck assembly 1300, the first limiting structure 79912 slides backward along the limiting shaft 79922 until the lifting assembly 7900 is locked at the third position. At this time, the cutting deck assembly 1300 is locked at the first station.

In the lawn mower of the disclosure, the dump body assembly 1900 is tiltably mounted on the frame 1100 arranged behind the driving seat 1500. The dump body assembly 1900 tilt outwards to a side away from the driving seat 1500. When the dump body assembly 1900 is fixedly connected to the frame 1100, it is used for carrying and transportation. The dump body assembly 1900, may be used for transporting weeds or waste on grasslands, reducing cost of purchasing transport vehicles. When items in the dump body assembly 1900 need to be unloaded quickly, the dump body assembly 1900 is tilted away from the driving seat 1500, and the items are poured into the preset position. This realizes a function of convenient unloading and saves manpower and material resources. Therefore, the disclosure effectively overcomes some practical problems in the conventional art, thereby having high utilization value and use significance. The above embodiments only illustrate principles and effects of the disclosure, but are not intended to limit the disclosure. Anyone familiar with this technology may modify or change the above embodiments without departing from a scope of the disclosure. Therefore, all equivalent modifications or changes made by those with ordinary knowledge in a technical field without departing from the technical ideas disclosed in the disclosure shall still be covered by the claims of the disclosure.

## Claims

1. A lawn mower, comprising:
a frame;
a walking assembly, the walking assembly mounted on the frame for driving the lawn mower;
a cutting deck assembly, the cutting deck assembly mounted on the frame for mowing; and
a dump body assembly, the dump body assembly tiltably mounted on the frame.

2. The lawn mower according to claim 1, wherein, the dump body assembly comprises a body and a tiltable assembly, the body being rotatably mounted on the frame, a first end of the tiltable assembly being rotatably coupled to the body, and a second end of the tiltable assembly being rotatably coupled to the frame to lift the body, such that an actuation of the tiltable assembly lifts the body relative to the frame.

3. The lawn mower according to claim 2, wherein, the dump body assembly comprises a locking assembly, the locking assembly structurally coupled to the frame and configured to restrain tilting of the dump body assembly.

4. The lawn mower according to claim 3, wherein, the locking assembly comprises a locking ring arranged on the body and a locking component arranged on the frame, and the locking component engageable with the locking ring.

5. The lawn mower according to claim 4, wherein, the frame comprises a mounting bracket for mounting the locking component, the locking component being rotatably connected to the mounting hole, and the locking component is connected to the frame at a direction being opposite from the locking ring through an elastic component.

6. The lawn mower according to claim 2, wherein, the tiltable assembly is configured with a preset start-up delay time of 3s to 6s.

7. The lawn mower according to claim 1, wherein, the dump body assembly is mechanically limited to a maximum tiltable angle in a range of 30° to 60°.

8. The lawn mower according to claim 2, wherein, the body comprises an upper handle.

9. The lawn mower according to claim 2, wherein, the body comprises a lower handle.

10. The lawn mower according to claim 2, wherein, a bottom wall of the body comprises drainage holes, and hole plugs matched with the drainage holes are arranged on the drainage holes.

11. The lawn mower according to claim 1, wherein, the dump body assembly comprises a body, and a rear wall of the body is rotatably hinged to a bottom wall of the body.

12. The lawn mower according to claim 11, wherein, the dump body assembly comprises at least one of connecting assemblies, the connecting assembly being coupled to the rear wall and at least one of side walls being adjacent to the rear wall, a first end of the connecting assembly being detachably and rotatably coupled to a side surface of the rear wall, and a second end of the connecting assembly being detachably and rotatably coupled to the side wall.

13. The lawn mower according to claim 12, wherein, the connecting assembly is a rigid component, a flexible component, or a combination thereof.

14. The lawn mower according to claim 12, wherein, the dump body assembly comprises a fixing assembly, the fixing assembly is mounted on the rear wall and/or the side wall, the rear wall and the side wall being locked through the fixing assembly to restrain unfolding of the rear wall, the fixing assembly comprising a locking base and a locking body, the locking body being mechanically lockable with the locking base to restrain unfolding of the rear wall.

15. The lawn mower according to claim 14, wherein, the locking base comprises a base body, the base body being mounted on the side wall, a groove being arranged on a side of the base body toward the rear wall, a limiting mechanism being arranged at an opening of the groove, the limiting mechanism being mounted on a wall of the opening, opened under a pressure and reset under an action of an elastic component.

16. The lawn mower according to claim 15, wherein, the locking body comprises two deadbolts, a first one of the deadbolts being arranged at a first end of the rear wall and a second one of the deadbolts being arranged at a second end of the rear wall, two of the locking bases being mounted on two of the side walls, and the deadbolts being mechanically engageable with the locking bases.

17. The lawn mower according to claim 1, comprising:
a housing, the housing arranged on the frame;
a driving seat, the driving seat arranged on the frame; and
a battery compartment, the battery compartment arranged on the housing being disposed on two sides of the driving seat,
wherein, at least a portion of a projection of the battery compartment along a width direction of the lawn mower laterally overlapping a projection of the driving seat.

18. The lawn mower according to claim 17, wherein, the battery compartment comprises a plurality of first compartments and a plurality of second compartments, the plurality of first compartments being symmetrically arranged on the housing disposed on the two sides of the driving seat, and the plurality of second compartments being symmetrically arranged on the housing disposed on the two sides of the driving seat.

19. The lawn mower according to claim 17, wherein, at least a portion of the projection of the battery compartment along the width direction of the lawn mower laterally overlapping a projection of the dump body assembly.

20. The lawn mower according to claim 17, wherein, the driving seat comprises a handrail, a high of the projection of the battery compartment along the width direction of the lawn mower being less than a high of a projection of the handrail along the width direction of the lawn mower.
